# EUROPÄISCHE PATENTSCHRIFT

(11) **EP 0 879 239 B1**
(45) Veröffentlichungstag und Bekanntmachung des Hinweises auf die Patenterteilung: **23.04.2003**
(21) Anmeldenummer: 97904454.2
(22) Anmeldetag: 17.02.1997
(51) Int. Cl.: C07F 9/6512, A01N 57/08, C07F 9/6503, C07F 9/553, C07F 9/6506, C07F 9/6561, C07F 9/6539, C07F 9/40, C07F 9/6509

(54) **SUBSTITUIERTE AROMATISCHE PHOSPHONSÄUREDERIVATE**
SUBSTITUTED AROMATIC PHOSPHONIC ACID DERIVATIVES
DERIVES AROMATIQUES SUBSTITUES D'ACIDE PHOSPHONIQUE

(30) Priorität: 16.02.1996 DE 19605765
(43) Veröffentlichungstag der Anmeldung: 25.11.1998
(73) Patentinhaber: BASF AKTIENGESELLSCHAFT, 67056 Ludwigshafen (DE)
(72) Erfinder: ZAGAR, Cyrill, D-67061 Ludwigshafen (DE); HEISTRACHER, Elisabeth, D-68159 Mannheim (DE); MENKE, Olaf, D-67317 Altleining (DE); HAMPRECHT, Gerhard, D-69469 Weinheim (DE); MENGES, Markus, D-68161 Mannheim (DE); SCHÄFER, Peter, D-67308 Ottersheim (DE); WESTPHALEN, Karl-Otto, D-67346 Speyer (DE); MISSLITZ, Ulf, D-67433 Neustadt (DE); WALTER, Helmut, D-67283 Obrigheim (DE)
(86) Internationale Anmeldenummer: EP9700733
(87) Internationale Veröffentlichungsnummer: WO97030060

(56) Entgegenhaltungen:
- EP-A- 0 207 890
- EP-A- 0 255 047
- EP-A- 0 563 384
- WO-A-95/32188
- DE-A- 3 426 634
- DE-A- 3 737 152
- DE-A- 4 029 444
- DE-A- 4 431 219
- DE-A- 4 432 888
- DE-A- 4 437 197
- ACS SYMP. SER. (ACSMC8,00976156);95; VOL.584 (SYNTHESIS AND CHEMISTRY OF AGROCHEMICALS IV); PP.90-9, FMC CORP.;AGRIC. CHEM. GROUP; PRINCETON; 08543; NJ; USA (US), XP000671389 THEODORIDIS G ET AL: "Alkyl 3-[2,4-disubstituted-4,5-dihydro-3-methyl- 5-oxo-1H-1,2,4-tria zol-1-yl)phenyl]propenoate derivatives. Synthesis and structure-activity relationships" in der Anmeldung erwähnt
- CHEMICAL ABSTRACTS, vol. 115, no. 19, 11.November 1991 Columbus, Ohio, US; abstract no. 207989, MIURA J ET AL: "Preparation of 3-phenylpyrazole derivatives as herbicides" XP002030732 in der Anmeldung erwähnt & JP 03 151 367 A (NIHON NOHYAKU CO., LTD.;JAPAN) 27.Juni 1991
- PHOSPHORUS, SULFUR SILICON RELAT. ELEM. (PSSLEC,10426507);95; VOL.107 (1-4); PP.245-55, CIBA-GEIGY AG;AGRICULTURAL DIVISION; BASEL; CH-4002; SWITZ. (CH), XP000671675 MAIER L ET AL: "Organic phosphorus compounds. 105. Synthesis and properties of 2-amino-2-arylethylphosphonic acids and derivatives"
- Übersetzung JP-A-3151367

## Beschreibung

Die vorliegende Erfindung betrifft neue substituierte aromatische Phosphonsäurederivate der Formel I 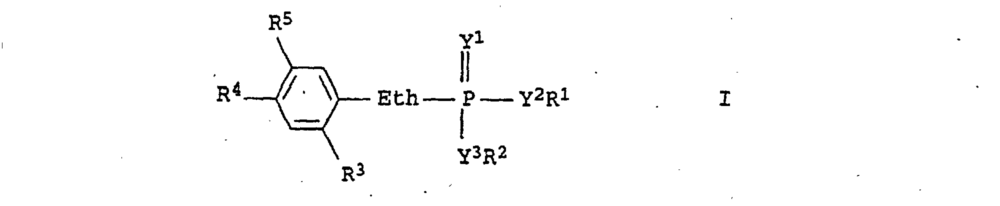 in der die Variablen folgende Bedeutungen haben:
- Eth: 1,2-Ethindiyl oder eine Ethan- oder Ethen-1,2-diyl-Kette, die jeweils unsubstituiert sein oder einen oder zwei der folgenden Substituenten tragen kann: Halogen, Cyano, Carboxy, C₁-C₄-Alkyl, C₁-C₄-Halogenalkyl, C₁-C₄-Alkoxy, C₁-C₄-Halogenalkoxy, (C₁-C₄-Alkoxy) carbonyl und/oder Di(C₁-C₄-alkyl) amino;
- Y¹: Sauerstoff oder Schwefel;
- Y²: Sauerstoff, Schwefel oder -N(R⁶)-;
- Y³: Sauerstoff, Schwefel oder -N(R⁷)-;
- R¹, R², R⁶, R⁷: unabhängig voneinander Wasserstoff, C₁-C₆-Alkyl, C₁-C₆-Halogenalkyl, Hydroxy-C₁-C₄-alkyl, Cyano-C₁-C₄-alkyl, C₁-C₄-Alkoxy-C₁-C₄-alkyl, C₁-C₄-Halogenalkoxy-C₁-C₄-alkyl, C₃-C₄-Alkenyloxy-C₁-C₄-alkyl, C₃-C₄-Alkinyloxy-C₁-C₄-alkyl, C₃-C₈-Cycloalkoxy-C₁-C₄-alkyl, Amino-C₁-C₄-alkyl, C₁-C₄-Alkylamino-C₁-C₄-alkyl, Di-(C₁-C₄-alkylyamino-C₁-C₄-alkyl, C₁-C₄-Alkylthio-C₁-C₄-alkyl, C₁-C₄-Halogenalkylthio-C₁-C₄-alkyl, C₃-C₄-Alkenylthio-C₁-C₄-alkyl, C₃-C₄-Alkinylthio-C₁-C₄-alkyl, C₁-C₄-Alkylsulfinyl-C₁-C₄-alkyl, C₁-C₄-Halogenalkylsulfinyl-C₁-C₄-alkyl, C₃-C₄-Alkenylsulfinyl-C₁-C₄-alkyl, C₃-C₄-Alkinylsulfinyl-C₁-C₄-alkyl, C₁-C₄-Alkylsulfonyl-C₁-C₄-alkyl, C₁-C₄-Halogenalkylsulfonyl-C₁-C₄-alkyl, C₃-C₄-Alkenylsulfonyl-C₁-C₄-alkyl, C₃-C₄-Alkinylsulfonyl-C₁-C₄-alkyl, C₃-C₆-Alkenyl, C₃-C₆-Halogenalkenyl, Cyano-C₃-C₆-alkenyl, C₃-C₆-Alkinyl, C₃-C₆-Halogenalkinyl, Cyano-C₃-C₆-alkinyl, Hydroxycarbonyl-C₁-C₄-alkyl, (C₁-C₄-Alkoxy)carbonyl-C₁-C₄-alkyl, (C₁-C₄-Alkylthio)carbonyl-C₁-C₄-alkyl, Aminocarbonyl-C₁-C₄-alkyl, (C₁-C₄-Alkyl)aminocarbonyl-C₁-C₄-alkyl, Di- (C₁-C₄-alkyl)aminocarbonyl-C₁-C₄-alkyl,
C₃-C₈-Cycloalkyl, C₃-C₈-Cycloalkyl-C₁-C₄-alkyl, Phenyl, Phenyl-C₁-C₄-alkyl oder
3- bis 7-gliedriges Heterocyclyl oder Heterocyclyl-C₁-C₄-alkyl, wobei alle Heterocyclen gewünschtenfalls ein Carbonyl- oder Thiocarbonyl-Ringglied enthalten können
und wobei alle Cycloalkyl-, Phenyl- und Heterocyclylringe unsubstituiert sein oder ein bis vier Substituenten tragen können, jeweils ausgewählt aus der Gruppe bestehend aus Halogen, Cyano, Nitro, Amino, Hydroxy, Carboxy, C₁-C₄-Alkyl, C₁-C₄-Halogenalkyl, C₁-C₄-Alkoxy, C₁-C₄-Halogenalkoxy, C₁-C₄-Alkylthio, C₁-C₄-Halogenalkylthio, C₁-C₄-Alkylsulfonyl, C₁-C₄-Halogenalkylsulfonyl, (C₁-C₄-Alkyl) carbonyl, (C₁-C₄-Halogenalkyl)carbonyl, (C₁-C₄-Alkoxy)carbonyl, (C₁-C₄-Alkyl)carbonyloxy, (C₁-C₄-Halogenalkyl)carbonyloxy und Di-(C₁-C₄-alkyl)amino,
oder
- R¹ und R² oder R¹ und R⁶ und/oder R² und R⁷: bilden jeweils zusammen eine 1,2-Ethandiyl-, 1,3-Propylen-, Tetramethylen-, Pentamethylen- oder Ethylenoxyethylen-Kette, die gewünschtenfalls durch ein bis vier C₁-C₄-Alkyl-und/oder ein oder zwei (C₁-C₄-Alkoxy)carbonylgruppen substituiert sein kann,
oder
- R¹ und R²: bedeuten zusammen 1,2-Phenylen, das unsubstituiert sein oder ein bis drei Substituenten tragen kann, jeweils ausgewählt aus der Gruppe bestehend aus Cyano, Nitro, Halogen, C₁-C₄-Alkyl, C₁-C₄-Halogenalkyl, C₁-C₄-Alkoxy und C₁-C₄-Halogenalkoxy;
- R³: Cyano, Halogen, C₁-C₄-Alkyl, C₁-C₄-Halogenalkyl, C₁-C₄-Alkoxy oder C₁-C₄-Halogenalkoxy;
- R⁴: Wasserstoff oder Halogen;
- R⁵: einen der folgenden Heterocyclen Φ¹, Φ², Φ³, Φ⁴, Φ⁵, Φ⁷, Φ²⁰, Φ²¹ oder Φ²²: 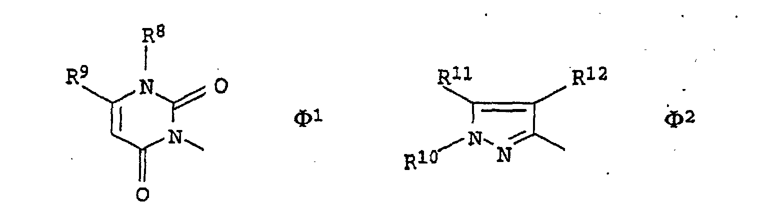 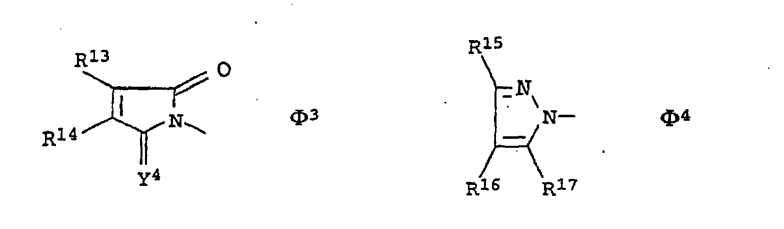 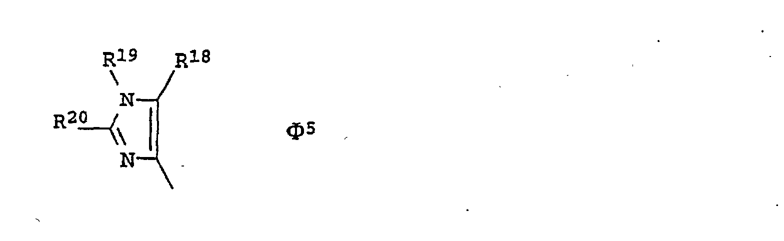 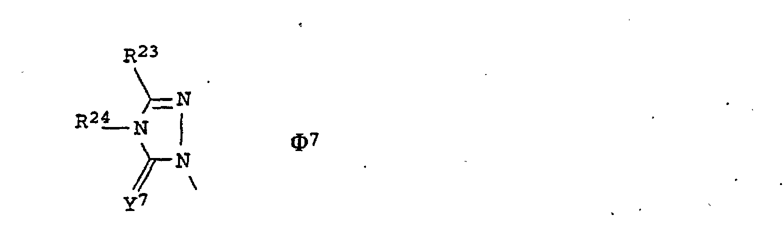 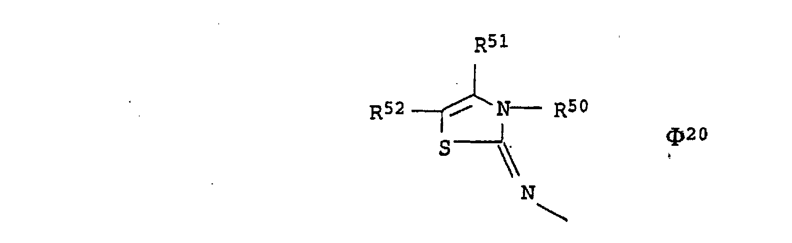 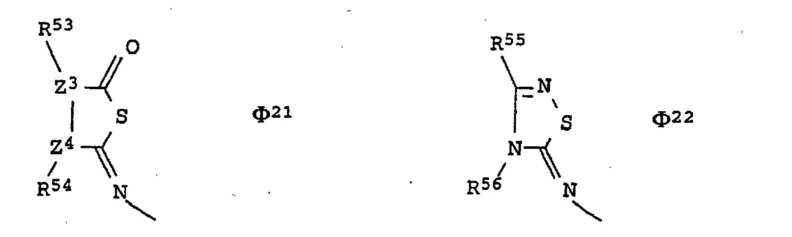
wobei
- R⁸ für: Wasserstoff, Amino, C₁-C₄-Alkyl oder C₁-C₄-Halogenalkyl;
- R⁹ für: Cyano, C₁-C₄-Alkyl, C₁-C₄-Halogenalkyl, C₁-C₄-Alkylsulfonyl oder C₁-C₄-Halogenalkylsulfonyl;
- R¹⁰ für: C₁-C₄-Alkyl oder C₁-C₄-Halogenalkyl;
- R¹¹ für: Cyano, C₁-C₄-Alkyl, C₁-C₄-Halogenalkyl, C₁-C₄-Alkoxy, C₁-C₄-Halogenalkoxy, C₁-C₄-Alkylthio, C₁-C₄-Halogenalkylthio, C₁-C₄-Alkylsulfinyl, C₁-C₄-Halogenalkylsulfinyl, C₁-C₄-Alkylsulfonyl oder C₁-C₄-Halogenalkylsulfonyl,
oder
- R¹⁰ und R¹¹: zusammen mit den sie verbindenden Ringatomen für einen 5- bis 7-gliedrigen Heterocyclus mit ein oder zwei Heteroatomen, der unsubstituiert sein oder ein oder zwei C₁-C₄-Alkylreste tragen kann;
- R¹² für: Wasserstoff, Cyano, Halogen, C₁-C₄-Alkyl oder C₁-C₄-Halogenalkyl;
- Y⁴ für: Sauerstoff, Schwefel oder Methylen;
- R¹³, R¹⁴: unabhängig voneinander für Wasserstoff oder C₁-C₄-Alkyl,
oder
- R¹³ und R¹⁴: zusammen mit den sie verbindenden Ringatomen für einen 5- bis 7-gliedrigen carbo- oder heterocyclischen Ring, wobei der Ring gewünschtenfalls noch ein oder zwei Halogen- und/oder C₁-C₄-Alkylreste oder einen weiteren 3- bis 6-gliedrigen carbo- oder heterocyclischen Ring annelliert tragen kann;
- R¹⁵, R¹⁶: unabhängig voneinander für
Wasserstoff, Halogen, C₁-C₄-Alkyl oder C₁-C₄-Halogenalkyl,
oder
- R¹⁵ und R¹⁶: zusammen mit den sie verbindenden Ringatomen für einen 5- bis 7-gliedrigen carbo- oder heterocyclischen Ring, der gewünschtenfalls noch ein oder zwei C₁-C₄-Alkylreste tragen kann;
- R¹⁷ für: Halogen oder C₁-C₄-Alkyl;
- R¹⁸, R³³, R³⁵: unabhängig voneinander für Halogen;
- R¹⁹, R²⁰, R⁵⁵, R⁵⁶,: unabhängig voneinander für Wasserstoff, C₁-C₄-Alkyl oder C₁-C₄-Halogenalkyl,
oder
- R¹⁹ und R²⁰ und/oder R⁵⁵ und R⁵⁶: zusammen mit den sie verbindenden Ringatomen für einen 5- bis 7-gliedrigen Ring, der gewünschtenfalls noch ein oder zwei C₁-C₄-Alkyl- oder C₁-C₄-Halogenalkylreste tragen kann;
- Y⁷: für Sauerstoff oder Schwefel;
- Z³, Z⁴: unabhängig voneinander für Stickstoff oder CH;
- R²³ und R²⁴ und/oder R⁵³ und R⁵⁴: zusammen mit den sie verbindenden Ringatomen für einen 5- bis 7-gliedrigen Ring, der gewünschtenfalls noch ein oder zwei C₁-C₄-Alkylreste tragen kann;
- R⁵²: für Wasserstoff, C₁-C₄-Alkyl, C₃-C₆-Cycloalkyl oder C₁-C₄-Halogenalkyl;
- R⁵⁰ und R⁵¹: unabhängig voneinander für C₁-C₄-Alkyl, C₁-C₄-Halogenalkyl oder C₃-C₆-Cycloalkyl
stehen,
sowie die landwirtschaftlich brauchbaren Salze der Verbindungen I,
ausgenommen diejenigen Verbindungen I, bei denen R⁴ für Wasserstoff und R⁵ für Φ² stehen.

Außerdem betrifft die Erfindung
- die Verwendung der Verbindungen I als Herbizide oder zur Desikkation/Defoliation von Pflanzen,
- herbizide Mittel und Mittel zur Desikkation/Defoliation von Pflanzen, welche die Verbindungen I als wirksame Substanzen enthalten,
- Verfahren zur Herstellung der Verbindungen I und von herbiziden Mitteln und Mitteln zur Desikkation/Defoliation von Pflanzen unter Verwendung der Verbindungen I,
- Verfahren zur Bekämpfung von unerwünschtem Pflanzenwuchs und zur Desikkation/Defoliation von Pflanzen mit den Verbindungen I,
- Zwischenprodukte der Formeln XXVIII, XXXI, XXXII, XXXIIIa, XXXV und XL sowie Verfahren zu deren Herstellung.

G. Theodoridis, J.T. Bahr, B.L. Davidson, S.E. Hart, F.W. Hotzman, K.M. Poss & S.F. Tutt wiesen bereits in ACS Symp. Ser. 584, 90 (1995) auf die herbizide Wirkung von l-Chlor-2-[2,4-dichlor-5-(4-difluormethyl-4,5-dihydro-3-methyl-5-oxo-1H-1,2,4-triazol-1-yl)phenyl]ethylphosphonsäurediethylester hin.

In der JP 03/151 367 werden 3-Phenylpyrazole der Formel 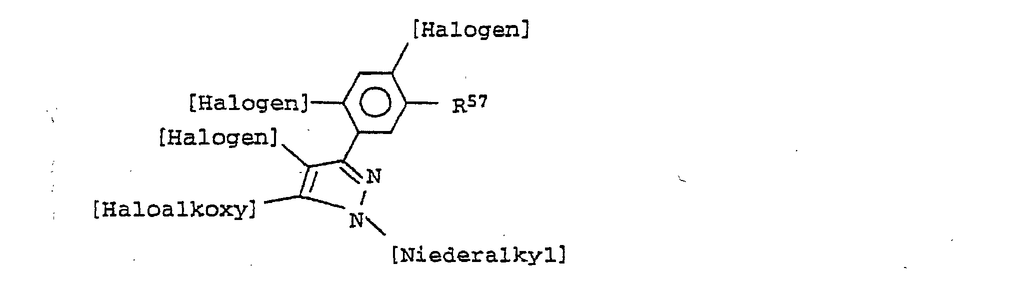 in der R⁵⁷ unter anderem für Dialkoxyphosphinylalkyl steht, als Herbizide beschrieben.

Des weiteren sind aus der WO 95/32188 herbizid wirksame 3-Phenylpyrazole der Formel 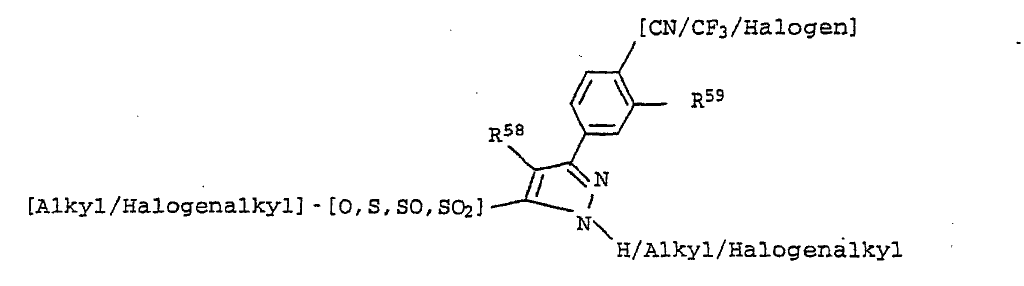 wobei die Alkyl-/Halogenalkylsubstituenten jeweils C₁-C₄ sind und
- R⁵⁸: für Wasserstoff, Nitro, Halogen, Carboxyl oder einen Ester-oder Säureamid-Rest und
- R⁵⁹: für -CH₂-CH₂-P(O) (OR⁶⁰)₂ oder -CH=CH-P(O) (OR⁶⁰)₂ mit R⁶⁰ = Wasserstoff oder bestimmter organischer Rest
stehen, bekannt.

Phenyluracile der allgemeinen Formel 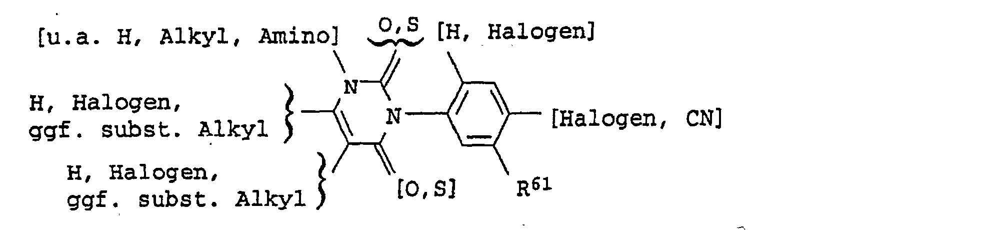 wobei der Rest R⁶¹ u.a. direkt oder über eine Kette mit dem Aromaten verknüpftes Dialkoxy(thio)phosphoryl bedeutet, fallen unter die allgemeinen Formeln von Uracilen, die
- gemäß DE-A 44 37 197 zusammen mit anderen Herbiziden zur selektiven Unkrautbekämpfung im Reisanbau geeignet sind;
- gemäß der DE-A 44 32 888 zur semi- und nicht-selektiven Unkrautbekämpfung geeignet sind;
- gemäß der DE-A 44 31 219 mit bestimmten anderen Herbiziden eine synergistische herbizide Wirkung zeigen.

Phosphorous Sulfit Silicon Related Elements (PSSLEL 10426507) 1995, 107, 245-255 beschreibt Phosphonsäurederivate wie 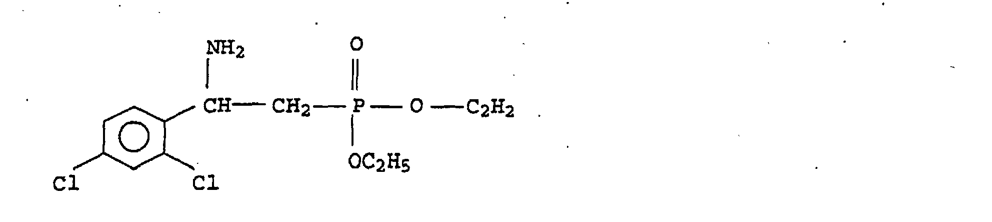 sowie deren Verwendung als Botryticide.

EP-A 207 890 offenbart Phosphonsäurederivate der Formel 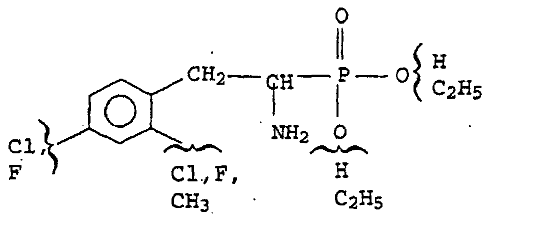 sowie deren Verwendung als Microbizide.

Allerdings eignen sich die oben erwähnten Phosphonsäurederivate aufgrund ihres Substitutionsmusters nicht als Zwischenverbindungen zur Herstellung von Verbindung I.

In der U.S. 5,434,288 werden bestimmte Benzolderivate als Phospholipase-A2-Inhibitoren gelehrt. Unter die breite Definition dieser Verbindungen fallen - bei geeigneter Wahl der Substituenten - formal auch einige der vorliegenden Verbindungen I.

Äußerdem fallen - bei geeigneter Wahl der Substituenten - einige der Verbindungen I formal unter die allgemeinen Formeln von
- in der DE-A 41 21 959 beschriebenen Trägerkatalysatoren für die Essigsäure-Herstellung;
- in der EP-A 537 696 und der DE-A 41 24 942 beschriebenen antithrombischen, antiaggregatorischen und tumorhemmenden Wirkstoffen;
- in der FR-A 2 729 142 als Antiarrhytimika beschriebenen Wirkstoffen;
- in der EP-A 421 436 zur Herstellung bestimmter NMDA-Rezeptor-Inhibitoren genannten Zwischenprodukten.

Ferner sind in der EP-A 426 112 pbotographische Silberhalogenidmaterialien beschrieben, die organische Phosphorverbindungen enthalten. Unter die sehr allgemeinen Definitionen dieser Verbindungen fallen bei geeigneter Wahl der Substituenten formal auch einige der vorliegenden aromatischen Phosphonsäurederivate I.

Da die herbiziden Eigenschaften der o.g. Herbizide bezüglich der Schadpflanzen nicht immer völlig befriedigen, lagen der vorliegenden Erfindung neue herbizid wirksame Verbindungen als Aufgabe zugrunde, mit denen sich unerwünschte Pflanzen besser als bisher gezielt bekämpfen lassen. Die Aufgabe erstreckte sich auch auf die Bereitstellung neuer desikkant/defoliant wirksamer Verbindungen.

Demgemäß wurden die vorliegenden substituierten aromatischen Phosphonsäurederivate der Formel I sowie deren herbizide Wirkung gefunden.

Ferner wurden herbizide Mittel gefunden, die die Verbindungen I enthalten und eine Sehr gute herbizide Wirkung besitzen. Außerdem wurden Verfahren zur Herstellung dieser Mittel und Verfahren zur Bekämpfung von unerwünschtem Pflanzenwuchs mit den Verbindungen I gefunden.

Des weiteren wurde gefunden, daß die Verbindungen I auch zur Desikkation/Defoliation von Pflanzenteilen geeignet sind, wofür Kulturpflanzen wie Baumwolle, Kartoffel, Raps, Sonnenblume, Sojabohne oder Ackerbohnen, insbesondere Baumwolle, in Betracht kommen. Diesbezüglich wurden Mittel zur Desikkation und/oder Defoliation von Pflanzen, Verfahren zur Herstellung dieser Mittel und Verfahren zur Desikkation und/oder Defoliation von Pflanzen mit den Verbindungen I gefunden.

Die Verbindungen der Formel I können je nach Substitutionsmuster ein oder mehrere Chiralitätszentren enthalten und liegen dann als Enantiomeren- oder Diastereomerengemische vor. Je nach Bedeutung von Eth sind auch E-/Z-Isomere möglich. Gegenstand der Erfindung sind sowohl die reinen Enantiomeren oder Diastereomeren als auch deren Gemische.

Unter landwirtschaftlich brauchbaren Salzen sind vor allem die Salze von I mit denjenigen Kationen sowie Säureadditionssalze von I mit solchen Säuren zu verstehen, welche die herbizide oder desikkante/defoliante Wirkung von I nicht negativ beeinträchtigen.

So kommen als Kationen insbesondere die Ionen der Alkalimetalle, vorzugsweise Natrium und Kalium, der Erdalkalimetalle, vorzugsweise Calcium, Magnesium und Barium, und der Übergangsmetalle, vorzugsweise Mangan, Kupfer, Zink und Eisen, sowie das Ammoniumion, das einen C₁-C₄-Alkyl-, Phenyl- oder Benzylsubstituenten und gewünschtenfalls zusätzlich ein bis drei weitere C₁-C₄-Alkylreste tragen kann, vorzugsweise Diisopropylammonium, Tetramethylammonium, Tetrabutylammonium, Trimethylbenzylammonium, des weiteren Phosphoniumionen, vorzugsweise Tri-(C₁-C₄-alkyl)-phosphonium, Sulfoniumionen, vorzugsweise Tri-(C₁-C₄-alkyl)-sulfonium, sowie Sulfoxoniumionen, vorzugsweise Tri-(C₁-C₄-alkyl)-sulfoxonium.

Anionen von brauchbaren Säureadditionssalzen sind in erster Linie Fluorid, Chlorid, Bromid, Hydrogensulfat, Sulfat, Dihydrogenphosphat, Hydrogenphosphat, Phosphat, Nitrat, Hydrogencarbonat, Carbonat, Hexafluorosilikat, Hexafluorophosphat, Benzoat, Oxalat, Dodecylbenzolsulfonat, sowie die Anionen von C₁-C₄-Alkansäuren, vorzugsweise Formiat, Acetat, Propionat und Butyrat.

Die für die Substituenten R¹ bis R³, R⁶ bis R¹⁷, R¹⁹, R²⁰, R⁵⁰ bis R⁵², R⁵⁵ und R⁵⁶ oder als Reste an Cycloalkyl-, Phenyl- oder Heterocyclylringen oder an Ethylen-, Ethen-1,2-diyl-, 1,3-Propylen-, Tetramethylen-, Pentamethylen- oder Ethylenoxyethylen-Ketten genannten organischen Molekülteile stellen Sammelbegriffe für individuelle Aufzählungen der einzelnen Gruppenmitglieder dar. Sämtliche Kohlenstoffketten, also alle Alkyl-, Halogenalkyl-, Hydroxyalkyl-, Cyanoalkyl-, Aminoalkyl-, Hydroxycarbonylalkyl-, Aminocarbonylalkyl-, Alkoxy-, Halogenalkoxy-, Alkylthio-, Halogenalkylthio, Alkylsulfinyl-, Halogensulfinyl-, Alkylsulfonyl-, Halogenalkylsulfonyl-, Alkylamino-, Dialkylamino-, Alkenyl-, Halogenalkenyl-, Cyanoalkenyl-, Alkenyloxy-, Alkenylthio-, Alkenylsulfinyl-, Alkenylsulfonyl-, Alkinyl-, Halogenalkinyl-, Cyanoalkinyl-, Alkinyloxy-, Alkinylthio-, Alkinylsulfinyl- und Alkinylsulfonyl-Teile können geradkettig oder verzweigt sein. Halogenierte Substituenten tragen vorzugsweise ein bis fünf gleiche oder verschiedene Halogenatome.

Die Bedeutung Halogen steht jeweils für Fluor, Brom, Chlor oder Iod, insbesondere für Fluor oder Chlor.

Ferner stehen beispielsweise:
- C₁-C₄-Alkyl für: Methyl, Ethyl, n-Propyl, 1-Methylethyl, n-Butyl, 1-Methylpropyl, 2-Methylpropyl oder 1,1-Dimethylethyl, insbesondere für Methyl oder Ethyl;
- C₁-C₄-Halogenalkyl für: einen C₁-C₄-Alkylrest wie vorstehend genannt, der partiell oder vollständig durch Fluor, Chlor, Brom und/oder Iod substituiert ist, also z.B. Chlormethyl, Dichlormethyl, Trichlormethyl, Fluormethyl, Difluormethyl, Trifluormethyl, Chlorfluormethyl, Dichlorfluormethyl, Chlordifluormethyl, 2-Fluorethyl, 2-Chlorethyl, 2-Bromethyl, 2-Iodethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl, Pentafluorethyl, 2-Fluorpropyl,3-Fluorpropyl, 2,2-Difluorpropyl, 2,3-Difluorpropyl, 2-Chlorpropyl, 3-Chlorpropyl, 2,3-Dichlorpropyl, 2-Brompropyl, 3-Brompropyl, 3,3,3-Trifluorpropyl, 3,3,3-Trichlorpropyl, 2,2,3,3,3-Pentafluorpropyl, Heptafluörpropyl, 1-(Fluormethyl)-2-fluorethyl, 1-(Chlormethyl)-2-chlorethyl, 1- (Brommethyl)-2-bromethyl, 4-Fluorbutyl, 4-Chlorbutyl, 4-Brombutyl oder Nonafluorbutyl, insbesondere für Chlormethyl, Fluormethyl, Difluormethyl, Trifluormethyl, 2-Fluorethyl, 2-Chlorethyl oder 2,2,2-Trifluorethyl;
- C₁-C₆-Alkyl für: C₁-C₄-Alkyl wie vorstehend genannt, sowie z.B. n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl oder 1-Ethyl-2-methylpropyl, insbesondere für Methyl, Ethyl, n-Propyl, 1-Methylethyl, n-Butyl, 1,1-Dimethylethyl, n-Pentyl oder n-Hexyl;
- C₁-C₆-Halogenalkyl für: einen C₁-C₆-Alkylrest wie vorstehend genannt, der partiell oder vollständig durch Fluor, Chlor, Brom und/oder Iod substituiert ist, also z.B. einen der unter C₁-C₄-Halogenalkyl genannten Reste oder für 5-Fluor-1-pentyl, 5-Chlor-1-pentyl, 5-Brom-1-pentyl, 5-Jod-1-pentyl, 5,5,5-Trichlor-2-pentyl, Undecafluorpentyl, 6-Fluor-1-hexyl, 6-Chlor-1-hexyl, 6-Brom-1-hexyl, 6-Jod-1-hexyl, 6,6,6-Trichlor-1-hexyl oder Dodecafluorhexyl, insbesondere für Chlormethyl, Fluormethyl, Difluormethyl, Trifluormethyl, 2-Fluorethyl, 2-Chlorethyl oder 2,2,2-Trifluorethyl;
- Hydroxy-C₁-C₄-alkyl für: z.B. Hydroxymethyl, 2-Hydroxyeth-1-yl, 2-Hydroxy-prop-1-yl, 3-Hydroxy-prop-1-yl, 1-Hydroxy-prop-2-yl, 2-Hydroxy-but-1-yl, 3-Hydroxy-but-1-yl, 4-Hydroxy-but-1-yl, 1-Hydroxy-but-2-yl, 1-Hydroxy-but-3-yl, 2-Hydroxy-but-3-yl, 1-Hydroxy-2-methyl-prop-3-yl, 2-Hydroxy-2-methyl-prop-3-yl oder 2-Hydroxymethyl-prop-2-yl, insbesondere für 2-Hydroxyethyl;
- Cyano-C₁-C₄-alkyl für: Cyanomethyl, 1-Cyanoeth-1-yl, 2-Cyanoeth-1-yl, 1-Cyanoprop-1-yl, 2-Cyanoprop-1-yl, 3-Cyanoprop-1-yl, 1-Cyanoprop-2-yl, 2-Cyanoprop-2-yl, 1-Cyanobut-1-yl, 2-Cyanobut-1-yl, 3-Cyanobut-1-yl, 4-Cyanobut-1-yl, 1-Cyanobut-2-yl, 2-Cyanobut-2-yl, 1-Cyanobut-3-yl, 2-Cyanobut-3-yl, 1-Cyano-2-methyl-prop-3-yl, 2-Cyano-2-methylprop-3-yl, 3-Cyano-2-methyl-prop-3-yl oder 2-Cyanomethylprop-2-yl, insbesondere für Cyanomethyl oder 2-Cyanoethyl;
- Amino-C₁-C₄-alkyl für: z.B. Aminomethyl, 2-Aminoethyl, 2-Aminoprop-1-yl, 3-Aminoprop-1-yl, 2-Aminobut-1-yl, 3-Aminobut-1-yl, 4-Aminobut-1-yl, 1-Aminobut-2-yl, 3-Aminobut-2-yl, 4-Aminobut-2-yl, 1-(Aminomethyl)-eth-1-yl, 1-(Aminomethyl)-1-(methyl)-eth-1-yl oder 1-(Aminomethyl)-prop-1-yl, insbesondere für Aminomethyl oder 2-Aminoethyl;
- Hydroxycarbonyl-C₁-C₄-alkyl für: Hydroxycarbonyl-methyl, 1-(Hydroxycarbonyl)ethyl, 2-(Hydroxycarbonyl)ethyl, 1-(Hydroxycarbonyl)prop-1-yl, 2-(Hydroxycarbonyl)prop-1-yl, 3-(Hydroxycarbonyl)prop-1-yl, 1-(Hydroxycarbonyl)but-l-yl, 2-(Hydroxycarbonyl)but-1-yl, 3-(Hydroxycarbonyl)but-1-yl, 4-(Hydroxycarbonyl)but-1-yl, 1-(Hydroxycarbonyl)but-2-yl, 2-(Hydroxycarbonyl)but-2-yl, 3-(Hydroxycarbonyl)but-2-yl, 4-(Hydroxycarbonyl)but-2-yl, 1-(Hydroxycarbonyl-methyl)-eth-1-yl, 1-(Hydroxycarbonyl-methyl)-1-(methyl)-eth-1-yl oder 1-(Hydroxycarbonyl-methyl)-prop-1-yl, insbesondere für Hydroxycarbonyl-methyl oder 2-(Hydroxycarbonyl)ethyl;
- Aminocarbonyl-C₁-C₄-alkyl für: Aminocarbonyl-methyl, 1-(Aminocarbonyl)ethyl, 2- (Aminocarbonyl)ethyl, 1-(Aminocarbonyl)prop-1-yl, 2-(Aminocarbonyl)prop-1-yl, 3-(Aminocarbonyl)prop-1-yl, 1-(Aminocarbonyl)but-l-yl, 2-(Aminocarbonyl)but-1-yl, 3-(Aminocarbonyl)but-1-yl, 4-(Aminocarbonyl)but-1-yl, 1-(Aminocarbonyl)but-2-yl, 2-(Aminocarbonyl)but-2-yl, 3-(Aminocarbonyl)but-2-yl, 4-(Aminocarbonyl)but-2-yl, 1-(Aminocarbonyl-methyl)-eth-1-yl, 1-(Aminocarbonyl-methyl)-1-(methyl)-eth-1-yl oder 1-(Aminocarbonyl-methyl)-prop-1-yl, insbesondere für Aminocarbonyl-methyl oder 2-(Aminocarbonyl)ethyl;
- Phenyl-C₁-C₄-alkyl für: Benzyl, 1-Phenylethyl, 2-Phenylethyl, 1-Phenylprop-1-yl, 2-Phenylprop-1-yl, 3-Phenylprop-1-yl, 1-Phenylbut-1-yl, 2-Phenylbut-1-yl, 3-Phenylbut-1-yl, 4-Phenylbut-1-yl, 1-Phenylbut-2-yl, 2-Phenylbut-2-yl, 3-Phenylbut-2-yl, 4-Phenylbut-2-yl, 1-(Phenylmethyl)-eth-1-yl, 1-(Phenylmethyl)-1-(methyl)-eth-1-yl oder 1-(Phenylmethyl)-prop-1-yl, insbesondere für Benzyl oder 2-Phenylethyl;
- Heterocyclyl-C₁-C₄-alkyl für: Heterocyclylmethyl, 1-Heterocyclyl-ethyl, 2-Heterocyclyl-ethyl, 1-Heterocyclyl-prop-1-yl, 2-Heterocyclyl-prop-1-yl, 3-Heterocyclyl-prop-1-yl, 1-Heterocyclyl-but-1-yl, 2-Heterocyclyl-but-1-yl, 4-Heterocyclylbut-1-yl, 1-Heterocyclyl-but-2-yl, 2-Heterocyclyl-but-2-yl, 3-Heterocyclyl-but-2-yl, 3-Heterocyclyl-but-2-yl, 4-Heterocyclyl-but-2-yl, 1-(Heterocyclylmethyl)-eth-1-yl, 1-(Heterocyclylmethyl)-1-(methyl)-eth-1-yl oder 1-(Heterocyclylmethyl)-prop-1-yl, insbesondere für Heterocyclylmethyl oder 2-Heterocyclyl-ethyl oder 3-Heterocyclylpropyl; besonders bevorzugt sind 3-Oxetanylmethyl, 2-(1,3-Oxazolin-2-on-3-yl)ethyl und 3-(2-Pyridyl)propyl;
- (C₁-C₄-Alkyl)carbonyl für: CO-CH₃, CO-C₂H₅, n-Propylcarbonyl, CO-CH(CH₃)₂, n-Butylcarbonyl, 1-Methylpropylcarbonyl, 2-Methylpropylcarbonyl oder CO-C(CH₃)₃, insbesondere für CO-CH₃;
- (C₁-C₄-Halogenalkyl)carbonyl für: einen (C₁-C₄-Alkyl)carbonylrest wie vorstehend genannt, der partiell oder vollständig durch Fluor, Chlor, Brom und/oder Iod substituiert ist, also z.B. Chloracetyl, Dichloracetyl, Trichloracetyl, Fluoracetyl, Difluoracetyl, CO-CF₃, Chlorfluoracetyl, Dichlorfluoracetyl, Chlordifluoracetyl, 2-Fluorethylcarbonyl, 2-Chlorethylcarbonyl, 2-Bromethylcarbonyl, 2-Iodethylcarbonyl, 2,2-Difluorethylcarbonyl, 2,2,2-Trifluorethylcarbonyl, 2-Chlor-2-fluorethylcarbonyl, 2-Chlor-2,2-difluorethylcarbonyl, 2,2-Dichlor-2-fluorethylcarbonyl, 2,2,2-Trichlorethylcarbonyl, Pentafluorethylcarbonyl, 2-Fluorpropylcarbonyl, 3-Fluorpropylcarbonyl, 2,2-Difluorpropylcarbonyl, 2,3-Difluorpropylcarbonyl, 2-Chlorpropylcarbonyl, 3-Chlorpropylcarbonyl, 2,3-Dichlorpropylcarbonyl, 2-Brompropylcarbonyl, 3-Brompropylcarbonyl, 3,3,3-Trifluorpropylcarbonyl, 3,3,3-Trichlorpropylcarbonyl, 2,2,3,3,3-Pentafluorpropylcarbonyl, Heptafluorpropylcarbonyl, 1-(Fluormethyl)-2-fluorethylcarbonyl, 1-(Chlormethyl)-2-chlorethylcarbonyl, 1-(Brommethyl)-2-bromethylcarbonyl, 4-Fluorbutylcarbonyl, 4-Chlorbutylcarbonyl, 4-Brombutylcarbonyl oder Nonafluorbutylcarbonyl, insbesondere für CO-CF₃;
- (C₁-C₄-Alkyl)carbonyloxy für: Acetyloxy, Ethylcarbonyloxy, n-Propylcarbonyloxy, 1-Methylethylcarbonyloxy, n-Butylcarbonyloxy, 1-Methylpropylcarbonyloxy, 2-Methylpropylcarbonyloxy oder 1,1-Dimethylethylcarbonyloxy, insbesondere für Acetyloxy;
- (C₁-C₄-Halogenalkyl)carbonyloxy für: einen (C₁-C₄-Alkyl)carbonyloxy-Rest wie vorstehend genannt, der partiell oder vollständig durch Fluor, Chlor, Brom und/oder Iod substituiert ist, also z.B. Chloracetyloxy, Dichloracetyloxy, Trichloracetyloxy, Fluoracetyloxy, Difluoracetyloxy, Trifluoracetyloxy, Chlorfluoracetyloxy, Dichlorfluoracetyloxy, Chlordifluoracetyloxy, 2-Fluorethylcarbonyloxy, 2-Chlorethylcarbonyloxy, 2-Bromethylcarbonyloxy, 2-Iodethylcarbonyloxy, 2,2-Difluorethylcarbonyloxy, 2,2,2-Trifluorethylcarbonyloxy, 2-Chlor-2-fluorethylcarbonyloxy, 2-Chlor-2,2-difluorethylcarbonyloxy, 2,2-Dichlor-2-fluorethylcarbonyloxy, 2,2,2-Trichlorethylcarbonyloxy, Pentafluorethylcarbonyloxy, 2-Fluorpropylcarbonyloxy,3-Fluorpropylcarbonyloxy, 2,2-Difluorpropylcarbonyloxy, 2,3-Difluorpropylcarbonyloxy, 2-Chlorpropylcarbonyloxy, 3-Chlorpropylcarbonyloxy, 2,3-Dichlorpropylcarbonyloxy, 2-Brompropylcarbonyloxy, 3-Brompropylcarbonyloxy, 3,3,3-Trifluorpropylcarbonyloxy, 3,3,3-Trichlorpropylcarbonyloxy, 2,2,3,3,3-Pentafluorpropylcarbonyloxy, Heptafluorpropylcarbonyloxy, 1-(Fluormethyl)-2-fluorethylcarbonyloxy, 1-(Chlormethyl)-2-chlorethylcarbonyloxy, 1-(Brommethyl)-2-bromethylcarbonyloxy, 4-Fluorbutylcarbonyloxy, 4-Chlorbutylcarbonyloxy, 4-Brombutyl oder Nonafluorbutyl, insbesondere für Trifluoracetoxy;
- C₁-C₄-Alkoxy für: Methoxy, Ethoxy, n-Propoxy, 1-Methylethoxy, n-Butoxy, 1-Methylpropoxy, 2-Methylpropoxy oder 1,1-Dimethylethoxy, insbesondere für Methoxy oder Ethoxy;
- C₁-C₄-Halogenalkoxy für: einen C₁-C₄-Alkoxyrest wie vorstehend genannt, der partiell oder vollständig durch Fluor, Chlor, Brom und/oder Iod substituiert ist, also z.B. Chlormethoxy, Dichlormethoxy, Trichlormethoxy, Fluormethoxy, Difluormethoxy, Trifluormethoxy, Chlorfluormethoxy, Dichlorfluormethoxy, Chlordifluormethoxy, 2-Fluorethoxy, 2-Chlorethoxy, 2-Bromethoxy, 2-Iodethoxy, 2,2-Difluorethoxy, 2,2,2-Trifluorethoxy, 2-Chlor-2-fluorethoxy, 2-Chlor-2,2-difluorethoxy, 2,2-Dichlor-2-fluorethoxy, 2,2,2-Trichlorethoxy, Pentafluorethoxy, 2-Fluorpropoxy, 3-Fluorpropoxy, 2,2-Difluorpropoxy, 2,3-Difluorpropoxy, 2-Chlorpropoxy, 3-Chlorpropoxy, 2,3-Dichlorpropoxy, 2-Brompropoxy, 3-Brompropoxy, 3,3,3-Trifluorpropoxy, 3,3,3-Trichlorpropoxy, 2,2,3,3,3-Pentafluorpropoxy, Heptafluorpropoxy, 1-(Fluormethyl)-2-fluorethoxy, 1-(Chlormethyl)-2-chlorethoxy, 1-(Brommethyl)-2-bromethoxy, 4-Fluorbutoxy, 4-Chlorbutoxy, 4-Brombutoxy oder Nonafluorbutoxy, insbesondere für 2-Chlorethoxy oder 2,2,2-Trifluorethoxy;
- (C₁-C₄-Alkoxy)carbonyl für: CO-OCH₃, CO-OC₂H₅, n-Propoxycarbonyl, CO-OCH(CH₃)₂, n-Butoxycarbonyl, 1-Methylpropoxycarbonyl, CO-OCH₂-CH(CH₃)₂ oder CO-OC(CH₃)₃, insbesondere für CO-OCH₃ oder CO-OC₂H₅;
- C₁-C₆-Alkylthio für: SCH₃, SC₂H₅, n-Propylthio, SCH(CH₃)₂, n-Butylthio, 1-Methylpropylthio, 2-Methylpropylthio oder SC(CH₃)₃, insbesondere für SCH₃ oder SC₂H₅;
- C₁-C₄-Alkylamino für: Methylamino, Ethylamino, n-Propylamino, 1-Methylethylamino, n-Butylamino, 1-Methylpropylamino, 2-Methylpropylamino oder 1,1-Dimethylethylamino, insbesondere für Methylamino oder Ethylamino;
- Di-(C₁-C₄-alkyl)amino für: N,N-Dimethylamino, N,N-Diethylamino, N,N-Dipropylamino, N,N-Di-(1-methylethyl)amino, N,N-Dibutylamino, N,N-Di-(1-methylpropyl)amino, N,N-Di-(2-methylpropyl)amino, N,N-Di-(1,1-dimethylethyl)amino, N-Ethyl-N-methylamino, N-Methyl-N-propylamino, N-Methyl-N-(1-methylethyl)amino, N-Butyl-N-methylamino, N-Methyl-N-(1-methylpropyl)amino, N-Methyl-N- (2-methylpropyl)amino, N-(1,1-Dimethylethyl)-N-methylamino, N-Ethyl-N-propylamino, N-Ethyl-N-(1-methylethyl)amino, N-Butyl-N-ethylamino, N-Ethyl-N-(1-methylpropyl)amino, N-Ethyl-N-(2-methylpropyl)amino, N-Ethyl-N-(1,1-dimethylethyl)amino, N-(1-Methylethyl)-N-propylamino, N-Butyl-N-propylamino, N-(1-Methylpropyl)-N-propylamino, N-(2-Methylpropyl)-N-propylamino, N-(1,1-Dimethylethyl)-N-propylamino, N-Butyl-N-(1-methylethyl)amino, N-(1-Methylethyl)-N-(1-methylpropyl)amino, N-(1-Methylethyl)-N-(2-methylpropyl)amino, N-(1,1-Dimethylethyl)-N-(1-methylethyl)amino, N-Butyl-N-(1-methylpropyl)amino, N-Butyl-N-(2-methylpropyl)amino, N-Butyl-N-(1,1-dimethylethyl)amino, N-(1-Methylpropyl)-N-(2-methylpropyl)amino, N-(1,1-Dimethylethyl)-N-(1-methylpropyl)amino oder N-(1,1-Dimethylethyl)-N-(2-methylpropyl)amino, insbesondere für N,N-Dimethylamino oder N,N-Diethylamino;
- C₁-C₄-Alkoxy-C₁-C₄-alkyl für: durch C₁-C₄-Alkoxy wie vorstehend genannt substituiertes C₁-C₄-Alkyl, also z.B. für Methoxymethyl, Ethoxymethyl, n-Propoxymethyl, (1-Methylethoxy)methyl, n-Butoxymethyl, (1-Methylpropoxy)methyl, (2-Methylpropoxy)methyl, (1,1-Dimethylethoxy)methyl, 2-(Methoxy)ethyl, 2-(Ethoxy)ethyl, 2-(n-Propoxy)ethyl, 2-(1-Methylethoxy)ethyl, 2-(n-Butoxy)ethyl, 2-(1-Methylpropoxy)ethyl, 2-(2-Methylpropoxy)ethyl, 2-(1,1-Dimethylethoxy)ethyl, 2-(Methoxy)propyl, 2-(Ethoxy)propyl, 2-(n-Propoxy)propyl, 2-(1-Methylethoxy)propyl, 2-(n-Butoxy)propyl, 2-(1-Methylpropoxy)propyl, 2-(2-Methylpropoxy)propyl, 2-(1,1-Dimethylethoxy)propyl, 3-(Methoxy)propyl, 3-(Ethoxy)propyl, 3-(n-Propoxy)propyl, 3-(1-Methylethoxy)propyl, 3-(n-Butoxy)propyl, 3-(1-Methylpropoxy)propyl, 3-(2-Methylpropoxy)propyl, 3-(1,1-Dimethylethoxy)propyl, 2-(Methoxy)butyl, 2-(Ethoxy)butyl, 2-(n-Propoxy)butyl, 2-(1-Methylethoxy)butyl, 2-(n-Butoxy)butyl, 2-(1-Methylpropoxy)butyl, 2-(2-Methylpropoxy)butyl, 2-(1,1-Dimethylethoxy)butyl, 3-(Methoxy)butyl, 3-(Ethoxy)butyl, 3-(n-Propoxy)butyl, 3-(1-Methylethoxy)butyl, 3-(n-Butoxy)butyl, 3-(1-Methylpropoxy)butyl, 3-(2-Methylpropoxy)butyl, 3-(1,1-Dimethylethoxy)butyl, 4-(Methoxy)butyl, 4-(Ethoxy)butyl, 4-(n-Propoxy)butyl, 4-(1-Methylethoxy)butyl, 4-(n-Butoxy)butyl, 4-(1-Methylpropoxy)butyl, 4- (2-Methylpropoxy)butyl oder 4-(1,1-Dimethylethoxy)butyl, insbesondere für Methoxymethyl oder 2-Methoxyethyl;
- (C₁-C₄-Alkoxy)carbonyl-C₁-C₄-alkyl für: durch (C₁-C₄-Alkoxy)-carbonyl wie vorstehend genannt substituiertes C₁-C₄-Alkyl, also z.B. für Methoxycarbonylmethyl, Ethoxycarbonylmethyl, 1-(Methoxycarbonyl)ethyl oder 2-(Methoxycarbonyl)ethyl;
- C₁-C₄-Alkylthio-C₁-C₄-alkyl für: durch C₁-C₄-Alkylthio wie vorstehend genannt substituiertes C₁-C₄-Alkyl, also z.B. für Methylthiomethyl, Ethylthiomethyl, n-Propylthiomethyl, (1-Methylethylthio)methyl, n-Butylthiomethyl, (1-Methylpropylthio)methyl, (2-Methylpropylthio)methyl, (2,1-Dimethylethylthio)methyl, 2-Methylthioethyl, 2-Ethylthioethyl, 2-(n-Propylthio)ethyl, 2-(1-Methylethylthio)ethyl, 2-(n-Butylthio)ethyl, 2- (1-Methyl-propylthio) ethyl, 2- (2-Methylpropylthio)ethyl, 2-(1,1-Dimethylethylthio)ethyl, 2-(Methylthio)propyl, 3-(Methylthio)propyl, 2-(Ethylthio)propyl, 3-(Ethylthio)propyl, 3-(Propylthio)propyl, 3-(Butylthio)propyl, 4-(Methylthio)butyl, 4-(Ethylthio)butyl, 4- (n-Propylthio)butyl oder 4- (n-Butylthio)butyl, insbesondere für 2-(Methylthio)ethyl;
- (C₁-C₄-Alkylthio)carbonyl-C₁-C₄-alkyl für: durch (C₁-C₄-Alkylthio) carbonyl wie (Methylthio)carbonyl, (Ethylthio)carbonyl, (n-Propylthio)carbonyl, (1-Methylethylthio)carbonyl, (n-Butylthio)carbonyl, (1-Methylpropylthio)carbonyl, (2-Methylpropylthio)carbonyl und (1,1-Dimethylethylthio)carbonyl, vorzugsweise (Methylthio)carbonyl oder (Ethylthio)carbonyl, substituiertes C₁-C₄-Alkyl, also z.B. für (Methylthio)-carbonylmethyl, (Ethylthio)carbonylmethyl, 1-[(Methylthio)carbonyl]ethyl oder 2-[(Methylthio)carbonyl]ethyl;
- C₁-C₄-Halogenalkylthio-C₁-C₄-alkyl für: C₁-C₄-Alkyl wie vorstehend genannt, das eine partiell oder vollständig durch Fluor, Chlor und/oder Brom substituierte C₁-C₄-Alkylthiogruppe, z.B. Difluormethylthio, Trifluormethylthio, Chlordifluormethylthio, Bromdifluormethylthio, 2-Fluorethylthio, 2-Chlorethylthio, 2-Bromethylthio, 2-Iodethylthio, 2,2-Difluorethylthio,2,2,2-Trifluorethylthio, 2,2,2-Trichlorethylthio, 2-Chlor-2-fluorethylthio, 2-Chlor-2,2-difluorethylthio, 2,2-Dichlor-2-fluorethylthio, Pentafluorethylthio, 2-Fluorpropylthio, 3-Fluorpropylthio, 2-Chlorpropylthio, 3-Chlorpropylthio, 2-Brompropylthio, 3-Brompropylthio, 2,2-Difluorpropylthio, 2,3-Difluorpropylthio, 2,3-Dichlorpropylthio, 3,3,3-Trifluorpropylthio, 3,3,3-Trichlorpropylthio, 2,2,3,3,3-Pentafluorpropylthio, Heptafluorpropylthio, 1-(Fluormethyl)-2-fluorethylthio, 1-(Chlormethyl)-2-chlorethylthio, 1-(Brommethyl)-2-bromethylthio, 4-Fluorbutylthio, 4-Chlorbutylthio oder 4-Brombutylthio, trägt, also z.B. für Difluormethylthiomethyl;
- C₁-C₄-Alkylamino-C₁-C₄-alkyl für: durch C₁-C₄-Alkylamino wie vorstehend genannt substituiertes C₁-C₄-Alkyl, also z.B. für Methylaminomethyl, Ethylaminomethyl, n-Propylaminomethyl, (l-Methylethylamino)methyl, n-Butylaminomethyl, (1-Methylpropylamino)methyl, (2-Methylpropylamino)methyl, (1,1-Dimethylethylamino)methyl, 2-Methylaminoethyl, 2-Ethylaminoethyl, 2-(n-Propylamino)ethyl, 2-(1-Methylethylamino)ethyl, 2-(n-Butylamino)ethyl, 2-(1-Methyl-propylamino)ethyl, 2-(2-Methylpropylamino)ethyl, 2-(1,1-Dimethylethylamino)ethyl, 2-(Methylamino)-propyl, 3-(Methylamino)propyl, 2-(Ethylamino)propyl, 3-(Ethylamino)propyl, 3-(Propylamino)propyl, 3-(Butylamino)propyl, 4-(Methylamino)butyl, 4-(Ethylamino)butyl, 4-(n-Propylamino)butyl oder 4-(n-Butylamino)butyl, insbesondere für 2-(Methylamino)ethyl;
- C₁-C₄-Alkylaminocarbonyl-C₁-C₄-alkyl für: durch C₁-C₄-Alkylaminocarbonyl wie Methylaminocarbonyl, Ethylaminocarbonyl, n-Propylaminocarbonyl, 1-Methylethylaminocarbonyl, n-Butylaminocarbonyl, 1-Methylpropylaminocarbonyl, 2-Methylpropylaminocarbonyl oder 1,1-Dimethylethylaminocarbonyl, vorzugsweise Methylaminocarbonyl oder Ethylamincarbonyl, substituiertes C₁-C₄-Alkyl, also z.B. für (Methylaminocarbonyl)methyl, (Ethylaminocarbonyl) methyl, 1-(Methylaminocarbonyl)ethyl oder 2-(Methylaminocarbonyl)ethyl;
- Di-(C₁-C₄-alkyl)amino-C₁-C₄-alkyl: durch Di-(C₁-C₄-alkyl)amino wie vorstehend genannt substituiertes C₁-C₄-Alkyl, also z.B. für Dimethylaminomethyl oder Diethylaminomethyl;
- Di-(C₁-C₄-alkyl)aminocarbonyl-C₁-C₄-alkyl: durch Di-(C₁-C₄-alkyl)aminocarbonyl wie N,N-Dimethylaminocarbonyl, N,N-Diethylaminocarbonyl, N,N-Dipropylaminocarbonyl, N,N-Di-(1-methylethyl)aminocarbonyl, N,N-Dibutylaminocarbonyl, N,N-Di-(1-methylpropyl)aminocarbonyl, N,N-Di-(2-methylpropyl)aminocarbonyl, N,N-Di-(1,1-dimethylethyl)aminocarbonyl, N-Ethyl-N-methylaminocarbonyl, N-Methyl-N-propylaminocarbonyl, N-Methyl-N-(1-methylethyl)aminocarbonyl, N-Butyl-N-methylaminocarbonyl, N-Methyl-N-(1-methylpropyl) aminocarbonyl, N-Methyl-N-(2-methylpropyl)aminocarbonyl, N- (1,1-Dimethylethyl)-N-methylaminocarbonyl, N-Ethyl-N-propylaminocarbonyl, N-Ethyl-N- (1-methylethyl)aminocarbonyl, N-Butyl-N-ethylaminocarbonyl, N-Ethyl-N-(1-methylpropyl)aminocarbonyl, N-Ethyl-N- (2-methylpropyl)aminocarbonyl, N-Ethyl-N-(1,1-dimethylethyl)aminocarbonyl, N-(1-Methylethyl)-N-propylaminocarbonyl, N-Butyl-N-propylaminocarbonyl, N-(1-Methylpropyl)-N-propylaminocarbonyl, N-(2-Methylpropyl)-N-propylaminocarbonyl, N-(1,1-Dimethylethyl)-N-propylaminocarbonyl, N-Butyl-N-(1-methylethyl)aminocarbonyl, N-(1-Methylethyl)-N-(1-methylpropyl)aminocarbonyl, N-(1-Methylethyl)-N-(2-methylpropyl)aminocarbonyl, N-(1,1-Dimethylethyl)-N-(1-methylethyl)aminocarbonyl, N-Butyl-N-(1-methylpropyl)aminocarbonyl, N-Butyl-N-(2-methylpropyl)aminocarbonyl, N-Butyl-N-(1,1-dimethylethyl)aminocarbonyl, N-(1-Methylpropyl)-N-(2-methylpropyl)aminocarbonyl, N-(1,1-Dimethylethyl)-N-(1-methylpropyl)aminocarbonyl oder N-(1,1-Dimethylethyl)-N-(2-methylpropyl)aminocarbonyl, vorzugsweise N,N-Dimethylaminocarbonyl oder N,N-Diethylaminocarbonyl, substituiertes C₁-C₄-Alkyl, also z.B. für Dimethylaminocarbonylmethyl, Diethylaminocarbonylmethyl, 1-(Dimethylaminocarbonyl)ethyl oder 2-(Dimethylaminocarbonyl)ethyl;
- C₁-C₄-Alkylsulfinyl-C₁-C₄-alkyl für: durch Methylsulfinyl, Ethylsulfinyl, n-Propylsulfinyl, 1-Methylethylsulfinyl, n-Butylsulfinyl, 1-Methylpropylsulfinyl, 2-Methylpropylsulfinyl oder 1,1-Dimethylethylsulfinyl, vorzugsweise Methylsulfinyl, substituiertes C₁-C₄-Alkyl, also beispielsweise für Methylsulfinylmethyl oder 2-Methylsuifinylethyl;
- C₁-C₄-Halogenalkylsulfinyl-C₁-C₄-alkyl für: C₁-C₄-Alkyl wie vorstehend genannt, das eine partiell oder vollständig durch Fluor, Chlor und/oder Brom substituierte C₁-C₄-Alkylsulfinylgruppe, z.B. Difluormethylsulfinyl, Trifluormethylsulfinyl, Chlordifluor-methylsulfinyl, Bromdifluormethylsulfinyl, 2-Fluorethylsulfinyl, 2-Chlorethylsulfinyl, 2-Bromethylsulfinyl, 2-Iodethylsulfinyl, 2,2-Difluorethylsulfinyl, 2,2,2-Trifluorethylsulfinyl, 2,2,2-Trichlorethylsulfinyl, 2-Chlor-2-fluorethylsulfinyl, 2-Chlor-2,2-difluorethylsulfinyl, 2,2-Dichlor-2-fluorethylsulfinyl, Pentafluorethylsulfinyl, 2-Fluorpropylsulfinyl, 3-Fluorpropylsulfinyl, 2-Chlorpropylsulfinyl, 3-Chlorpropylsulfinyl, 2-Brompropylsulfinyl, 3-Brompropylsulfinyl, 2,2-Difluorpropylsulfinyl, 2,3-Difluorpropylsulfinyl, 2,3-Dichlorpropylsulfinyl, 3,3,3-Trifluorpropylsulfinyl, 3,3,3-Trichlorpropylsulfinyl, 2,2,3,3,3-Pentafluorpropylsulfinyl, Heptafluorpropylsulfinyl, 1-(Fluormethyl)-2-fluorethylsulfinyl, 1-(Chlormethyl)-2-chlorethylsulfinyl, 1-(Brommethyl)-2-bromethylsulf inyl, 4-Fluorbutylsulfinyl, 4-Chlorbutylsulfinyl oder 4-Brombutylsulfinyl, trägt, also beispielsweise für Difluormethylsulfinylmethyl;
- C₁-C₄-Alkylsulfonyl für: SO₂-CH₃, SO₂-C₂H₅, n-Propylsulfonyl, SO₂-CH(CH₃)₂, n-Butylsulfonyl, 1-Methylpropylsulfonyl, 2-Methylpropylsulfonyl oder SO₂-C(CH₃)₃, insbesondere für SO₂-CH₃ oder SO₂-C₂H₅;
- C₁-C₄-Alkylsulfonyl-C₁-C₄-alkyl für: durch C₁-C₄-Alkylsulfonyl wie vorstehend genannt, vorzugsweise Methylsulfonyl, substituiertes C₁-C₄-Alkyl, also beispielsweise für Methylsulfonylmethyl oder 2-Methylsulfonylethyl;
- C₁-C₄-Halogenalkylsulfonyl-C₁-C₄-alkyl für: C₁-C₄-Alkyl wie vorstehend genannt, das eine partiell oder vollständig durch Fluor, Chlor und/oder Brom substituierte C₁-C₄-Alkylsulfonylgruppe, z.B. Difluormethylsulfonyl, Trifluormethylsulfonyl, Chlordifluor-methylsulfonyl, Bromdifluormethylsulfonyl, 2-Fluorethylsulfonyl, 2-Chlorethylsulfonyl, 2-Bromethylsulfonyl, 2-Iodethylsulfonyl, 2,2-Difluorethylsulfonyl, 2,2,2-Trifluorethylsulfonyl, 2,2,2-Trichlorethylsulfonyl, 2-Chlor-2-fluorethylsulfonyl, 2-Chlor-2,2-difluorethylsulfonyl, 2,2-Dichlor-2-fluorethylsulfonyl, Pentafluorethylsulfonyl, 2-Fluorpropylsulfonyl, 3-Fluorpropylsulfonyl, 2-Chlorpropylsulfonyl, 3-Chlorpropylsulfonyl, 2-Brompropylsulfonyl, 3-Brompropylsulfonyl, 2,2-Difluorpropylsulfonyl, 2,3-Difluorpropylsulfonyl, 2,3-Dichlorpropylsulfonyl, 3,3,3-Trifluorpropylsulfonyl, 3,3,3-Trichlorpropylsulfonyl, 2,2,3,3,3-Pentafluorpropylsulfonyl, Heptafluorpropylsulfonyl, 1-(Fluormethyl)-2-fluorethylsulfonyl, 1-(Chlormethyl)-2-chlorethylsulfonyl, 1-(Brommethyl)-2-bromethylsulfonyl, 4-Fluorbutylsulfonyl, 4-Chlorbutylsulfonyl oder 4-Brombutylsulfonyl, trägt, also beispielsweise für 2-Chlorethylsulfonyl;
- C₃-C₆-Alkenyl für: z.B. Prop-2-en-1-yl, n-Buten-4-yl, 1-Methyl-prop-2-en-1-yl, 2-Methyl-prop-2-en-1-yl, 2-Buten-1-yl, n-Penten-3-yl, n-Penten-4-yl, 1-Methylbut-2-en-1-yl, 2-Methyl-but-2-en-1-yl, 3-Methylbut-2-en-1-yl, 1-Methyl-but-3-en-1-yl, 2-Methylbut-3-en-1-yl, 3-Methyl-but-3-en-1-yl, 1,1-Dimethylprop-2-en-1-yl, 1,2-Dimethyl-prop-2-en-1-yl, 1-Ethylprop-2-en-1-yl, n-Hex-3-en-1-yl, n-Hex-4-en-1-yl, n-Hex-5-en-1-yl, 1-Methyl-pent-3-en-1-yl, 2-Methylpent-3-en-1-yl, 3-Methyl-pent-3-en-1-yl, 4-Methylpent-3-en-1-yl, 1-Methyl-pent-4-en-1-yl, 2-Methylpent-4-en-1-yl, 3-Methyl-pent-4-en-1-yl, 4-Methylpent-4-en-1-yl, 1,1-Dimethyl-but-2-en-1-yl, 1,1-Dimethylbut-3-en-1-yl, 1,2-Dimethyl-but-2-en-1-yl, 1,2-Dimethylbut-3-en-1-yl, 1,3-Dimethyl-but-2-en-1-yl, 1,3-Dimethylbut-3-en-1-yl, 2,2-Dimethyl-but-3-en-1-yl, 2,3-Dimethylbut-2-en-1-yl, 2,3-Dimethyl-but-3-en-1-yl, 3,3-Dimethylbut-2-en-1-yl, 1-Ethyl-but-2-en-1-yl, 1-Ethyl-but-3-en-1-yl, 2-Ethyl-but-2-en-l-yl, 2-Ethyl-but-3-en-1-yl, 1,1,2-Trimethyl-prop-2-en-1-yl, 1-Ethyl-1-methyl-prop-2-en-1-yl oder 1-Ethyl-2-methyl-prop-2-en-1-yl, insbesondere für Prop-2-en-1-yl oder n-Buten-4-yl;
- C₃-C₆-Halogenalkenyl für: C₃-C₆-Alkenyl wie vorstehend genannt, das partiell oder vollständig durch Fluor, Chlor und/oder Brom substituiert ist, also z.B. 2-Chlorallyl, 3-Chlorallyl, 2,3-Dichlorallyl, 3,3-Dichlorallyl, 2,3,3-Trichlorallyl, 2,3-Dichlorbut-2-enyl, 2-Bromallyl, 3-Bromallyl, 2,3-Dibromallyl, 3,3-Dibromallyl, 2,3,3-Tribromallyl oder 2,3-Dibrombut-2-enyl, insbesondere für 2-Chlorallyl oder 3,3-Dichlorallyl;
- Cyano-C₃-C₆-alkenyl für: z.B. 3-Cyanoallyl, 4-Cyanobut-2-enyl, 4-Cyano-but-3-enyl oder 5-Cyano-pent-4-enyl, vorzugsweise 3-Cyanoallyl oder 4-Cyano-but-2-enyl, insbesondere für 3-Cyanoallyl;
- C₃-C₄-Alkenyloxy-C₁-C₄-alkyl für: durch C₃-C₄-Alkenyloxy wie Prop-2-enyloxy, n-But-2-enyloxy, n-But-3-enyloxy, 1-Methylprop-2-enyloxy oder 2-Methyl-prop-2-enyloxy, vorzugsweise Allyloxy, 2-Methylprop-2-en-1-yloxy, But-1-en-3-yloxy, But-1-en-4-yloxy oder But-2-en-1-yloxy substituiertes C₁-C₄-Alkyl, also beispielsweise für Allyloxymethyl, 2-Allyloxyethyl oder But-1-en-4-yloxymethyl;
- C₃-C₄-Alkenylthio-C₁-C₄-alkyl für: durch C₃-C₄-Alkenylthio wie Prop-2-enylthio, n-But-2-enylthio, n-But-3-enylthio, 1-Methyl-prop-2-enylthio oder 2-Methyl-prop-2-enylthio, vorzugsweise Allylthio, 2-Methylprop-2-en-1-ylthio, But-1-en-3-ylthio, But-1-en-4-ylthio oder But-2-en-1-ylthio substituiertes C₁-C₄-Alkyl, also beispielsweise für Allylthiomethyl, 2-Allylthioethyl oder But-1-en-4-ylthiomethyl;
- C₃-C₄-Alkenylsulfinyl-C₁-C₄-alkyl für: durch C₃-C₄-Alkenylsulfinyl wie Prop-2-enylsulfinyl, n-But-2-enylsulfinyl, n-But-3-enylsulfinyl, 1-Methylprop-2-enylsulfinyl oder 2-Methylprop-2-enylsulfinyl, vorzugsweise Allylsulfinyl, 2-Methylprop-2-en-1-ylsulfinyl, But-1-en-3-ylsulfinyl, But-1-en-4-ylsulfinyl oder But-2-en-1-ylsulfinyl substituiertes C₁-C₄-Alkyl, also beispielsweise für Allylsulfinylmethyl, 2-Allylsulfinylethyl oder But-1-en-4-ylsulfinylmethyl;
- C₃-C₄-Alkenylsulfonyl-C₁-C₄-alkyl für: durch C₃-C₄-Alkenylsulfonyl wie Prop-2-enylsulfonyl, n-But-2-enylsulfonyl, n-But-3-enylsulfonyl, l-Methylprop-2-enylsulfonyl oder 2-Methylprop-2-enylsulfonyl, vorzugsweise Allylsulfonyl, 2-Methylprop-2-en-1-ylsulfonyl, But-1-en-3-ylsulfonyl, But-1-en-4-ylsulfonyl oder But-2-en-1-ylsulfonyl substituiertes C₁-C₄-Alkyl, also beispielsweise für Allylsulfonylmethyl, 2-Allylsulfonylethyl oder But-1-en-4-ylsulfonylmethyl;
- C₃-C₆-Alkinyl für: z.B. Propargyl, n-But-1-in-3-yl, n-But-1-in-4-yl, n-But-2-in-1-yl, n-Pent-1-in-3-yl, n-Pent-1-in-4-yl, n-Pent-1-in-5-yl, n-Pent-2-in-1-yl, n-Pent-2-in-4-yl, n-Pent-2-in-5-yl, 3-Methyl-but-1-in-3-yl, 3-Methyl-but-1-in-4-yl, n-Hex-1-in-3-yl, n-Hex-1-in-4-yl, n-Hex-1-in-5-yl, n-Hex-1-in-6-yl, n-Hex-2-in-1-yl, n-Hex-2-in-4-yl, n-Hex-2-in-5-yl, n-Hex-2-in-6-yl, n-Hex-3-in-1-yl, n-Hex-3-in-2-yl, 3-Methyl-pent-l-in-3-yl, 3-Metnyl-pent-1-in-4-yl, 3-Methyl-pent-1-in-5-yl, 4-Methylpent-2-in-4-yl oder 4-Methyl-pent-2-in-5-yl, insbesondere für Propargyl;
- C₃-C₆-Halogenalkinyl für: C₃-C₆-Alkinyl wie vorstehend genannt, das partiell oder vollständig durch Fluor, Chlor und/oder Brom substituiert ist, also z.B. für 1,1-Difluorprop-2-in-1-yl, 4-Fluorbut-2-in-1-yl, 4-Chlorbut-2-in-1-yl, 1,1-Difluorbut-2-in-1-yl, 5-Fluorpent-3-in-1-yl oder 6-Fluorhex-4-in-1-yl;
- Cyano-C₃-C₆-alkinyl für: z.B. 3-Cyanopropargyl;
- C₃-C₄-Alkinyloxy-C₁-C₄-alkyl für: durch C₃-C₄-Alkinyloxy wie Prop-2-inyloxy, n-But-2-inyloxy, n-But-3-inyloxy oder 1-Methyl-prop-2-inyloxy, vorzugsweise Propargyloxy, But-1-in-3-yloxy, But-1-in-4-yloxy oder But-2-in-1-yloxy, substituiertes C₁-C₄-Alkyl, also beispielsweise für Propargyloxymethyl oder 2-Propargyloxyethyl;
- C₃-C₄-Alkinylthio-C₁-C₄-alkyl für: durch C₃-C₄-Alkinylthio wie Prop-2-inylthio, n-But-2-inylthio, n-But-3-inylthio oder 1-Methyl-prop-2-inylthio, vorzugsweise Propargylthio, But-1-in-3-ylthio, But-1-in-4-ylthio oder But-2-in-1-ylthio, substituiertes C₁-C₄-Alkyl, also beispielsweise für Propargylthiomethyl oder 2-Propargylthioethyl;
- C₃-C₄-Alkinylsulfinyl-C₁-C₄-alkyl für: durch C₃-C₄-Alkinylsulfinyl wie Prop-2-inylsulfinyl, n-But-2-inylsulfinyl, n-But-3-inylsulfinyl und 1-Methyl-prop-2-inylsulfinyl, vorzugsweise Propargylsulfinyl, But-l-in-3-ylsulfinyl, But-1-in-4-ylsulfinyl oder But-2-in-1-ylsulfinyl, substituiertes C₁-C₄-Alkyl, also beispielsweise für Propargylsulfinylmethyl oder 2-Propargylsulfinylethyl;
- C₃-C₄-Alkinylsulfonyl-C₁-C₄-alkyl für: durch C₃-C₄-Alkinylsulfonyl wie Prop-2-inylsulfonyl, n-But-2-inylsulfonyl, n-But-3-inylsulfonyl und 1-Methyl-prop-2-inylsulfonyl, vorzugsweise Propargylsulfonyl, But-1-in-3-ylsulfonyl, But-1-in-4-ylsulfonyl oder But-2-in-1-ylsulfonyl, substituiertes C₁-C₄-Alkyl, also beispielsweise Propargylsulfonylmethyl oder 2-Propargylsulfonylethyl;
- C₃-C₆-Cycloalkyl für: Cyclopropyl, Cyclobutyl, Cyclopentyl oder Cyclohexyl, insbesondere für Cyclopentyl oder Cyclohexyl;
- C₃-C₈-Cycloalkyl für: Cyclopropyl, Cyclobutyl, Cyclopentyl, Cyclohexyl, Cycloheptyl oder Cyclooctyl, insbesondere für Cyclopentyl oder Cyclohexyl;
- C₃-C₈-Cycloalkyl-C₁-C₄-alkyl für: Cyclopropylmethyl, Cyclobutylmethyl, Cyclopentylmethyl, Cyclohexylmethyl, Cycloheptylmethyl, Cyclooctylmethyl, 1-(Cyclopropyl)ethyl, 1-(Cyclobutyl)ethyl, 1-(Cyclopentyl)ethyl, 1-(Cyclohexyl)ethyl, 1-(Cycloheptyl)ethyl, 1-(Cyclooctyl)ethyl, 2-(Cyclopropyl)ethyl, 2-(Cyclobutyl)ethyl, 2-(Cyclopentyl)ethyl, 2-(Cyclohexyl)ethyl, 2-(Cycloheptyl)ethyl, 2-{Cyclooctyl)ethyl, 3-(Cyclopropyl)propyl, 3-(Cyclobutyl)propyl, 3-(Cyclopentyl)propyl, 3-(Cyclohexyl)propyl, 3-(Cycloheptyl)propyl, 3-(Cyclooctyl)propyl, 4-(Cyclopropyl)butyl, 4-(Cyclobutyl)butyl, 4-(Cyclopentyl)butyl, 4-(Cyclohexyl)butyl, 4-(Cycloheptyl)butyl oder 4-(Cyclooctyl)butyl, insbesondere für Cyclopentylmethyl oder Cyclohexylmethyl;
- C₃-C₈-Cycloalkoxy-C₁-C₄-alkyl für: Cyclopropyloxymethyl, Cyclobutyloxymethyl, Cyclopentyloxymethyl, Cyclohexyloxymethyl, Cycloheptyloxymethyl, Cyclooctyloxymethyl, 1-(Cyclopropyloxy)ethyl, 1-(Cyclobutyloxy)ethyl, 1-(Cyclopentyloxy)ethyl, 1-(Cyclohexyloxy)ethyl, 1-(Cycloheptyloxy)ethyl, 1-(Cyclooctyloxy)ethyl, 2-(Cyclopropyloxy)ethyl, 2-(Cyclobutyloxy)ethyl, 2-(Cyclopentyloxy)ethyl, 2-(Cyclohexyloxy)ethyl, 2-(Cycloheptyloxy)ethyl, 2-(Cyclooctyloxy)ethyl, 3-(Cyclopropyloxy)propyl, 3-(Cyclobutyloxy)propyl, 3-(Cyclopentyloxy)propyl, 3-(Cyclohexyloxy)propyl, 3-(Cycloheptyloxy)propyl, 3-(Cyclooctyloxy)propyl, 4-(Cyclopropyloxy)butyl, 4-(Cyclobutyloxy)butyl, 4-(Cyclopentyloxy)butyl, 4-(Cyclohexyloxy)butyl, 4-(Cycloheptyloxy)butyl oder 4-(Cyclooctyloxy)butyl, insbesondere für Cyclopentyloxymethyl, Cyclohexyloxymethyl oder 2-(Cyclopentyloxy)ethyl.

Unter 3- bis 7-gliedrigem Heterocyclyl sind sowohl gesättigte, partiell oder vollständig ungesättigte als auch aromatische Heterocyclen mit ein bis-drei Heteroatomen, ausgewählt aus einer Gruppe bestehend aus
- ein bis drei Stickstoffatomen,
- einem oder zwei Sauerstoff- und
- einem oder zwei Schwefelatomen,
zu verstehen.

Beispiele für gesättigte Heterocyclen, die ein Carbonyl- oder Thiocarbonyl-Ringglied enthalten können, sind:
Oxiranyl, Thiiranyl, Aziridin-1-yl, Aziridin-2-yl,
Diaziridin-1-yl, Diaziridin-3-yl, Oxetan-2-yl, Oxetan-3-yl,
Thietan-2-yl, Thietan-3-yl, Azetidin-1-yl, Azetidin-2-yl,
Azetidin-3-yl, Tetrahydrofuran-2-yl, Tetrahydrofuran-3-yl, Tetrahydrothiophen-2-yl, Tetrahydrothiophen-3-yl, Pyrrolidin-1-yl,
Pyrrolidin-2-yl, Pyrrolidin-3-yl, 1,3-Dioxolan-2-yl,
1,3-Dioxolan-4-yl, 1,3-Oxathiolan-2-yl, 1,3-Oxathiolan-4-yl,
1,3-Oxathiolan-5-yl, 1,3-Oxazolidin-2-yl, 1,3-Oxazolidin-3-yl,
1,3-Oxazolidin-4-yl, 1,3-Oxazolidin-5-yl, 1,2-Oxazolidin-2-yl,
1,2-Oxazolidin-3-yl, 1,2-Oxazolidin-4-yl, 1,2-Oxazolidin-5-yl,
1,3-Dithiolan-2-yl, 1,3-Dithiolan-4-yl, Pyrrolidin-1-yl,
Pyrrolidin-2-yl, Pyrrolidin-5-yl, Tetrahydropyrazol-1-yl, Tetrahydropyrazol-3-yl, Tetrahydropyrazol-4-yl, Tetrahydropyran-2-yl,
Tetrahydropyran-3-yl, Tetrahydropyran-4-yl, Tetrahydrothiopyran-2-yl, Tetrahydrothiopyran-3-yl, Tetrahydropyran-4-yl,
Piperidin-1-yl, Piperidin-2-yl, Piperidin-3-yl, Piperidin-4-yl,
1,3-Dioxan-2-yl, 1,3-Dioxan-4-yl, 1,3-Dioxan-5-yl,
1,4-Dioxan-2-yl, 1,3-Oxathian-2-yl, 1,3-Oxathian-4-yl, 1,3-Oxathian-5-yl, 1,3-Oxathian-6-yl, 1,4-Oxathian-2-yl, 1,4-Oxathian-3-yl, Morpholin-2-yl, Morpholin-3-yl, Morpholin-4-yl, Hexahydropyridazin-1-yl, Hexahydropyridazin-3-yl, Hexahydropyridazin-4-yl, Hexahydropyrimidin-1-yl, Hexahydropyrimidin-2-yl,
Hexahydropyrimidin-4-yl, Hexahydropyrimidin-5-yl, Piperazin-1-yl,
Piperazin-2-yl, Piperazin-3-yl, Hexahydro-1,3,5-triazin-1-yl,
Hexahydro-1,3,5-triazin-2-yl, Oxepan-2-yl, Oxepan-3-yl,
Oxepan-4-yl, Thiepan-2-yl, Thiepan-3-yl, Thiepan-4-yl,
1,3-Dioxepan-2-yl, 1,3-Dioxepan-4-yl, 1,3-Dioxepan-5-yl,
1,3-Dioxepan-6-yl, 1,3-Dithiepan-2-yl, 1,3-Dithiepan-2-yl,
1,3-Dithiepan-2-yl, 1,3-Dithiepan-2-yl, 1,4-Dioxepan-2-yl,
1,4-Dioxepan-7-yl, Hexahydroazepin-l-yl, Hexahydroazepin-2-yl,
Hexahydroazepin-3-yl, Hexahydroazepin-4-yl, Hexahydro-1,3-diazepin-1-yl, Hexahydro-1,3-diazepin-2-yl, Hexahydro-1,3-diazepin-4-yl, Hexahydro-1,4-diazepin-1-yl und Hexahydro-1,4-diazepin-2-yl;

Beispiele für ungesättigte Heterocyclen, die ein Carbonyl- oder Thiocarbonyl-Ringglied enthalten können, sind:
Dihydrofuran-2-yl, 1,2-Oxazolin-3-yl, 1,2-Oxazolin-5-yl, 1,3-Oxazolin-2-yl;

Unter den Heteroaromaten sind die 5- und 6-gliedrigen bevorzugt, also z.B. Furyl wie 2-Furyl und 3-Furyl, Thienyl wie 2-Thienyl und 3-Thienyl, Pyrrolyl wie 2-Pyrrolyl und 3-Pyrrolyl, Isoxazolyl wie 3-Isoxazolyl, 4-Isoxazolyl und 5-Isoxazolyl, Isothiazolyl wie 3-Isothiazolyl, 4-Isothiazolyl und 5-Isothiazolyl, Pyrazolyl wie 3-Pyrazolyl, 4-Pyrazolyl und 5-Pyrazolyl, Oxazolyl wie 2-Oxazolyl, 4-Oxazolyl und 5-Oxazolyl, Thiazolyl wie 2-Thiazolyl, 4-Thiazolyl und 5-Thiazolyl, Imidazolyl wie 2-Imidazolyl und 4-Imidazolyl, Oxadiazolyl wie 1,2,4-Oxadiazol-3-yl, 1,2,4-Oxadiazol-5-yl und 1,3,4-Oxadiazol-2-yl, Thiadiazolyl wie 1,2,4-Thiadiazol-3-yl, 1,2,4-Thiadiazol-5-yl und 1,3,4-Thiadiazol-2-yl, Triazolyl wie 1,2,4-Triazol-1-yl, 1,2,4-Triazol-3-yl und 1,2,4-Triazol-4-yl, Pyridinyl wie 2-Pyridinyl, 3-Pyridinyl und 4-Pyridinyl, Pyridazinyl wie 3-Pyridazinyl und 4-Pyridazinyl, Pyrimidinyl wie 2-Pyrimidinyl, 4-Pyrimidinyl und 5-Pyrimidinyl, des weiteren 2-Pyrazinyl, 1,3,5-Triazin-2-yl und 1,2,4-Triazin-3-yl, insbesondere Pyridyl, Pyrimidyl, Furanyl und Thienyl.

Alle Phenyl- und heterocyclischen Ringe sind vorzugsweise unsubstituiert oder tragen einen Cyano-, Nitro-, Halogen-, C₁-C₄-Alkyl-, C₁-C₄-Halogenalkyl-, C₁-C₄-Alkoxy-, C₁-C₄-Halogenalkoxy-, (C₁-C₄-Alkyl)carbonyl-, (C₁-C₄-Alkoxy)carbonyl- oder (C₁-C₄-Alkyl)carbonyloxy-Substituenten.

Im Hinblick auf die Verwendung der substituierten aromatischen Phoshonsäurederivate I als Herbizide oder zur Desikkation/Defoliation von Pflanzen sind diejenigen Verbindungen I bevorzugt, bei denen die Substituenten folgende Bedeutungen haben, und zwar jeweils für sich allein oder in Kombination:
- Eth: -CH₂-CH(Halogen)-, -CH₂-CH(CN)-, -CH₂-CH(COOCH₃)-, -CH=CH-, -CH=C(Halogen)-, -CH=C(CN)-, -CH=C(CH₃)-, -CH=C(COOCH₃) - oder -C≡C-, insbesondere -CH₂-CH(Halogen)oder -CH=C(Halogen), besonders bevorzugt -CH=C(Halogen)-;
- Y¹: Sauerstoff;
- Y²: Sauerstoff;
- Y³: Sauerstoff;
- R¹, R², R⁶, R⁷: unabhängig voneinander Wasserstoff, C₁-C₆-Alkyl, C₁-C₆-Halogenalkyl, Hydroxy-C₁-C₄-alkyl, Cyano-C₁-C₄-alkyl, C₁-C₄-Alkoxy-C₁-C₄-alkyl, Di-(C₁-C₄-alkyl)amino-C₁-C₄-alkyl, C₁-C₄-Alkylthio-C₁-C₄-alkyl, C₁-C₄-Alkylsulfonyl-C₁-C₄-alkyl, C₁-C₄-Halogenalkylsulfonyl-C₁-C₄-alkyl, C₃-C₆-Alkenyl, C₃-C₆-Halogenalkenyl, C₃-C₆-Alkinyl, Hydroxycarbonyl-C₁-C₄-alkyl, (C₁-C₄-Alkoxy)carbonyl-C₁₋C₄-alkyl, Aminocarbonyl-C₁-C₄-alkyl, (C₁-C₄-Alkyl)aminocarbonyl-C₁-C₄-alkyl, Di-(C₁-C₄-alkyl)aminocarbonyl-C₁-C₄-alkyl,
C₃-C₈-Cycloalkyl, C₃-C₈-Cycloalkyl-C₁-C₄-alkyl, Phenyl, Phenyl-C₁-C₄-alkyl oder
3- bis 7-gliedriges Heterocyclyl oder Heterocyclyl-C₁-C₄-alkyl, wobei alle Heterocyclen gewünschtenfalls ein Carbonyl- oder Thiocarbonyl-Ringglied enthalten können,
und wobei alle Cycloalkyl-, Phenyl- und Heterocyclylringe unsubstituiert sein oder ein bis vier Substituenten tragen können, jeweils ausgewählt aus der Gruppe bestehend aus Halogen, Nitro, Amino, Hydroxy, Carboxy, C₁-C₄-Alkyl, C₁-C₄-Halogenalkyl, C₁-C₄-Alkoxy, C₁-C₄-Alkylsulfonyl, (C₁-C₄-Alkyl)carbonyl, (C₁-C₄-Alkoxy)carbonyl und Di- (C₁-C₄-alkyl) amino,
- oder R¹ und R² oder R¹ und R⁶ und/oder R² und R⁷: bilden jeweils zusammen eine 1,2-Ethandiyl-, 1,3-Propylen-, Tetramethylen-, Pentamethylen- oder Ethylenoxyethylen-Kette, die gewünschtenfalls durch ein bis vier C₁-C₄-Alkyl- und/oder ein oder zwei (C₁-C₄-Alkoxy)carbonylgruppen substituiert sein kann,
- R¹, R², R⁶, R⁷: insbesondere jeweils Wasserstoff, C₁-C₆-Alkyl, C₁-C₆-Halogenalkyl, C₃-C₆-Alkenyl, C₃-C₆-Halogenalkenyl, C₃-C₆-Alkinyl, (C₃-C₄-Alkoxy)carbonyl-C₁-C₄-alkyl, C₃-C₈-Cycloalkyl, C₃-C₈-Cycloalkyl-C₁-C₄-alkyl, Phenyl, Phenyl-C₁-C₄-alkyl oder 3- bis 7-gliedriges Heterocyclyl oder Heterocyclyl-C₁-C₄-alkyl
oder
- R¹ und R² oder R¹ und R⁶ und/oder R² und R⁷: bilden jeweils zusammen eine 1,2-Ethandiyl- oder 1,3-Propylen-Kette;
besonders bevorzugt ist R¹, R², R⁶, R⁷ jeweils Wasserstoff, C₁-C₆-Alkyl, C₃-C₆-Alkenyl, C₃-C₆-Alkinyl, C₃-C₈-Cycloalkyl, Phenyl oder Phenyl-C₁-C₄-alkyl, oder R¹ und R² bilden zusammen eine 1,3-Propylen-Kette;
- R³: Cyano, Halogen oder C₁-C₄-Halogenalkyl, insbesondere Halogen, besonders bevorzugt Chlor;
- R⁴: Wasserstoff, Fluor oder Chlor, insbesondere Fluor oder Chlor, besonders bevorzugt Fluor;
- R⁵: einen der folgenden Heterocyclen Φ¹ bis Φ⁵, Φ⁷, Φ²⁰, Φ²¹ und Φ²²: 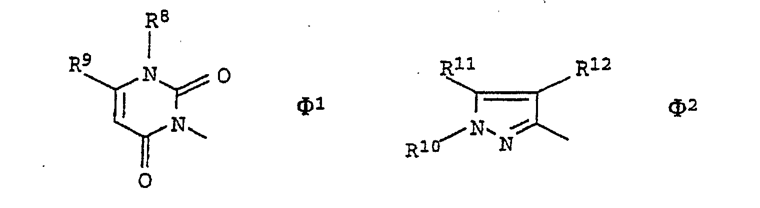 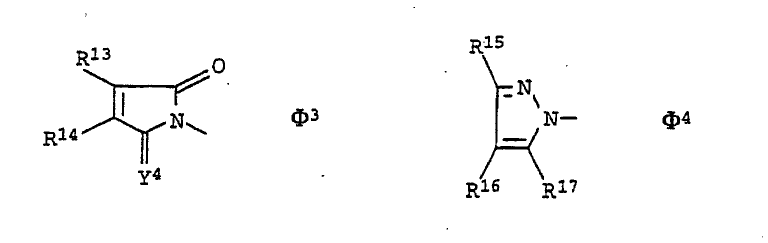 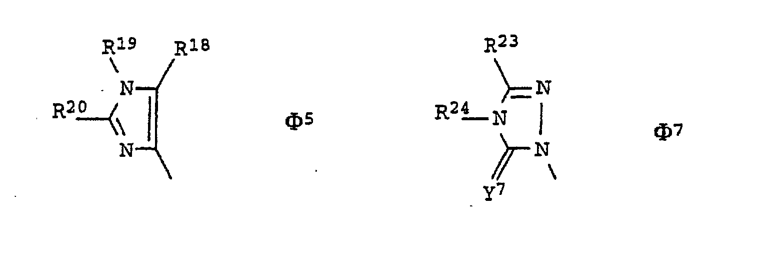 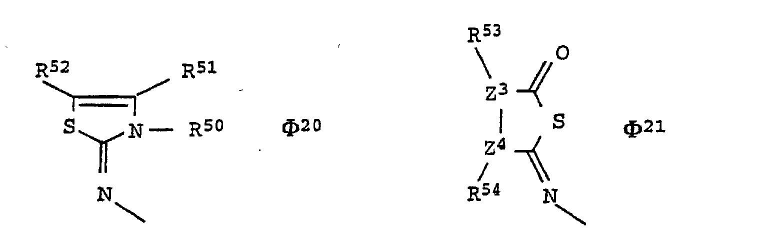 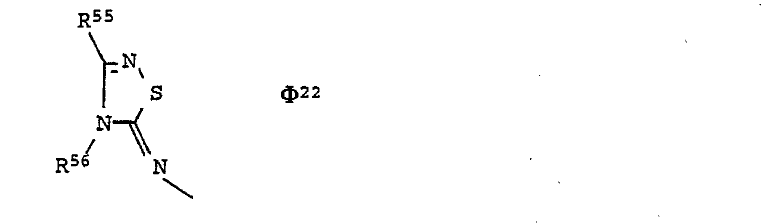
wobei
- R⁸ für: Methyl;
- R⁹ für: C₁-C₄-Halogenalkyl, insbesondere Trifluormethyl;.
- R¹⁰ für: C₁-C₄-Alkyl, insbesondere Methyl;
- R¹¹ für: C₁-C₄-Halogenalkyl, insbesondere Trifluormethyl, oder C₁-C₄-Halogenalkoxy, insbesondere Difluormethoxy;
- R¹² für: Halogen, insbesondere Chlor, oder C₁-C₄-Halogenalkyl, insbesondere Trifluormethyl;
- Y⁴ für: Sauerstoff;
- R¹³, R¹⁴: unabhängig voneinander für C₁-C₄-Alkyl, insbesondere Methyl, oder
- R¹³ und R¹⁴: zusammen mit den sie verbindenden Ringatomen für einen 6-gliedrigen carbocyclischen Ring;
- R¹⁵ und R¹⁶: zusammen mit den sie verbindenden Ringatomen für einen 6-gliedrigen carbocyclischen Ring;
- R¹⁷ für: Halogen, insbesondere Chlor;
- R¹⁸ für: Chlor oder Brom, insbesondere Chlor;
- R¹⁹ für: Halogenmethyl, insbesondere Difluormethyl;
- R²⁰ für: C₁-C₄-Alkyl, insbesondere Methyl;
- R²³ und R²⁴: zusammen mit den sie verbindenden Ringatomen für einen 6-gliedrigen Ring;
- Y⁷: für Sauerstoff;
- R⁵⁰ für: C₁-C₄-Alkyl, insbesondere Methyl;
- R⁵¹ für: C₁-C₄-Halogenalkyl, insbesondere Trifluormethyl;
- R⁵² für: Wasserstoff;
- R⁵³ und R⁵⁴: zusammen mit den sie verbindenden Ringatomen für einen 6-gliedrigen Ring;
- Z³, Z⁴: unabhängig voneinander für Stickstoff;
- R⁵⁵ und R⁵⁶: zusammen mit den sie verbindenden Ringatomen für einen 5- oder 6-gliedrigen Ring, der gewünschtenfalls noch einen oder zwei C₁-C₄-Alkylsubstituenten tragen kann,
stehen;
besonders bevorzugt steht R⁵ für 1-Methyl-6-trifluormethyl-2,4(1H,3H)-pyrimidindion-3-yl, 4-Chlor-5-difluormethoxy-1-methyl-lH-pyrazol-3-yl, 4-Chlor-1-methyl-5-trifluormethyl-1H-pyrazol-3-yl, 1-Methyl-4,5-di(trifluormethyl)-1H-pyrazol-3-yl, 1,3,4,5,6,7-Hexahydro-1,3-dioxo-2H-isoindol-2-yl, 3,4-Dimethyl-1H-pyrrol-2,5-dion-1-yl, 3-Chlor-4,5,6,7-tetrahydro-2H-indazol-2-yl, 5-Chlor-1-difluormethyl-2-methyl-1H-imidazol-4-yl, 5,6,7,8-Tetrahydro-1,2,4-triazolo[4,3-a]pyridin-3(2H)-on-2-yl, (3-Methyl-4-trifluormethyl-2(3H)-thiazolyliden)amino, (Tetrahydro-3-oxo-lH,3H-[1,3,4]thiadiazolo[3,4-a]pyridazin-1-yliden)amino oder (6,7-Dihydro-6,6-dimethyl-3H,5H-pyrrolo [2,1-c][1,2,4]thiadiazol-3-yliden)amino.

Ganz besonders bevorzugt sind die in der folgenden Tabelle 1 aufgeführten Verbindungen IAa (=̂ I mit R³ = Chlor; Eth = -CH₂-CH₂-; R⁵ = Heterocyclus Φ¹ mit R⁸ = CH₃ und R⁹ = CF₃):

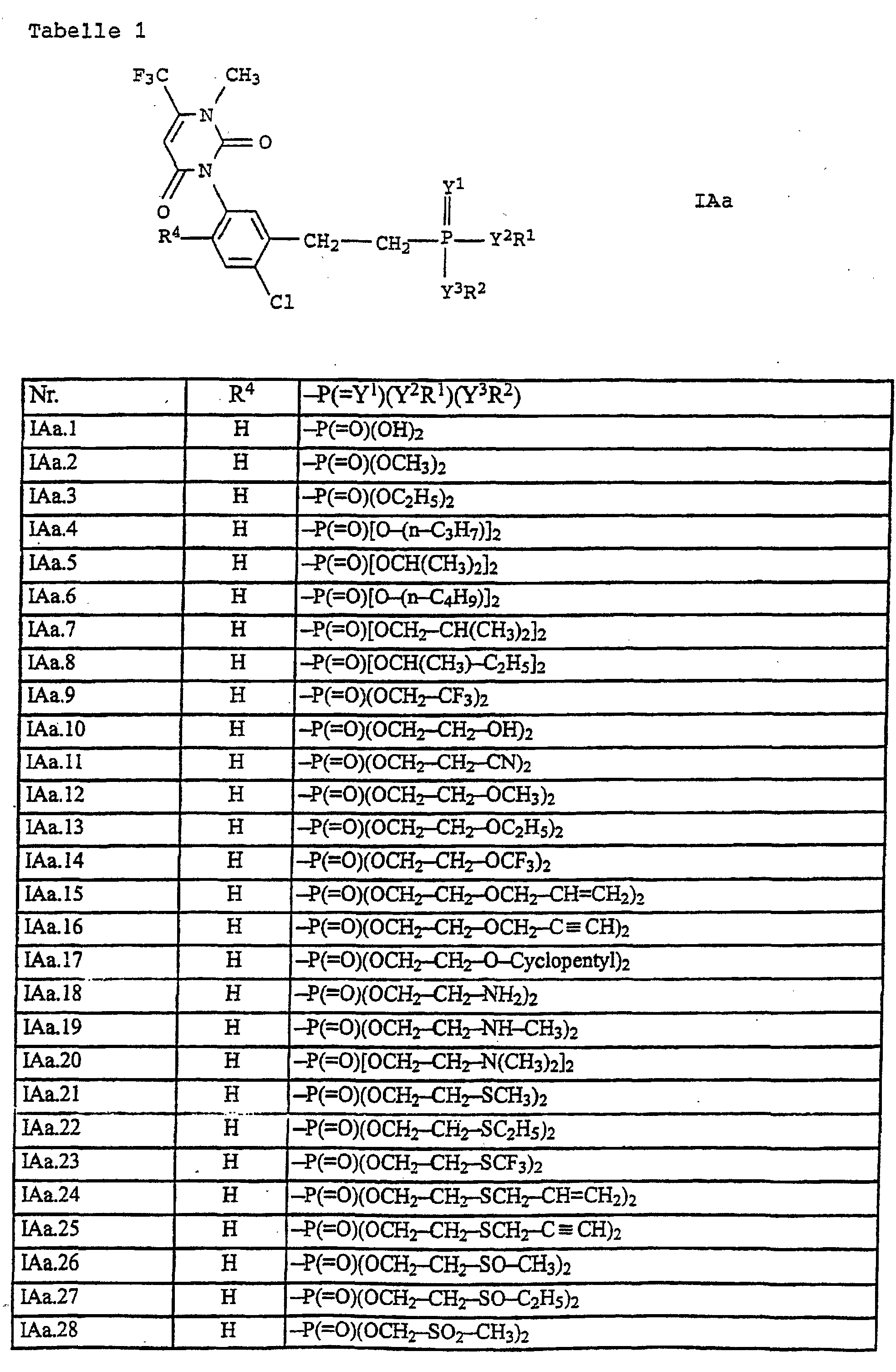

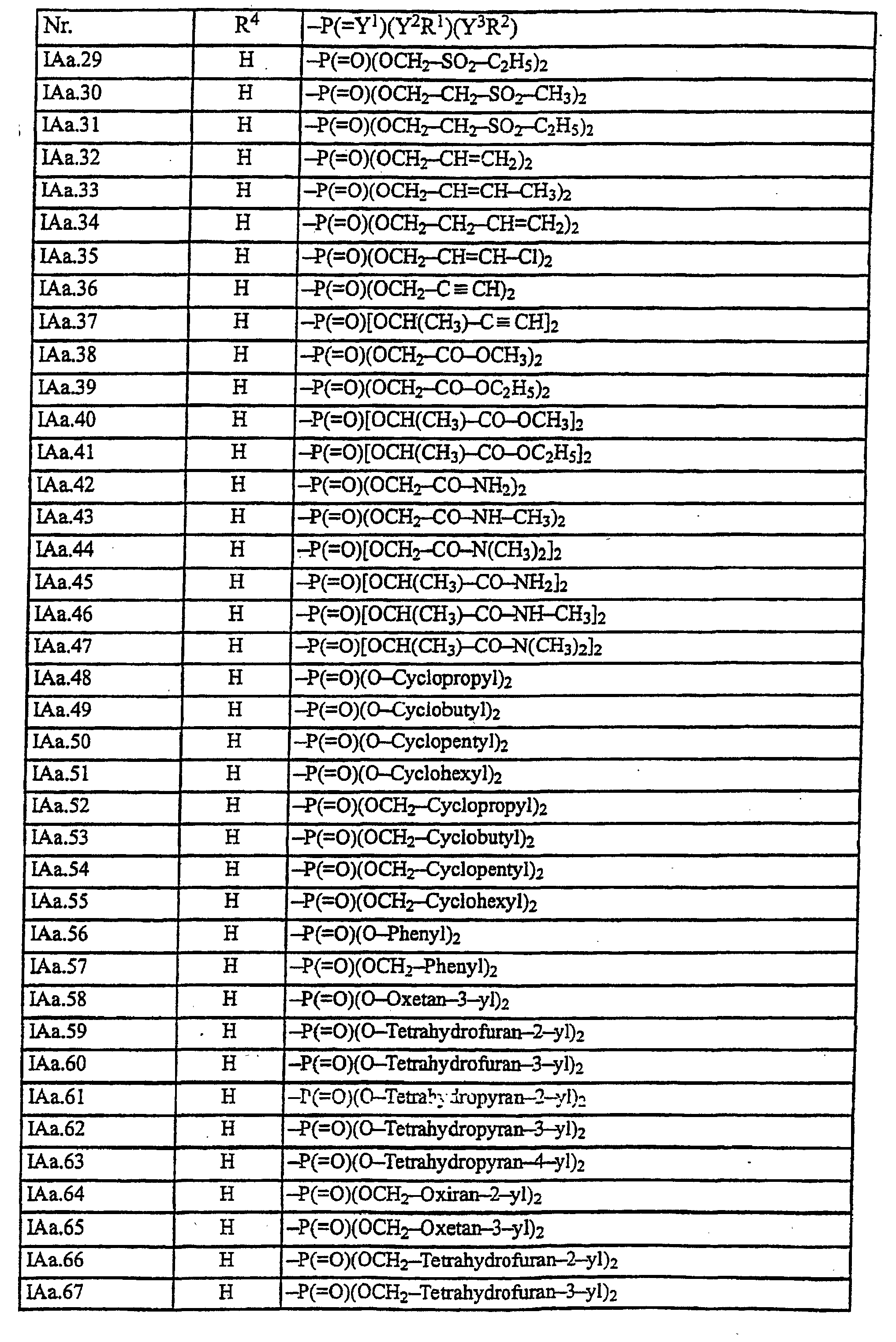

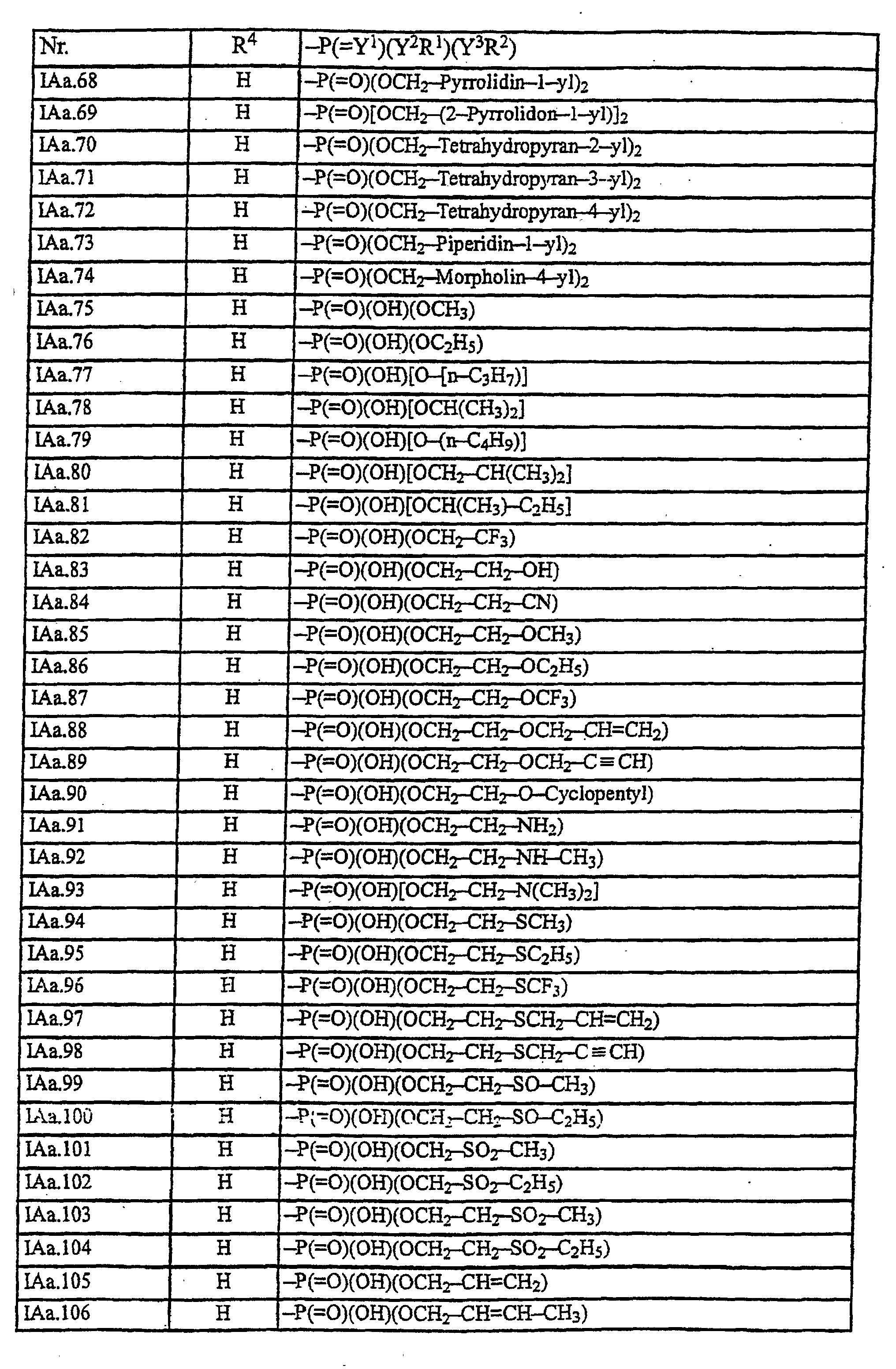

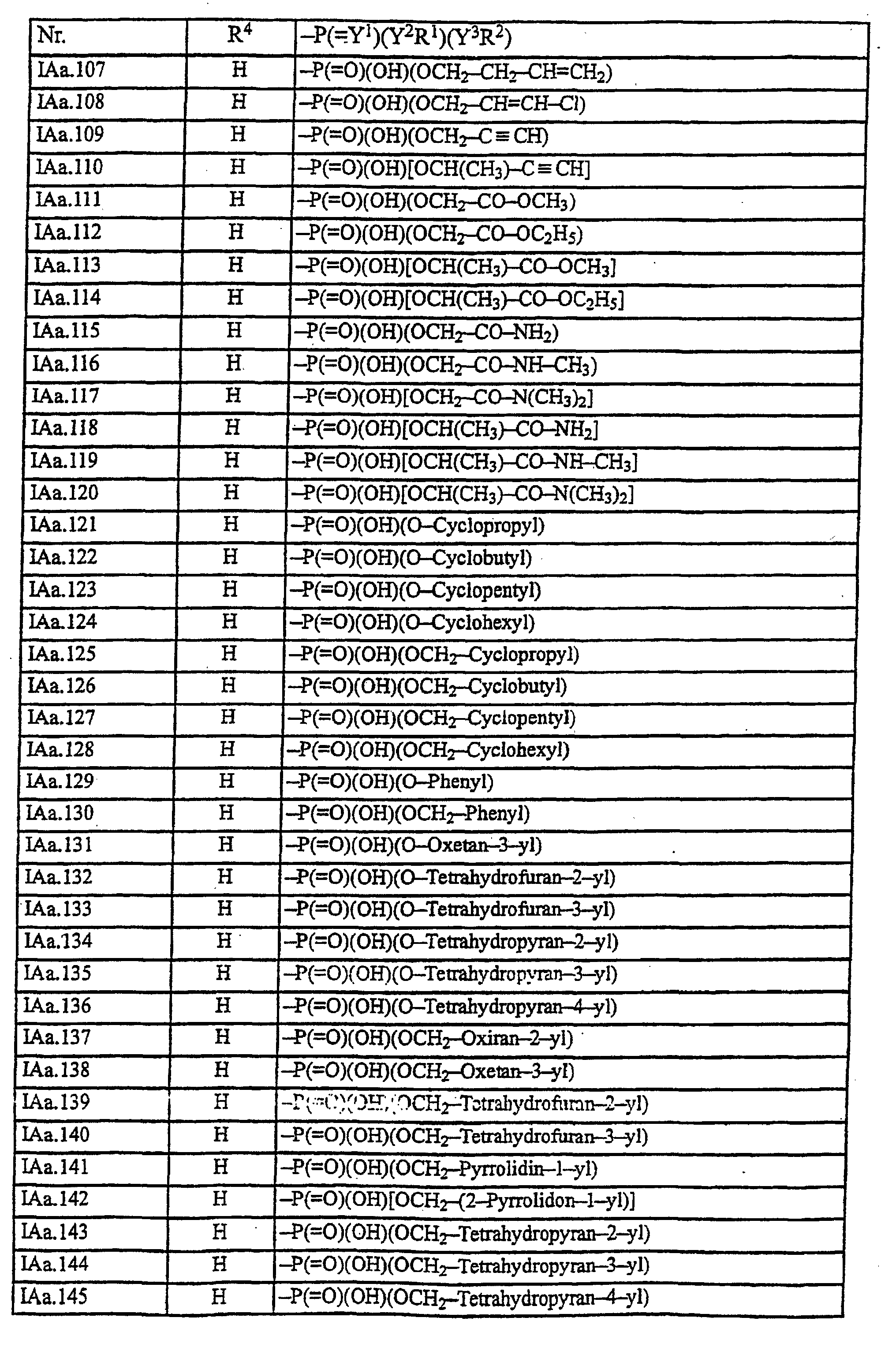

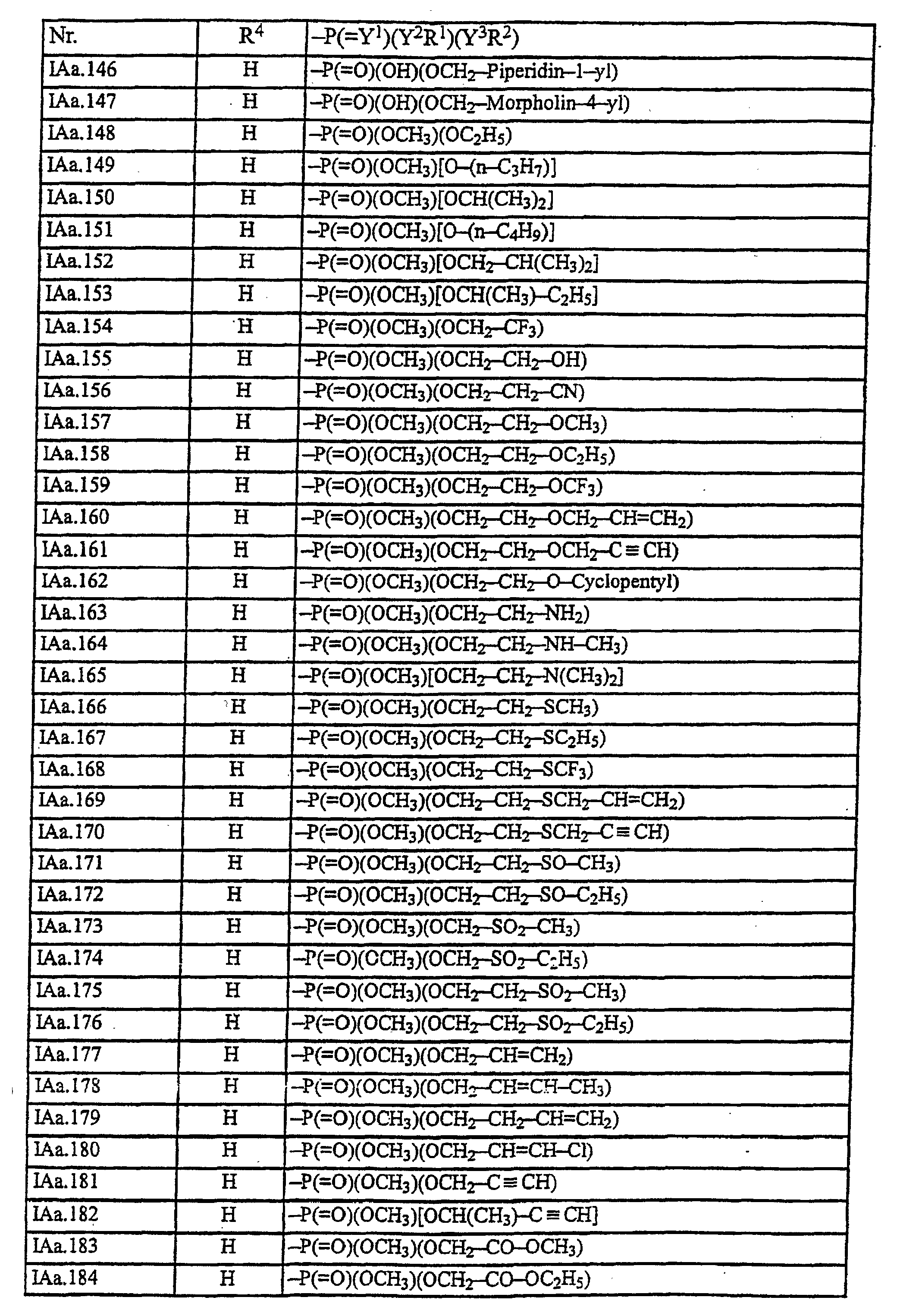

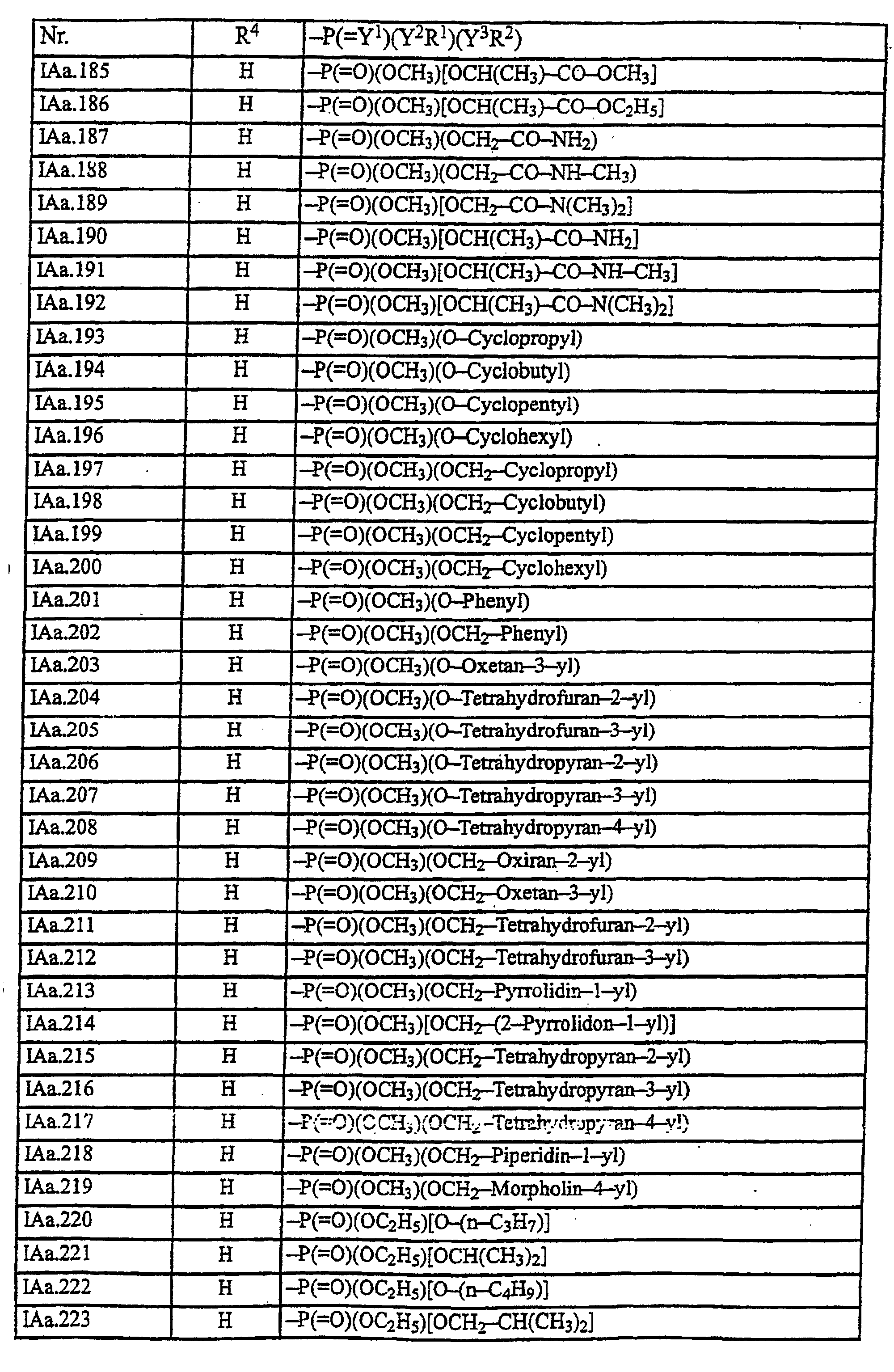

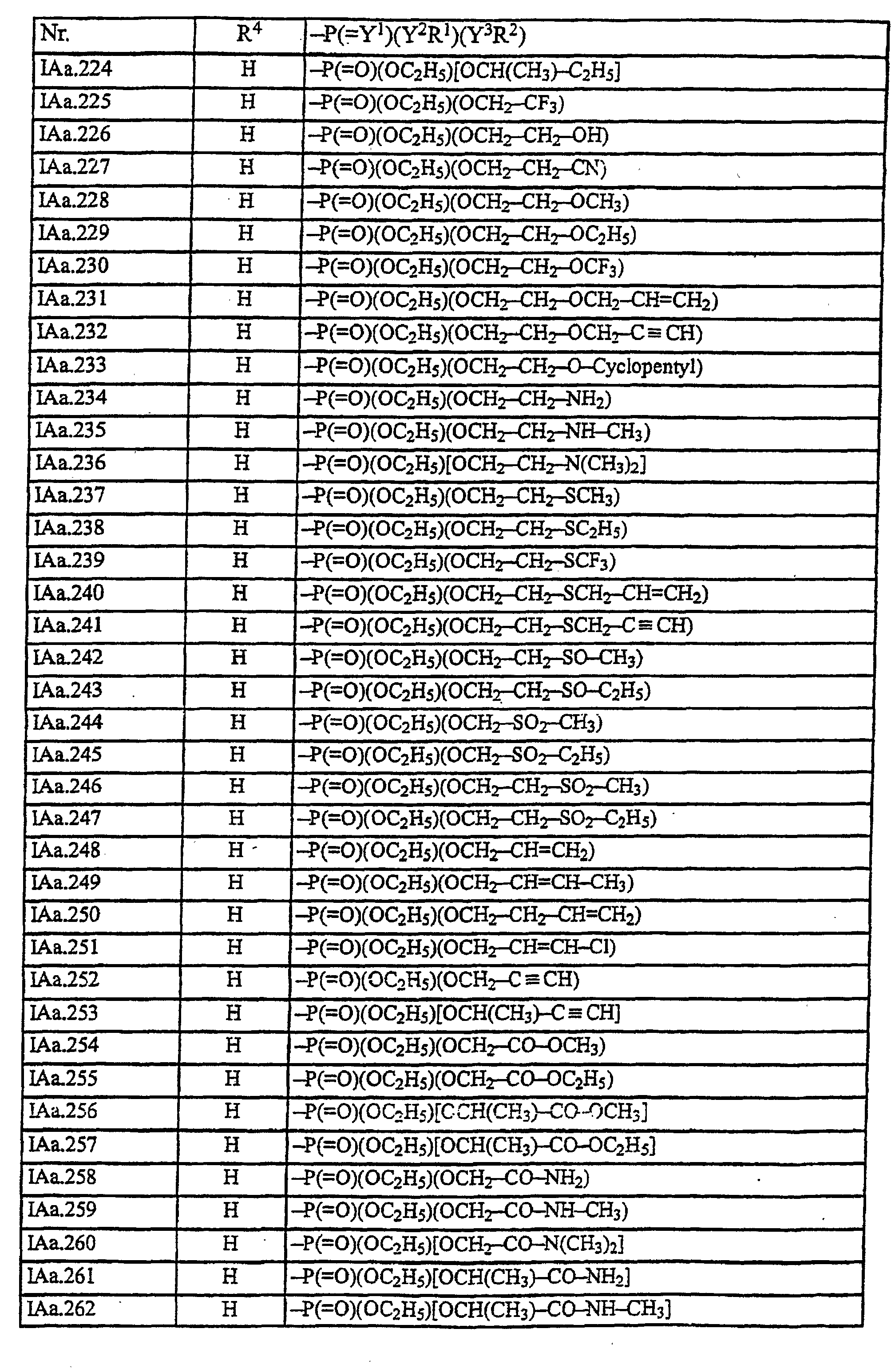

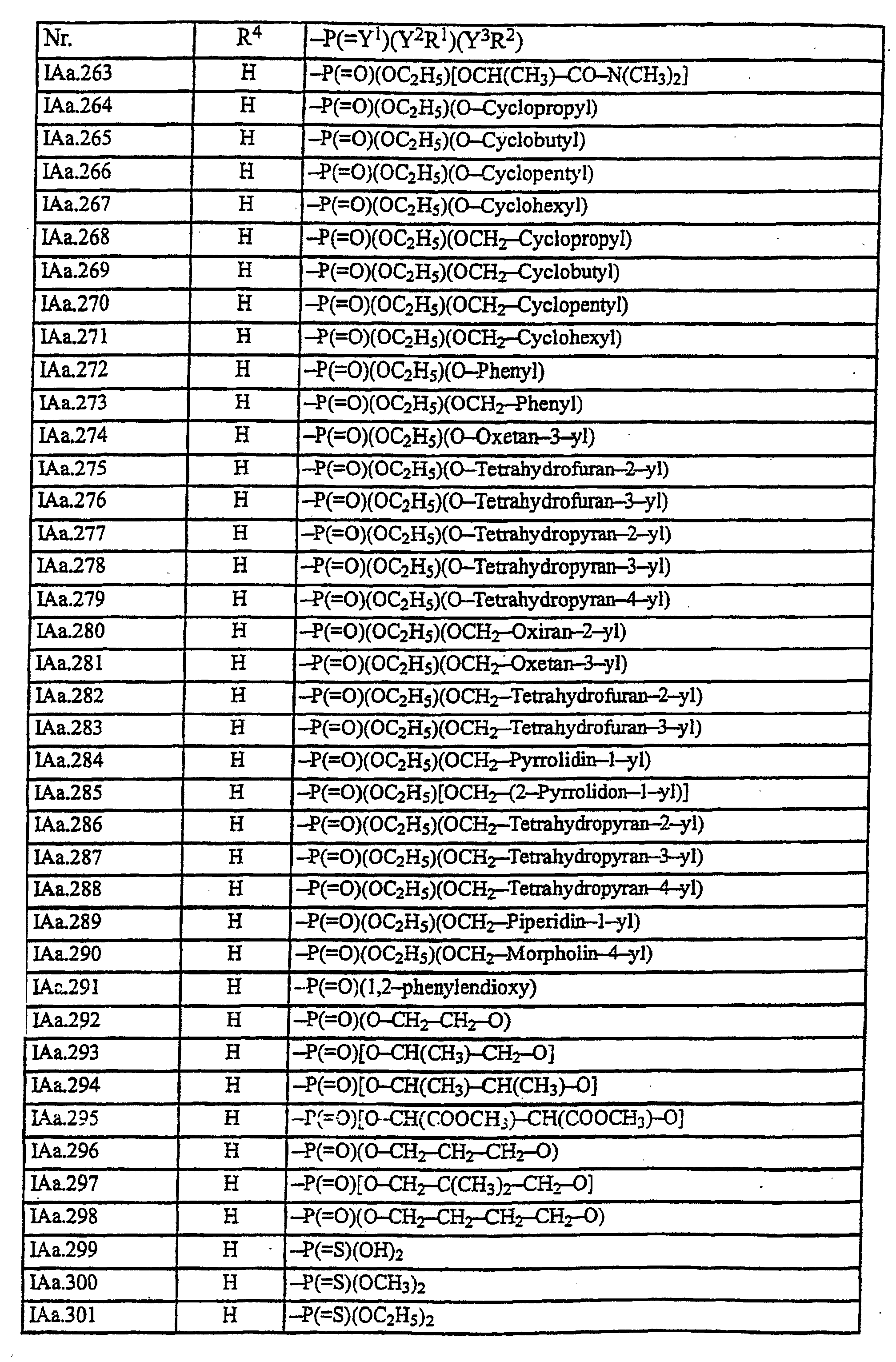

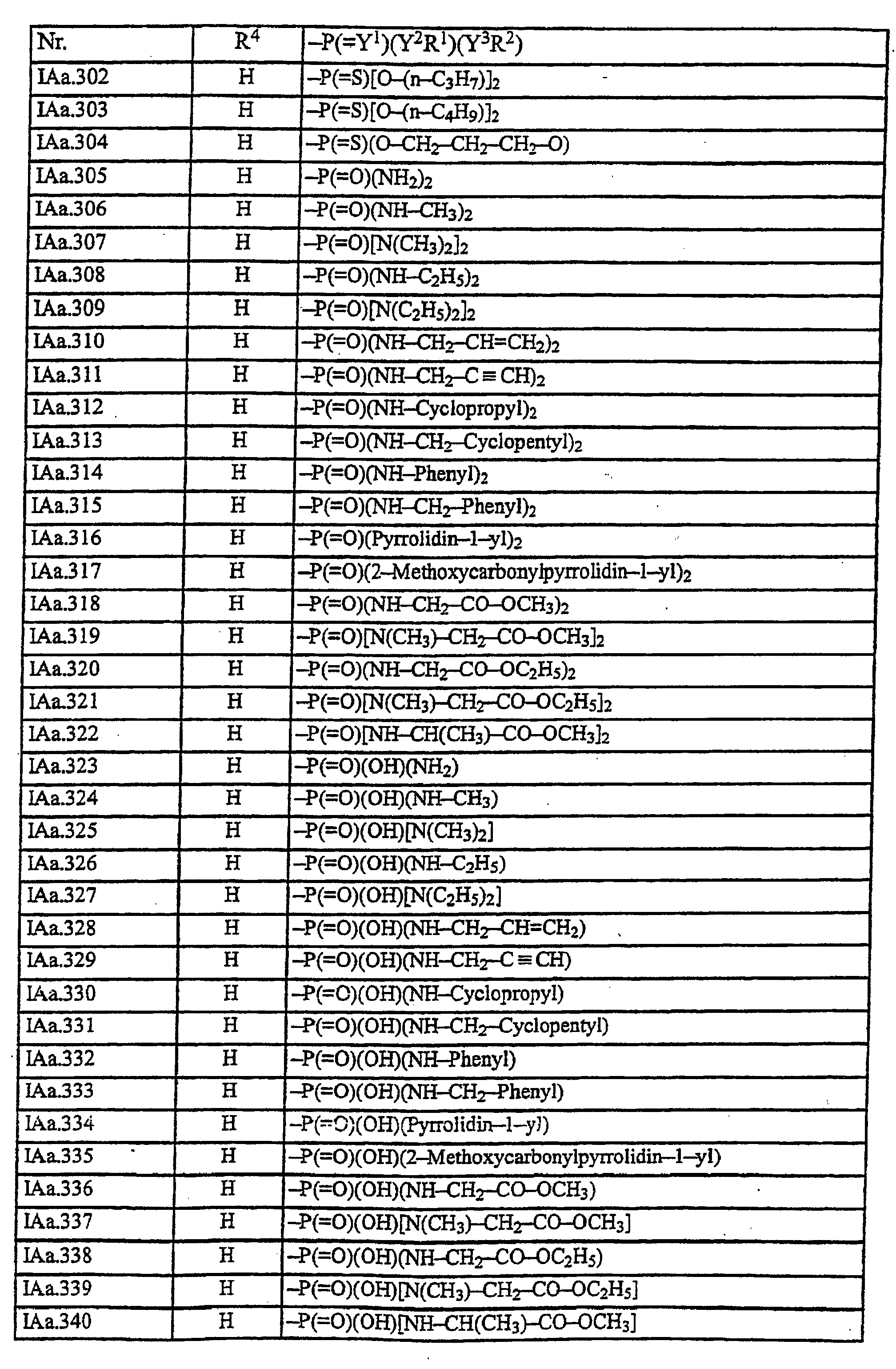

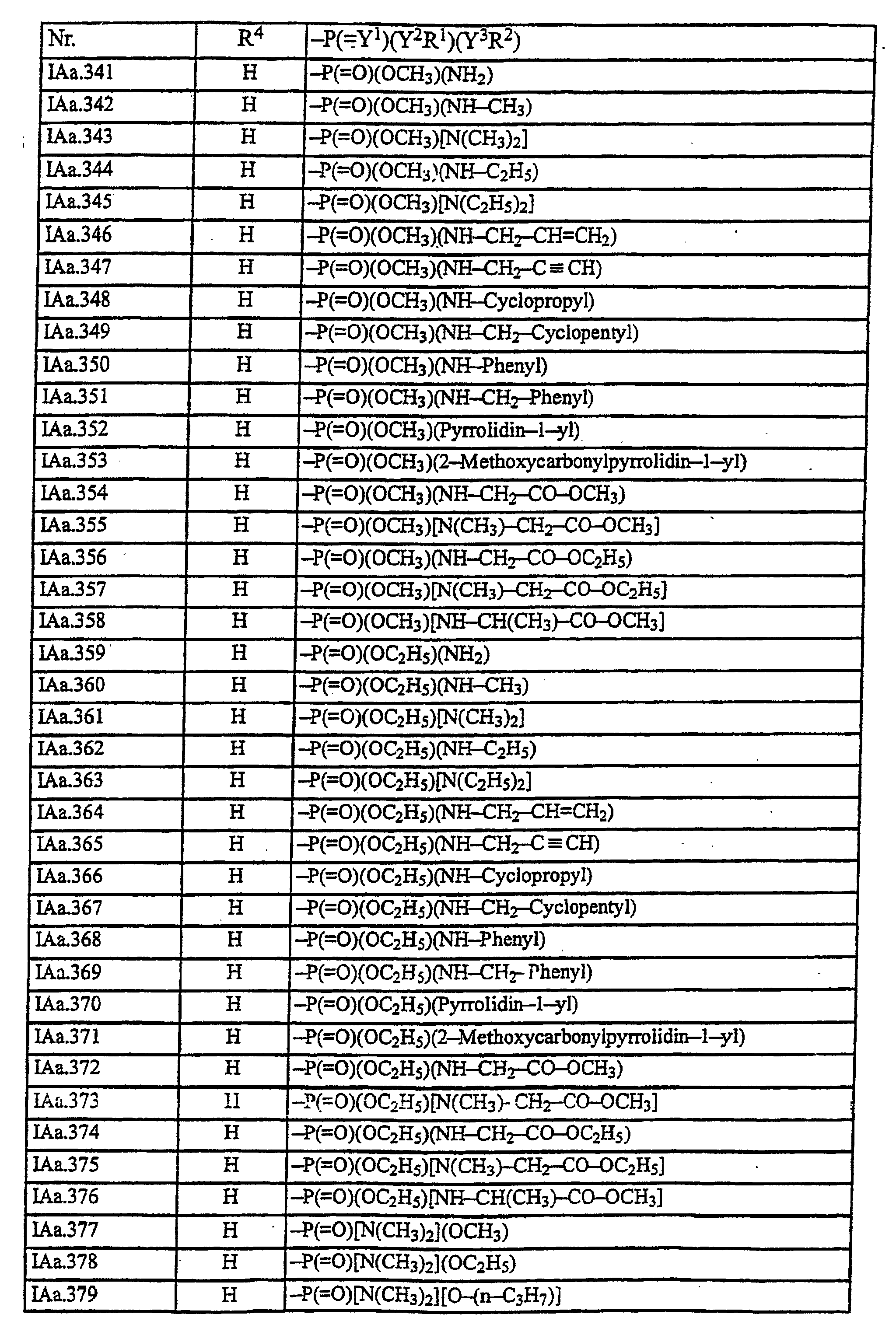

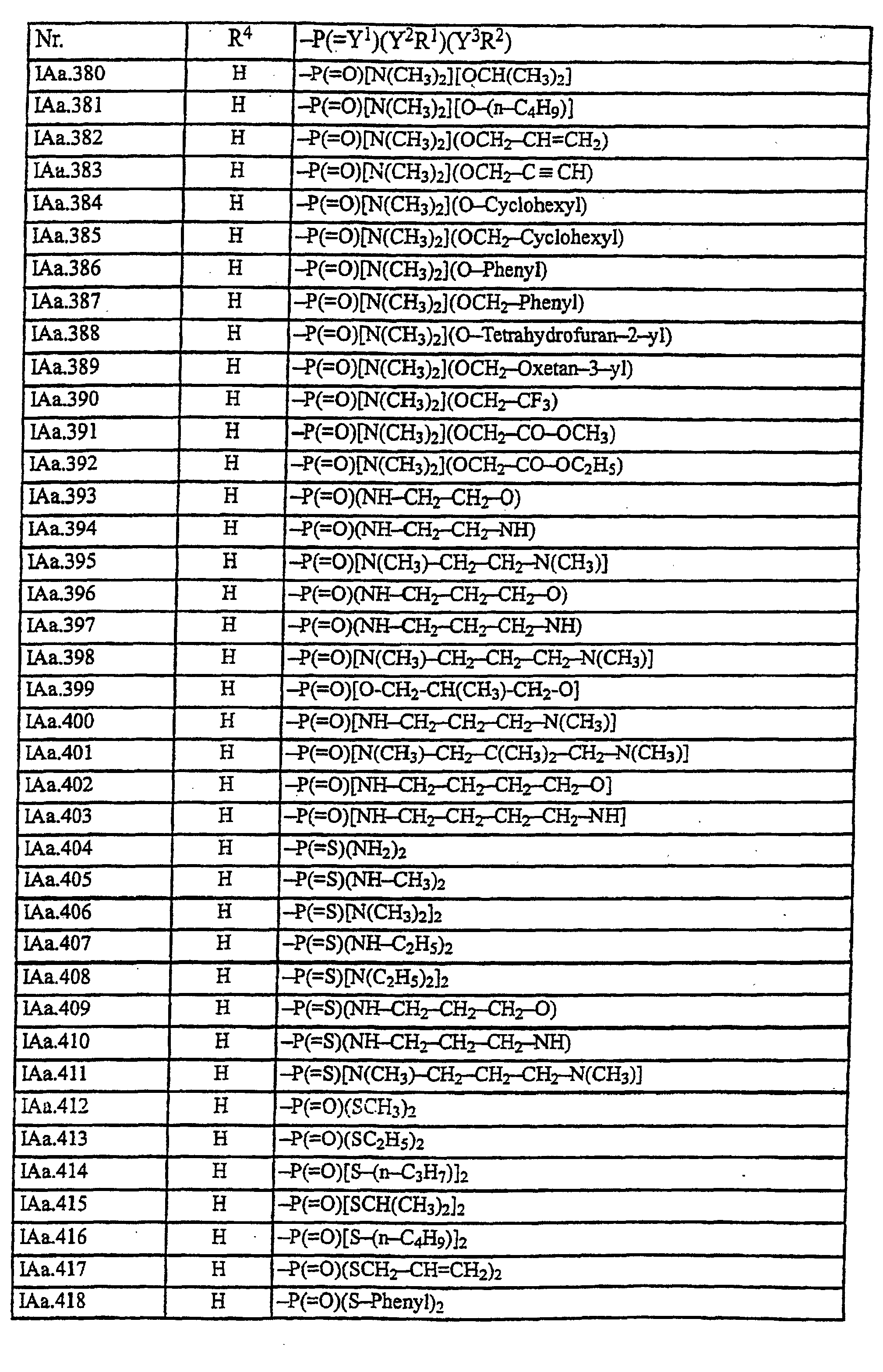

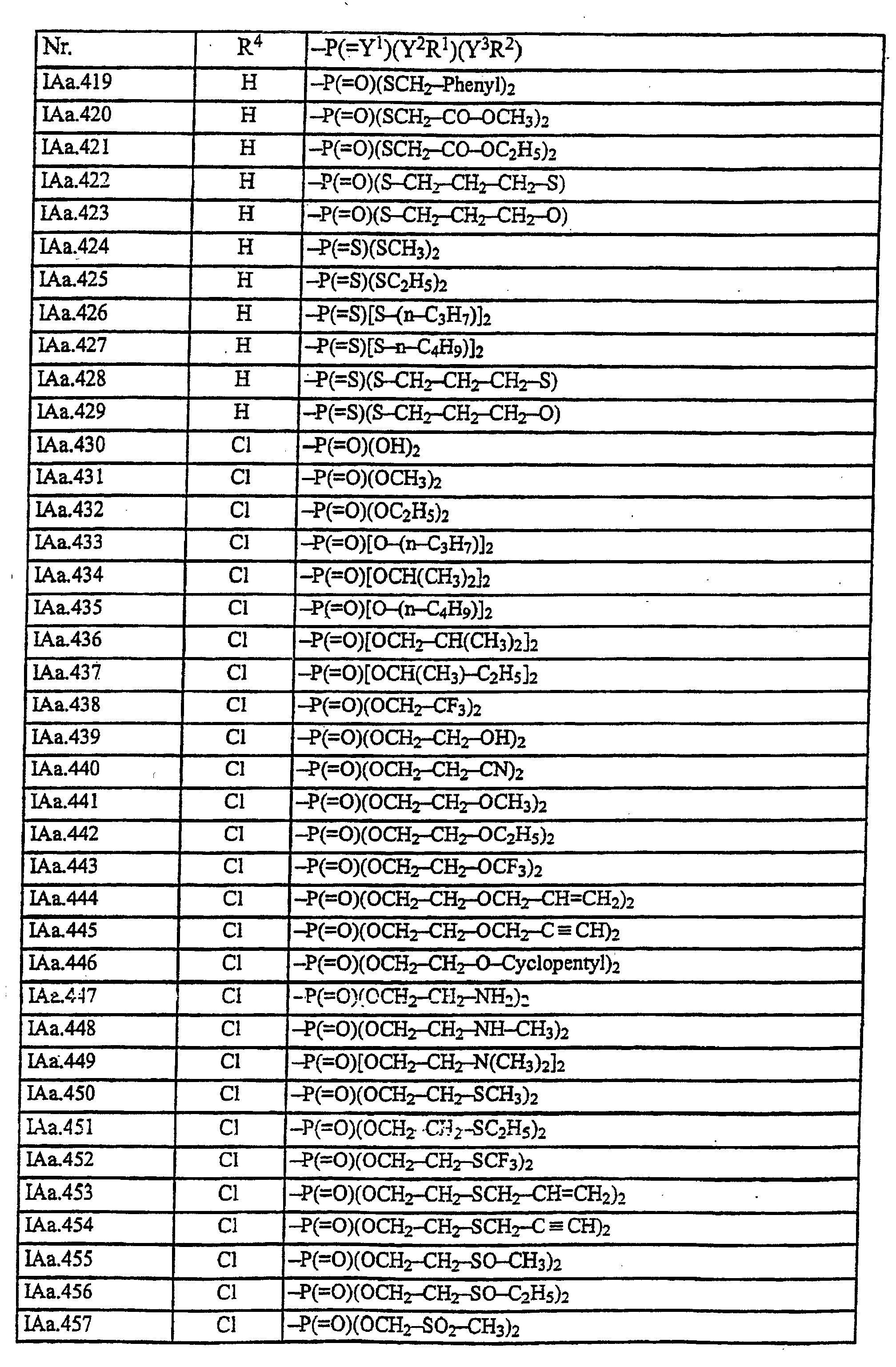

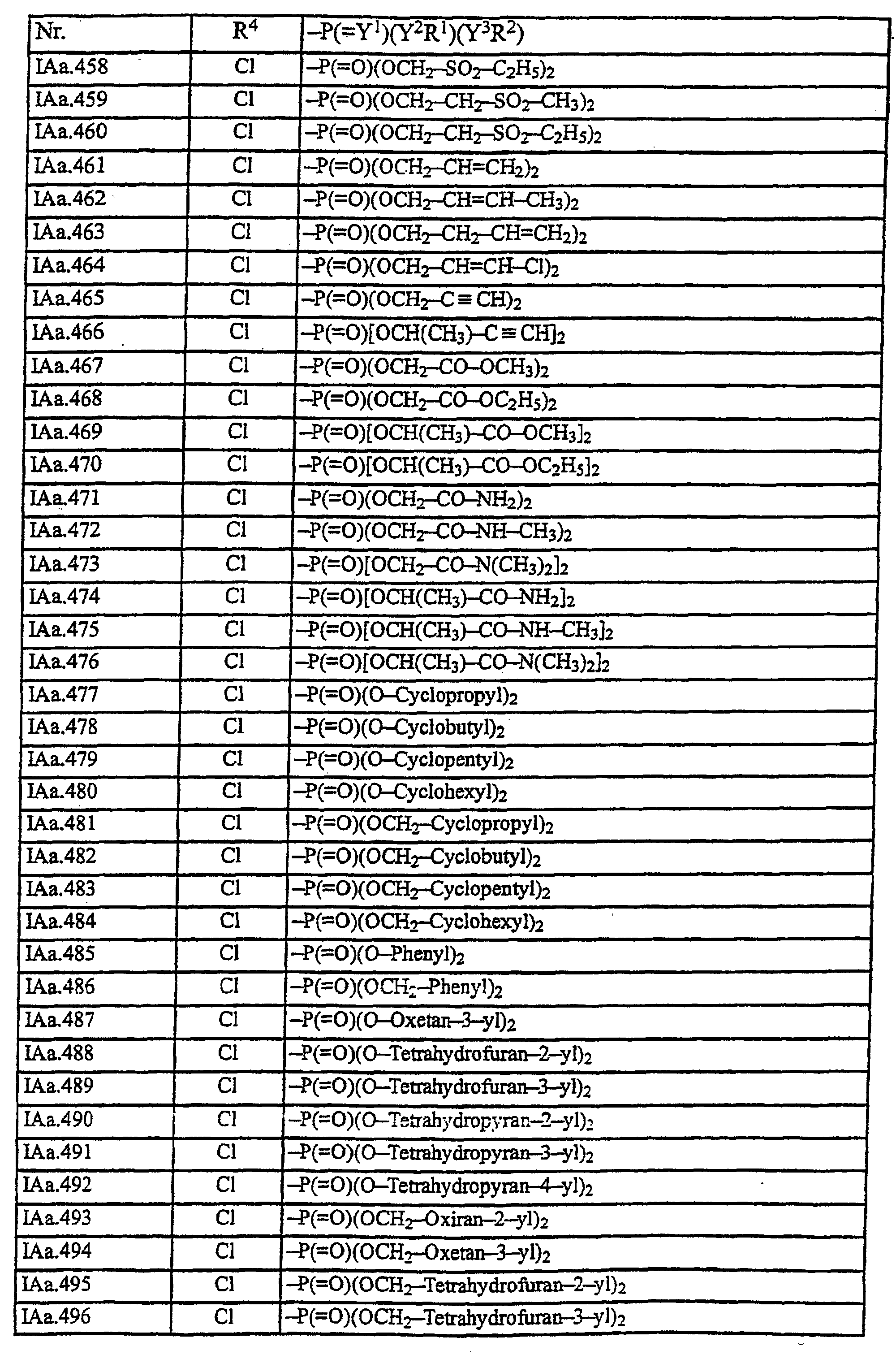

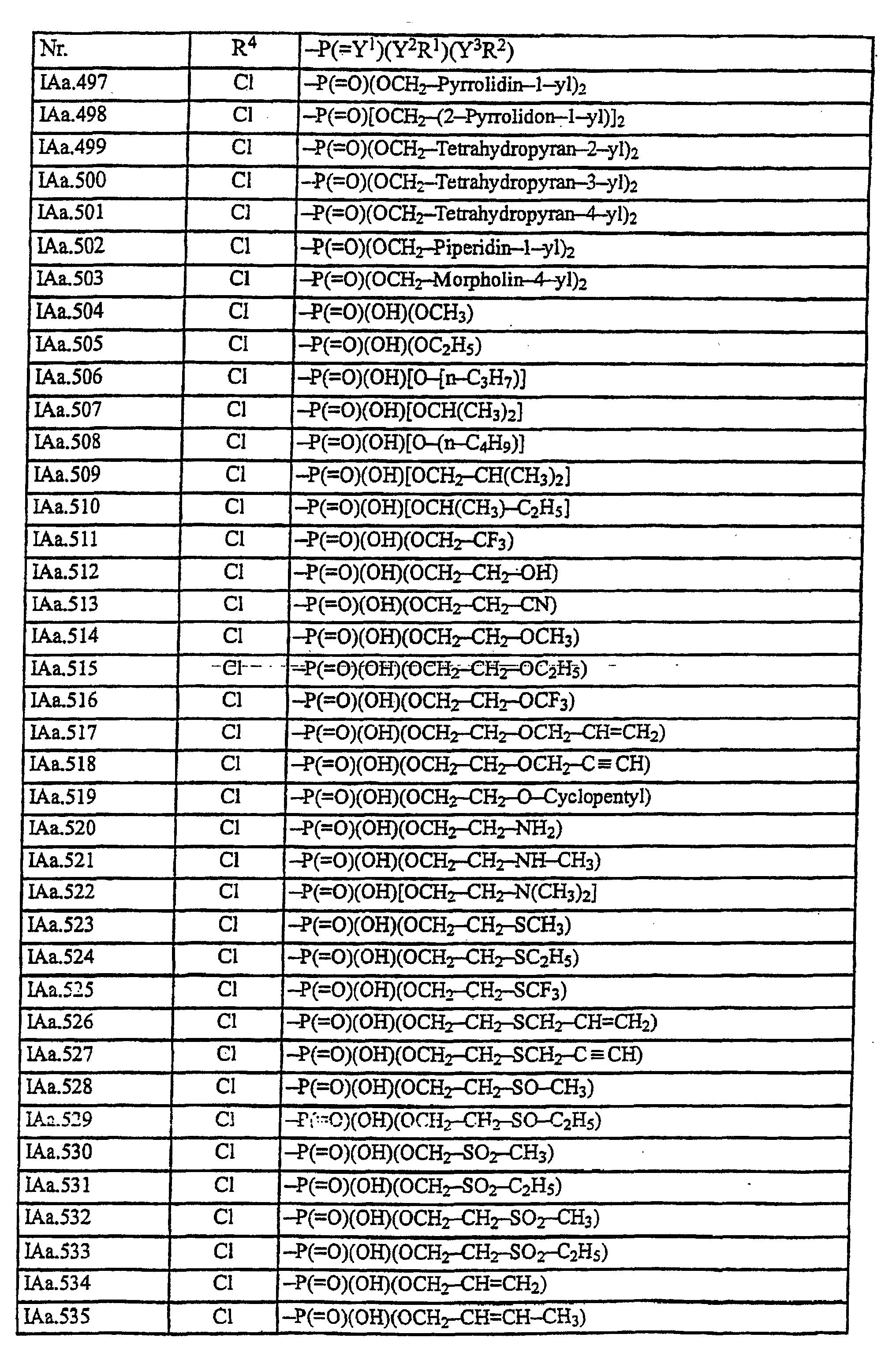

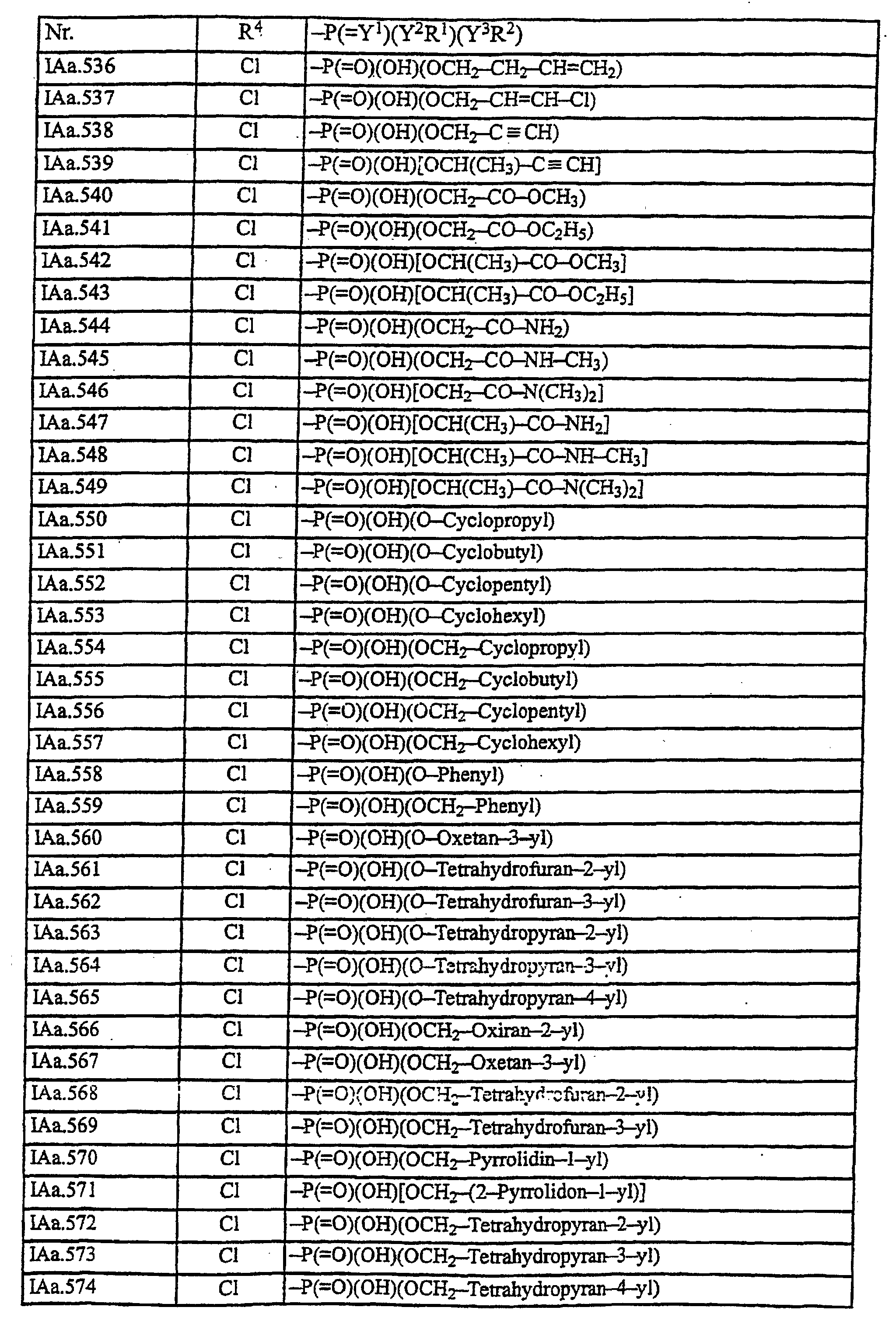

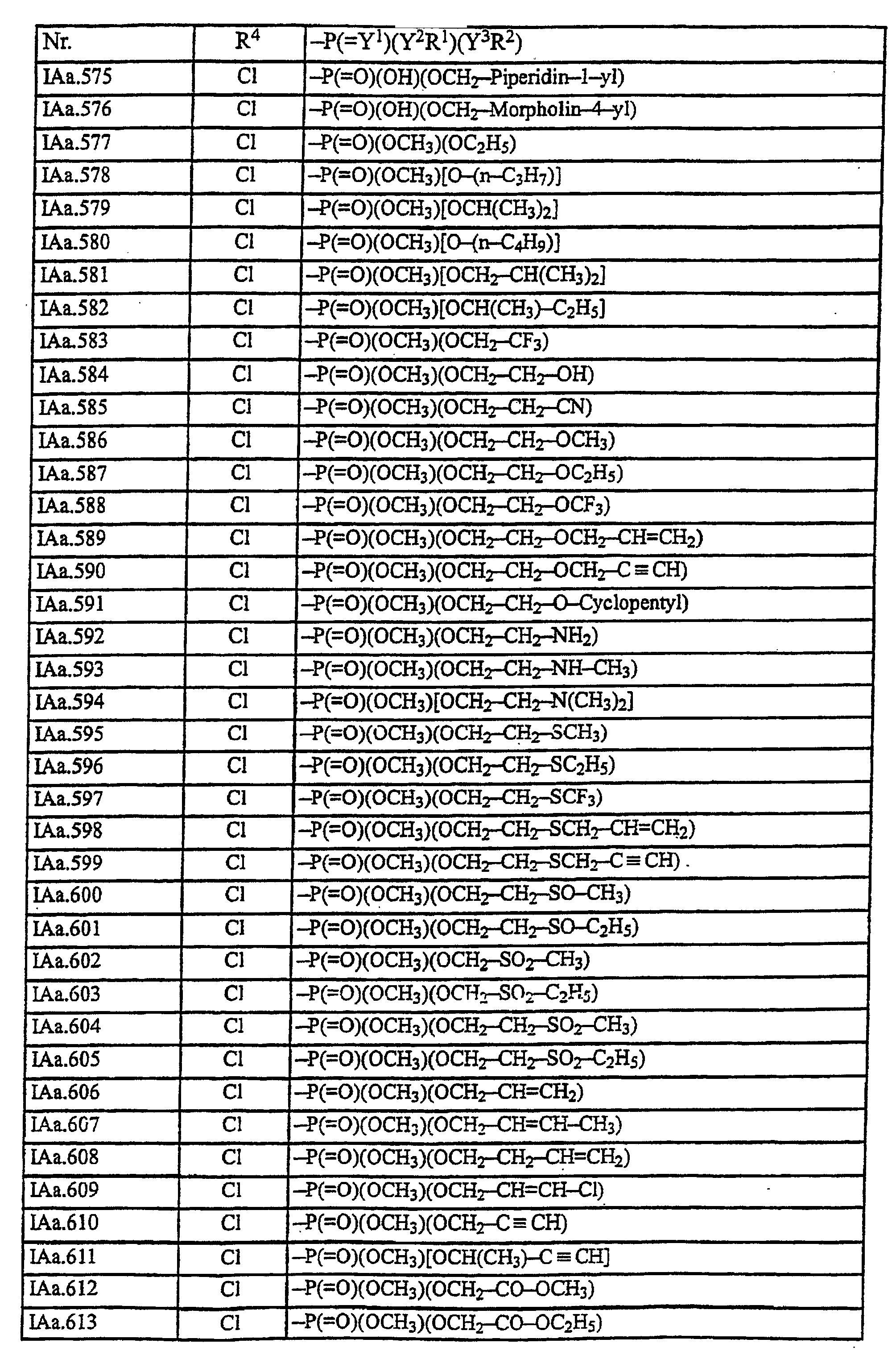

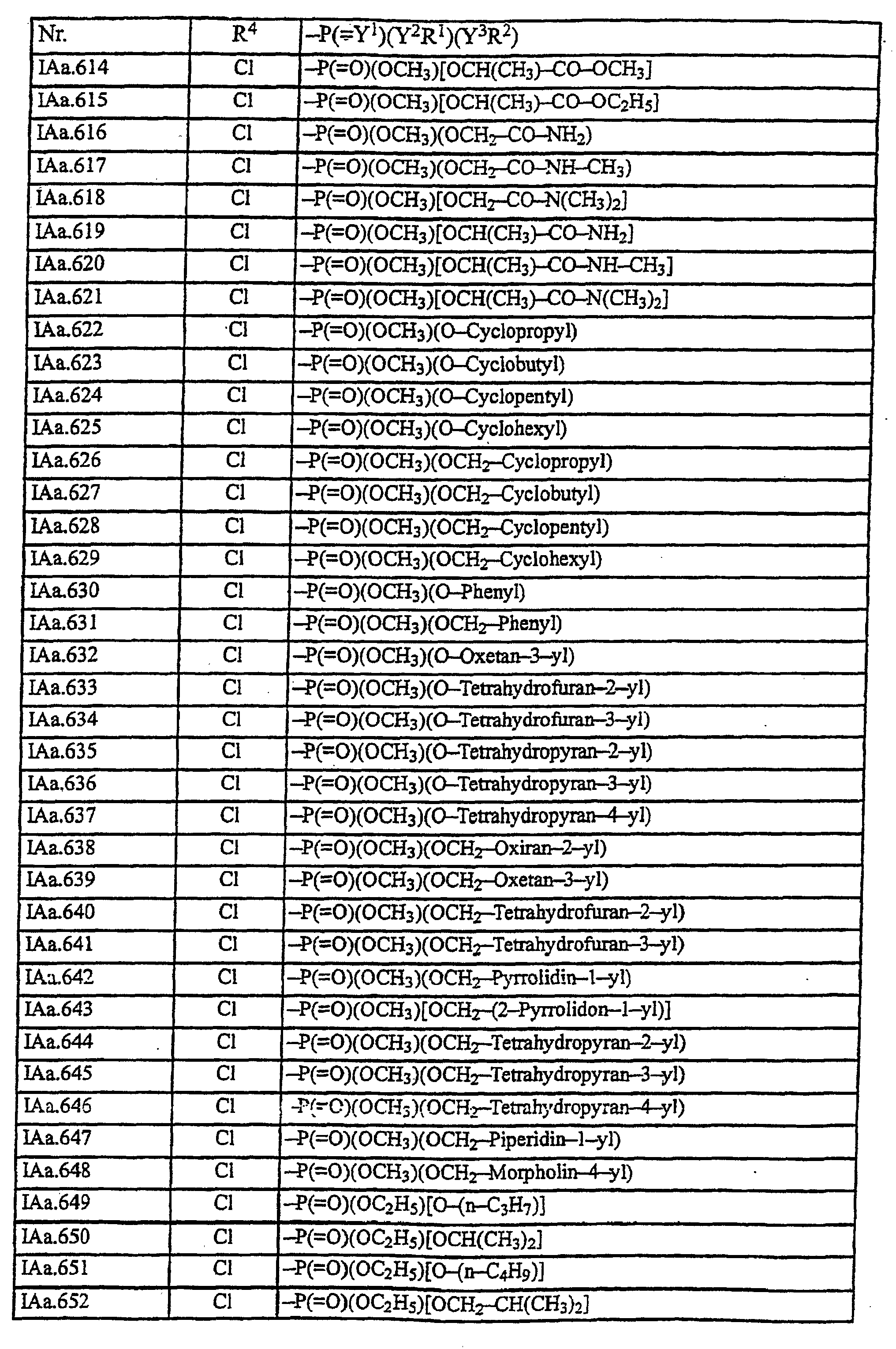

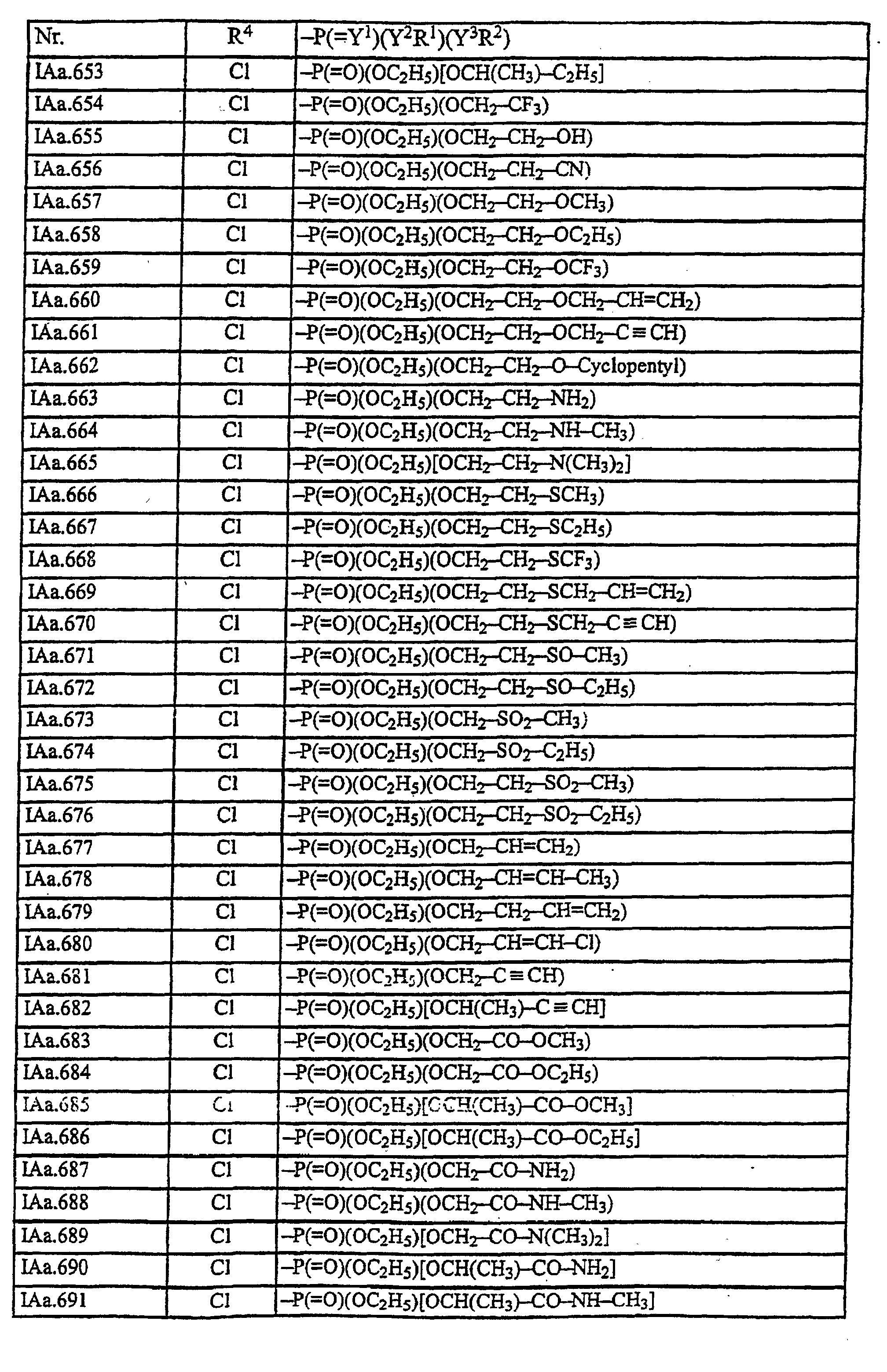

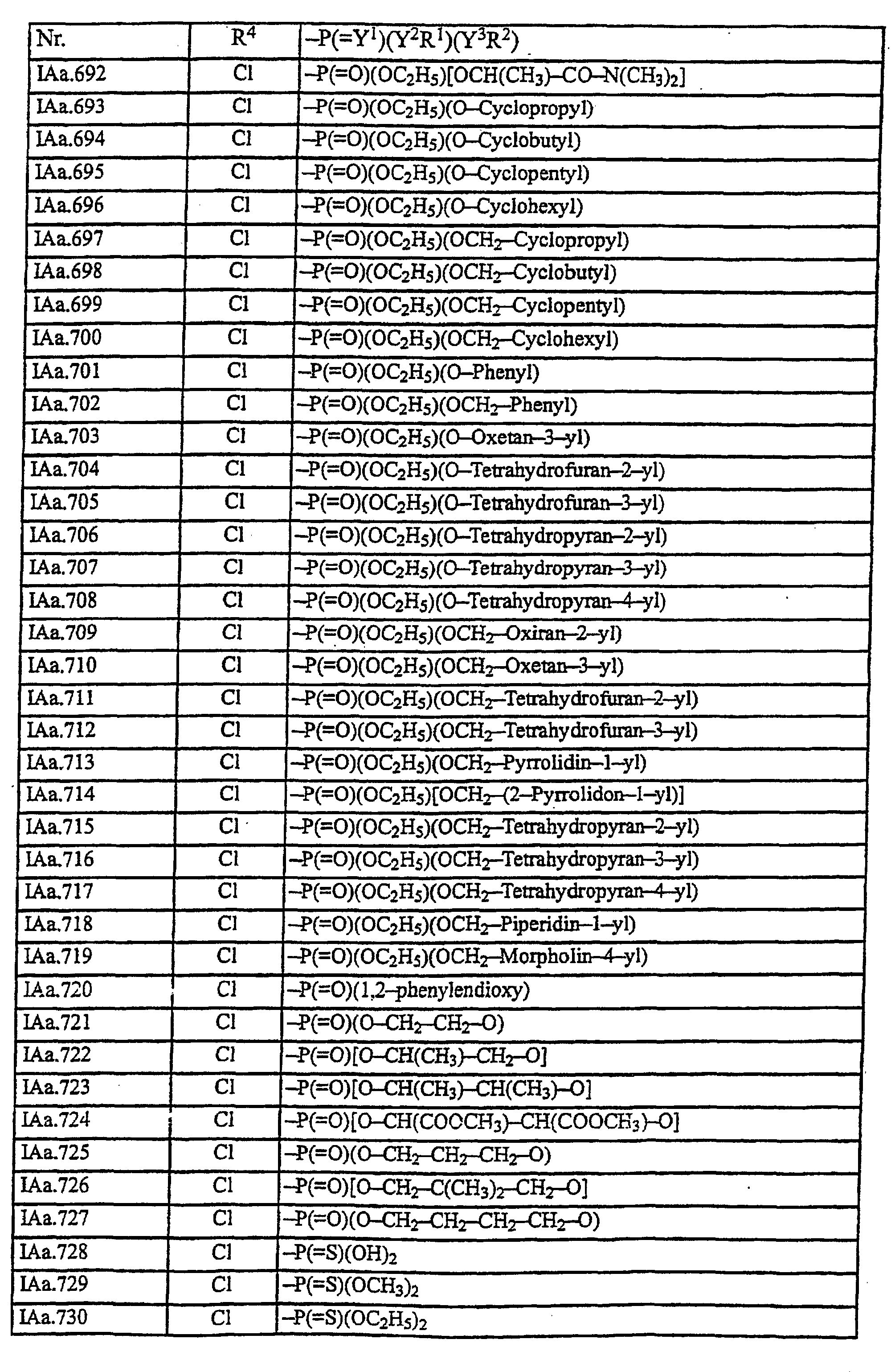

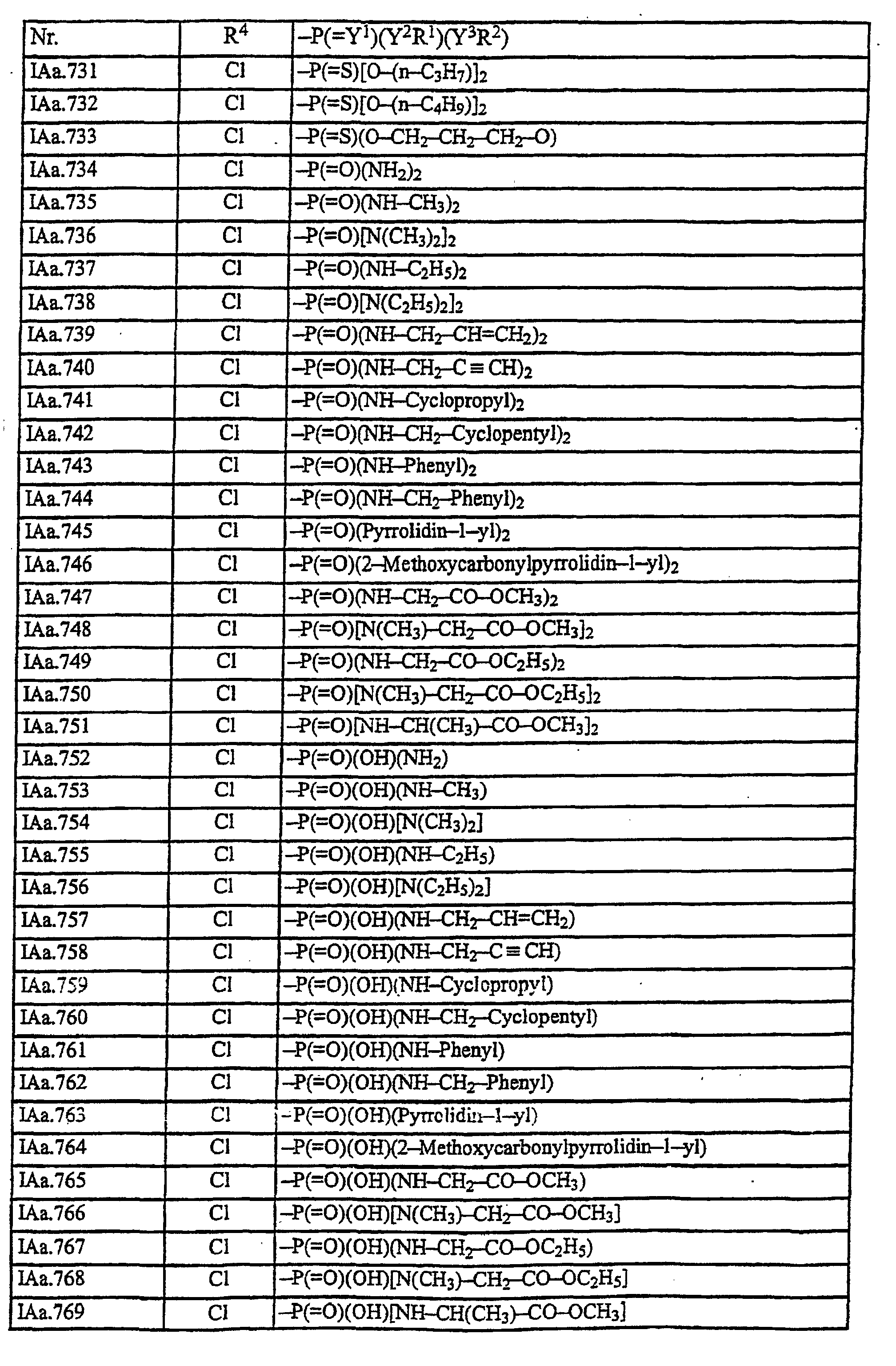

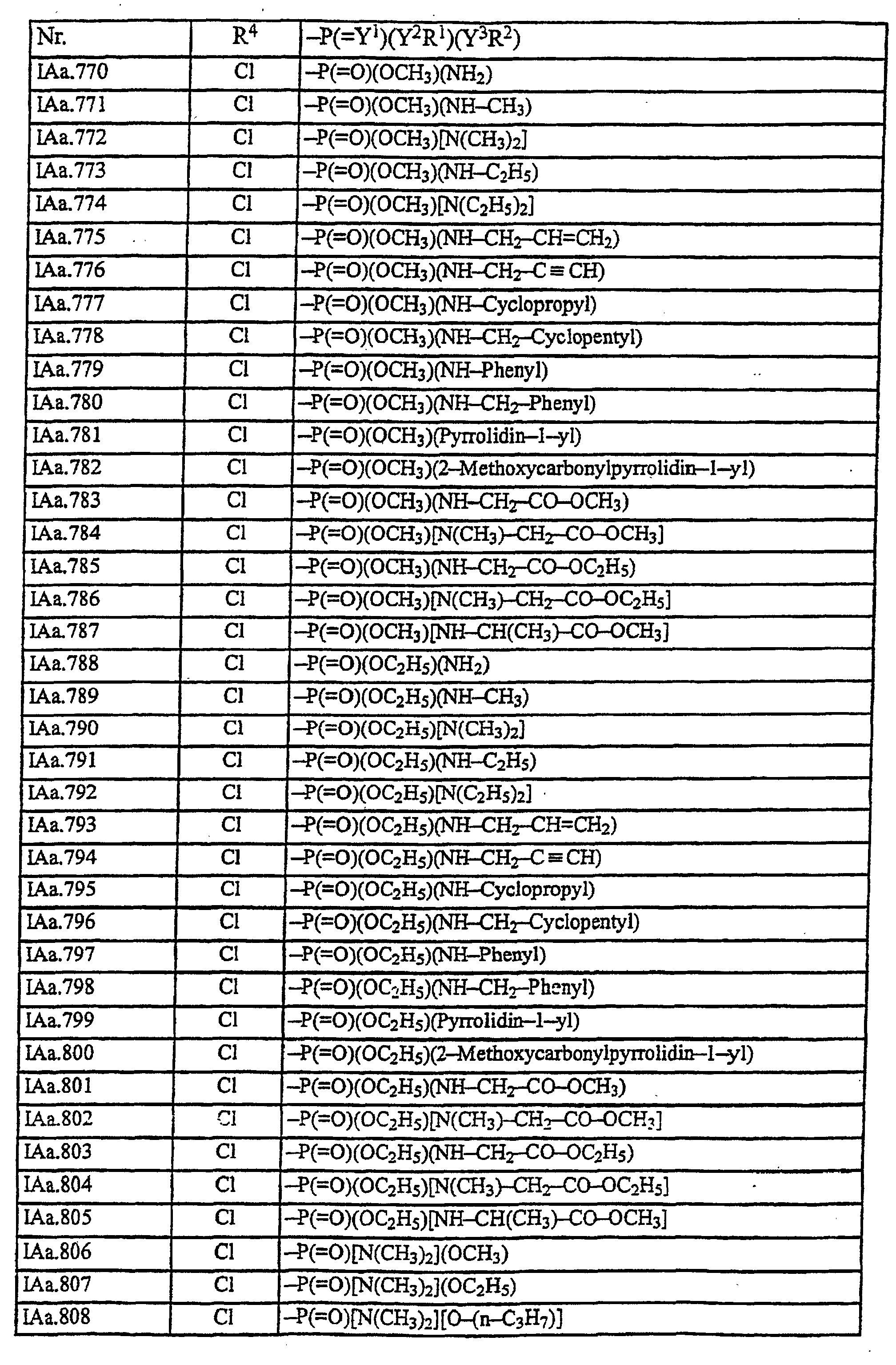

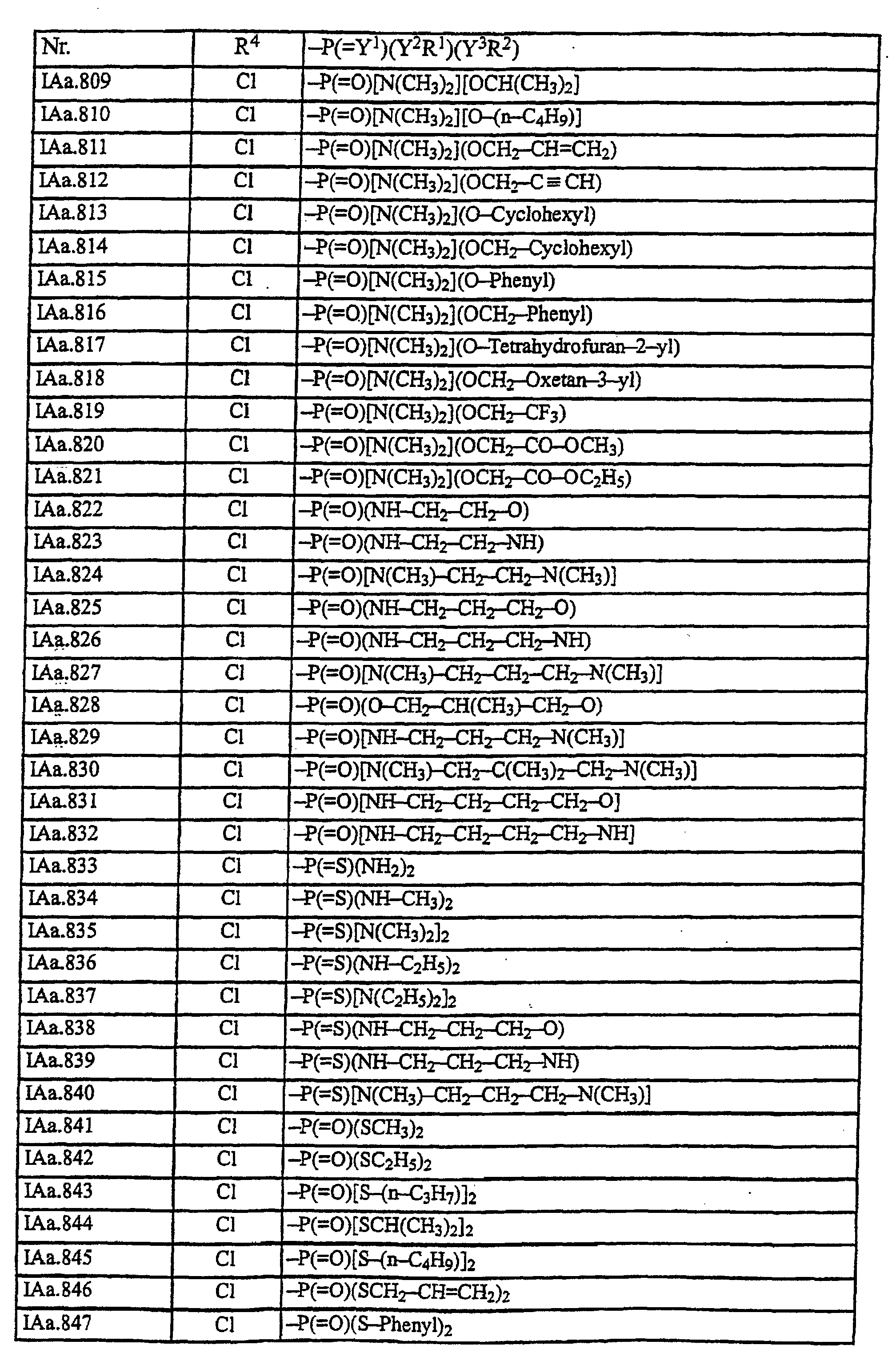

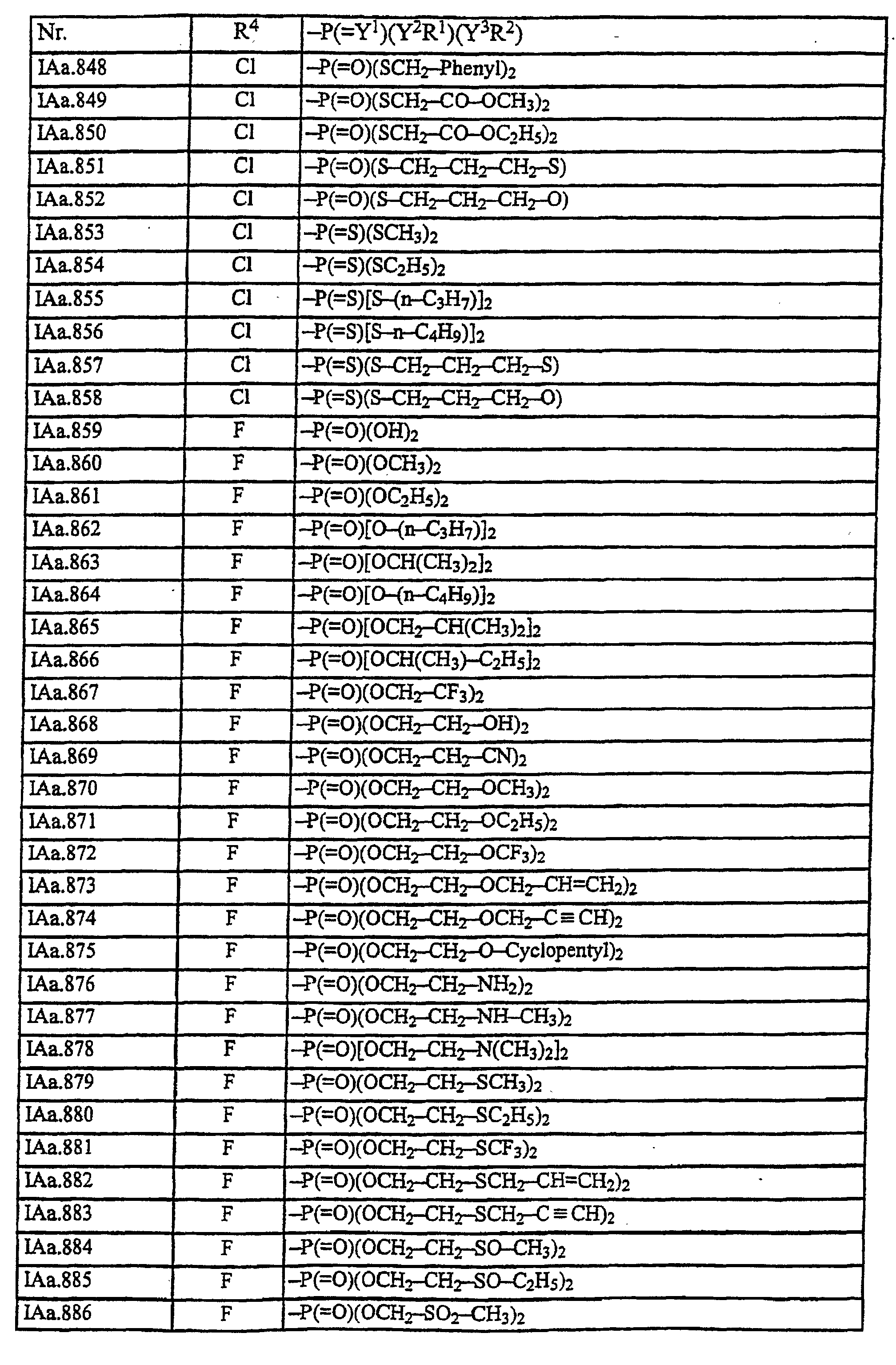

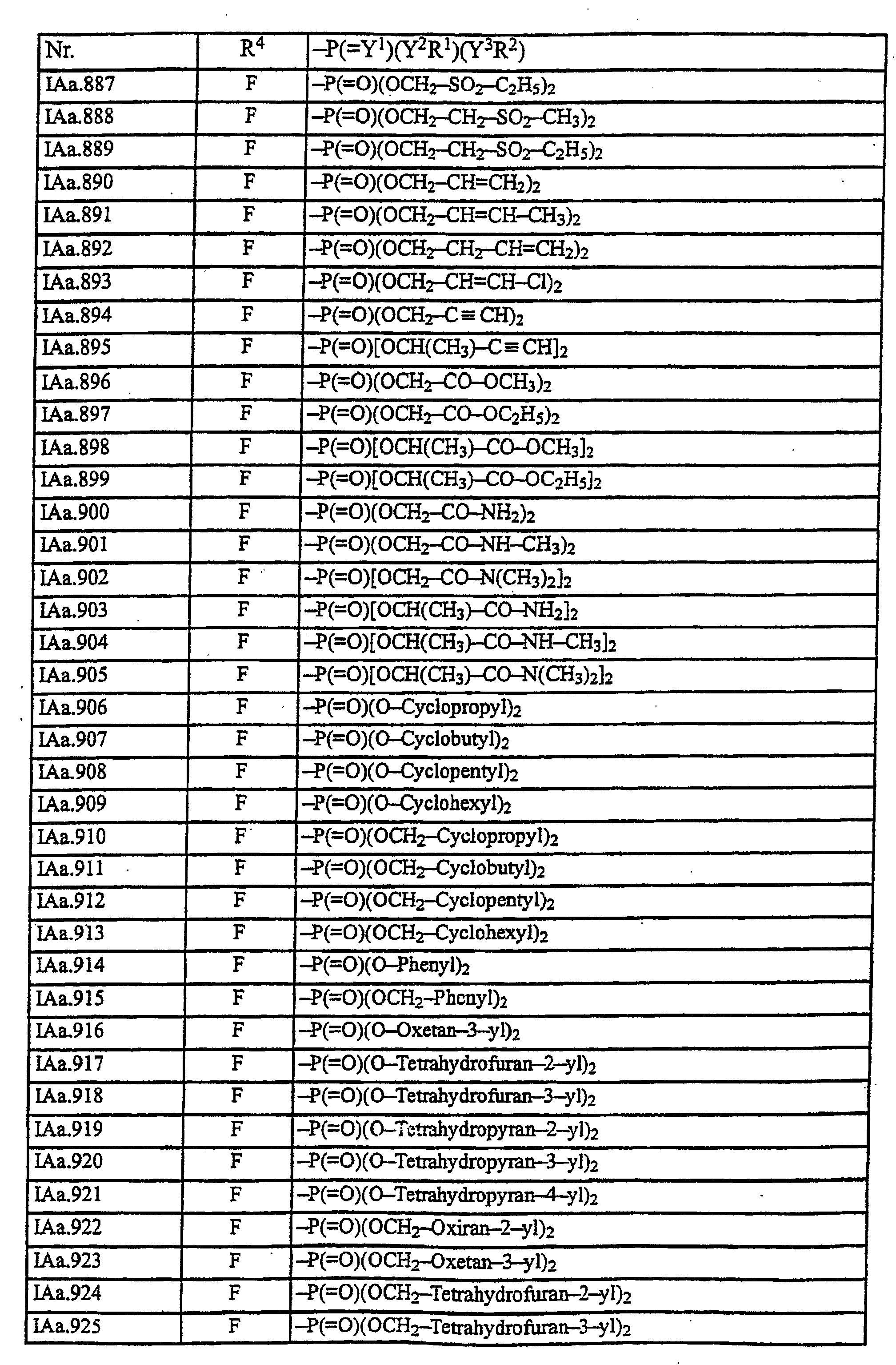

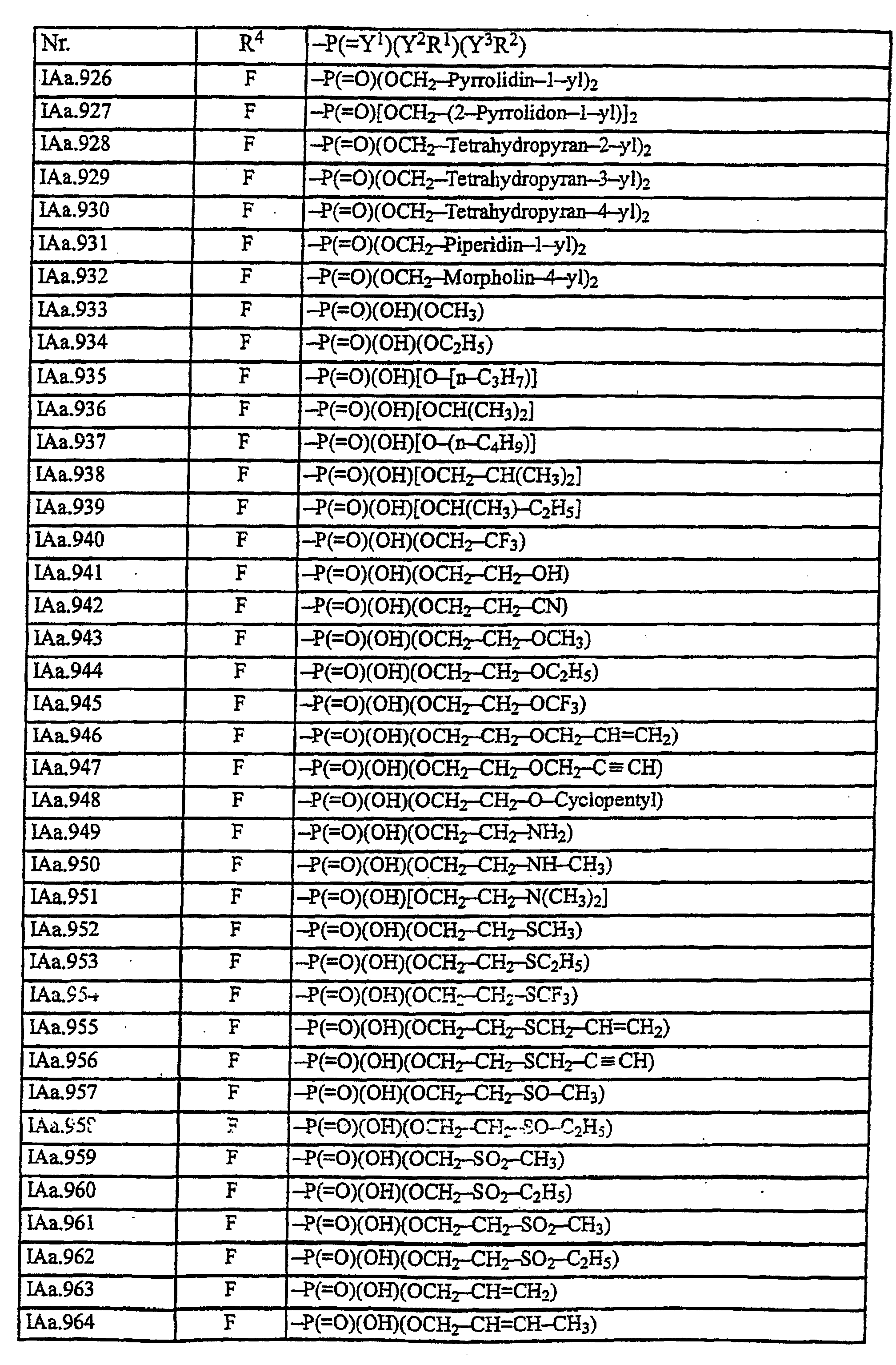

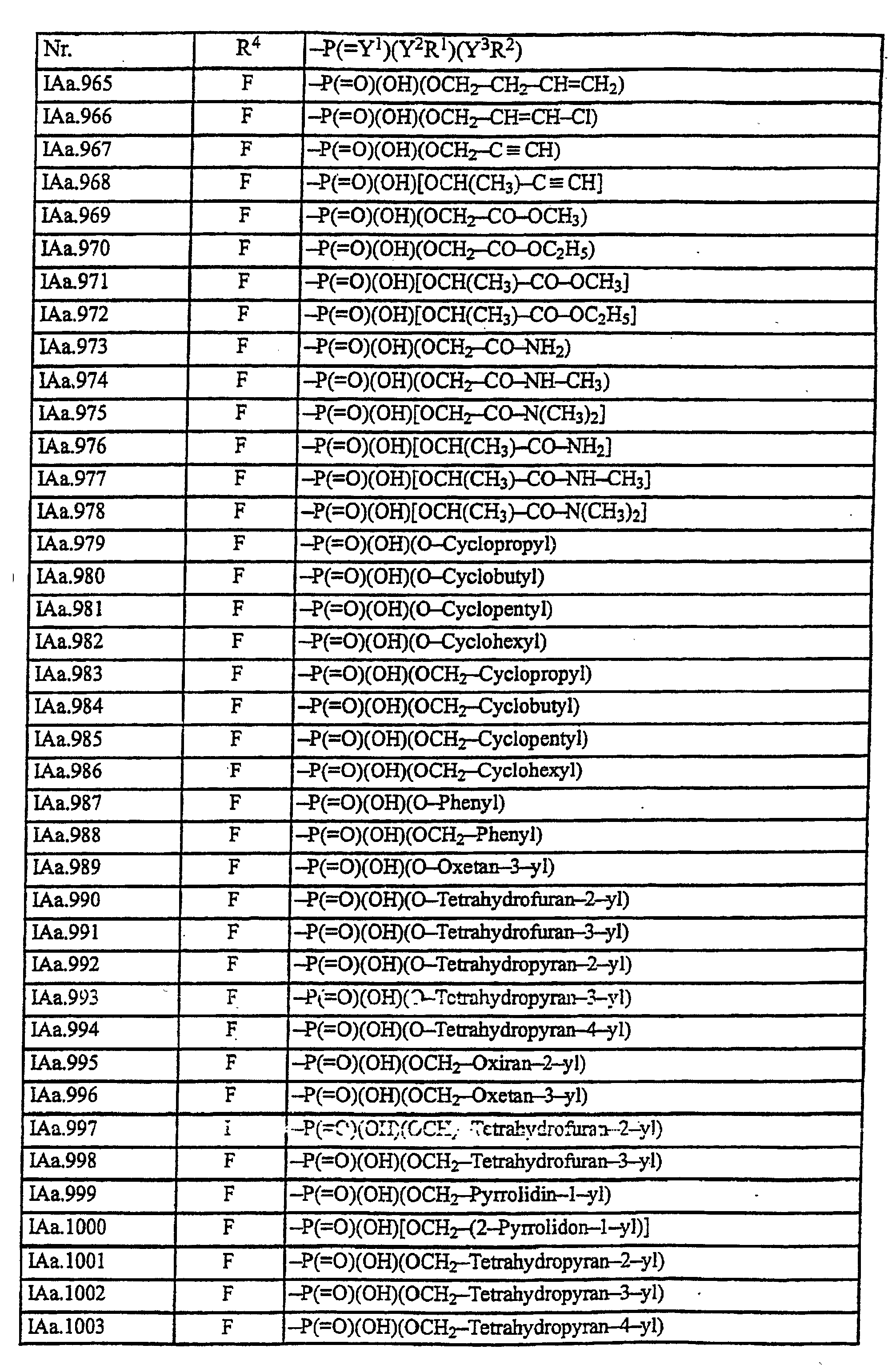

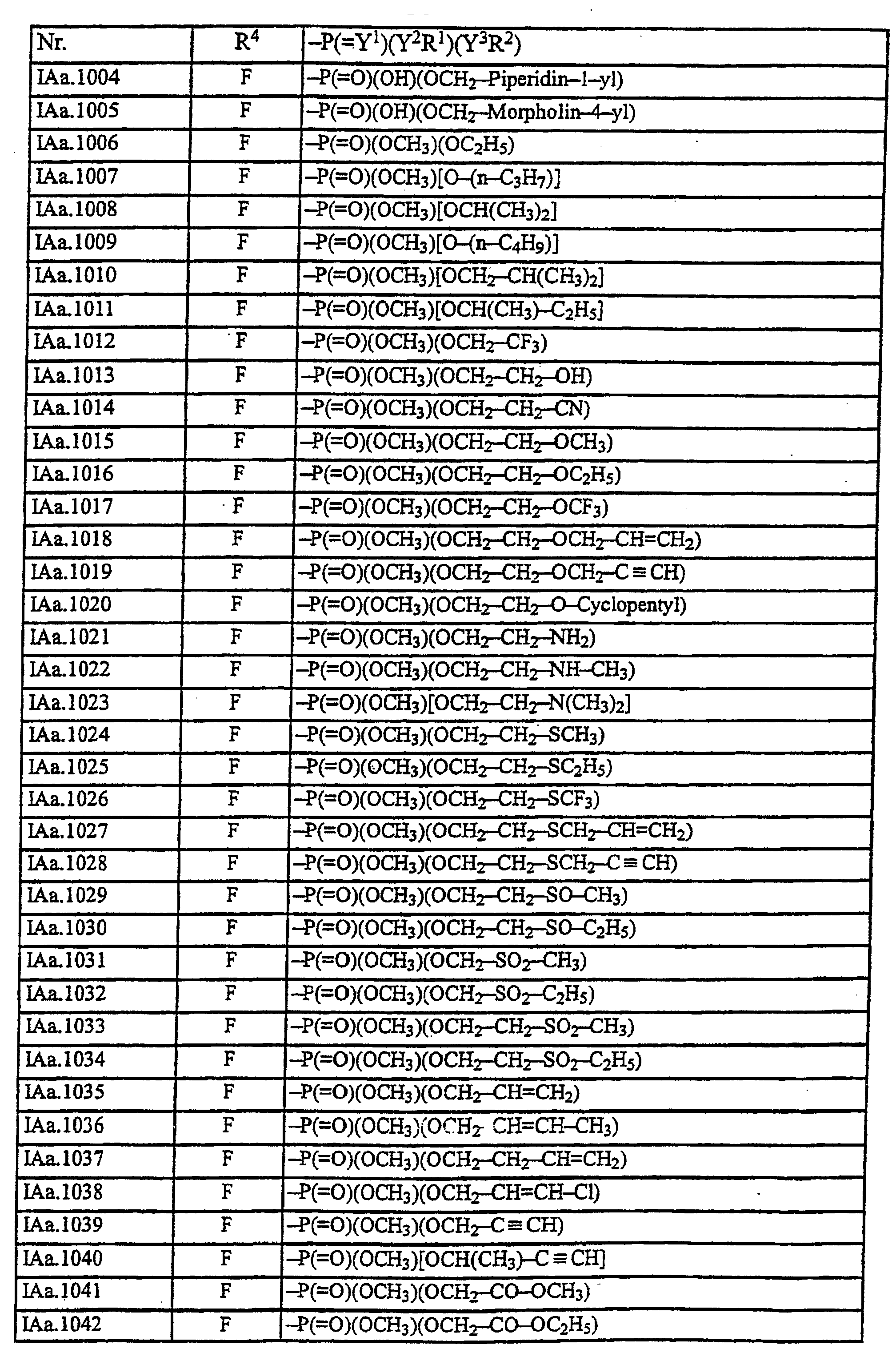

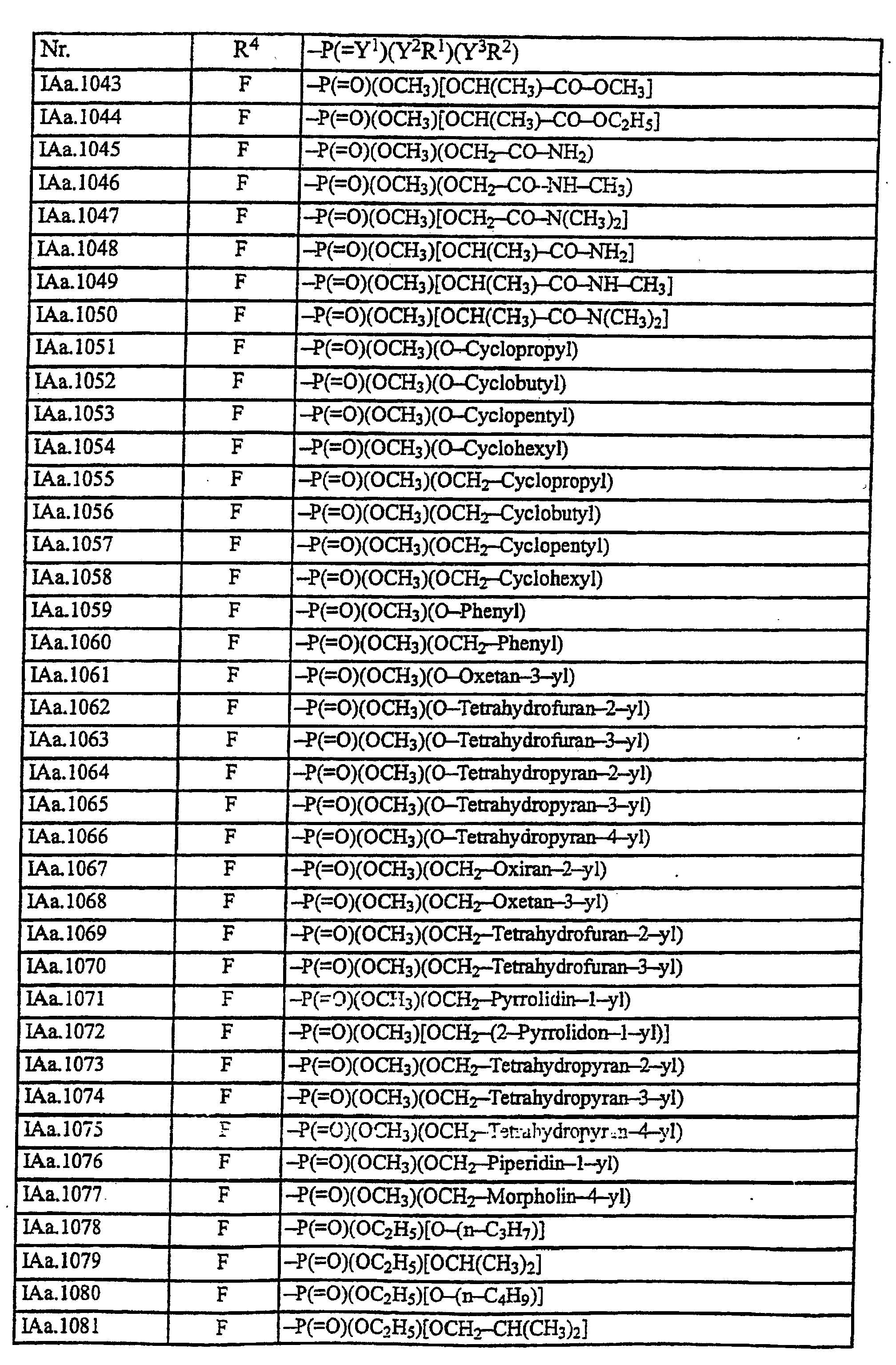

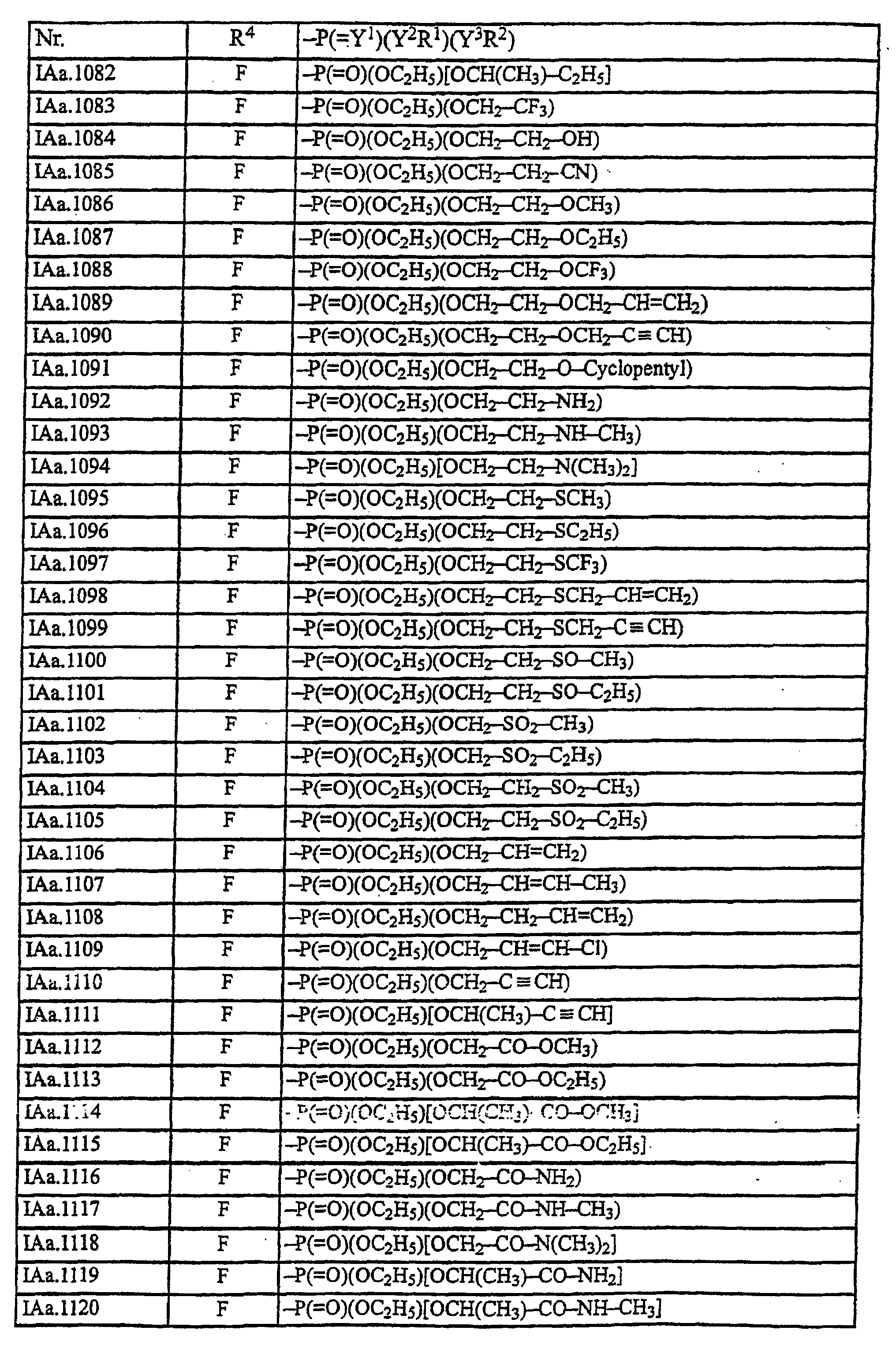

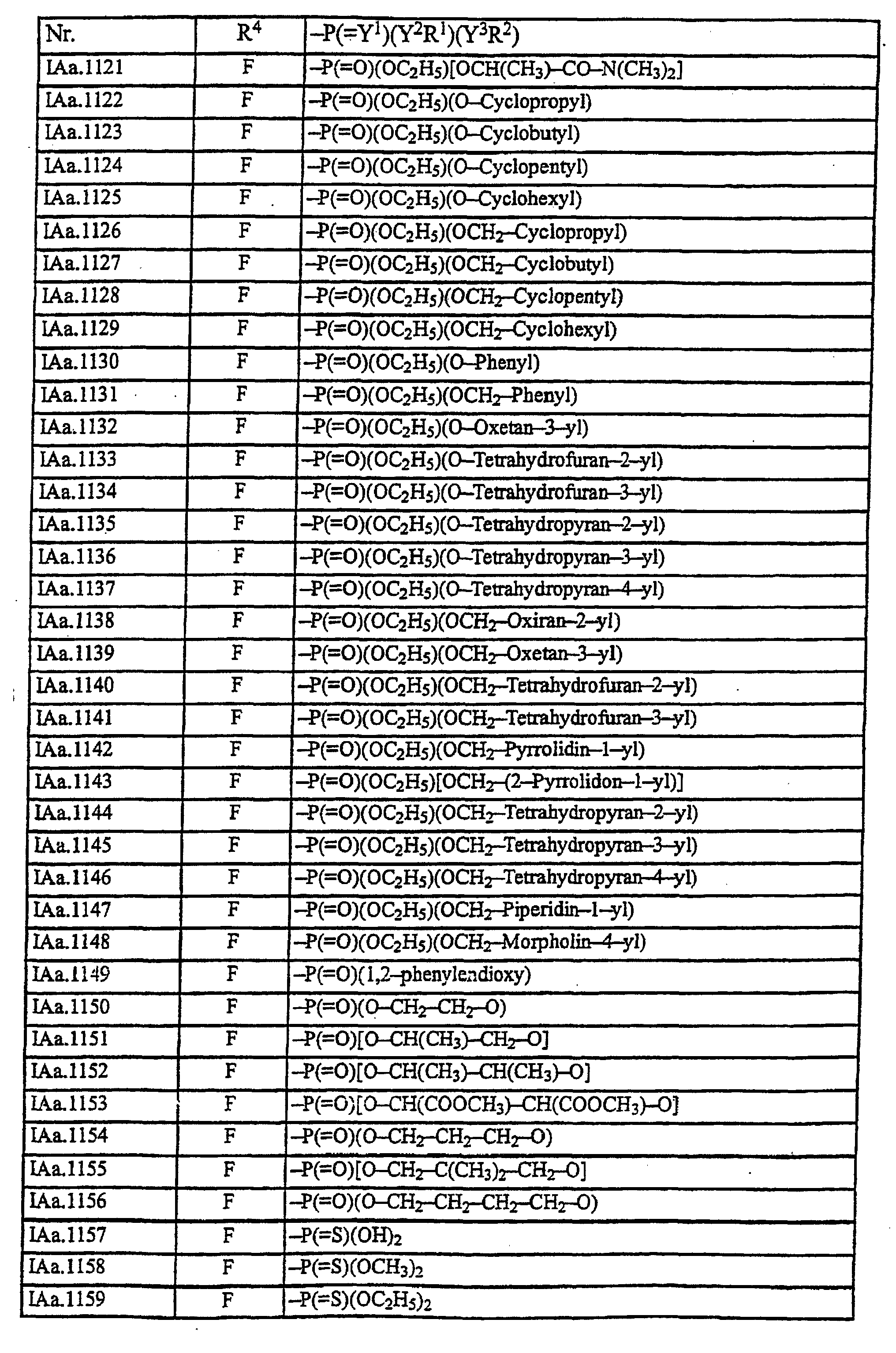

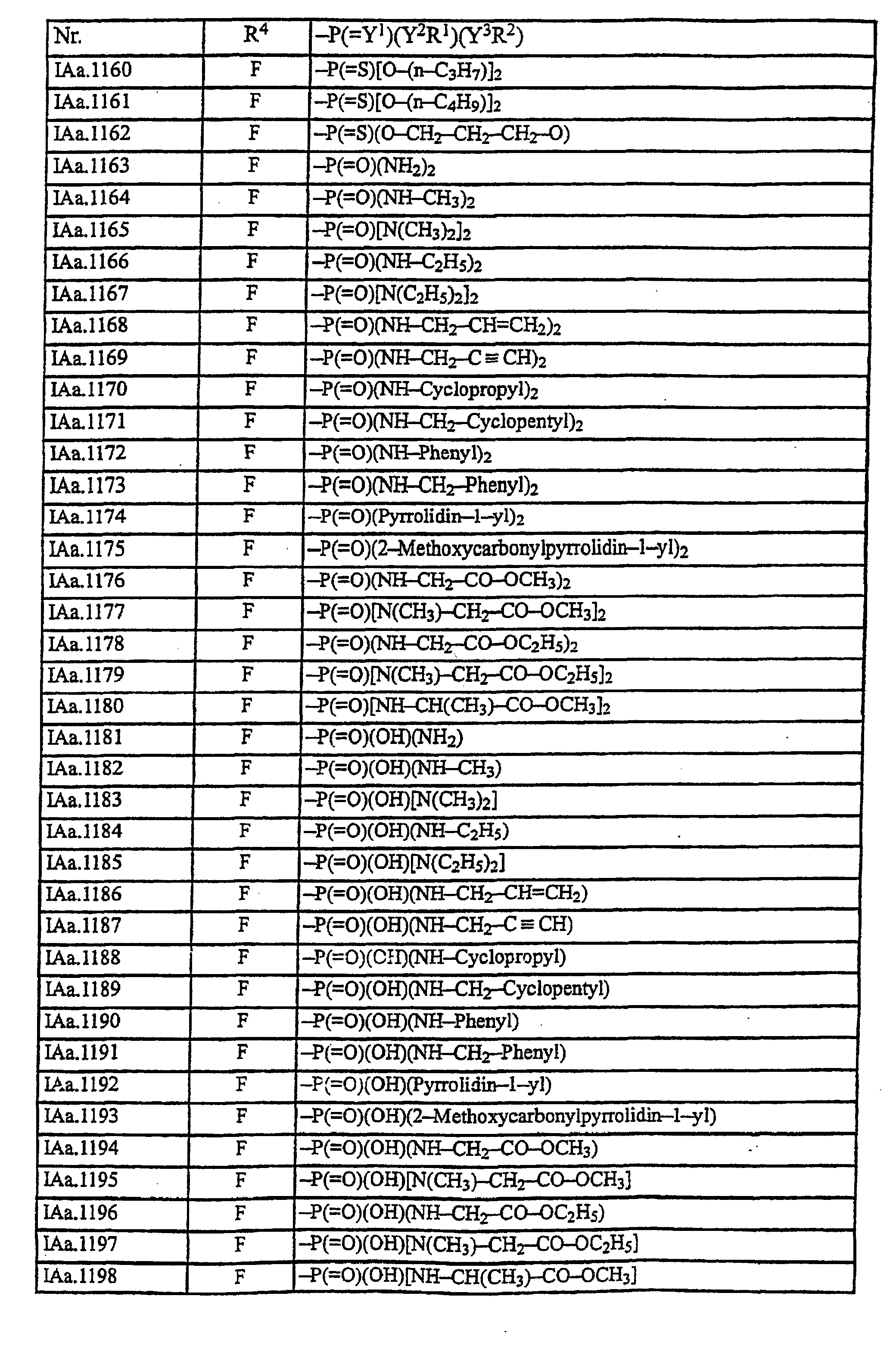

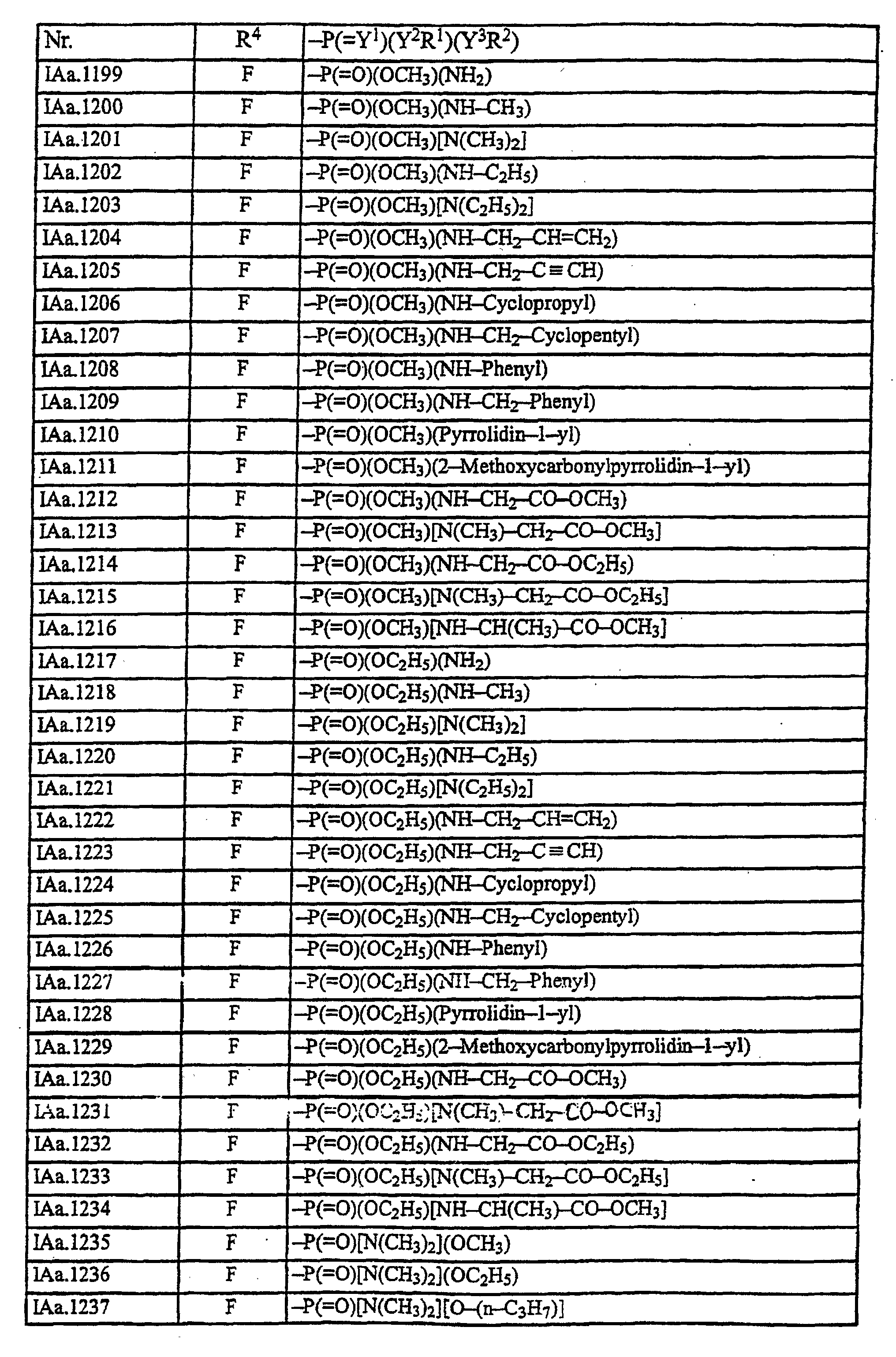

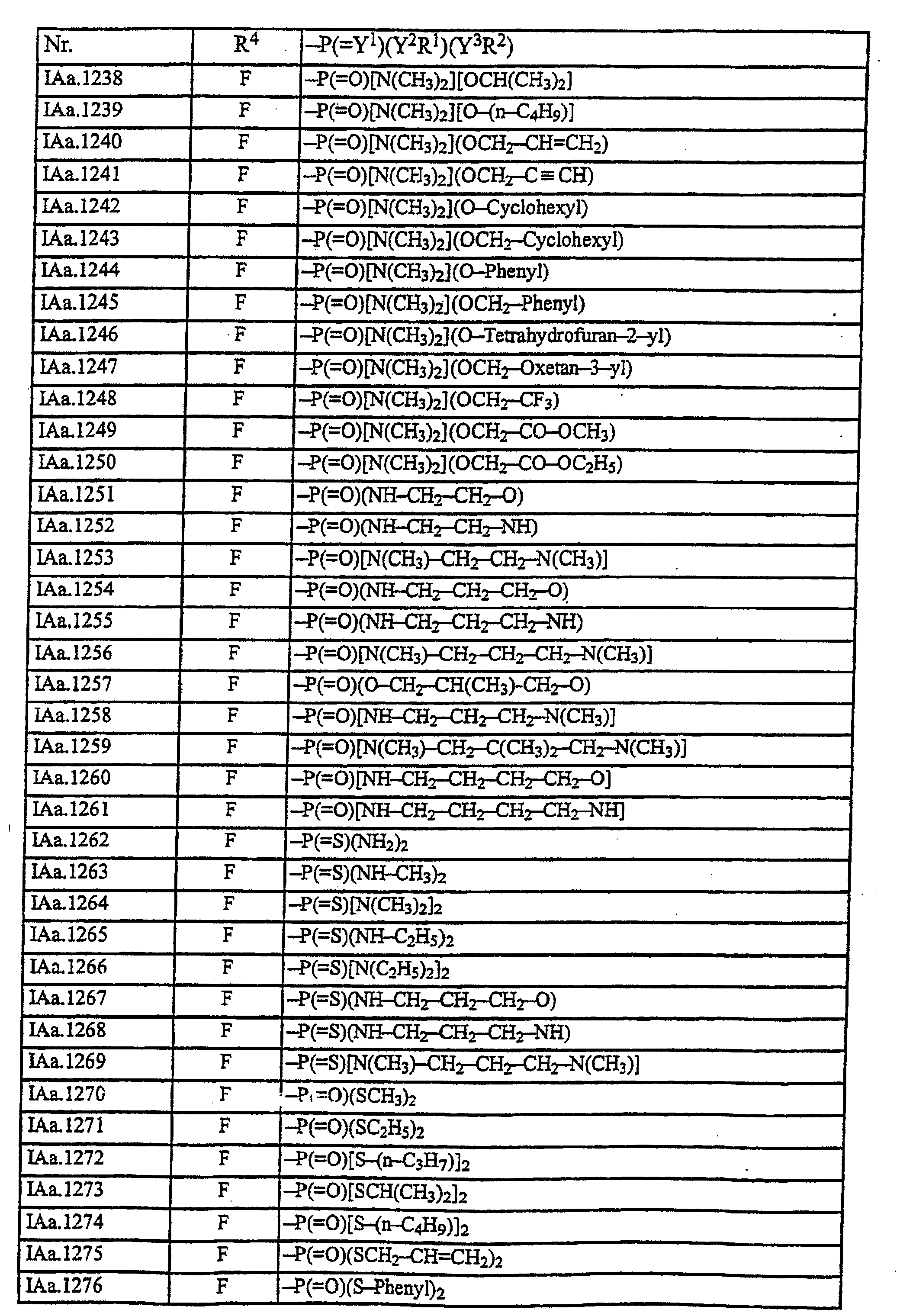

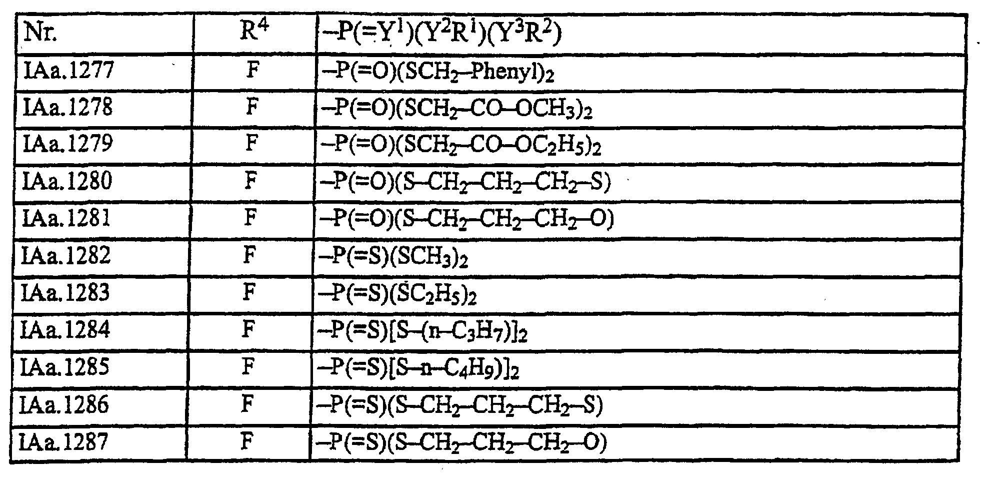

Des weiteren sind die aromatischen Phosphonsäurederivate der Formeln IAb-IAn, IBa-IBn, ICa-ICn, IDa-IDn, IEa-IEn, IFa-IFn, IGa-IGn, IHa-IHn, IKa-IKn, ILa-ILn, IMa-IMn und INa-INn besonders bevorzugt; insbesondere
- die Verbindungen IAb.1 - IAb.1287, die sich von den entsprechenden Verbindungen IAa.1 - IAa.1287 lediglich dadurch unterscheiden, daß Eth für -CH₂-CH(Cl)- steht: 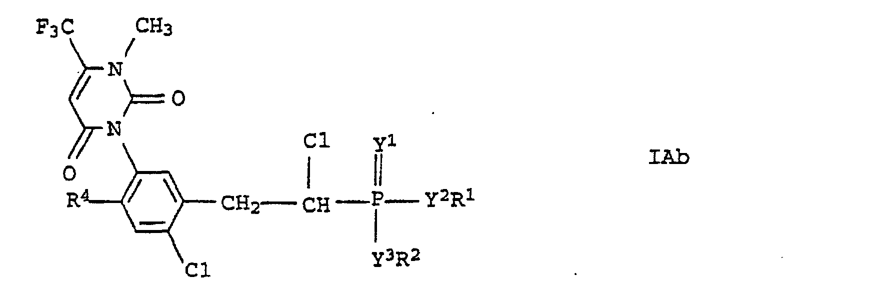
- die Verbindungen IAc.1 - IAc.1287, die sich von den entsprechenden Verbindungen IAa.1 - IAa.1287 lediglich dadurch unterscheiden, daß Eth für -CH₂-CH(Br)- steht: 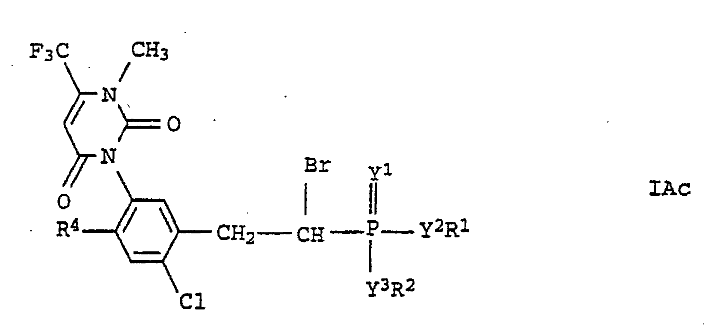
- die Verbindungen IAd.1 - IAd.1287, die sich von den entsprechenden Verbindungen IAa.1 - IAa.1287 lediglich dadurch unterscheiden, daß Eth für -CH₂-CH(CN)- steht: 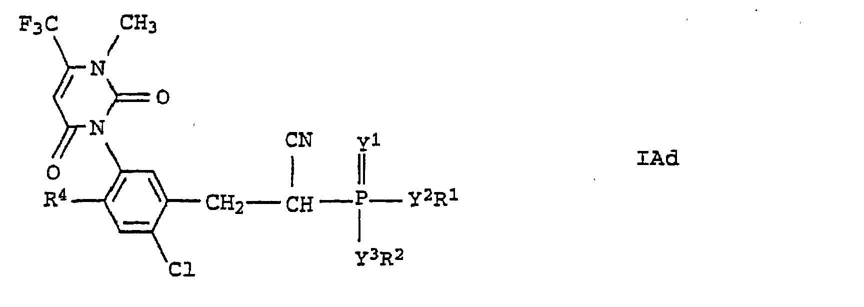
- die Verbindungen IAe.1 - IAe.1287, die sich von den entsprechenden Verbindungen IAa.1 - IAa.1287 lediglich dadurch unterscheiden, daß Eth für -CH₂-CH(CH₃)- steht: 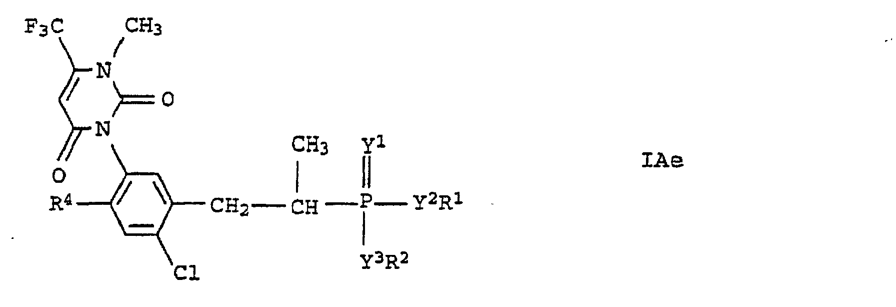
- die Verbindungen IAf.1 - IAf.1287, die sich von den entsprechenden Verbindungen IAa.1 - IAa.1287 lediglich dadurch unterscheiden, daß Eth für -CH₂-CH(COOCH₃)- steht: 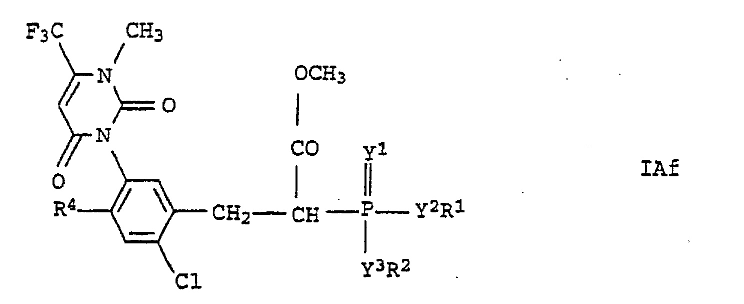
- die Verbindungen IAg.1 - IAg.1287, die sich von den entsprechenden Verbindungen IAa.1 - IAa.1287 lediglich dadurch unterscheiden, daß Eth für 1,2-Ethendiyl steht: 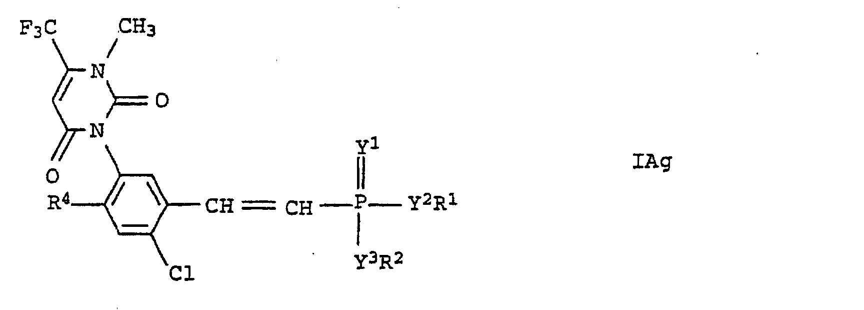
- die Verbindungen IAh.1 - IAh.1287, die sich von den entsprechenden Verbindungen IAa.1 - IAa.1287 lediglich dadurch unterscheiden, daß Eth für -CH=C(Cl)- steht: 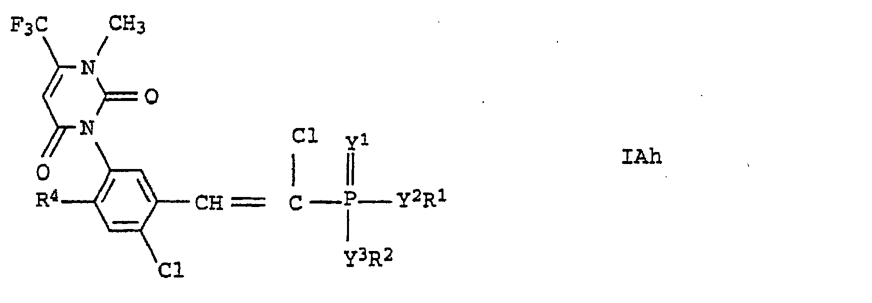
- die Verbindungen ZAi.1 - IAi.1287, die sich von den entsprechenden Verbindungen IAa.1 - IAa.1287 lediglich dadurch unterscheiden, daß Eth für -CH=C(Br)- steht: 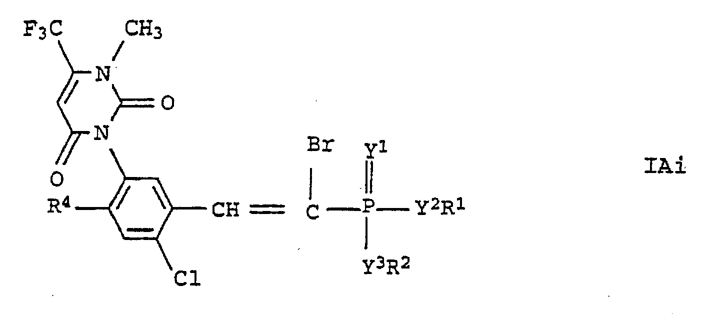
- die Verbindungen IAj.1 - IAj.1287, die sich von den entsprechenden Verbindungen IAa.1 - IAa.1287 lediglich dadurch unterscheiden, daß Eth für -CH=C(CN)- steht: 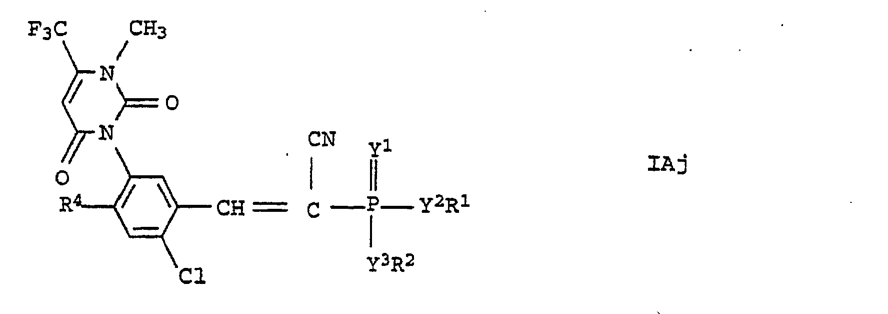
- die Verbindungen IAk.1 - IAk.1287, die sich von den entsprechenden Verbindungen IAa.1 - IAa.1287 lediglich dadurch unterscheiden, daß Eth für -CH=C(CH₃)- steht: 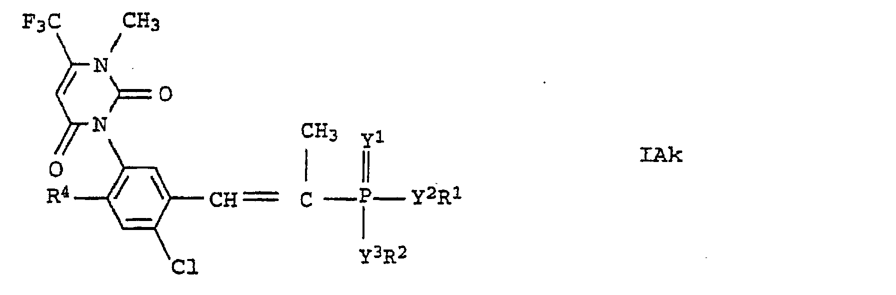
- die Verbindungen IAm.1 - IAm.1287, die sich von den entsprechenden Verbindungen IAa.1 - IAa.1287 lediglich dadurch unterscheiden, daß Eth für -CH=C(COOCH₃)- steht: 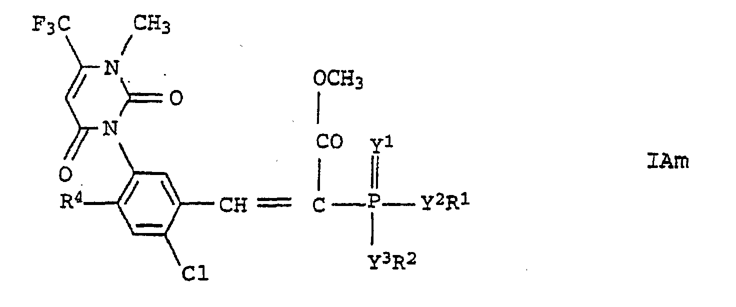
- die Verbindungen IAn.1 - IAn.1287, die sich von den entsprechenden Verbindungen IAa.1 - IAa.1287 lediglich dadurch unterscheiden, daß Eth für -C≡C- steht: 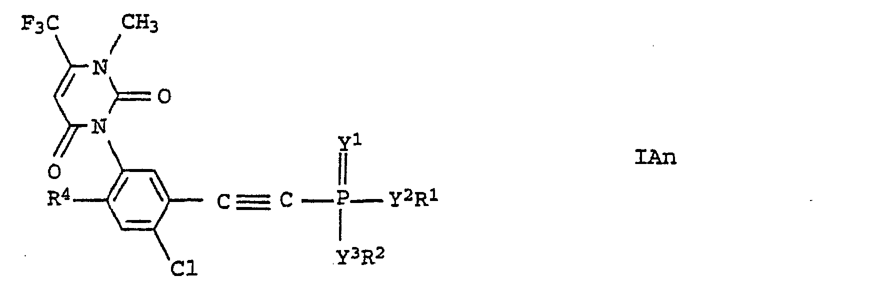
- die Verbindungen IBa.430 - IBa.1287, die sich von den entsprechenden Verbindungen IAa.430 - IAa.1287 lediglich dadurch unterscheiden, daß R⁵ für den Heterocyclus Φ² mit R¹⁰ = Methyl, R¹¹ = Difluormethoxy und R¹² = Chlor steht: 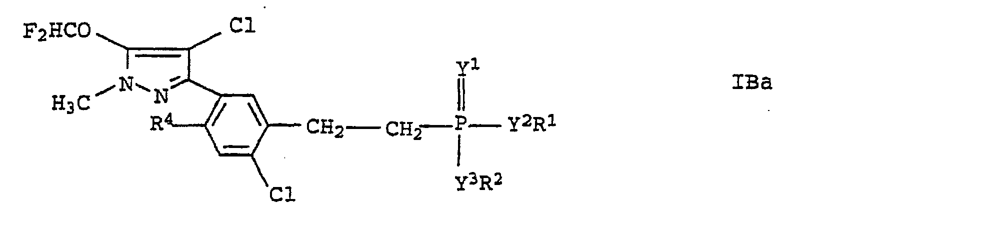
- die Verbindungen IBb.430 - IBb.1287, die sich von den entsprechenden Verbindungen IAa.430 - IAa.1287 lediglich dadurch unterscheiden, daß Eth für -CH₂-CH(Cl)- und R⁵ für den Heterocyclus Φ² mit R¹⁰ = Methyl, R¹¹ = Difluormethoxy und R¹² = Chlor stehen: 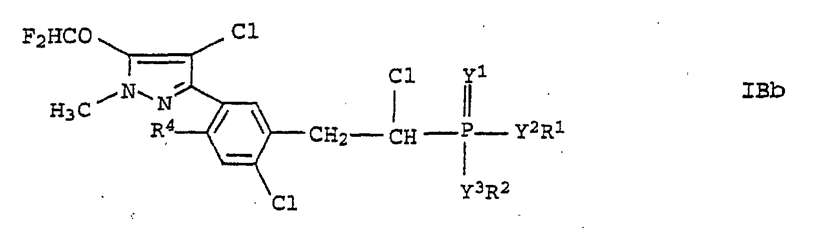
- die Verbindungen IBc.430 - IBc.1287, die sich von den entsprechenden Verbindungen IAa.430 - IAa.1287 lediglich dadurch unterscheiden, daß Eth für -CH₂-CH(Br)- und R⁵ für den Heterocyclus Φ² mit R¹⁰ = Methyl, R¹¹ = Difluormethoxy und R¹² = Chlor stehen: 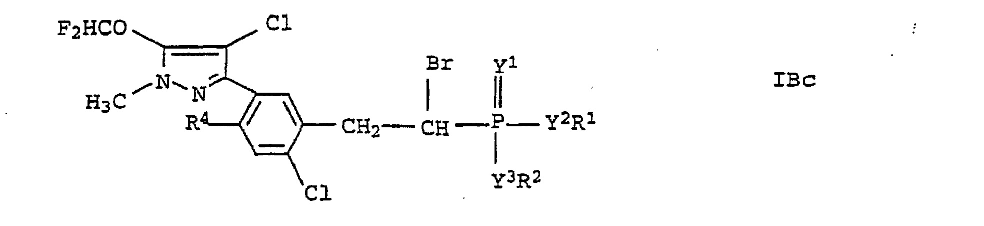
- die Verbindungen IBd.430 - IBd.1287, die sich von den entsprechenden Verbindungen IAa.430 - IAa.1287 lediglich dadurch unterscheiden, daß Eth für -CH₂-CH(CN)- und R⁵ für den Heterocyclus Φ² mit R¹⁰ = Methyl, R¹¹ = Difluormethoxy und R¹² = Chlor stehen: 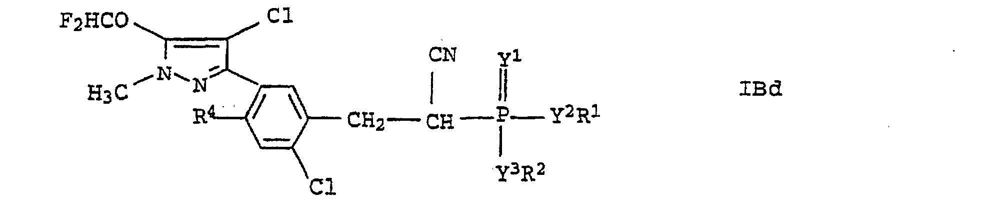
- die Verbindungen IBe.430 - IBe.1287, die sich von den entsprechenden Verbindungen IAa.430 - IAa.1287 lediglich dadurch unterscheiden, daß Eth für -CH₂-CH(CH₃)- und R⁵ für den Heterocyclus Φ² mit R¹⁰ = Methyl, R¹¹ = Difluormethoxy und R¹² = Chlor stehen: 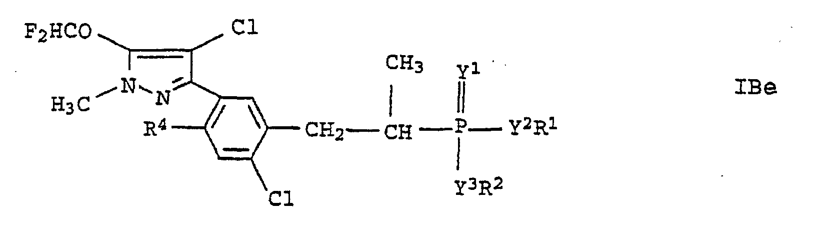
- die Verbindungen IBf.430 - IBf.1287, die sich von den entsprechenden Verbindungen IAa.430 - IAa.1287 lediglich dadurch unterscheiden, daß Eth für -CH₂-CH(COOCH₃)- und R⁵ für den Heterocyclus Φ² mit R¹⁰ = Methyl, R¹¹ = Difluormethoxy und R¹² = Chlor stehen: 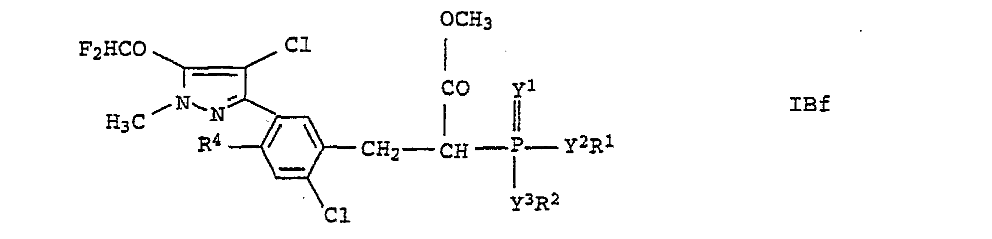
- die Verbindungen IBg.430 - IBg.1287, die sich von den entsprechenden Verbindungen IAa.430 - IAa.1287 lediglich dadurch unterscheiden, daß Eth für 1,2-Ethendiyl und R⁵ für den Heterocyclus Φ² mit R¹⁰ = Methyl, R¹¹ = Difluormethoxy und R¹² = Chlor stehen: 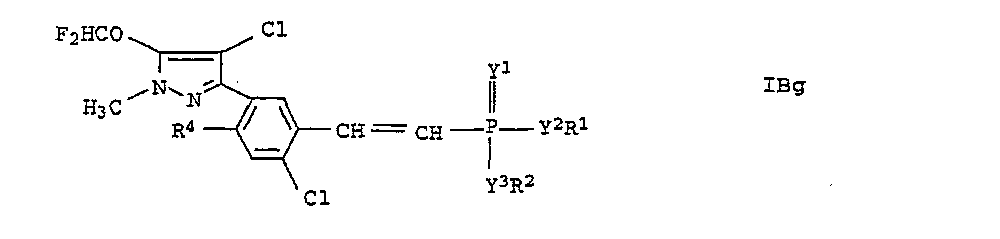
- die Verbindungen IBh.430 - IBh.1287, die sich von den entsprechenden Verbindungen IAa.430 - IAa.1287 lediglich dadurch unterscheiden, daß Eth für -CH=C(Ci)- und R⁵ für den Heterocyclus Φ² mit R¹⁰ = Methyl, R¹¹ = Difluormethoxy und R¹² = Chlor stehen: 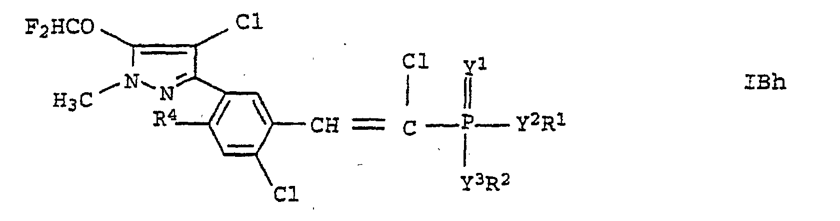
- die Verbindungen IBi.430 - IBi.1287, die sich von den entsprechenden Verbindungen IAa.430 - IAa.1287 lediglich dadurch unterscheiden, daß Eth für -CH=C(Br)- und R⁵ für den Heterocyclus Φ² mit R¹⁰ = Methyl, R¹¹ = Difluormethoxy und R¹² = Chlor stehen: 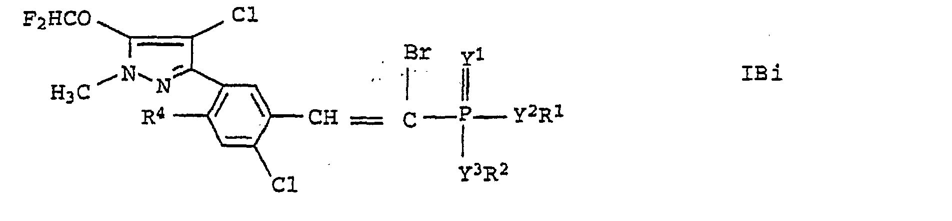
- die Verbindungen IBj.430 - IBj.1287, die sich von den entsprechenden Verbindungen IAa.430 - IAa.1287 lediglich dadurch unterscheiden, daß Eth für -CH=C(CN)- und R⁵ für den Heterocyclus Φ² mit R¹⁰ = Methyl, R¹¹ = Difluormethoxy und R¹² = Chlor stehen: 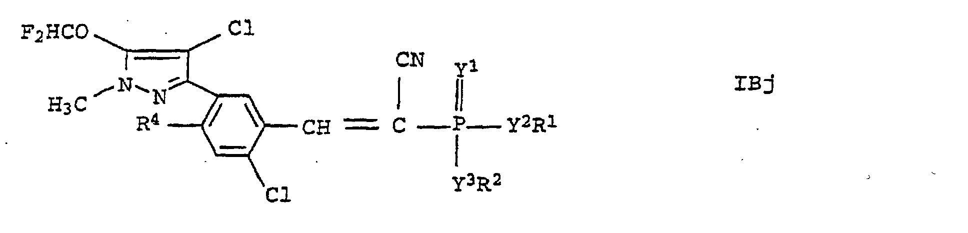
- die Verbindungen IBk.430 - IBk.1287, die sich von den entsprechenden Verbindungen IAa.430 - IAa.1287 lediglich dadurch unterscheiden, daß Eth für -CH=C(CH₃)- und R⁵ für den Heterocyclus Φ² mit R¹⁰ = Methyl, R¹¹ = Difluormethoxy und R¹² = Chlor stehen: 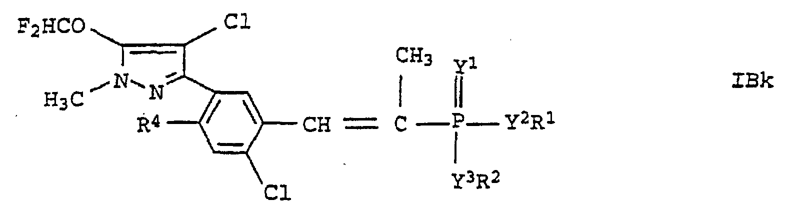
- die Verbindungen IBm.430 - IBm.1287, die sich von den entsprechenden Verbindungen IAa.430 - IAa.1287 lediglich dadurch unterscheiden, daß Eth für -CH=C(COOCH₃)- und R⁵ für den Heterocyclus Φ² mit R¹⁰ = Methyl, R¹¹ = Difluormethoxy und R¹² = Chlor stehen: 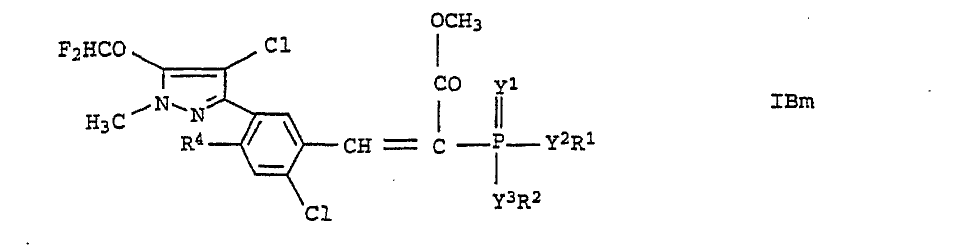
- die Verbindungen IBn.430 - IBn.1287, die sich von den entsprechenden Verbindungen IAa.430 - IAa.1287 lediglich dadurch unterscheiden, daß Eth für -C≡C- und R⁵ für den Heterocyclus Φ² mit R¹⁰ = Methyl, R¹¹ = Difluormethoxy und R¹² = Chlor stehen: 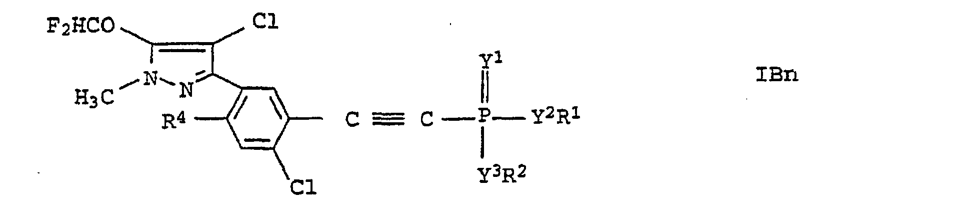
- die Verbindungen ICa.430 - ICa.1287, die sich von den entsprechenden Verbindungen IAa.430 - IAa.1287 lediglich dadurch unterscheiden, daß R⁵ für den Heterocyclus Φ² mit R¹⁰ = Methyl, R¹¹ = Trifluormethyl und R¹² = Chlor steht: 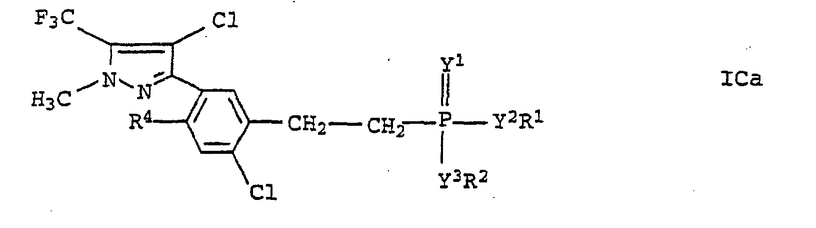
- die Verbindungen ICb.430 - ICb.1287, die sich von den entsprechenden Verbindungen IAa.430 - IAa.1287 lediglich dadurch unterscheiden, daß Eth für -CH₂-CH(Cl)- und R⁵ für den Heterocyclus Φ² mit R¹⁰ = Methyl, R¹¹ = Trifluormethyl und R¹² = Chlor stehen: 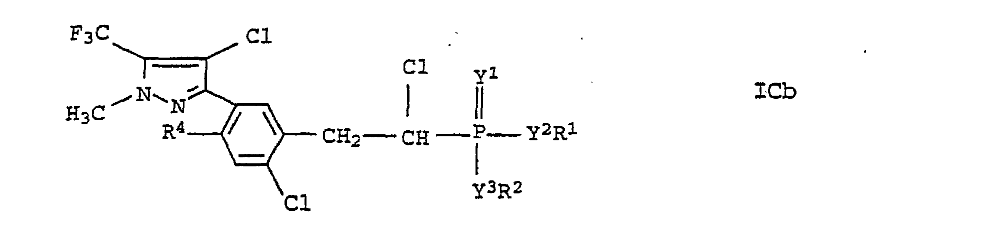
- die Verbindungen ICc.430 - ICc.1287, die sich von den entsprechenden Verbindungen IAa.430 - IAa.1287 lediglich dadurch unterscheiden, daß Eth für -CH₂-CH(Br)- und R⁵ für den Heterocyclus Φ² mit R¹⁰ = Methyl, R¹¹ = Trifluormethyl und R¹² = Chlor stehen: 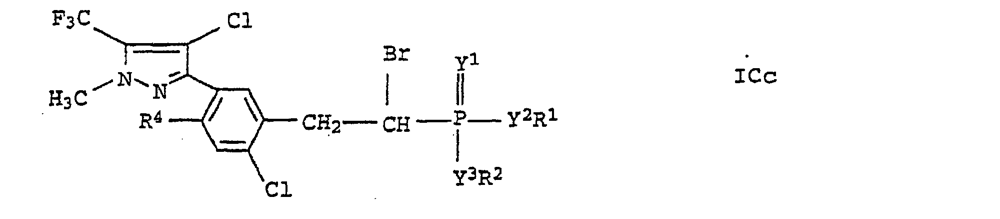
- die Verbindungen ICd.430 - ICd.1287, die sich von den entsprechenden Verbindungen IAa.430 - IAa.1287 lediglich dadurch unterscheiden, daß Eth für -CH₂-CH(CN)- und R⁵ für den Heterocyclus Φ² mit R¹⁰ = Methyl, R¹¹ = Trifluormethyl und R¹² = Chlor stehen: 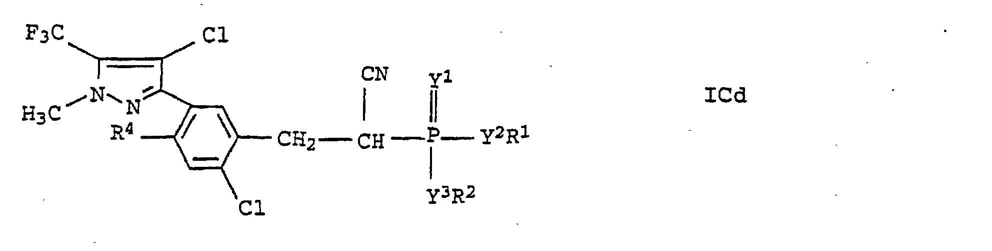
- die Verbindungen ICe.430 - ICe.1287, die sich von den entsprechenden Verbindungen IAa.430 - IAa.1287 lediglich dadurch unterscheiden, daß Eth für -CH₂-CH(CH₃)- und R⁵ für den Heterocyclus Φ² mit R¹⁰ = Methyl, R¹¹ = Trifluormethyl und R¹² = Chlor stehen: 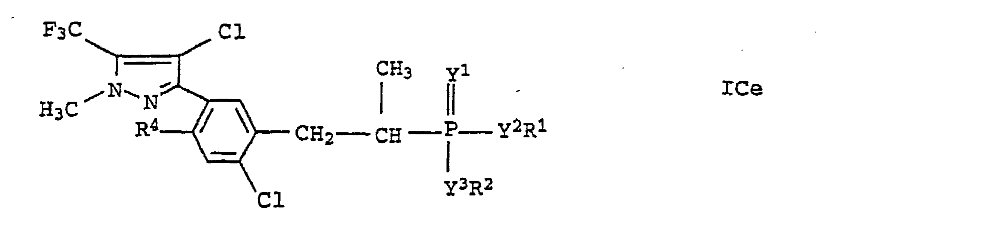
- die Verbindungen ICf.430 - ICf.1287, die sich von den entsprechenden Verbindungen IAa.430 - IAa.1287 lediglich dadurch unterscheiden, daß Eth für -CH₂-CH(COOCH₃)- und R⁵ für den Heterocyclus Φ² mit R¹⁰ = Methyl, R¹¹ = Trifluormethyl und R¹² = Chlor stehen: 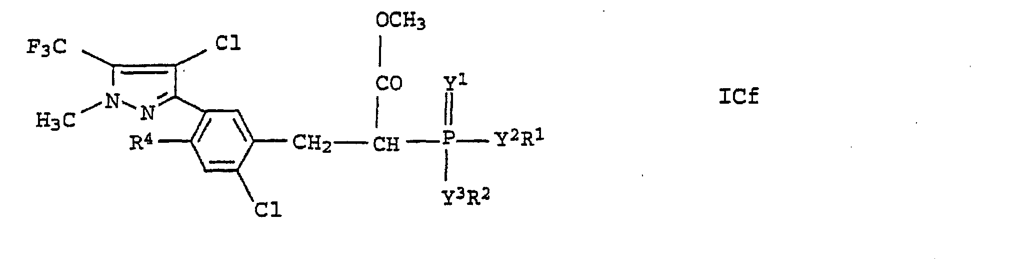
- die Verbindungen ICg.430 - ICg.1287, die sich von den entsprechenden Verbindungen IAa.430 - IAa.1287 lediglich dadurch unterscheiden, daß Eth für 1,2-Ethendiyl und R⁵ für den Heterocyclus Φ² mit R¹⁰ = Methyl, R¹¹ = Trifluormethyl und R¹² = Chlor stehen: 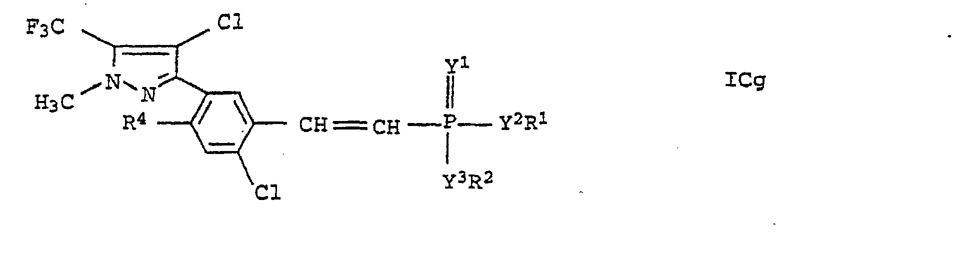
- die Verbindungen ICh.430 - ICh.1287, die sich von den entsprechenden Verbindungen IAa.430 - IAa.1287 lediglich dadurch unterscheiden, daß Eth für -CH=C(Cl)- und R⁵ für den Heterocyclus Φ² mit R¹⁰ = Methyl, R¹¹ = Trifluormethyl und R¹² = Chlor stehen: 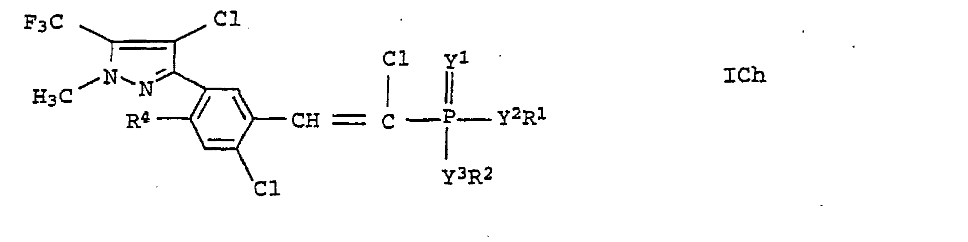
- die Verbindungen ICi.430 - ICi.287, die sich von den entsprechenden Verbindungen IAa.430 - IAa.1287 lediglich dadurch unterscheiden, daß Eth für -CH=C(Br)- und R⁵ für den Heterocyclus Φ² mit R¹⁰ = Methyl, R¹¹ = Trifluormethyl und R¹² = Chlor stehen: 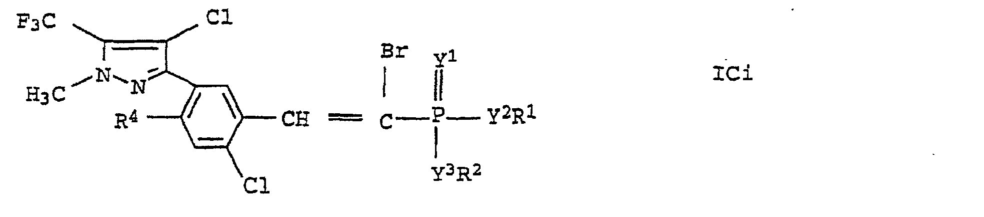
- die Verbindungen ICj.430 - ICj.1287, die sich von den entsprechenden Verbindungen IAa.430 - IAa.1287 lediglich dadurch unterscheiden, daß Eth für -CH=C(CN)- und R⁵ für den Heterocyclus Φ² mit R¹⁰ = Methyl, R¹¹ = Trifluormethyl und R¹² = Chlor stehen: 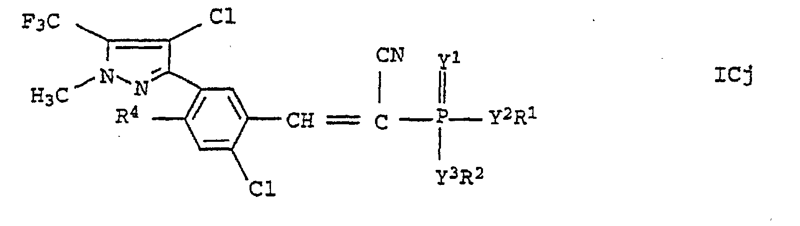
- die Verbindungen ICk.430 - ICk.1287, die sich von den entsprechenden Verbindungen IAa.430 - IAa.1287 lediglich dadurch unterscheiden, daß Eth für -CH=C(CH₃)- und R⁵ für den Heterocyclus Φ² mit R¹⁰ = Methyl, R¹¹ = Trifluormethyl und R¹² = Chlor stehen: 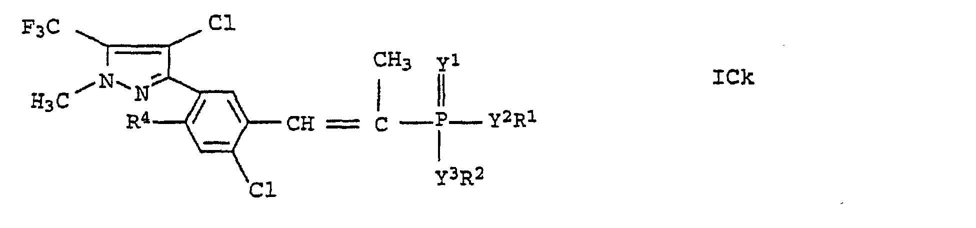
- die Verbindungen ICm.430 - ICm.1287, die sich von den entsprechenden Verbindungen IAa.430 - IAa.1287 lediglich dadurch unterscheiden, daß Eth für -CH=C(COOCH₃)- und R⁵ für den Heterocyclus Φ² mit R¹⁰ = Methyl, R¹¹ = Trifluormethyl und R¹² = Chlor stehen: 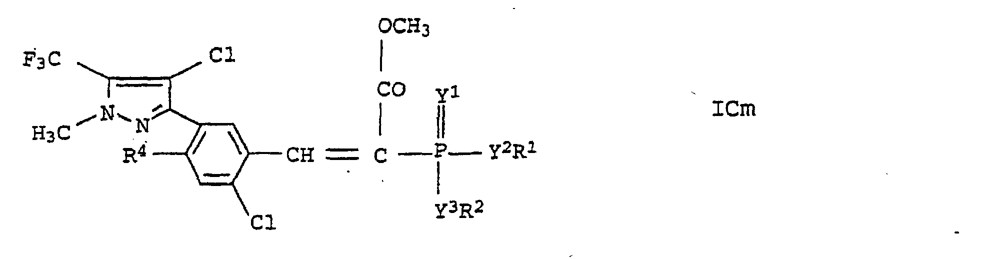
- die Verbindungen ICn.430 - ICn.1287, die sich von den entsprechenden Verbindungen IAa.430 - IAa.1287 lediglich dadurch unterscheiden, daß Eth für -C≡C- und R⁵ für den Heterocyclus Φ² mit R¹⁰ = Methyl, R¹¹ = Trifluormethyl und R¹² = Chlor stehen: 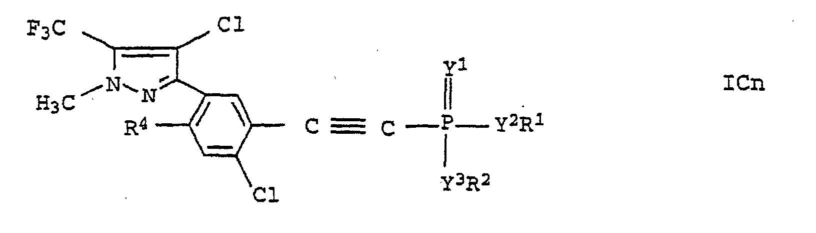
- die Verbindungen IDa.430 - IDa.1287, die sich von den entsprechenden Verbindungen IAa.430 - IAa.1287 lediglich dadurch unterscheiden, daß R⁵ für den Heterocyclus Φ² mit R¹⁰ = Methyl sowie R¹¹ und R¹² = Trifluormethyl steht: 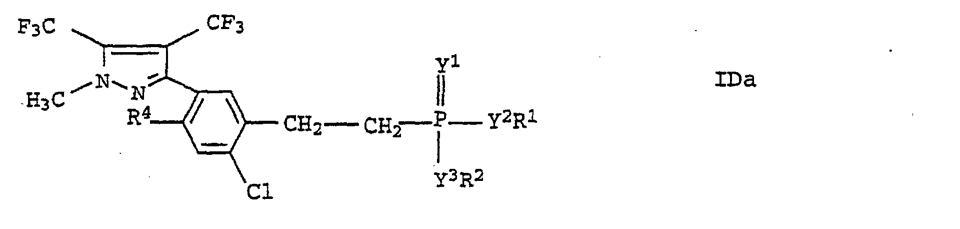
- die Verbindungen IDb.430 - IDb.1287, die sich von den entsprechenden Verbindungen IAa.430 - IAa.1287 lediglich dadurch unterscheiden, daß Eth für -CH₂-CH(Cl)- und R⁵ für den Heterocyclus Φ² mit R¹⁰ = Methyl sowie R¹¹ und R¹² = Trifluormethyl stehen: 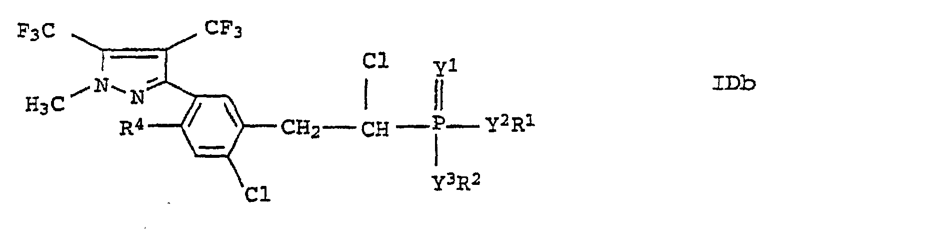
- die Verbindungen IDc.430 - IDc.1287, die sich von den entsprechenden Verbindungen IAa.430 - IAa.1287 lediglich dadurch unterscheiden, daß Eth für -CH₂-CH(Br)- und R⁵ für den Heterocyclus Φ² mit R¹⁰ = Methyl sowie R¹¹ und R¹² = Trifluormethyl stehen: 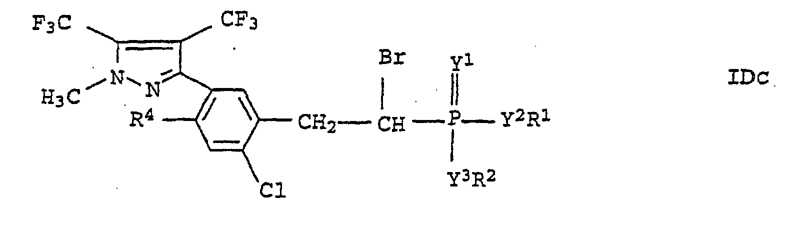
- die Verbindungen IDd.430 - IDd.1287, die sich von den entsprechenden Verbindungen IAa.430 - IAa.1287 lediglich dadurch unterscheiden, daß Eth für -CH₂-CH(CN)- und R⁵ für den Heterocyclus Φ² mit R¹⁰ = Methyl sowie R¹¹ und R¹² = Trifluormethyl stehen: 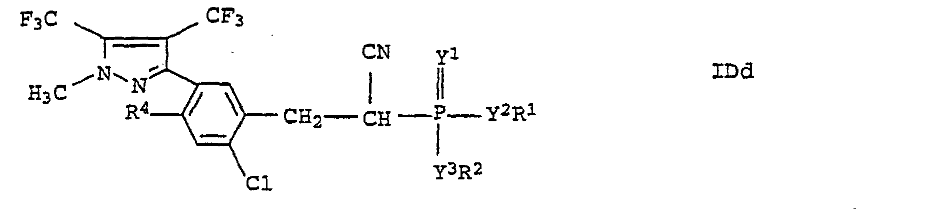
- die Verbindungen IDe.430 - IDe.1287, die sich von den entsprechenden Verbindungen IAa.430 - IAa.1287 lediglich dadurch unterscheiden, daß Eth für -CH₂-CH(CH₃)- und R⁵ für den Heterocyclus Φ² mit R¹⁰ = Methyl sowie R¹¹ und R¹² = Trifluormethyl stehen: 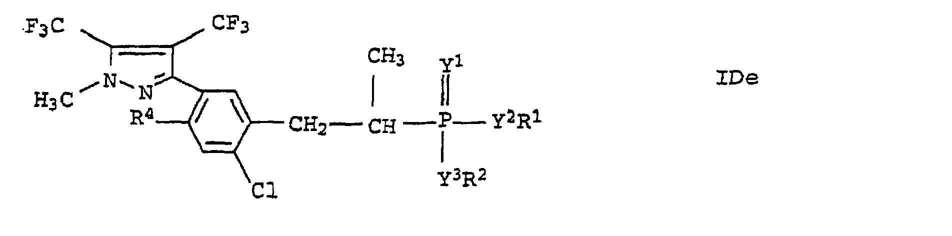
- die Verbindungen IDf.430 - IDf.1287, die sich von den entsprechenden Verbindungen IAa.430 - IAa.1287 lediglich dadurch unterscheiden, daß Eth für -CH₂-CH(COOCH₃)- und R⁵ für den Heterocyclus Φ² mit R¹⁰ = Methyl sowie R¹¹ und R¹² = Trifluormethyl stehen: 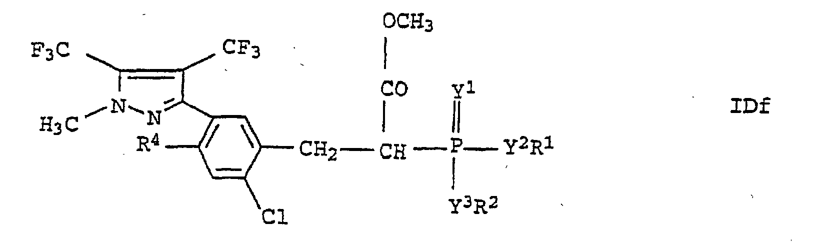
- die Verbindungen IDg.430 - IDg.1287, die sich von den entsprechenden Verbindungen IAa.430 - IAa.1287 lediglich dadurch unterscheiden, daß Eth für 1,2-Ethendiyl und R⁵ für den Heterocyclus Φ² mit R¹⁰ = Methyl sowie R¹¹ und R¹² = Trifluormethyl stehen: 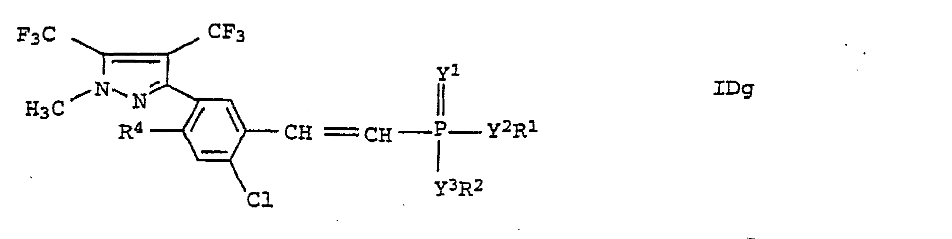
- die Verbindungen IDh.430 - IDh.1287, die sich von den entsprechenden Verbindungen IAa.430 - IAa.1287 lediglich dadurch unterscheiden, daß Eth für -CH=C(Cl)- und R⁵ für den Heterocyclus Φ² mit R¹⁰ = Methyl sowie R¹¹ und R¹² = Trifluormethyl stehen: 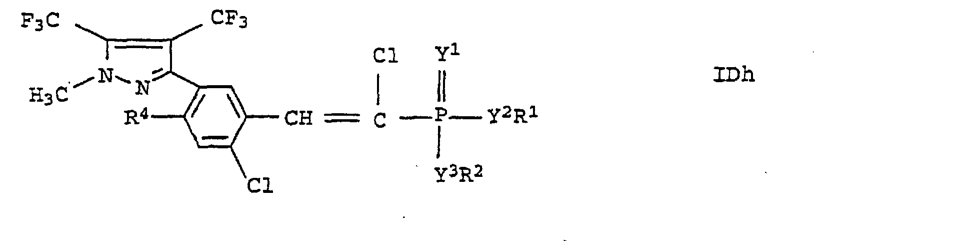
- die Verbindungen IDi.430 - IDi.1287, die sich von den entsprechenden Verbindungen IAa.430 - IAa.1287 lediglich dadurch unterscheiden, daß Eth für -CH=C(Br)- und R⁵ für den Heterocyclus Φ² mit R¹⁰ = Methyl sowie R¹¹ und R¹² = Trifluormethyl stehen: 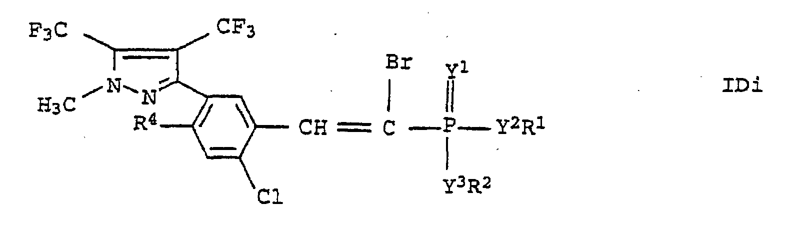
- die Verbindungen IDj.430 - IDj.1287, die sich von den entsprechenden Verbindungen IAa.430 - IAa.1287 lediglich dadurch unterscheiden, daß Eth für -CH=C(CN)- und R⁵ für den Heterocyclus Φ² mit R¹⁰ = Methyl sowie R¹¹ und R¹² = Trifluormethyl stehen: 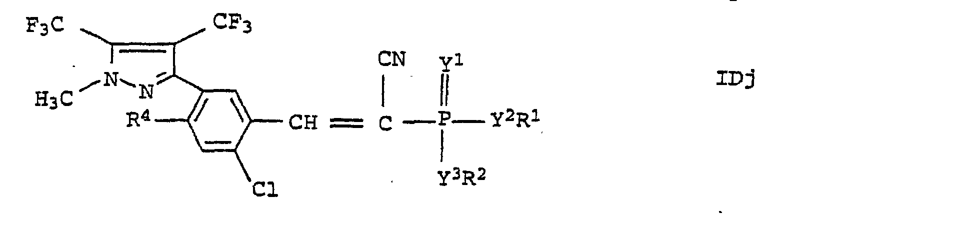
- die Verbindungen IDk.430 - IDk.1287, die sich von den entsprechenden Verbindungen IAa.430 - IAa.1287 lediglich dadurch unterscheiden, daß Eth für -CH=C(CH₃)- und R⁵ für den Heterocyclus Φ² mit R¹⁰ = Methyl sowie R¹¹ und R¹² = Trifluormethyl stehen: 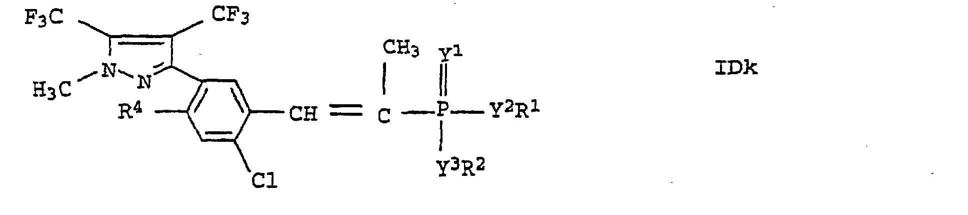
- die Verbindungen IDm.430 - IDm.1287, die sich von den entsprechenden Verbindungen IAa.430 - IAa.1287 lediglich dadurch unterscheiden, daß Eth für -CH=C(COOCH₃)- und R⁵ für den Heterocyclus Φ² mit R¹⁰ = Methyl sowie R¹¹ und R¹² = Trifluormethyl stehen: 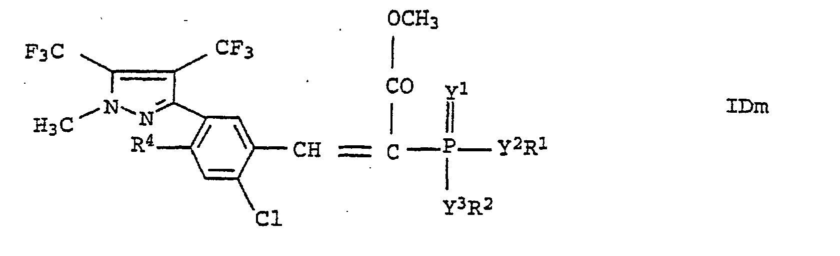
- die Verbindungen IDn.430 - IDn.1287, die sich von den entsprechenden Verbindungen IAa.430 - IAa.1287 lediglich dadurch unterscheiden, daß Eth für -C≡C- und R⁵ für den Heterocyclus Φ² mit R¹⁰ = Methyl sowie R¹¹ und R¹² = Trifluormethyl stehen: 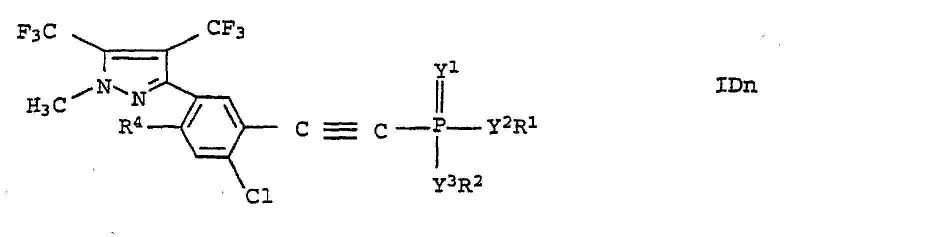
- die Verbindungen IEa.1 - IEa.1287, die sich von den entsprechenden Verbindungen IAa.1 - IAa.1287 lediglich dadurch unterscheiden, daß R⁵ für den Heterocyclus Φ³ mit Y⁴ = Sauerstoff und R¹³ und R¹⁴ = zusammen eine Tetramethylen-Kette steht: 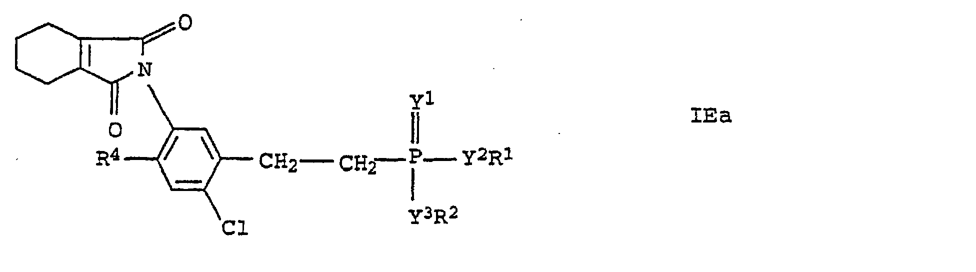
- die Verbindungen IEb.1 - IEb.1287, die sich von den entsprechenden Verbindungen IAa.1 - IAa.1287 lediglich dadurch unterscheiden, daß Eth für -CH₂-CH(Cl)- und R⁵ für den Heterocyclus Φ³ mit Y⁴ = Sauerstoff und R¹³ und R¹⁴ = zusammen eine Tetramethylen-Kette stehen: 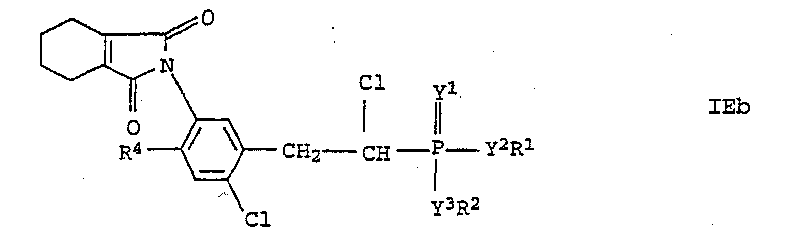
- die Verbindungen IEc.1 - IEc.1287, die sich von den entsprechenden Verbindungen IAa.1 - IAa.1287 lediglich dadurch unterscheiden, daß Eth für -CH₂-CH(Br)- und R⁵ für den Heterocyclus Φ³ mit Y⁴ = Sauerstoff und R¹³ und R¹⁴ = zusammen eine Tetramethylen-Kette stehen: 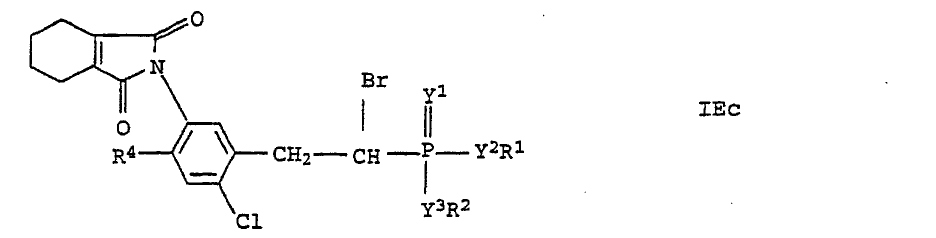
- die Verbindungen IEd.1 - IEd.1287, die sich von den entsprechenden Verbindungen IAa.1 - IAa.1287 lediglich dadurch unterscheiden, daß Eth für -CH₂-CH(CN)- und R⁵ für den Heterocyclus Φ³ mit Y⁴ = Sauerstoff und R¹³ und R¹⁴ = zusammen eine Tetramethylen-Kette stehen: 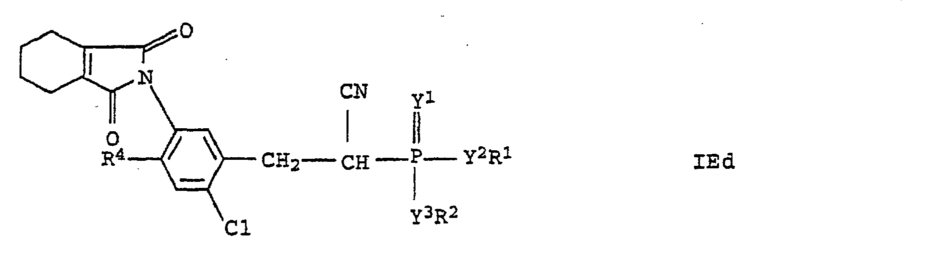
- die Verbindungen IEe.1 - IEe.1287, die sich von den entsprechenden Verbindungen IAa.1 - IAa.1287 lediglich dadurch unterscheiden, daß Eth für -CH₂-CH(CH₃)- und R⁵ für den Heterocyclus Φ³ mit Y⁴ = Sauerstoff und R¹³ und R¹⁴ = zusammen eine Tetramethylen-Kette stehen: 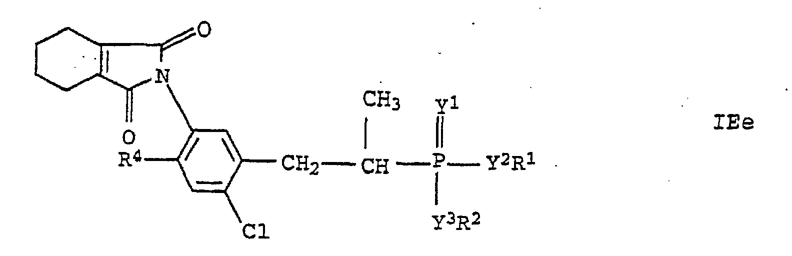
- die Verbindungen IEf.1 - IEf.1287, die sich von den entsprechenden Verbindungen IAa.1 - IAa.1287 lediglich dadurch unterscheiden, daß Eth für -CH₂-CH(COOCH₃)- und R⁵ für den Heterocyclus Φ³ mit Y⁴ = Sauerstoff und R¹³ und R¹⁴ = zusammen eine Tetramethylen-Kette stehen: 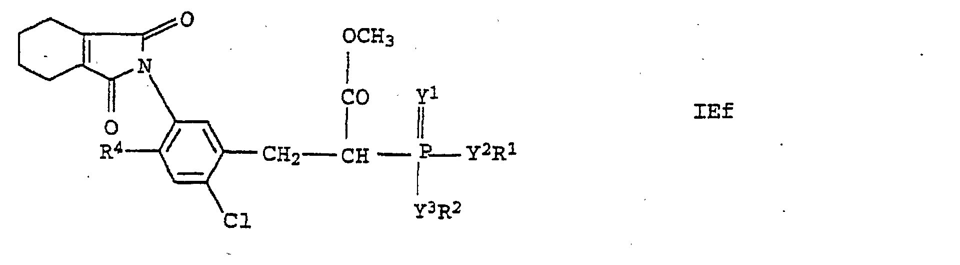
- die Verbindungen IEg.1 - IEg.1287, die sich von den entsprechenden Verbindungen IAa.1 - IAa.1287 lediglich dadurch unterscheiden, daß Eth für 1,2-Ethendiyl und R⁵ für den Heterocyclus Φ³ mit Y⁴ = Sauerstoff und R¹³ und R¹⁴ = zusammen eine Tetramethylen-Kette stehen: 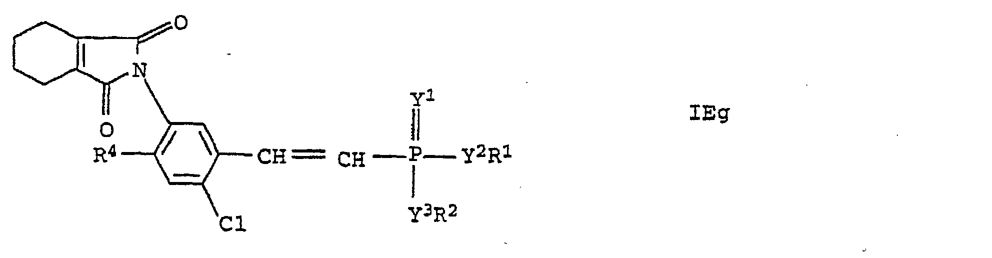
- die Verbindungen IEh.1 - IEh.1287, die sich von den entsprechenden Verbindungen IAa.1 - IAa.1287 lediglich dadurch unterscheiden, daß Eth für -CH=C(Cl)- und R⁵ für den Heterocyclus Φ³ mit Y⁴ = Sauerstoff und R¹³ und R¹⁴ = zusammen eine Tetramethylen-Kette stehen: 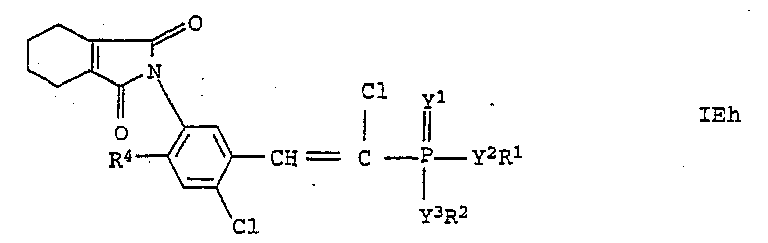
- die Verbindungen IEi.1 - IEi.1287, die sich von den entsprechenden Verbindungen IAa.1 - IAa.1287 lediglich dadurch unterscheiden; daß Eth für -CH=C(Br)- und R⁵ für den Heterocyclus Φ³ mit Y⁴ = Sauerstoff und R¹³ und R¹⁴ = zusammen eine Tetramethylen-Kette stehen: 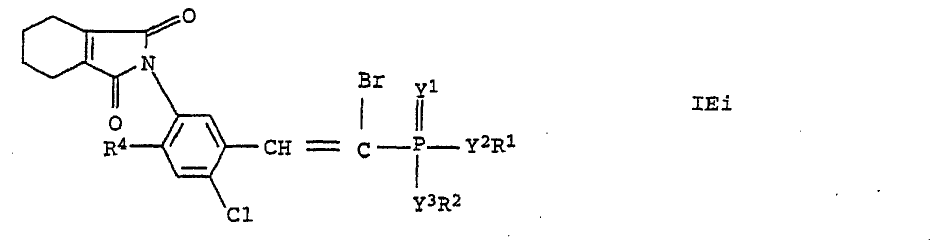
- die Verbindungen IEj.1 - IEj.1287, die sich von den entsprechenden Verbindungen IAa.1 - IAa.1287 lediglich dadurch unterscheiden, daß Eth für -CH=C(CN)- und R⁵ für den Heterocyclus Φ³ mit Y⁴ = Sauerstoff und R¹³ und R¹⁴ = zusammen eine Tetramethylen-Kette stehen: 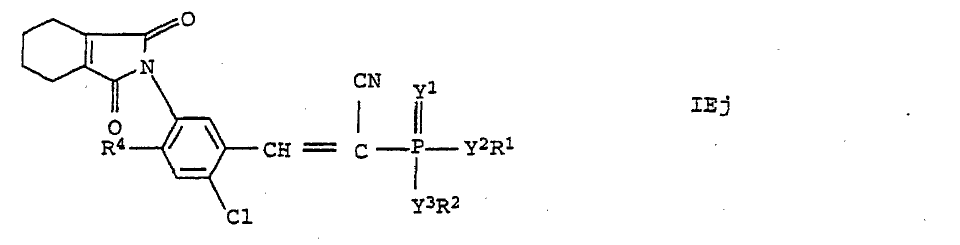
- die Verbindungen IEk.1 - IEk.1287, die sich von den entsprechenden Verbindungen IAa.1 - IAa.1287 lediglich dadurch unterscheiden, daß Eth für -CH=C(CH₃)- und R⁵ für den Heterocyclus Φ³ mit Y⁴ = Sauerstoff und R¹³ und R¹⁴ = zusammen eine Tetramethylen-Kette stehen: 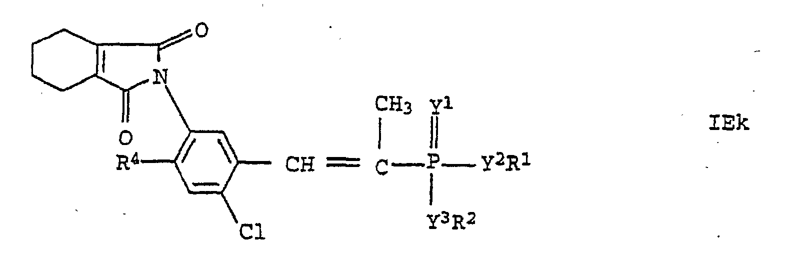
- die Verbindungen IEm.1 - IEm.1287, die sich von den entsprechenden Verbindungen IAa.1 - IAa.1287 lediglich dadurch unterscheiden, daß Eth für -CH=C(COOCH₃)- und R⁵ für den Heterocyclus Φ³ mit Y⁴ = Sauerstoff und R¹³ und R¹⁴ = zusammen eine Tetramethylen-Kette stehen: 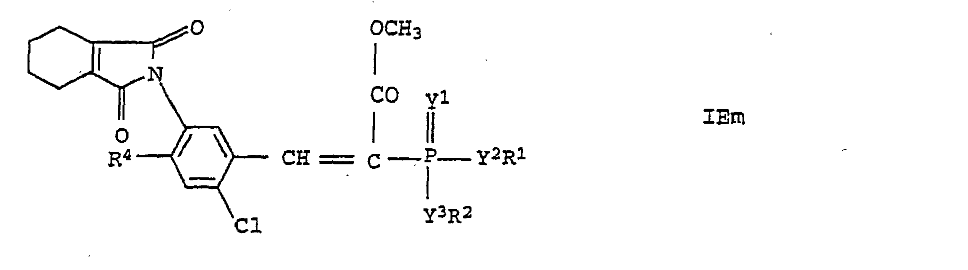
- die Verbindungen IEn.1 - IEn.1287, die sich von den entsprechenden Verbindungen IAa.1 - IAa.1287 lediglich dadurch unterscheiden, daß Eth für -C≡C- und R⁵ für den Heterocyclus Φ³ mit Y⁴ = Sauerstoff und R¹³ und R¹⁴ = zusammen eine Tetramethylen-Kette stehen: 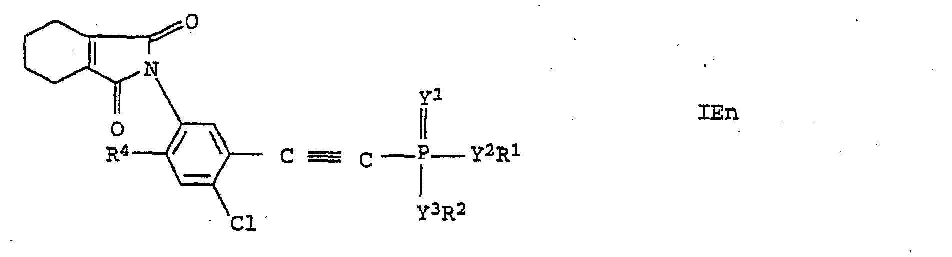
- die Verbindungen IFa.1 - IFa.1287, die sich von den entsprechenden Verbindungen IAa.1 - IAa.1287 lediglich dadurch unterscheiden, daß R⁵ für den Heterocyclus Φ³ mit Y⁴ = Sauerstoff und R¹³ und R¹⁴ = Methyl steht: 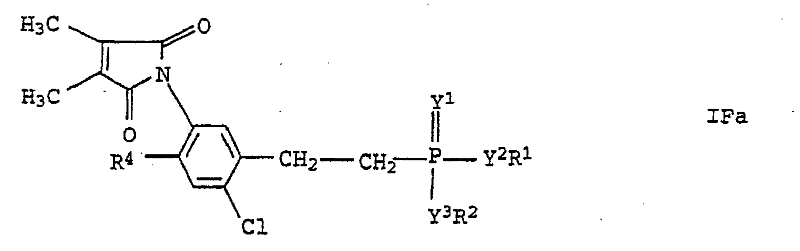
- die Verbindungen IFb.1 - IFb.1287, die sich von den entsprechenden Verbindungen IAa.1 - IAa.1287 lediglich dadurch unterscheiden, daß Eth für -CH₂-CH(Cl)- und R⁵ für den Heterocyclus Φ³ mit Y⁴ = Sauerstoff und R¹³ und R¹⁴ = Methyl stehen: 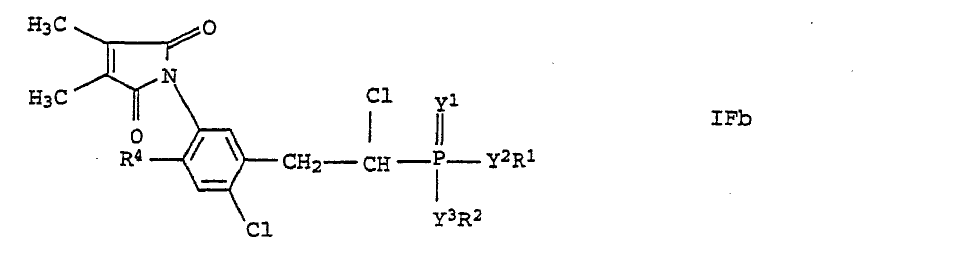
- die Verbindungen IFc.1 - IFc.1287, die sich von den entsprechenden Verbindungen IAa.1 - IAa.1287 lediglich dadurch unterscheiden, daß Eth für -CH₂-CH(Br)- und R⁵ für den Heterocyclus Φ³ mit Y⁴ = Sauerstoff und R¹³ und R¹⁴ = Methyl stehen: 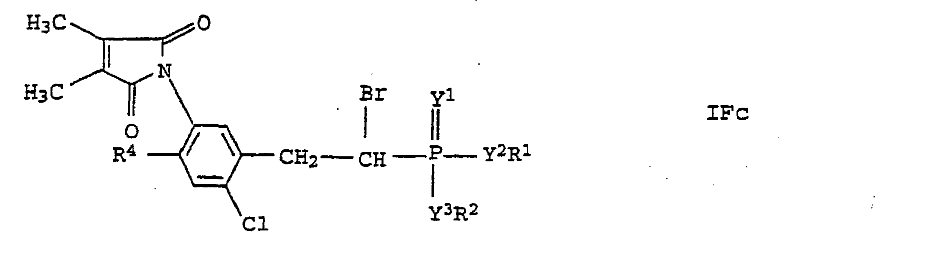
- die Verbindungen IFd.1 - IFd.1287, die sich von den entsprechenden Verbindungen IAa.1 - IAa.1287 lediglich dadurch unterscheiden, daß Eth für -CH₂-CH(CN)- und R⁵ für den Heterocyclus Φ³ mit Y⁴ = Sauerstoff und R¹³ und R¹⁴ = Methyl stehen: 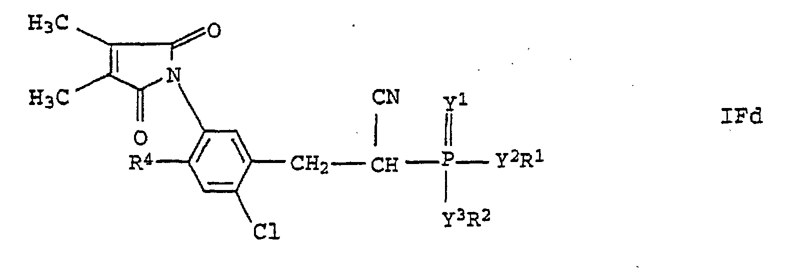
- die Verbindungen IFe.1 - IFe.1287, die sich von den entsprechenden Verbindungen IAa.1 - IAa.1287 lediglich dadurch unterscheiden, daß Eth für -CH₂-CH(CH₃)- und R⁵ für den Heterocyclus Φ³ mit Y⁴ = Sauerstoff und R¹³ und R¹⁴ = Methyl stehen: 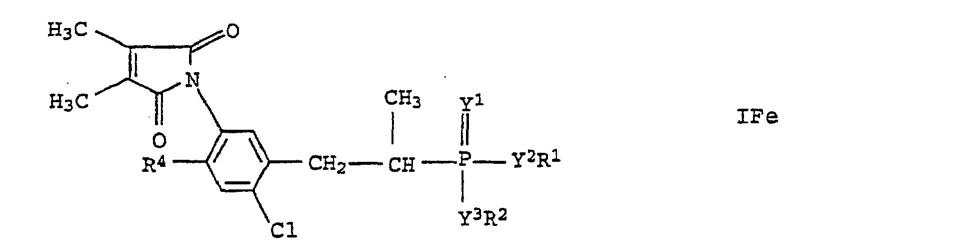
- die Verbindungen IFf.1 - IFf.1287, die sich von den entsprechenden Verbindungen IAa.1 - IAa.1287 lediglich dadurch unterscheiden, daß Eth für -CH₂-CH(COOCH₃)- und R⁵ für den Heterocyclus Φ³ mit Y⁴ = Sauerstoff und R¹³ und R¹⁴ = Methyl stehen: 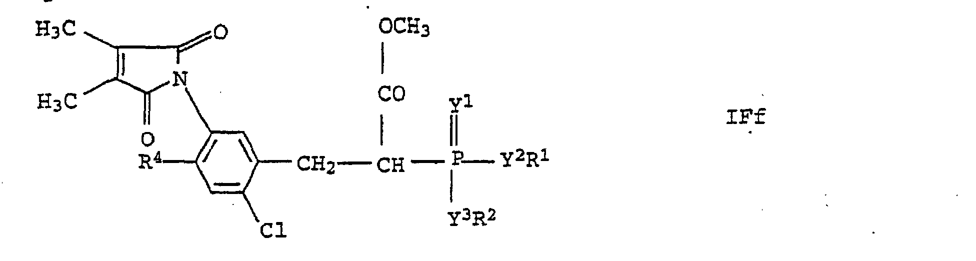
- die Verbindungen IFg.1 - IFg.1287, die sich von den entsprechenden Verbindungen IAa.1 - IAa.1287 lediglich dadurch unterscheiden, daß Eth für 1,2-Ethendiyl und R⁵ für den Heterocyclus Φ³ mit Y⁴ = Sauerstoff und R¹³ und R¹⁴ = Methyl stehen: 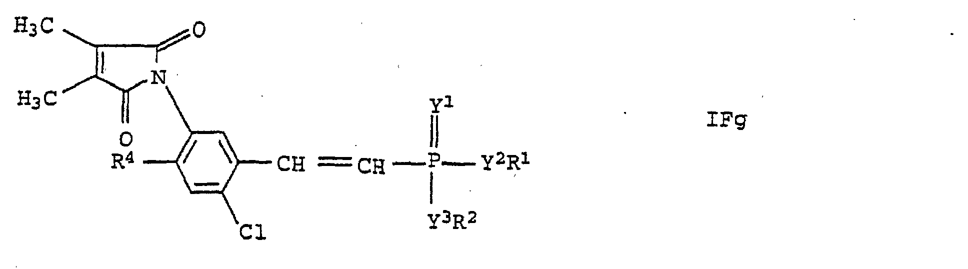
- die Verbindungen IFh.1 - IFh.1287, die sich von den entsprechenden Verbindungen IAa.1 - IAa.1287 lediglich dadurch unterscheiden, daß Eth für -CH=C(Cl)- und R⁵ für den Heterocyclus Φ³ mit Y⁴ = Sauerstoff und R¹³ und R¹⁴ = Methyl stehen: 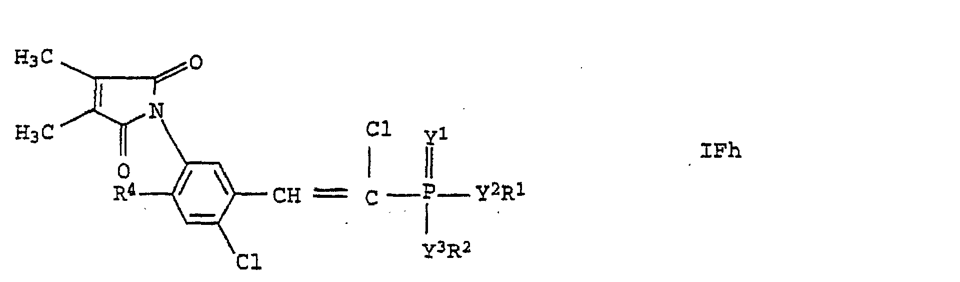
- die Verbindungen IFi.1 - IFi.1287, die sich von den entsprechenden Verbindungen IAa.1 - IAa.1287 lediglich dadurch unterscheiden, daß Eth für -CH=C(Br)- und R⁵ für den Heterocyclus Φ³ mit Y⁴ = Sauerstoff und R¹³ und R¹⁴ = Methyl stehen: 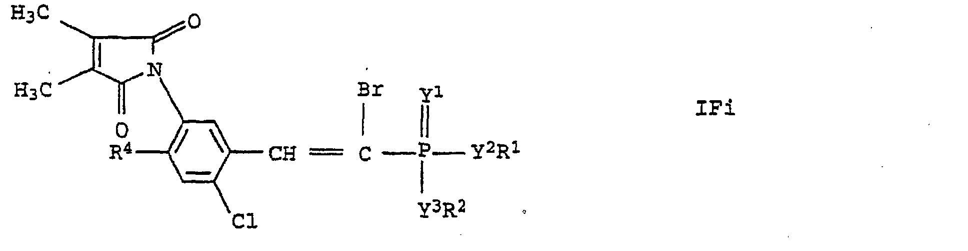
- die Verbindungen IFj.1 - IFj.1287, die sich von den entsprechenden Verbindungen IAa.1 - IAa.1287 lediglich dadurch unterscheiden, daß Eth für -CH=C(CN)- und R⁵ für den Heterocyclus Φ³ mit Y⁴ = Sauerstoff und R¹³ und R¹⁴ = Methyl stehen: 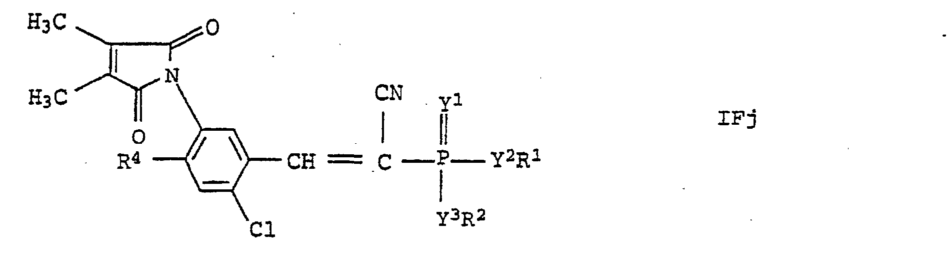
- die Verbindungen IFk.1 - IFk.1287, die sich von den entsprechenden Verbindungen IAa.1 - IAa.1287 lediglich dadurch unterscheiden, daß Eth für -CH=C(CH₃)- und R⁵ für den Heterocyclus Φ³ mit Y⁴ = Sauerstoff und R¹³ und R¹⁴ = Methyl stehen: 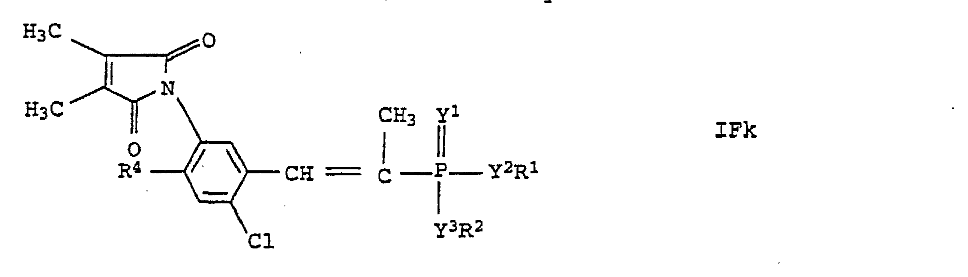
- die Verbindungen IPm.1 - IFm.1287, die sich von den entsprechenden Verbindungen IAa.1 - IAa.1287 lediglich dadurch unterscheiden, daß Eth für -CH=C(COOCH₃)- und R⁵ für den Fieterocyclus Φ³ mit Y⁴ = Sauerstoff und R¹³ und R¹⁴ = Methyl stehen: 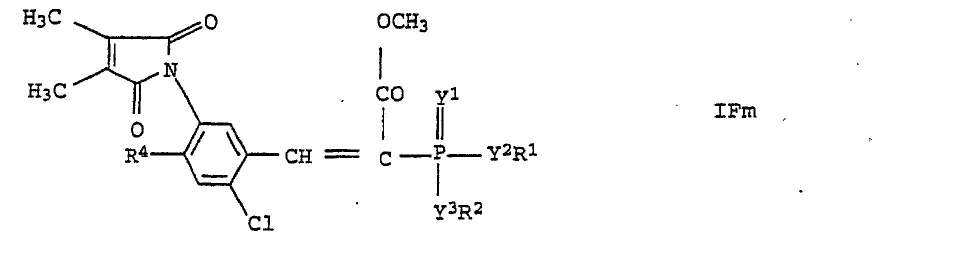
- die Verbindungen IFn.1 - IFn.1287, die sich von den entsprechenden Verbindungen IAa.1 - IAa.1287 lediglich dadurch unterscheiden, daß Eth für -C≡C- und R⁵ für den Heterocyclus Φ³ mit Y⁴ = Sauerstoff und R¹³ und R¹⁴ = Methyl stehen: 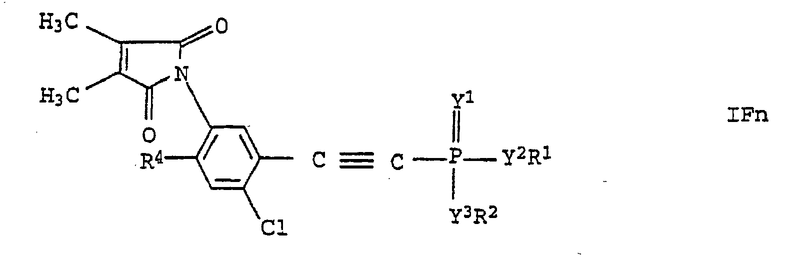
- die Verbindungen IGa.1 - IGa.1287, die sich von den entsprechenden Verbindungen IAa.1 - IAa.1287 lediglich dadurch unterscheiden, daß R⁵ für den Heterocyclus Φ⁴ mit R¹⁵ und R¹⁶ zusammen = Tetramethylen-Kette und R¹⁷ = Chlor steht: 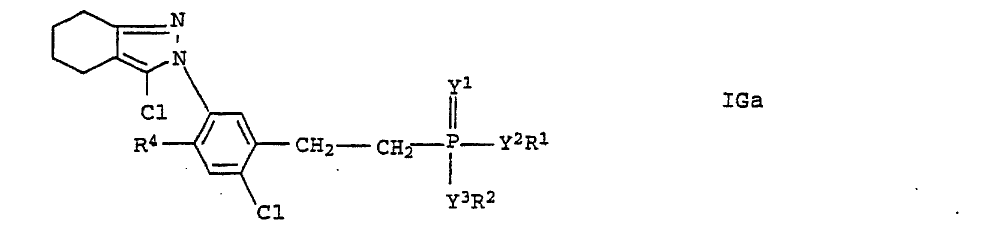
- die Verbindungen IGb.1 - IGb.1287, die sich von den entsprechenden Verbindungen IAa.1 - IAa.1287 lediglich dadurch unterscheiden, daß Eth für -CH₂-CH(Cl)- und R⁵ für den Heterocyclus Φ⁴ mit R¹⁵ und R¹⁶ zusammen = Tetramethylen-Kette und R¹⁷ = Chlor stehen: 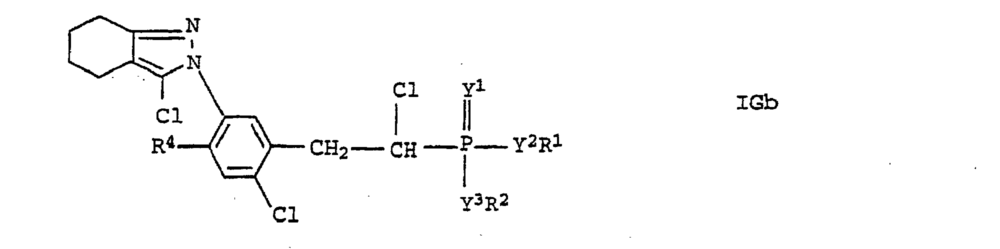
- die Verbindungen TGc.1 - IGc.1287, die sich von den entsprechenden Verbindungen IAa.1 - IAa.1287 lediglich dadurch unterscheiden, daß Eth für -CH₂-CH(Br)- und R⁵ für den Heterocyclus Φ⁴ mit R¹⁵ und R¹⁶ zusammen = Tetramethylen-Kette und R¹⁷ = Chlor stehen: 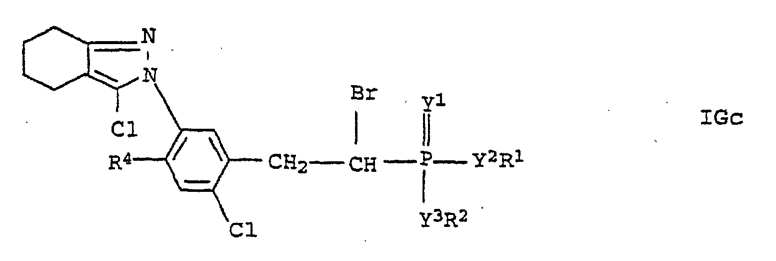
- die Verbindungen IGd.1 - IGd.1287, die sich von den entsprechenden Verbindungen IAa.1 - IAa.1287 lediglich dadurch unterscheiden, daß Eth für -CH₂-CH(CN)- und R⁵ für den Heterocyclus Φ⁴ mit R¹⁵ und R¹⁶ zusammen = Tetramethylen-Kette und R¹⁷ = Chlor stehen: 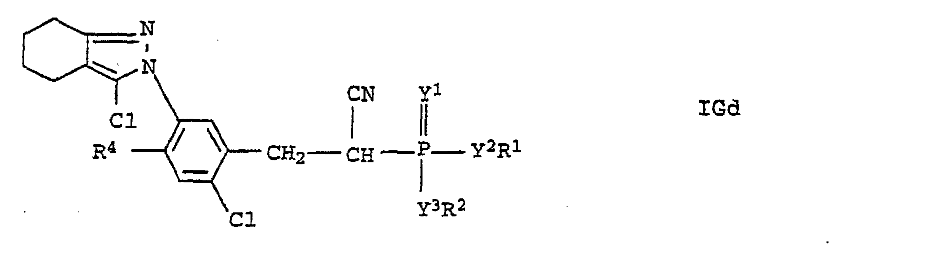
- die Verbindungen IGe.1 - IGe.1287, die sich von den entsprechenden Verbindungen IAa.1 - IAa.1287 lediglich dadurch unterscheiden, daß Eth für -CH₂-CH(CH₃)- und R⁵ für den Heterocyclus Φ⁴ mit R¹⁵ und R¹⁶ zusammen = Tetramethylen-Kette und R¹⁷ = Chlor stehen: 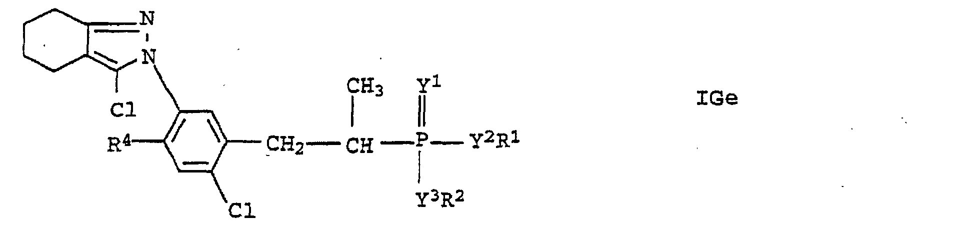
- die Verbindungen IGf.1 - IGf.1287, die sich von den entsprechenden Verbindungen IAa.1 - IAa.1287 lediglich dadurch unterscheiden, daß Eth für -CH₂-CH(COOCH₃)- und R⁵ für den Heterocyclus Φ⁴ mit R¹⁵ und R¹⁶ zusammen = Tetramethylen-Kette und R¹⁷ = Chlor stehen: 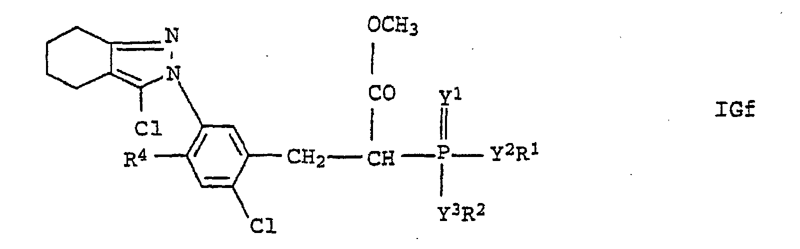
- die Verbindungen IGg.1 - IGg.1287, die sich von den entsprechenden Verbindungen IAa.1 - IAa.1287 lediglich dadurch unterscheiden, daß Eth für 1,2-Ethendiyl und R⁵ für den Heterocyclus Φ⁴ mit R¹⁵ und R¹⁶ zusammen = Tetramethylen-Kette und R¹⁷ = Chlor stehen: 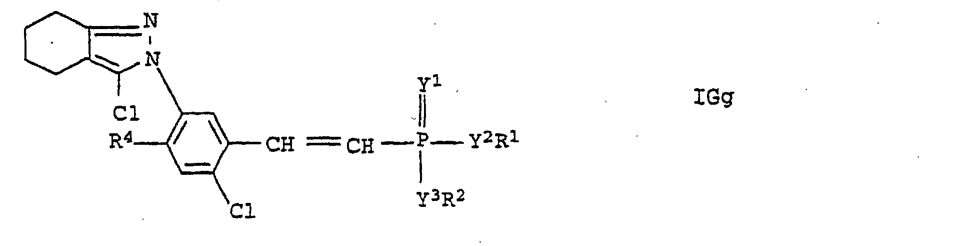
- die Verbindungen IGh.1 - IGh.1287, die sich von den entsprechenden Verbindungen IAa.1 - IAa.1287 lediglich dadurch unterscheiden, daß Eth für -CH=C(Cl)- und R⁵ für den Heterocyclus Φ⁴ mit R¹⁵ und R¹⁶ zusammen = Tetramethylen-Kette und R¹⁷ = Chlor stehen: 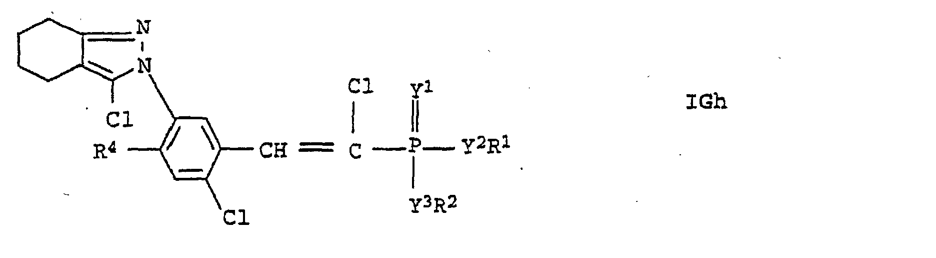
- die Verbindungen IGi.1 - IGi.1287, die sich von den entsprechenden Verbindungen IAa.1 - IAa.1287 lediglich dadurch unterscheiden, daß Eth für -CH=C(Br)- und R⁵ für den Heterocyclus Φ⁴ mit R¹⁵ und R¹⁶ zusammen = Tetramethylen-Kette und R¹⁷ = Chlor stehen: 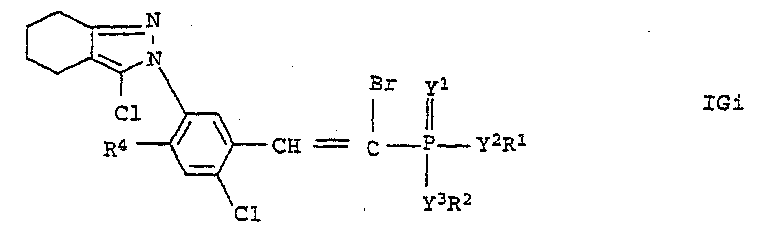
- die Verbindungen IGj.1 - IGj.1287, die sich von den entsprechenden Verbindungen IAa.1 - IAa.1287 lediglich dadurch unterscheiden, daß Eth für -CH=C(CN)- und R⁵ für den Heterocyclus Φ⁴ mit R¹⁵ und R¹⁶ zusammen = Tetramethylen-Kette und R¹⁷ = Chlor stehen: 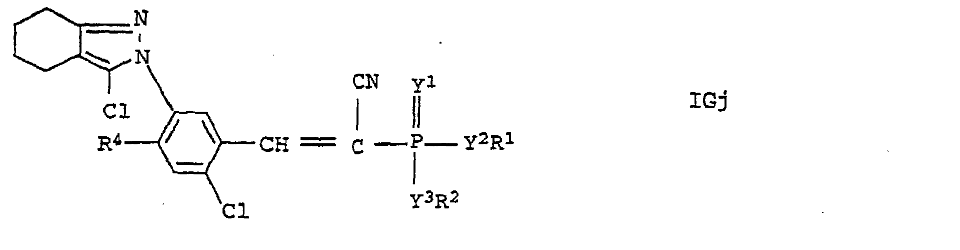
- die Verbindungen IGk.1 - IGk.1287, die sich von den entsprechenden Verbindungen IAa.1 - IAa.1287 lediglich dadurch unterscheiden, daß Eth für -CH=C(CH₃)- und R⁵ für den Heterocyclus Φ⁴ mit R¹⁵ und R¹⁶ zusammen = Tetramethylen-Kette und R¹⁷ = Chlor stehen: 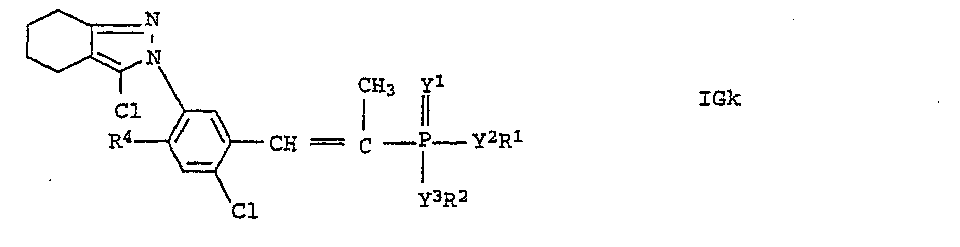
- die Verbindungen IGm.1 - IGm.1287, die sich von den entsprechenden Verbindungen IAa.1 - IAa.1287 lediglich dadurch unterscheiden, daß Eth für -CH=C(COOCH₃)- und R⁵ für den Heterocyclus Φ⁴ mit R¹⁵ und R¹⁶ zusammen = Tetramethylen-Kette und R¹⁷ = Chlor stehen: 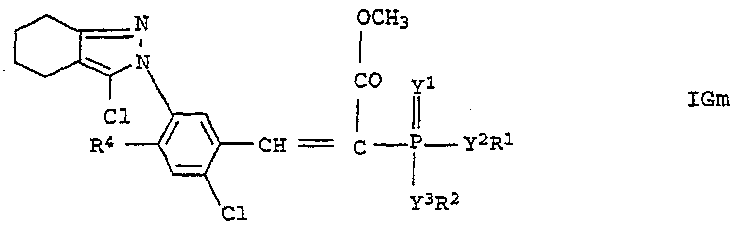
- die Verbindungen IGn.1 - IGn.1287, die sich von den entsprechenden Verbindungen IAa.1 - IAa.1287 lediglich dadurch unterscheiden, daß Eth für -C≡C- und R⁵ für den Heterocyclus Φ⁴ mit R¹⁵ und R¹⁶ zusammen = Tetramethylen-Kette und R¹⁷ = Chlor stehen: 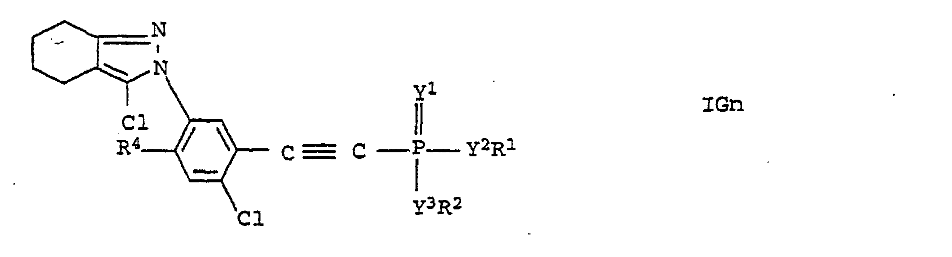
- die Verbindungen IHa.1 - IHa.1287, die sich von den entsprechenden verbindungen IAa.1 - IAa.1287 lediglich dadurch unterscheiden, daß R⁵ für den Heterocyclus Φ⁵ mit R¹⁸ = Chlor, R¹⁹ = Difluormethyl und R²⁰ = Methyl steht: 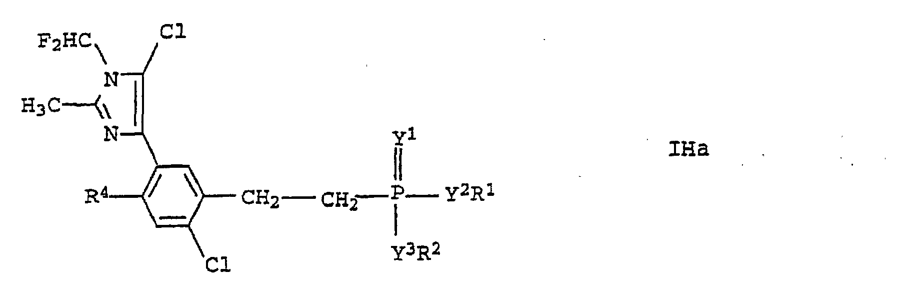
- die Verbindungen IHb.1 - IHb.1287, die sich von den entsprechenden Verbindungen IAa.1 - IAa.1287 lediglich dadurch unterscheiden, daß Eth für -CH₂-CH(Cl)- und R⁵ für den Heterocyclus Φ⁵ mit R¹⁸ = Chlor, R¹⁹ = Difluormethyl und R²⁰ = Methyl stehen: 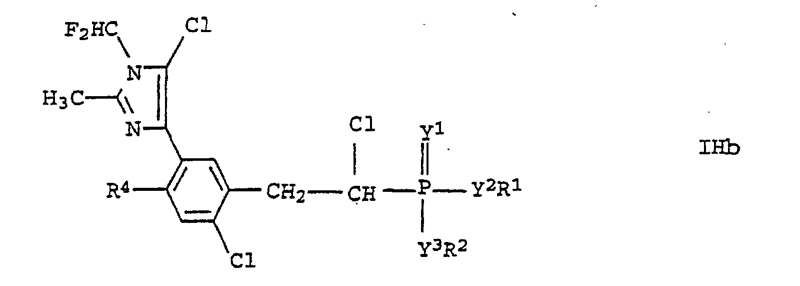
- die Verbindungen IHc.1 - IHc.1287, die sich von den entsprechenden Verbindungen IAa.1 - IAa.1287 lediglich dadurch unterscheiden, daß Eth für -CH₂-CH(Br)- und R⁵ für den Heterocyclus Φ⁵ mit R¹⁸ = Chlor, R¹⁹ = Difluormethyl und R²⁰ = Methyl stehen: 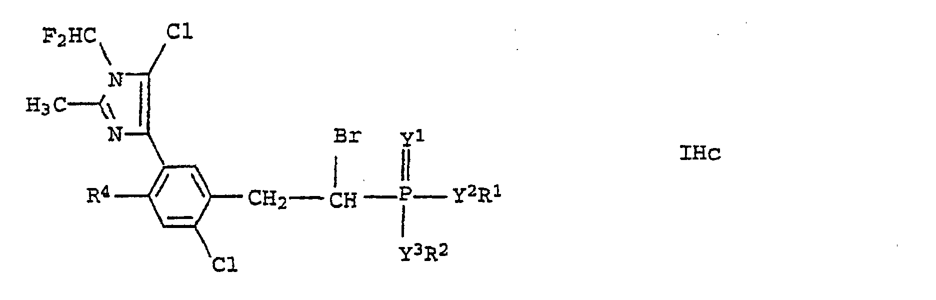
- die Verbindungen IHd.1 - IHd.1287, die sich von den entsprechenden Verbindungen IAa.1 - IAa.1287 lediglich dadurch unterscheiden, daß Eth für -CH₂-CH(CN)- und R⁵ für den Heterocyclus Φ⁵ mit R¹⁸ = Chlor, R¹⁹ = Difluormethyl und R²⁰ = Methyl stehen: 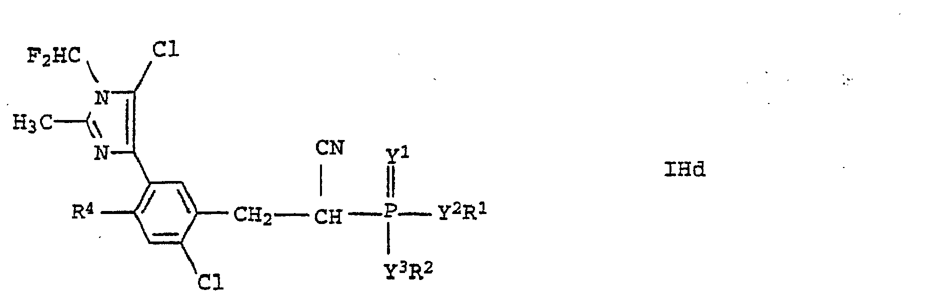
- die Verbindungen IHe.1 - IHe.1287, die sich von den entsprechenden Verbindungen IAa.1 - IAa.1287 lediglich dadurch unterscheiden, daß Eth für -CH₂-CH(CH₃)- und R⁵ für den Heterocyclus Φ⁵ mit R¹⁸ = Chlor, R¹⁹ = Difluormethyl und R²⁰ = Methyl stehen: 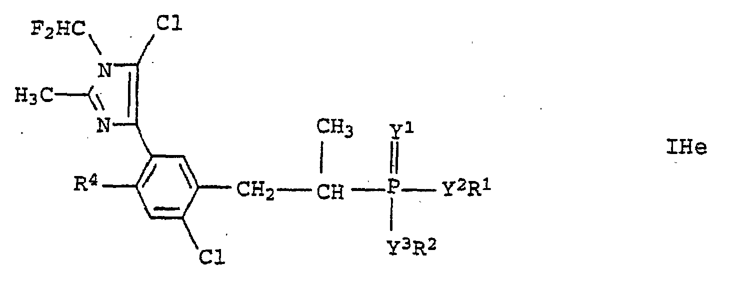
- die Verbindungen IHf.1 - IHf.1287, die sich von den entsprechenden Verbindungen IAa.1 - IAa.1287 lediglich dadurch unterscheiden, daß Eth für -CH₂-CH(COOCH₃)- und R⁵ für den Heterocyclus Φ⁵ mit R¹⁸ = Chlor, R¹⁹ = Difluormethyl und R²⁰ = Methyl stehen: 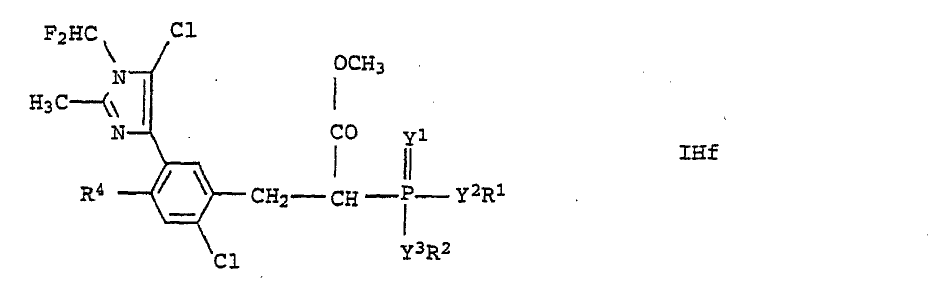
- die Verbindungen IHg.1 - IHg.1287, die sich von den entsprechenden Verbindungen IAa.1 - IAa.1287 lediglich dadurch unterscheiden, daß Eth für 1,2-Ethendiyl und R⁵ für den Heterocyclus Φ⁵ mit R¹⁸ = Chlor, R¹⁹ = Difluormethyl und R²⁰ = Methyl stehen: 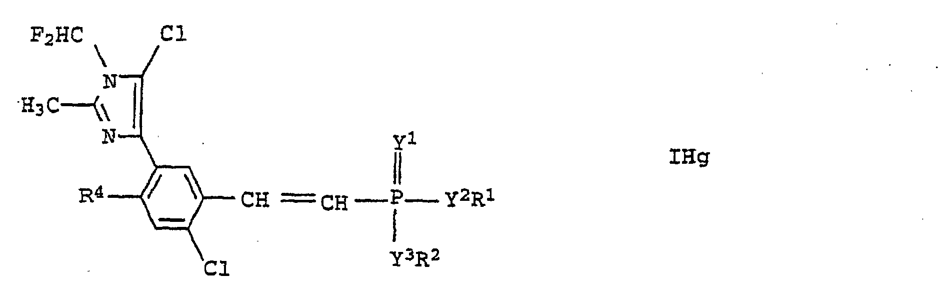
- die Verbindungen IHh.1 - IHh.1287, die sich von den entsprechenden Verbindungen IAa.1 - IAa.1287 lediglich dadurch unterscheiden, daß Eth für -CH=C(Cl)- und R⁵ für den Heterocyclus Φ⁵ mit R¹⁸ = Chlor, R¹⁹ = Difluormethyl und R²⁰ = Methyl stehen: 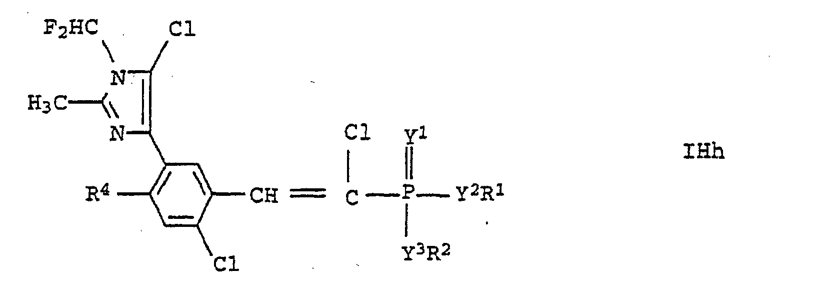
- die Verbindungen IHi.1 - IHi.1287, die sich von den entsprechenden Verbindungen IAa.1 - IAa.1287 lediglich dadurch unterscheiden, daß Eth für -CH=C(Br)- und R⁵ für den Heterocyclus Φ⁵ mit R¹⁸ = Chlor, R¹⁹ = Difluormethyl und R²⁰ = Methyl stehen: 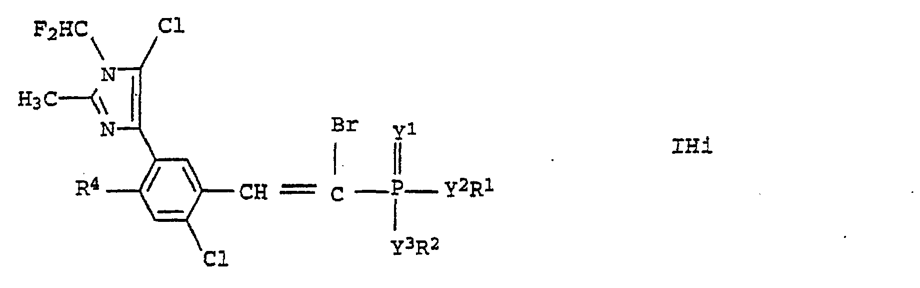
- die Verbindungen IHj.1 - IHj.1287, die sich von den entsprechenden Verbindungen IAa.1 - IAa.1287 lediglich dadurch unterscheiden, daß Eth für -CH=C(CN)- und R⁵ für den Heterocyclus Φ⁵ mit R¹⁸ = Chlor, R¹⁹ = Difluormethyl und R²⁰ = Methyl stehen: 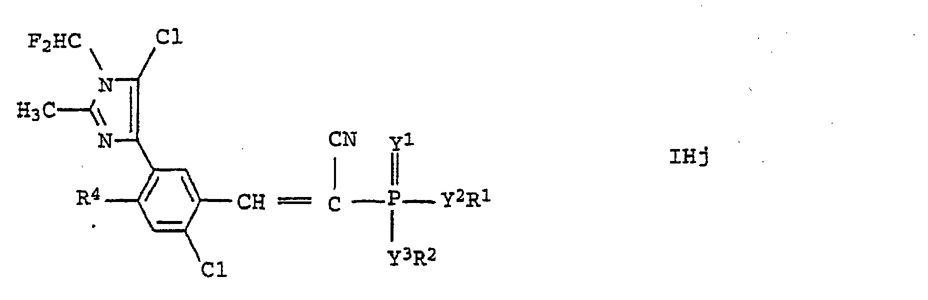
- die Verbindungen IHk.1 - IHk.1287, die sich von den entsprechenden Verbindungen IAa.1 - IAa.1287 lediglich dadurch unterscheiden, daß Eth für -CH=C(CH₃)- und R⁵ für den Heterocyclus Φ⁵ mit R¹⁸ = Chlor, R¹⁹ = Difluormethyl und R²⁰ = Methyl stehen: 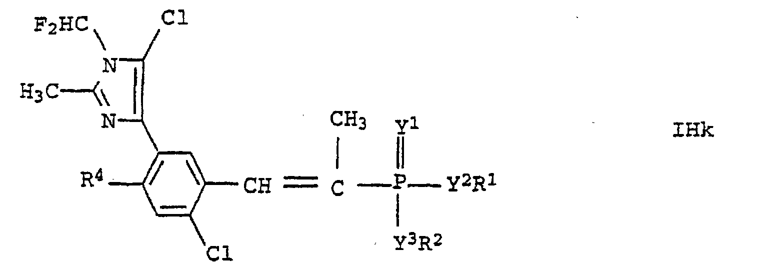
- die Verbindungen IHm.1 - IHm.1287, die sich von den entsprechenden Verbindungen IAa.1 - IAa.1287 lediglich dadurch unterscheiden, daß Eth für -CH=C(COOCH₃)- und R⁵ für den Heterocyclus Φ⁵ mit R¹⁸ = Chlor, R¹⁹ = Difluormethyl und R²⁰ = Methyl stehen: 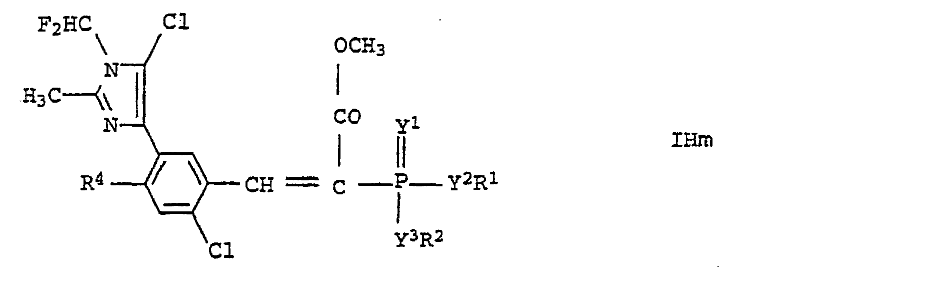
- die Verbindungen IHn.1 - IHn.1287, die sich von den entsprechenden Verbindungen IAa.1 - IAa.1287 lediglich dadurch unterscheiden, daß Eth für -C≡C- und R⁵ für den Heterocyclus Φ⁵ mit R¹⁸ = Chlor, R¹⁹ = Difluormethyl und R²⁰ = Methyl stehen: 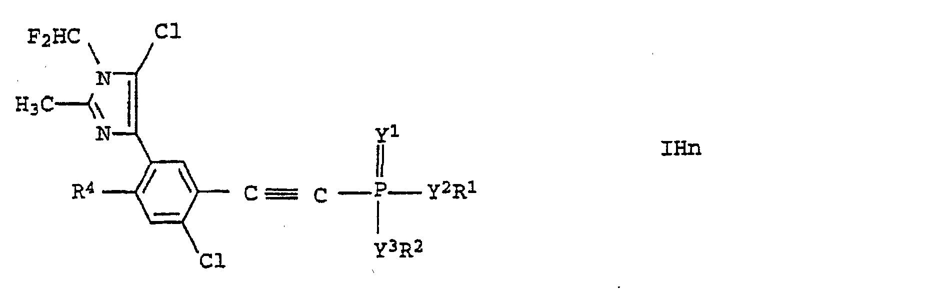
- die Verbindungen IKa.1 - IKa.1287, die sich von den entsprechenden Verbindungen IAa.1 - IAa.1287 lediglich dadurch unterscheiden, daß R⁵ für den Heterocyclus Φ⁷ mit Y⁷ = Sauerstoff und R²³ und R²⁴ zusammen = Tetramethylen-Kette steht: 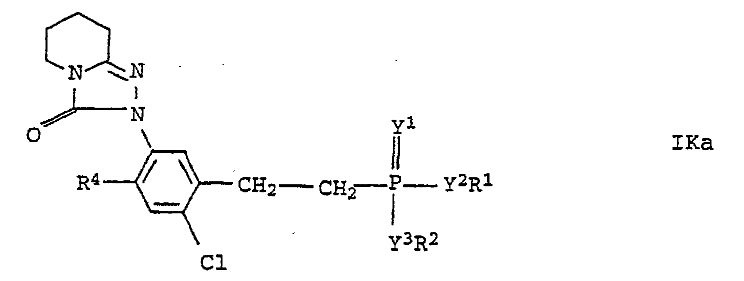
- die Verbindungen IKb.1 - IKb.1287, die sich von den entsprechenden Verbindungen IAa.1 - IAa.1287 lediglich dadurch unterscheiden, daß Eth für -CH₂-CH(Cl)- und R⁵ für den Heterocyclus Φ⁷ mit Y⁷ = Sauerstoff und R²³ und R²⁴ zusammen = Tetramethylen-Kette stehen: 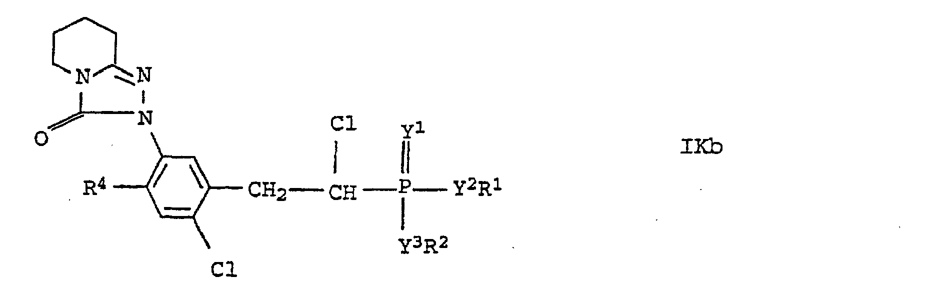
- die Verbindungen IKc.1 - IKc.1287, die sich von den entsprechenden Verbindungen IAa.1 - IAa.1287 lediglich dadurch unterscheiden, daß Eth für -CH₂-CH(Br)- und R⁵ für den Heterocyclus Φ⁷ mit Y⁷ = Sauerstoff und R²³ und R²⁴ zusammen = Tetramethylen-Kette stehen: 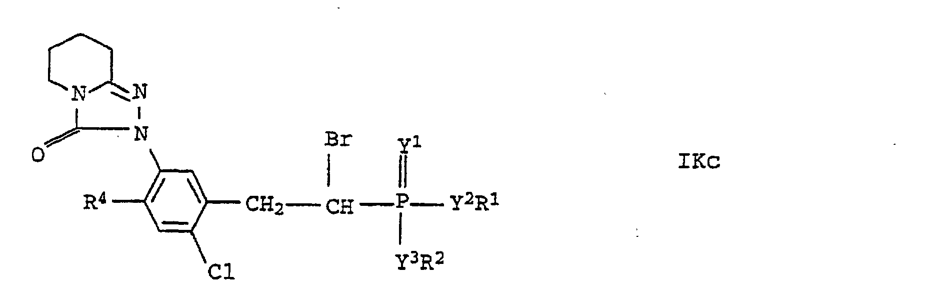
- die Verbindungen IKd.1 - IKd.1287, die sich von den entsprechenden Verbindungen IAa.1 - IAa.1287 lediglich dadurch unterscheiden, daß Eth für -CH₂-CH(CN)- und R⁵ für den Heterocyclus Φ⁷ mit Y⁷ = Sauerstoff und R²³ und R²⁴ zusammen = Tetramethylen-Kette stehen: 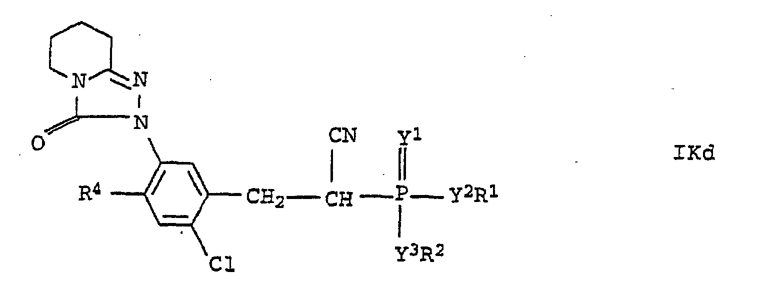
- die Verbindungen IKe.1 - IKe.1287, die sich von den entsprechenden Verbindungen IAa.1 - IAa.1287 lediglich dadurch unterscheiden, daß Eth für -CH₂-CH(CH₃)- und R⁵ für den Heterocyclus Φ⁷ mit Y⁷ = Sauerstoff und R²³ und R²⁴ zusammen = Tetramethylen-Kette stehen: 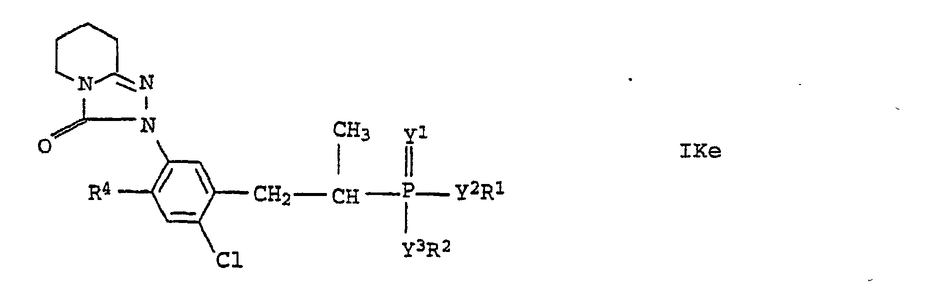
- die Verbindungen IKf.1 - IKf.1287, die sich von den entsprechenden verbindungen IAa.1 - IAa.1287 lediglich dadurch unterscheiden, daß Eth für -CH₂-CH(COOCH₃)- und R⁵ für den Heterocyclus Φ⁷ mit Y⁷ = Sauerstoff und R²³ und R²⁴ zusammen = Tetramethylen-Kette stehen: 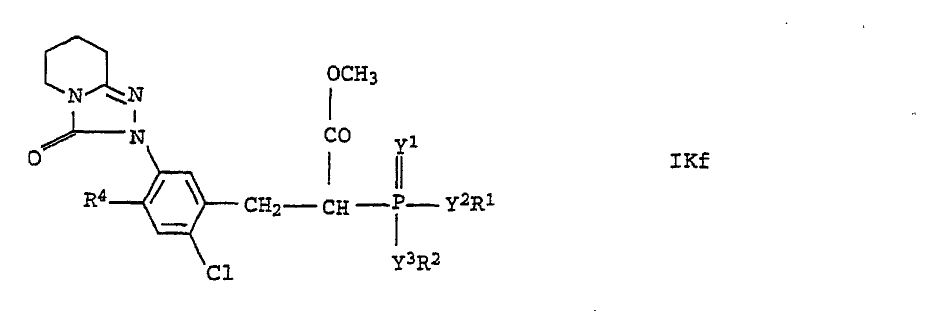
- die Verbindungen IKg.1 - IKg.1287, die sich von den entsprechenden Verbindungen IAa.1 - IAa.1287 lediglich dadurch unterscheiden, daß Eth für 1,2-Ethendiyl und R⁵ für den Heterocyclus Φ⁷ mit Y⁷ = Sauerstoff und R²³ und R²⁴ zusammen = Tetramethylen-Kette stehen: 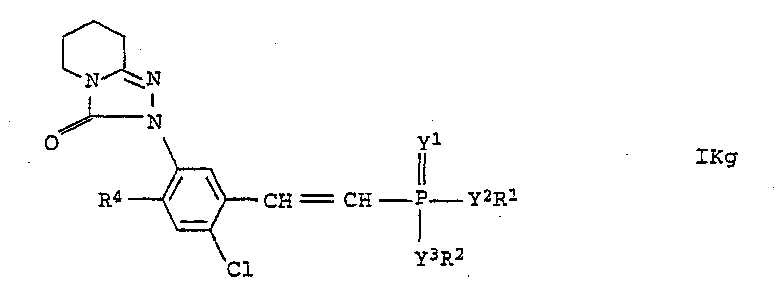
- die Verbindungen IKh.1 - IKh.1287, die sich von den entsprechenden Verbindungen IAa.1 - IAa.1287 lediglich dadurch unterscheiden, daß Eth für -CH=C(Cl)- und R⁵ für den Heterocyclus Φ⁷ mit Y⁷ = Sauerstoff und R²³ und R²⁴ zusammen = Tetramethylen-Kette stehen: 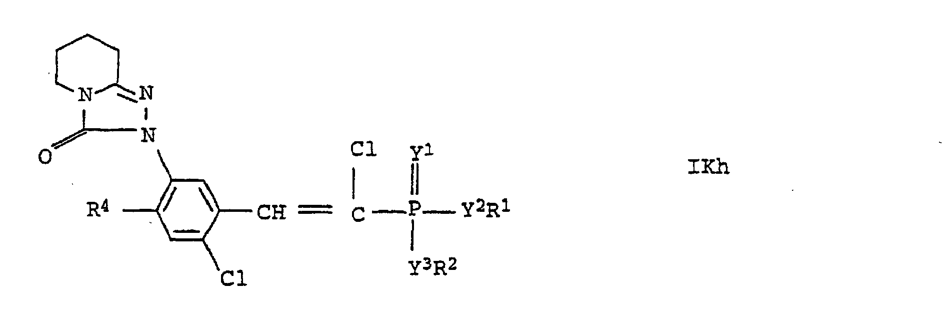
- die Verbindungen IKi.1 - IKi.1287, die sich von den entsprechenden Verbindungen IAa.1 - IAa.1287 lediglich dadurch unterscheiden, daß Eth für -CH=C(Br)- und R⁵ für den Heterocyclus Φ⁷ mit Y⁷ = Sauerstoff und R²³ und R²⁴ zusammen = Tetramethylen-Kette stehen: 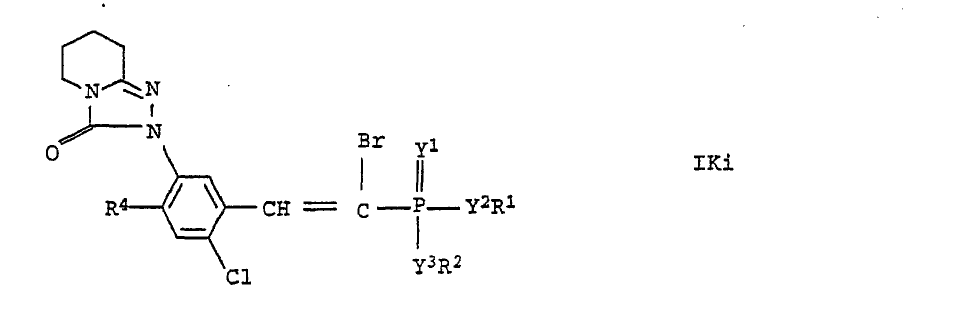
- die Verbindungen IKj.1 - IKj.1287, die sich von den entsprechenden Verbindungen IAa.1 - IAa.1287 lediglich dadurch unterscheiden, daß Eth für -CH=C(CN)- und R⁵ für den Heterocyclus Φ⁷ mit Y⁷ = Sauerstoff und R²³ und R²⁴ zusammen = Tetramethylen-Kette stehen: 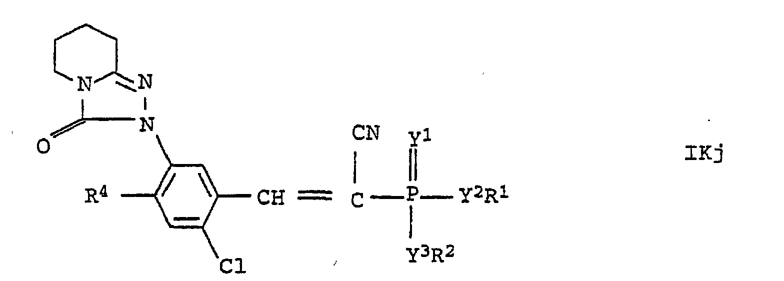
- die Verbindungen IKk.1 - IKk.1287, die sich von den entsprechenden Verbindungen IAa.1 - IAa.1287 lediglich dadurch unterscheiden, daß Eth für -CH=C(CH₃)- und R⁵ für den Heterocyclus Φ⁷ mit Y⁷ = Sauerstoff und R²³ und R²⁴ zusammen = Tetramethylen-Kette stehen: 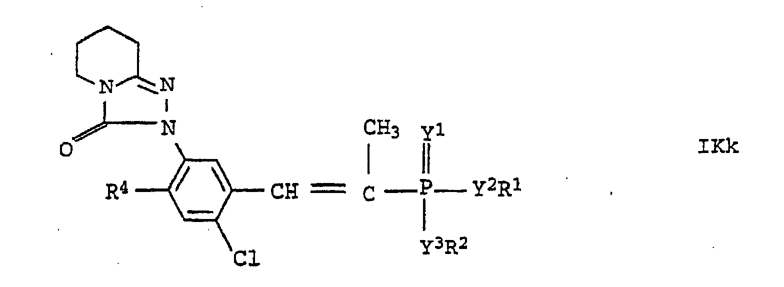
- die Verbindungen IKm.1 - IKm.1287, die sich von den entsprechenden Verbindungen IAa.1 - IAa.1287 lediglich dadurch unterscheiden, daß Eth für -CH=C(COOCH₃)- und R⁵ für den Heterocyclus Φ⁷ mit Y⁷ = Sauerstoff und R²³ und R²⁴ zusammen = Tetramethylen-Kette stehen: 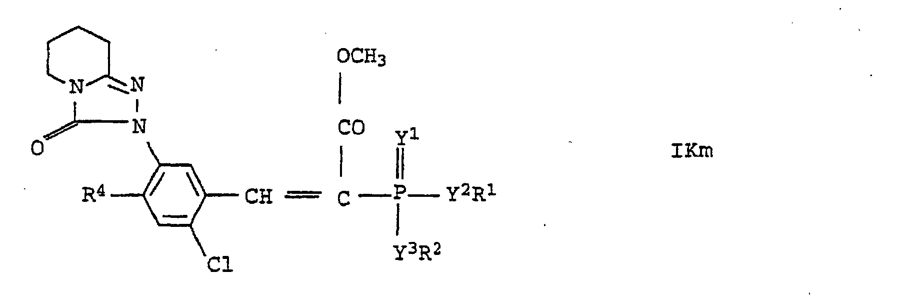
- die Verbindungen IKn.1 - IKn.1287, die sich von den entsprechenden Verbindungen IAa.1 - IAa.1287 lediglich dadurch unterscheiden, daß Eth für -C≡C- und R⁵ für den Heterocyclus Φ⁷ mit Y⁷ = Sauerstoff und R²³ und R²⁴ zusammen = Tetramethylen-Kette stehen: 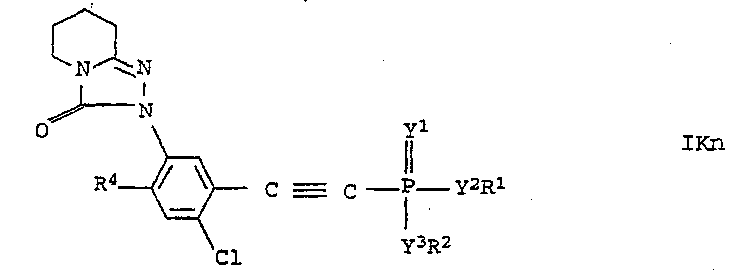
- die Verbindungen ILa.1 - ILa.1287, die sich von den entsprechenden Verbindungen IAa.1 - IAa.1287 lediglich dadurch unterscheiden, daß R⁵ für den Heterocyclus Φ²⁰ mit R⁵⁰ = Methyl, R⁵¹ = Trifluormethyl und R⁵² = Wasserstoff steht: 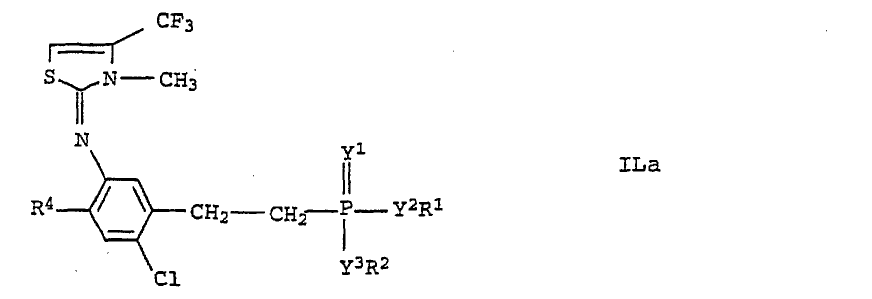
- die Verbindungen ILb.1 - ILb.1287, die sich von den entsprechenden Verbindungen IAa.1 - IAa.1287 lediglich dadurch unterscheiden, daß Eth für -CH₂-CH(Cl)- und R⁵ für den Heterocyclus Φ²⁰ mit R⁵⁰ = Methyl, R⁵¹ = Trifluormethyl und R⁵² = Wasserstoff stehen: 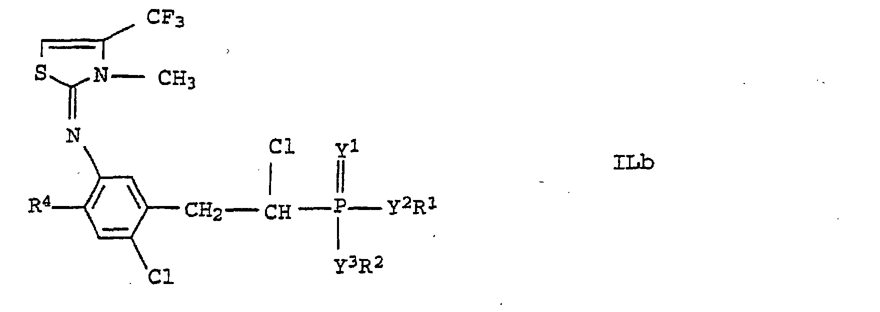
- die Verbindungen ILc.1 - ILc.1287, die sich von den entsprechenden Verbindungen IAa.1 - IAa.1287 lediglich dadurch unterscheiden, daß Eth für -CH₂-CH(Br)- und R⁵ für den Heterocyclus Φ²⁰ mit R⁵⁰ = Methyl, R⁵¹ = Trifluormethyl und R⁵² = Wasserstoff stehen: 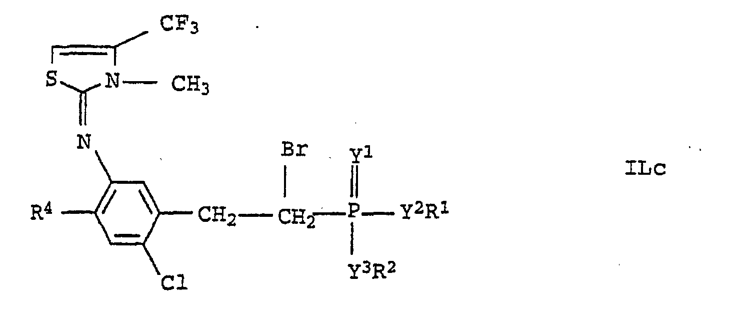
- die Verbindungen ILd.1 - ILd.1287, die sich von den entsprechenden Verbindungen IAa.1 - IAa.1287 lediglich dadurch unterscheiden, daß Eth für -CH₂-CH(CN)- und R⁵ für den Heterocyclus Φ²⁰ mit R⁵⁰ = Methyl, R⁵¹ = Trifluormethyl und R⁵² = Wasserstoff stehen: 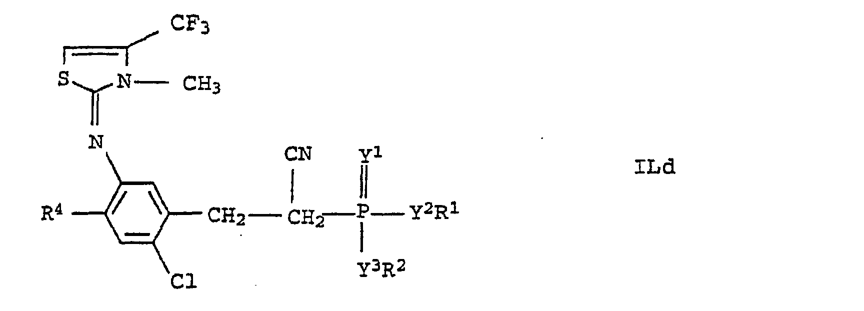
- die Verbindungen ILe.1 - ILe.1287, die sich von den entsprechenden Verbindungen IAa.1 - IAa.1287 lediglich dadurch unterscheiden, daß Eth für -CH₂-CH(CH₃)- und R⁵ für den Heterocyclus Φ²⁰ mit R⁵⁰ = Methyl, R⁵¹ = Trifluormethyl und R⁵² = Wasserstoff stehen: 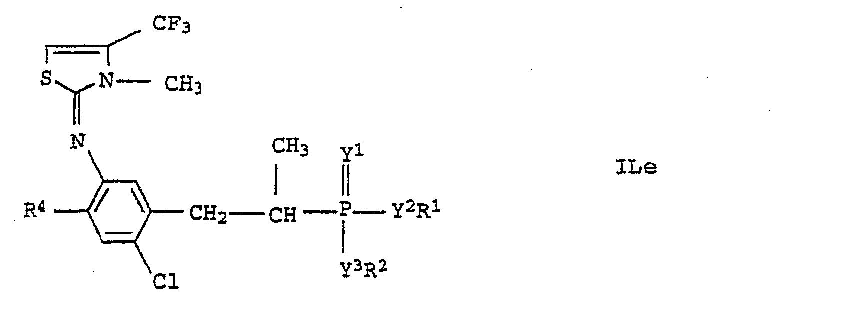
- die Verbindungen ILf.1 - ILf.1287, die sich von den entsprechenden Verbindungen IAa.1 - IAa.1287 lediglich dadurch unterscheiden, daß Eth für -CH₂-CH(COOCH₃)- und R⁵ für den Heterocyclus Φ²⁰ mit R⁵⁰ = Methyl, R⁵¹ = Trifluormethyl und R⁵² = Wasserstoff stehen: 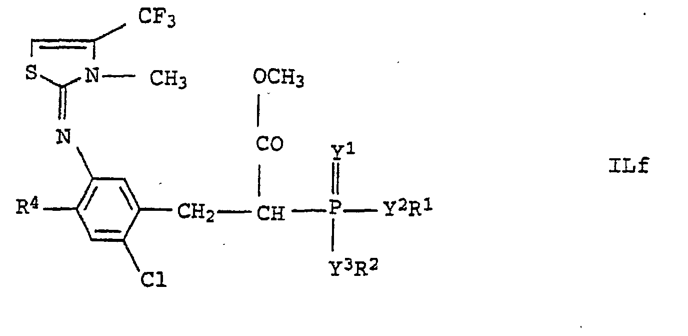
- die Verbindungen ILg.1 - ILg.1287, die sich von den entsprechenden Verbindungen IAa.1 - IAa.1287 lediglich dadurch unterscheiden, daß Eth für 1,2-Ethendiyl und R⁵ für den Heterocyclus Φ²⁰ mit R⁵⁰ = Methyl, R⁵¹ = Trifluormethyl und R⁵² = Wasserstoff stehen: 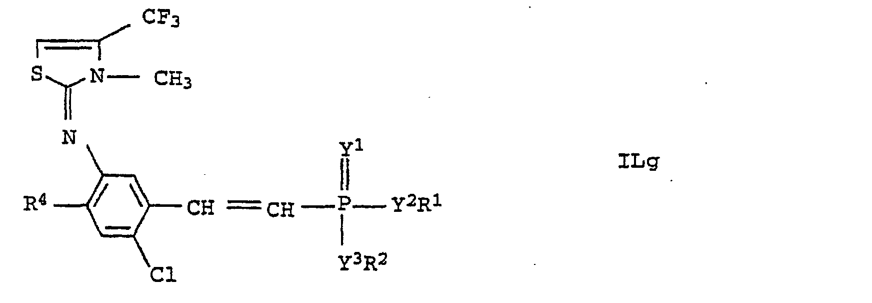
- die Verbindungen ILh.1 - ILh.1287, die sich von den entsprechenden Verbindungen IAa.1 - IAa.1287 lediglich dadurch unterscheiden, daß Eth für -CH=C(Cl)- und R⁵ für den Heterocyclus Φ²⁰ mit R⁵⁰ = Methyl, R⁵¹ = Trifluormethyl und R⁵² = Wasserstoff stehen: 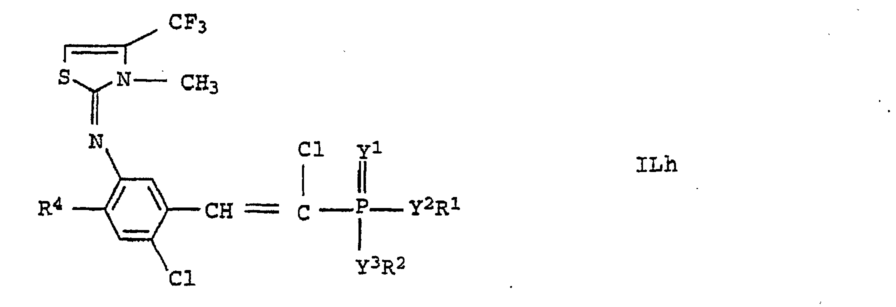
- die Verbindungen ILi.1 - ILi.1287, die sich von den entsprechenden Verbindungen IAa.1 - IAa.1287 lediglich dadurch unterscheiden, daß Eth für -CH=C(Br)- und R⁵ für den Heterocyclus Φ²⁰ mit R⁵⁰ = Methyl, R⁵¹ = Trifluormethyl und R⁵² = Wasserstoff stehen: 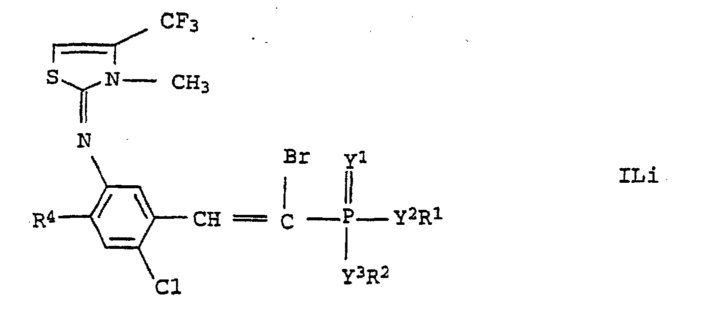
- die Verbindungen ILj.1 - ILj.1287, die sich von den entsprechenden Verbindungen IAa.1 - IAa.1287 lediglich dadurch unterscheiden, daß Eth für -CH=C(CN)- und R⁵ für den Heterocyclus Φ²⁰ mit R⁵⁰ = Methyl, R⁵¹ = Trifluormethyl und R⁵² = Wasserstoff stehen: 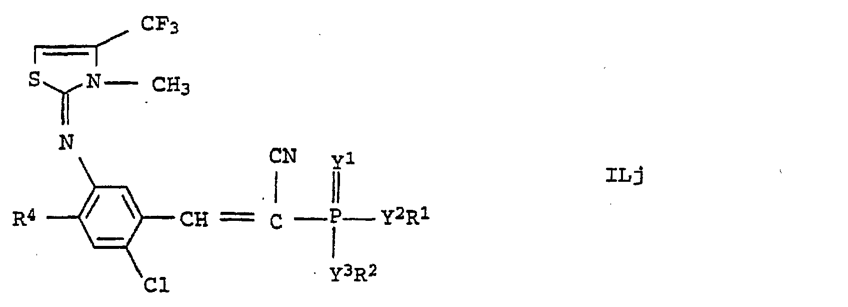
- die Verbindungen ILk.1 - ILk.1287, die sich von den entsprechenden Verbindungen IAa.1 - IAa.1287 lediglich dadurch unterscheiden, daß Eth für -CH=C(CH₃)- und R⁵ für den Heterocyclus Φ²⁰ mit R⁵⁰ = Methyl, R⁵¹ = Trifluormethyl und R⁵² = Wasserstoff stehen: 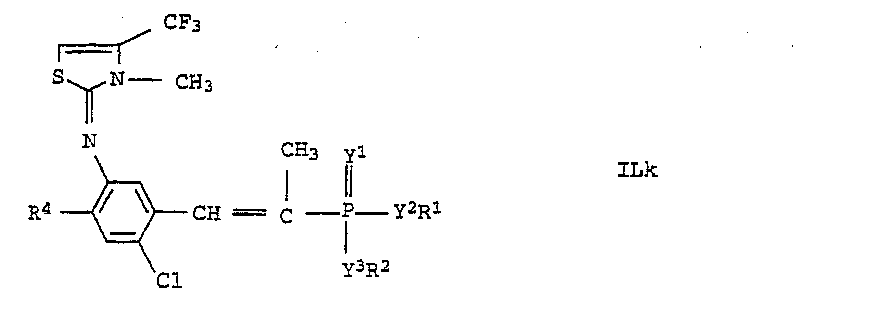
- die Verbindungen ILm.1 - ILm.1287, die sich von den entsprechenden Verbindungen IAa.1 - IAa.1287 lediglich dadurch unterscheiden, daß Eth für -CH=C(COOCH₃)- und R⁵ für den Heterocyclus Φ²⁰ mit R⁵⁰ = Methyl, R⁵¹ = Trifluormethyl und R⁵² = Wasserstoff stehen: 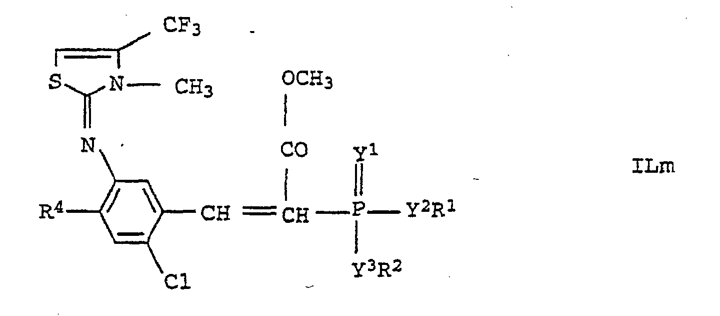
- die Verbindungen ILn.1 - ILn.1287, die sich von den entsprechenden Verbindungen IAa.1 - IAa.1287 lediglich dadurch unterscheiden, daß Eth für -C≡C- und R⁵ für den Heterocyclus Φ²⁰ mit R⁵⁰ = Methyl, R⁵¹ = Trifluormethyl und R⁵² = Wasserstoff stehen: 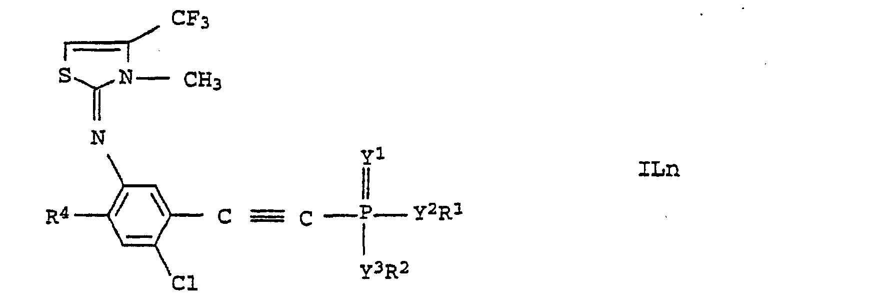
- die Verbindungen IMa.1 - IMa.1287, die sich von den entsprechenden Verbindungen IAa.1 - IA.1287 lediglich dadurch unterscheiden, daß R⁵ für den Heterocyclus Φ²¹ mit Z³ und Z⁴ = Stickstoff und R⁵³ und R⁵⁴ zusammen = Tetramethylen-Kette steht: 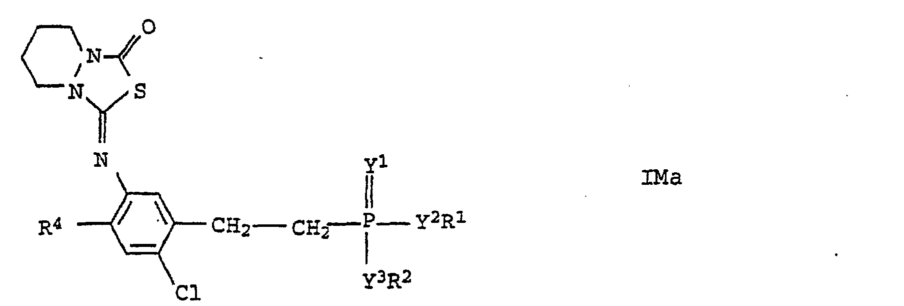
- die Verbindungen IMb.1 - IMb.1287, die sich von den entsprechenden Verbindungen IAa.1 - IAa.1287 lediglich dadurch unterscheiden, daß Eth für -CH₂-CH(Cl)- und R⁵ für den Heterocyclus Φ²¹ mit Z³ und Z⁴ = Stickstoff und R⁵³ und R⁵⁴ zusammen = Tetramethylen-Kette stehen: 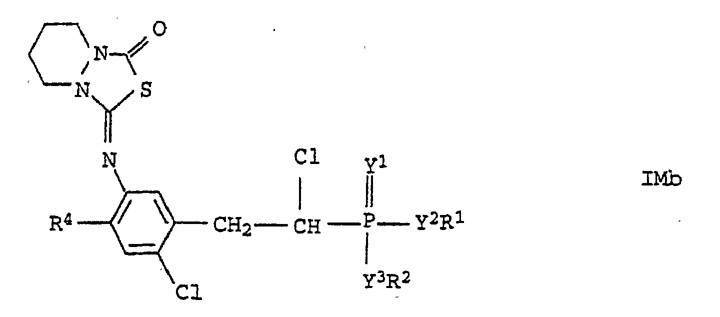
- die Verbindungen IMc.1 - IMc.1287, die sich von den entsprechenden Verbindungen IAa.1 - IAa.1287 lediglich dadurch unterscheiden, daß Eth für -CH₂-CH(Br)- und R⁵ für den Heterocyclus Φ²¹ mit Z³ und Z⁴ = Stickstoff und R⁵³ und R⁵⁴ zusammen = Tetramethylen-Kette stehen: 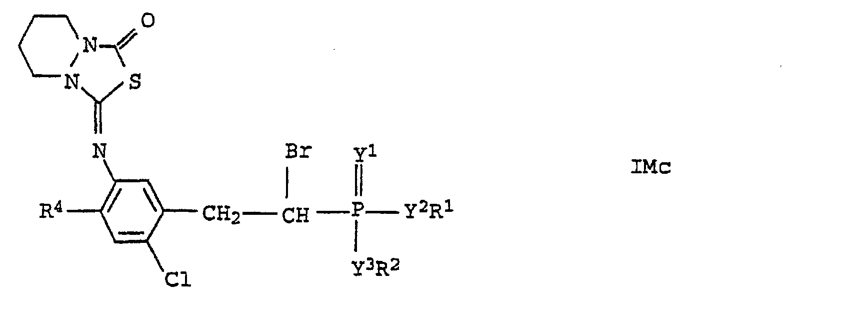
- die Verbindungen IMd.1 - IMd.1287, die sich von den entsprechenden Verbindungen IAa.1 - IAa.1287 lediglich dadurch unterscheiden, daß Eth für -CH₂-CH(CN)- und R⁵ für den Heterocyclus Φ²¹ mit Z³ und Z⁴ = Stickstoff und R⁵³ und R⁵⁴ zusammen = Tetramethylen-Kette stehen: 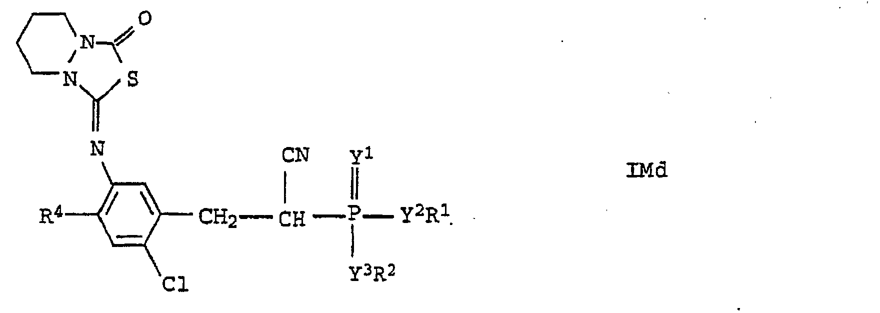
- die Verbindungen IMe.1 - IMe.1287, die sich von den entsprechenden Verbindungen IAa.1 - IAa.1287 lediglich dadurch unterscheiden, daß Eth für -CH₂-CH(CH₃)- und R⁵ für den Heterocyclus Φ²¹ mit Z³ und Z⁴ = Stickstoff und R⁵³ und R54 zusammen = Tetramethylen-Kette stehen: 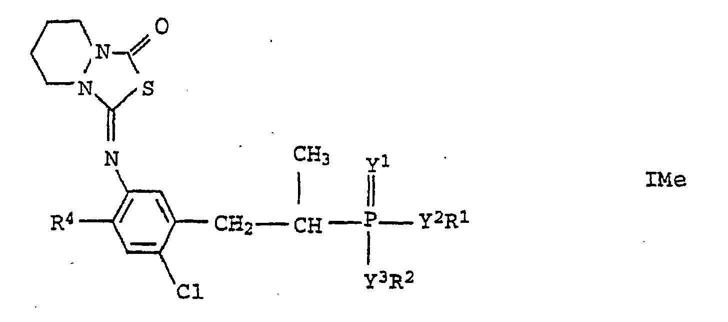
- die Verbindungen IMf.1 - IMf.1287, die sich von den entsprechenden Verbindungen IAa.1 - IAa.1287 lediglich dadurch unterscheiden, daß Eth für -CH₂-CH(COOCH₃)- und R⁵ für den Heterocyclus Φ²¹ mit Z³ und Z⁴ = Stickstoff und R⁵³ und R⁵⁴ zusammen = Tetramethylen-Kette stehen: 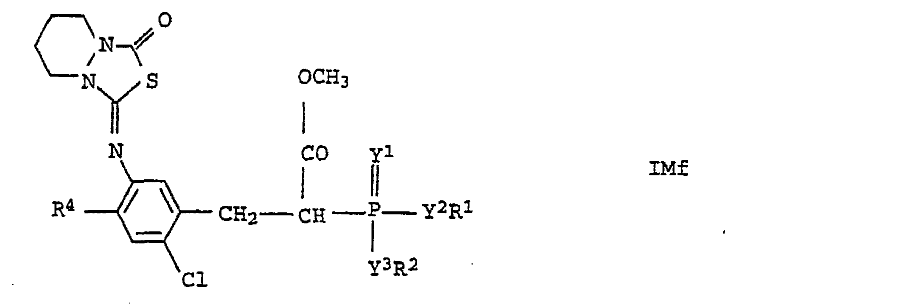
- die Verbindungen IMg.1 - IMg.1287, die sich von den entsprechenden Verbindungen IAa.1 - IAa.1287 lediglich dadurch unterscheiden, daß Eth für 1,2-Ethendiyl und R⁵ für den Heterocyclus Φ²¹ mit Z³ und Z⁴ = Stickstoff und R⁵³ und R⁵⁴ zusammen = Tetramethylen-Kette stehen: 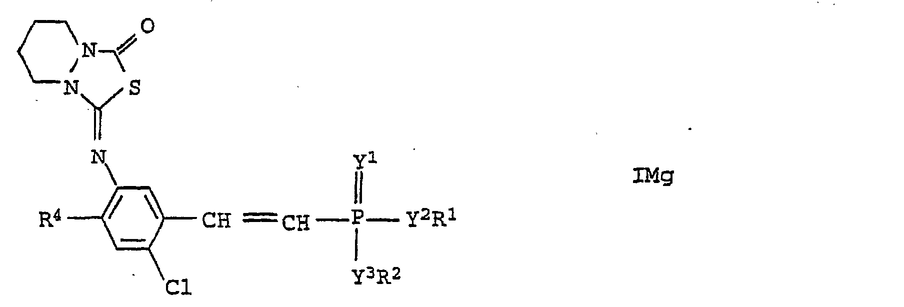
- die Verbindungen IMh.1 - IMh.1287, die sich von den entsprechenden Verbindungen IAa.1 - IAa.1287 lediglich dadurch unterscheiden, daß Eth für -CH=C(Cl)- und R⁵ für den Heterocyclus Φ²¹ mit Z³ und Z⁴ = Stickstoff und R⁵³ und R⁵⁴ zusammen = Tetramethylen-Kette stehen: 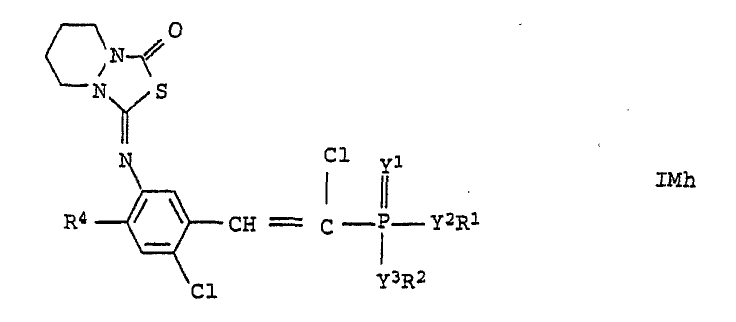
- die Verbindungen IMi.1 - IMi.1287, die sich von den entsprechenden Verbindungen IAa.1 - IAa.1287 lediglich dadurch unterscheiden, daß Eth für -CH=C(Br)- und R⁵ für den Heterocyclus Φ²¹ mit Z³ und Z⁴ = Stickstoff und R⁵³ und R⁵⁴ zusammen = Tetramethylen-Kette stehen: 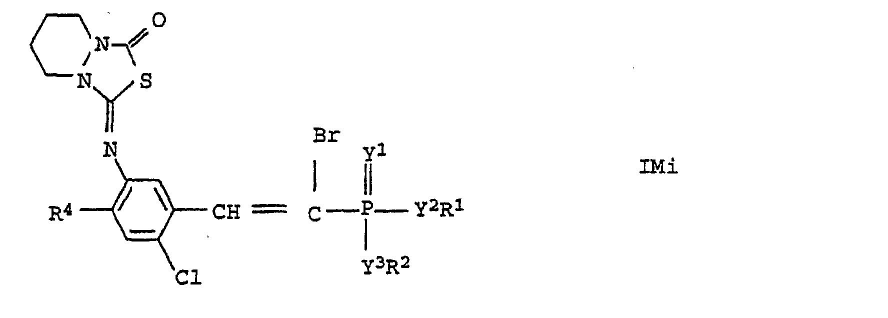
- die Verbindungen IMj.1 - IMj.1287, die sich von den entsprechenden Verbindungen IAa.1 - IAa.1287 lediglich dadurch unterscheiden, daß Eth für -CH=C(CN)- und R⁵ für den Heterocyclus Φ²¹ mit Z³ und Z⁴ = Stickstoff und R⁵³ und R⁵⁴ zusammen = Tetramethylen-Kette stehen: 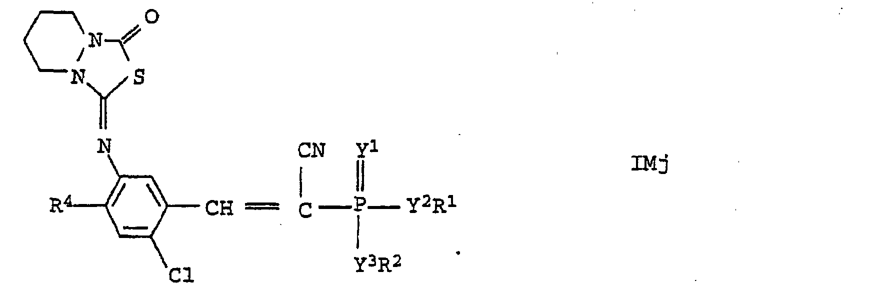
- die Verbindungen IMk.1 - IMk.1287, die sich von den entsprechenden Verbindungen IAa.1 - IAa.1287 lediglich dadurch unterscheiden, daß Eth für -CH=C(CH₃)- und R⁵ für den Heterocyclus Φ²¹ mit Z³ und Z⁴ = Stickstoff und R⁵³ und R⁵⁴ zusammen = Tetramethylen-Kette stehen: 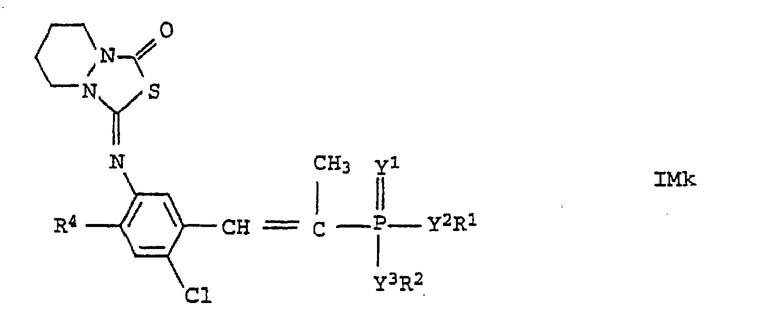
- die Verbindungen IMm.1 - IMm.1287, die sich von den entsprechenden Verbindungen IAa.1 - IAa.1287 lediglich dadurch unterscheiden, daß Eth für -CH=C(COOCH₃)- und R⁵ für den Heterocyclus Φ²¹ mit Z³ und Z⁴ = Stickstoff und R⁵³ und R⁵⁴ zusammen = Tetramethylen-Kette stehen: 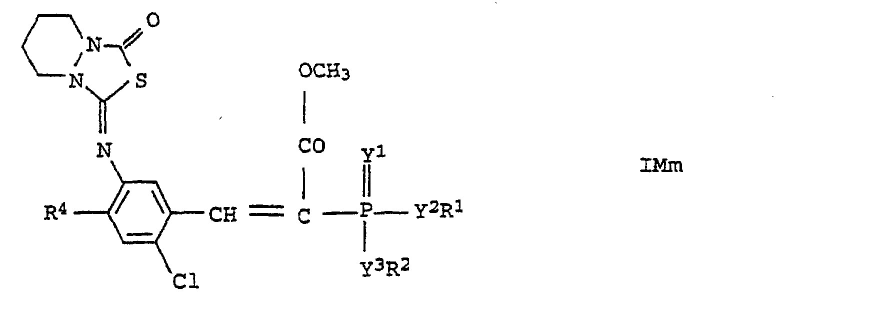
- die Verbindungen IMn.1 - IMn.1287, die sich von den entsprechenden Verbindungen IAa.1 - IAa.1287 lediglich dadurch unterscheiden, daß Eth für -C≡C- und R⁵ für den Heterocyclus Φ²¹ mit Z³ und Z⁴ = Stickstoff und R⁵³ und R⁵⁴ zusammen = Tetramethylen-Kette stehen: 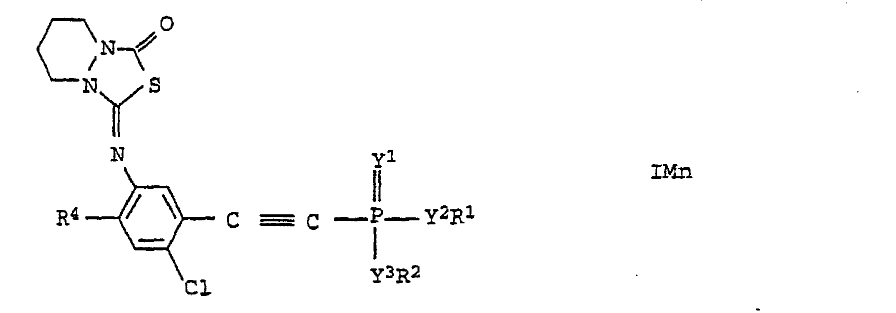
- die Verbindungen INa.1 - INa.1287, die sich von den entsprechenden Verbindungen IAa.1 - IAa.1287 lediglich dadurch unterscheiden, daß R⁵ für den Heterocyclus Φ²² mit R⁵⁵ und R⁵⁶ zusammen = 2,2-Dimethylpropan-1,3-diyl-Kette steht: 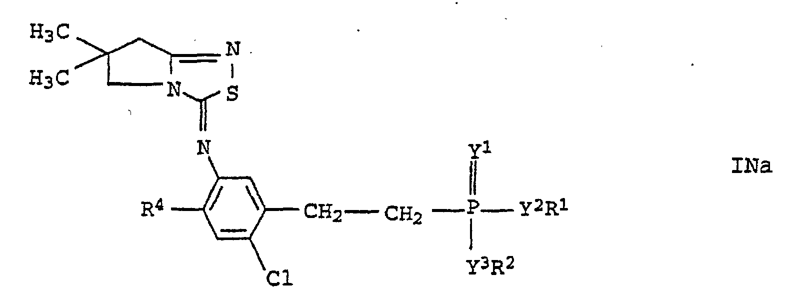
- die Verbindungen INb.1 - INb.1287, die sich von den entsprechenden Verbindungen IAa.1 - IAa.1287 lediglich dadurch unterscheiden, daß Eth für -CH₂-CH(Cl)- und R⁵ für den Heterocyclus Φ²² mit R⁵⁵ und R⁵⁶ zusammen = 2,2-Dimethylpropan-1,3-diyl-Kette stehen: 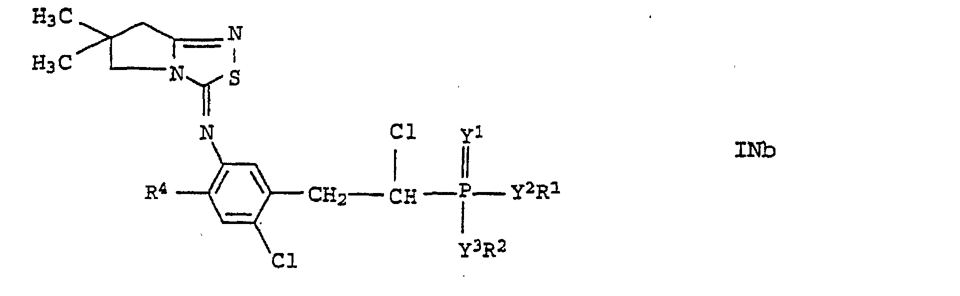
- die Verbindungen INc.1 - INc.1287, die sich von den entsprechenden Verbindungen IAa.1 - IAa.1287 lediglich dadurch unterscheiden, daß Eth für -CH₂-CH(Br)- und R⁵ für den Heterocyclus Φ²² mit R⁵⁵ und R⁵⁶ zusammen = 2,2-Dimethylpropan-1,3-diyl-Kette stehen: 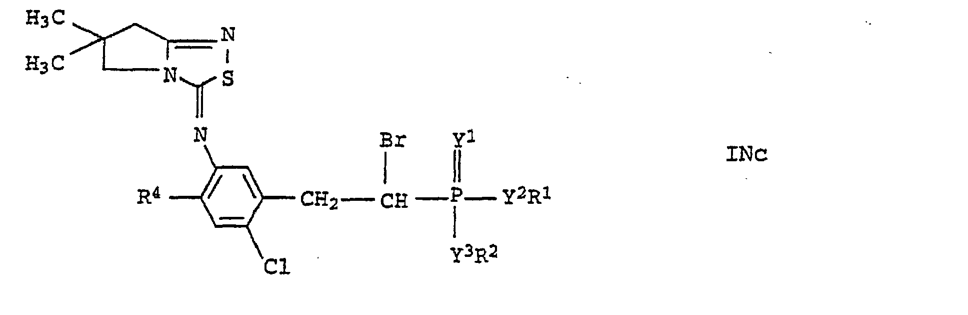
- die Verbindungen INd.1 - INd.1287, die sich von den entsprechenden Verbindungen IAa.1 - IAa.1287 lediglich dadurch unterscheiden, daß Eth für -CH₂-CH(CN)- und R⁵ für den Heterocyclus Φ²² mit R⁵⁵ und R⁵⁶ zusammen = 2,2-Dimethylpropan-1,3-diyl-Kette stehen: 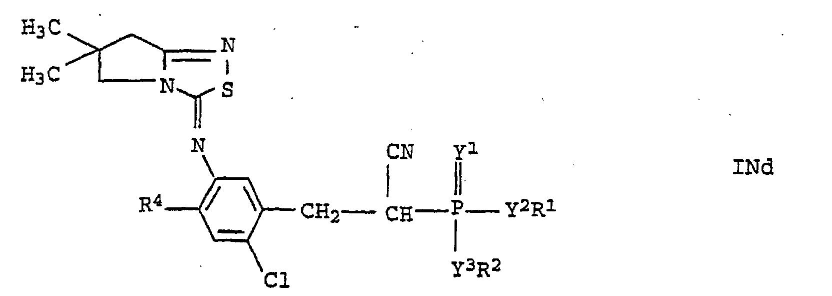
- die Verbindungen INe.1 - INe.1287, die sich von den entsprechenden Verbindungen IAa.1 - IAa.1287 lediglich dadurch unterscheiden, daß Eth für -CH₂-CH(CH₃)- und R⁵ für den Heterocyclus Φ²² mit R⁵⁵ und R⁵⁶ zusammen = 2,2-Dimethylpropan-1,3-diyl-Kette stehen: 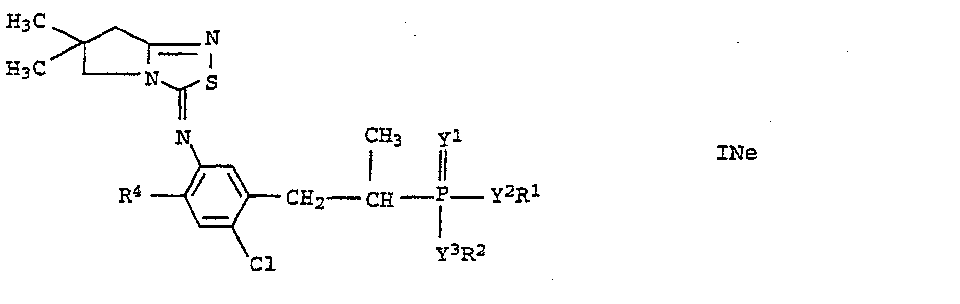
- die Verbindungen INf.1 - INf.1287, die sich von den entsprechenden Verbindungen IAa.1 - IAa.1287 lediglich dadurch unterscheiden, daß Eth für -CH₂-CH(COOCH₃)- und R⁵ für den Heterocyclus Φ²² mit R⁵⁵ und R⁵⁶ zusammen = 2,2-Dimethylpropan-1,3-diyl-Kette stehen: 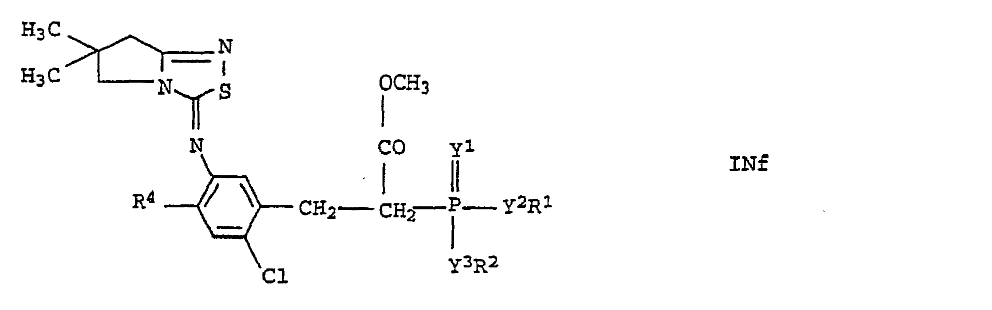
- die Verbindungen INg.1 - INg.1287, die sich von den entsprechenden Verbindungen IAa.1 - IAa.1287 lediglich dadurch unterscheiden, daß Eth für 1,2-Ethendiyl und R⁵ für den Heterocyclus Φ²² mit R⁵⁵ und R⁵⁶ zusammen = 2,2-Dimethylpropan-1,3-diyl-Kette stehen: 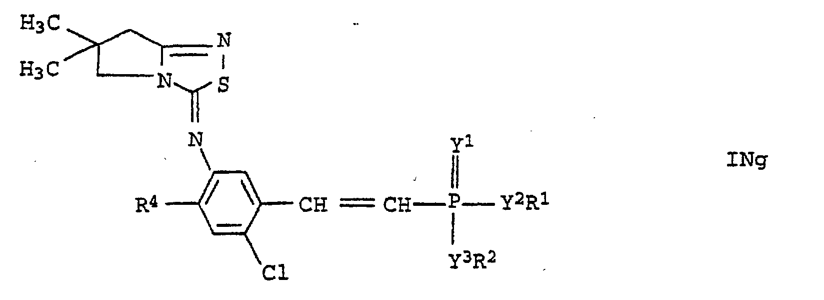
- die Verbindungen INh.1 - INh.1287, die sich von den entsprechenden Verbindungen IAa.1 - IAa.1287 lediglich dadurch unterscheiden, daß Eth für -CH=C(Cl)- und R⁵ für den Heterocyclus Φ²² mit R⁵⁵ und R⁵⁶ zusammen = 2,2-Dimethylpropan-1,3-diyl-Kette stehen: 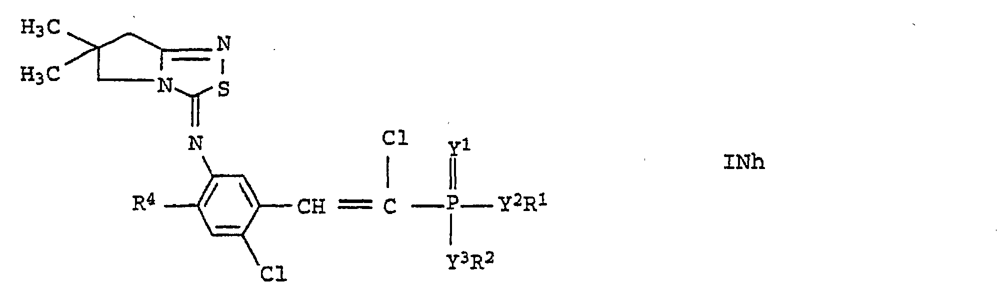
- die Verbindungen INi.1 - INi.1287, die sich von den entsprechenden Verbindungen IAa.1 - IAa.1287 lediglich dadurch unterscheiden, daß Eth für -CH=C(Br)- und R⁵ für den Heterocyclus Φ²² mit R⁵⁵ und R⁵⁶ zusammen = 2,2-Dimethylpropan-1,3-diyl-Kette stehen: 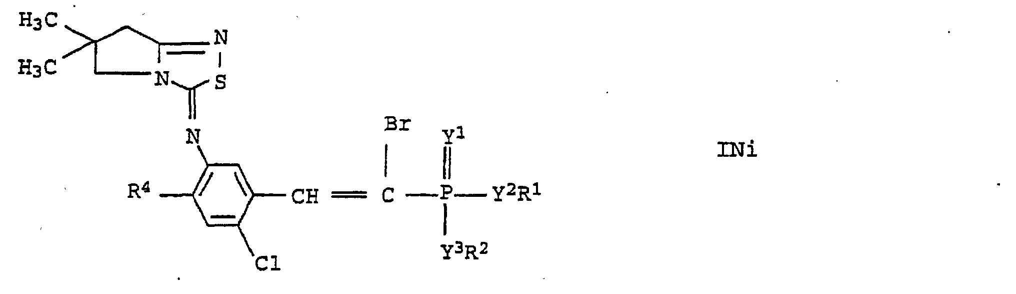
- die Verbindungen INj.1 - INJ.1287, die sich von den entsprechenden Verbindungen IAa.1 - IAa.1287 lediglich dadurch unterscheiden, daß Eth für -CH=C(CN)- und R⁵ für den Heterocyclus Φ²² mit R⁵⁵ und R⁵⁶ zusammen = 2,2-Dimethylpropan-l,3-diyl-Kette stehen: 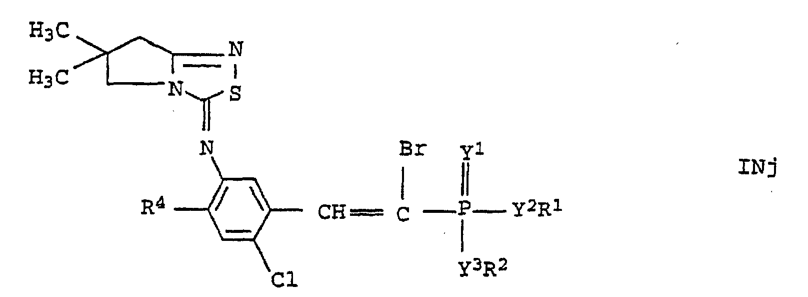
- die Verbindungen INk.1 - INk.1287, die sich von den entsprechenden Verbindungen IAa.1 - IAa.1287 lediglich dadurch unterscheiden, daß Eth für -CH=C(CH₃)- und R⁵ für den Heterocyclus Φ²² mit R⁵⁵ und R⁵⁶ zusammen = 2,2-Dimethylpropan-1,3-diyl-Kette stehen: 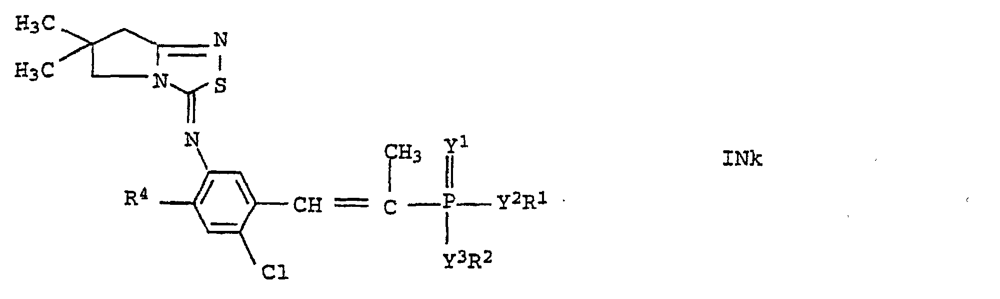
- die Verbindungen INm.1 - INm.1287, die sich von den entsprechenden Verbindungen IAa.1 - IAa.1287 lediglich dadurch unterscheiden, daß Eth für -CH=C(COOCH₃)- und R⁵ für den Heterocyclus Φ²² mit R⁵⁵ und R⁵⁶ zusammen = 2,2-Dimethylpropan-1,3-diyl-Kette stehen: 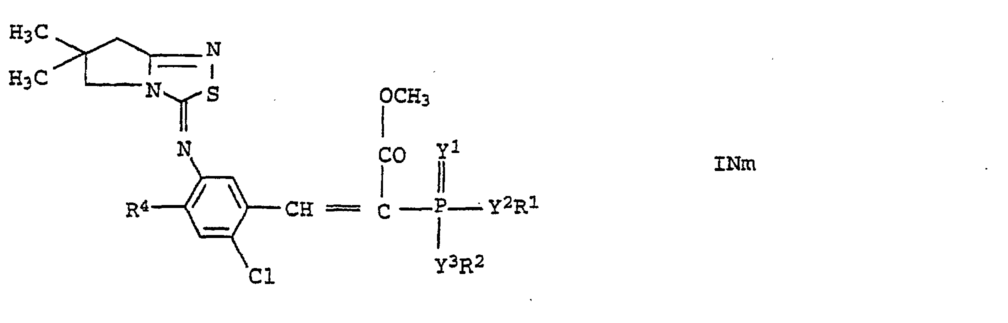
- die Verbindungen INn.1 - INn.1287, die sich von den entsprechenden Verbindungen IAa.1 - IAa.1287 lediglich dadurch unterscheiden, daß Eth für -C≡C- und R5 für den Heterocyclus Φ²² mit R⁵⁵ und R⁵⁶ zusammen = 2,2-Dimethylpropan-1,3-diyl-Kette stehen:

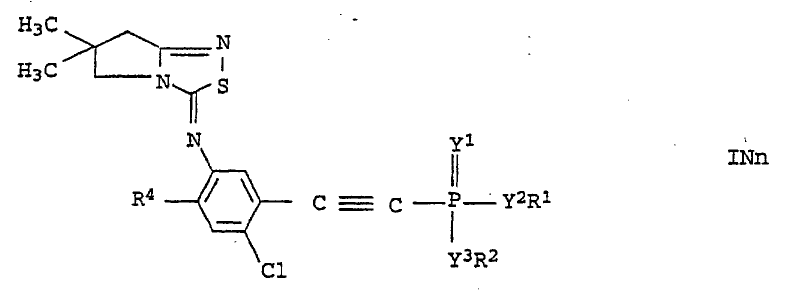

Die substituierten aromatischen Phosphonsäurederivate der Formel I sind auf verschiedene Weise erhältlich, insbesondere nach einem der folgenden Verfahren:
A) Verknüpfung der Phosphonylgruppe mit dem Aromaten
   A.1) durch Diazotierung von Anilinen II und Umsetzung der hierbei erhaltenen Diazoniumsalze mit Vinyl- oder Alkinylphosphonsäurederivaten III nach der Methode von Meerwein {vgl. z.B. Org. Reactions 11, chapter 3, pp. 189-260 (1960) und Kogyo Kagaku Zasshi 67(12), 2093-2095 (1964}: 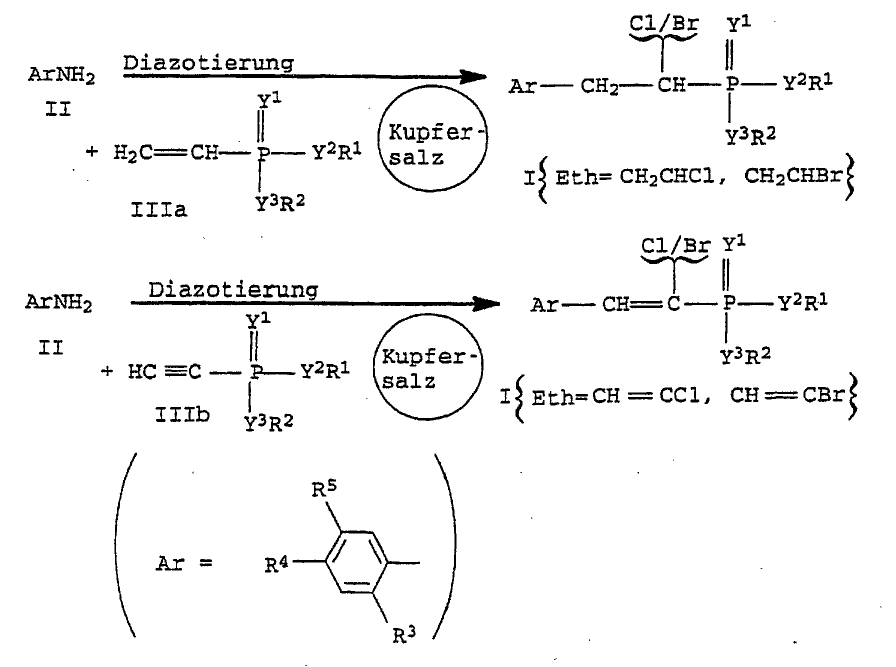 Bei dieser Methode überführt man das Anilin der Formel II, das entweder literaturbekannt oder in Analogie zu literaturbekannten Anilinen darstellbar ist, zunächst auf an sich bekannte Weise in das entsprechende Diazonium-Kation, welches dann mit IIIa oder IIIb in Gegenwart eines Kupfersalzes abreagiert.
      Das Diazoniumsalz erhält man im allgemeinen durch Umsetzung des Anilins II in einer wäßrigen Säurelösung, z.B. in wäßriger Flußsäure, Salzsäure, Bromwasserstoffsäure, Schwefelsäure oder Tetrafluorborsäure, mit einem Nitrit wie Natriumnitrit und Kaliumnitrit. Das Nitrit wird dabei normalerweise ca. äquimolar oder im Überschuß bis etwa zur fünffachen molaren Menge, bezogen auf die Menge an Anilin II, eingesetzt.
      Die so erhaltene Lösung des Diazoniumsalzes oder das hieraus isolierte Diazoniumsalz wird dann in Gegenwart eines Kupfersalzes wie Kupfer(I)bromid, Kupfer (II) bromid, Kupfer(I)chlorid und Kupfer(II)chlorid mit einer Lösung oder Suspension des Vinyl- oder Alkinylphosphonsäurederivats IIIa/IIIb zur Reaktion gebracht.
      Geeignete Lösungsmittel sind z. B. Wasser, Acetonitril, Ketone wie Aceton, Diethylketon und Methylethylketon, Ether wie Diethylether und Tetrahydrofuran, ferner Alkohole wie Methanol oder Ethanol.
      Üblicherweise verwendet man die Vinyl- oder Alkinylphosphonsäurederivate IIIa/IIIb sowie das Kupferhalogenid in ca. äquimolaren Mengen oder im Überschuß, bis etwa zur dreißigfachen molaren Menge, bezogen auf das Anilin II. Das Kupferhalogenid kann aber auch in geringerer bis katalytischer Menge eingesetzt werden.
      Diazotierung und Umsetzung des Diazoniumsalzes mit IIIa/IIIb erfolgen in der Regel bei einer Temperatur von (-100) bis 50°C, vorzugsweise (-20) bis +30°C.
      Eine Verfahrensvariante besteht darin, zu einer Lösung oder Suspension des Anilins II, des Vinyl- oder Alkinylphosphonsäurederivats IIIa/IIIb und des Kupferhalogenids in einem wasserfreien System, z.B. in Eisessig/Chlorwasserstoff, absolutem Methanol oder Ethanol, in einem Ether wie Tetrahydrofuran und Dioxan oder in Acetonitril oder Aceton, einem Salpetrigsäureester wie tert.-Butylnitrit und Isopentylnitrit zuzugeben. Bezüglich der Reaktionstemperatur und der Mengenverhältnisse der Reaktanden gelten dabei die oben gemachten Angaben.
   A.2) durch Heck-Reaktion (siehe z.B. A. Burini, S. Cacchi, P. Pace, B.R. Pietroni, Synlett 1995, 677): 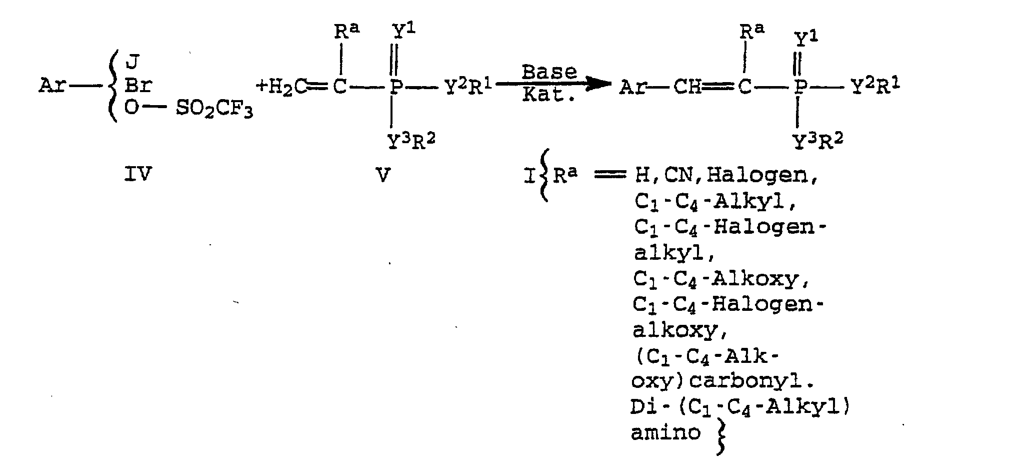 Bezüglich der Definition von Ar siehe Verfahren A.1); Kat. steht für einem Übergangsmetallkatalysator, vorzugsweise einer Palladium(II)verbindung wie Palladiumacetat.
      In der Regel erfolgt die Reaktionsführung in einem inerten organischen Lösungsmittel, insbesondere in Dimethylformamid oder Tetrahydrofuran.
      Geeignete Basen sind z.B. Carbonate wie Kaliumcarbonat, Acetate wie Natriumacetat und tertiäre Amine wie Triethylamin.
      Die Reaktionsführung erfolgt allgemein bei Temperaturen von 0°C bis zur Siedetemperatur des Reaktionsgemisches, vorzugsweise bei 50 bis 100°C.
   A.3) durch Knoevenagel-Kondensation von aromatischen Aldehyden VIa oder Ketonen VIb mit Phosphonsäurederivaten VII: 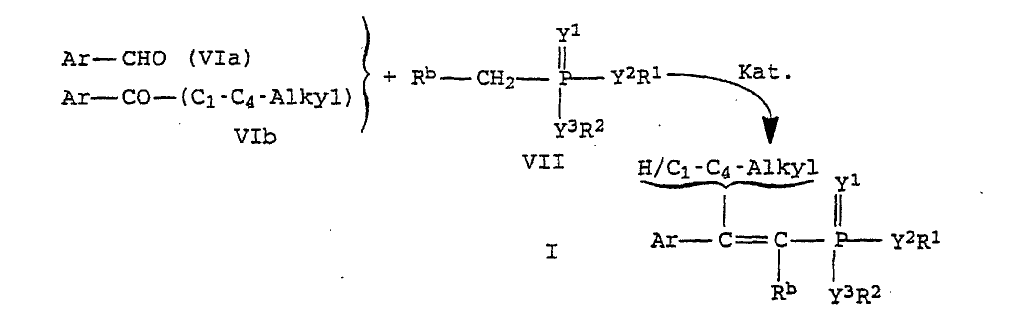 Bezüglich der Definition von Ar siehe Verfahren A.1) ;
      - R^{b}: steht für Cyano, C₁-C₄-Alkoxy oder (C₁-C₄-Alkoxy)carbonyl (VIIa = VII mit R^{b} = CN; VIIb = VII mit R^{b} = Alkoxy);
      - Kat.: steht für einen Katalysator, z.B. für Piperidin/Essigsäure, Natriummethanolat, Natriumethanolat, Titantetrachlorid/N-Methylmorpholin oder für Chlorotri(isopropoxy)-titan/Triethylamin.
      Üblicherweise arbeitet man in einem inerten organischen Lösungsmittel, z.B. in einem aromatischen Kohlenwasserstoff wie Toluol, einem niederen Alkohol wie Methanol und Ethanol oder in einem chlorierten Kohlenwasserstoff wie Dichlormethan.
      Die Reaktionstemperatur liegt allgemein bei 0°C bis zur Siedetemperatur des Reaktionsgemisches.
      Das bei der Reaktion freiwerdende Wasser kann gewünschtenfalls mittels azeotroper Destillation entfernt werden. Man arbeitet dann vorzugsweise in einem aromatischen Kohlenwasserstoff wie Benzol, Toluol und den Xylolen bei der jeweiligen Siedetemperatur des Reaktionsgemisches. {Siehe z.B. S. Abdallah-E1 Ayoubi, F. Texier-Boullet, J. Hamelin, Synthesis 1994, 258; D. Danion, R. Carrie, Tetrahdron Lett. 1968, 4537; F. Texier-Boullet, A. Foucaud, Tetrahedron Lett. 21 (1980) 2161; S. Patai, A. Schwartz, J. Org. Chem. 25 (1960), 1232; J.M. McIntosh, R.A. Sieler, Can. J. Chem. 56 (1978) 226; M.T. Reetz, R. Peter, M. v. Itzstein, Chem. Ber. 120 (1987) 121; K.A. Petrov, V.A. Chauzov, S.V. Agafonov, N.V. Pazhitnova, J. Gen. Chem. USSR 50 (1980) 1225}. Die aromatischen Aldehyde VIa oder Ketone VIb sind entweder bekannt oder auf an sich bekannte Weise herstellbar.
   A.4) durch Wittig-Horner-Olefinierung {vgl. z.B. B.M.G.T. Lowen, M.R. Almond, J. Org. Chem 59 (1994) 4548; P. Teulade, P. Savignac, E.E. Aboujaoude, S. Liétge, N. Collignon, J. Organomet. Chem. 304 (1986) 283; G.M. Parratt, J. Chem. Soc., Perkin Trans. 1 (1986), 1417; B. Costisella, I. Keitel H. Gross, Tetrahedron 37 (1981) 1227}: 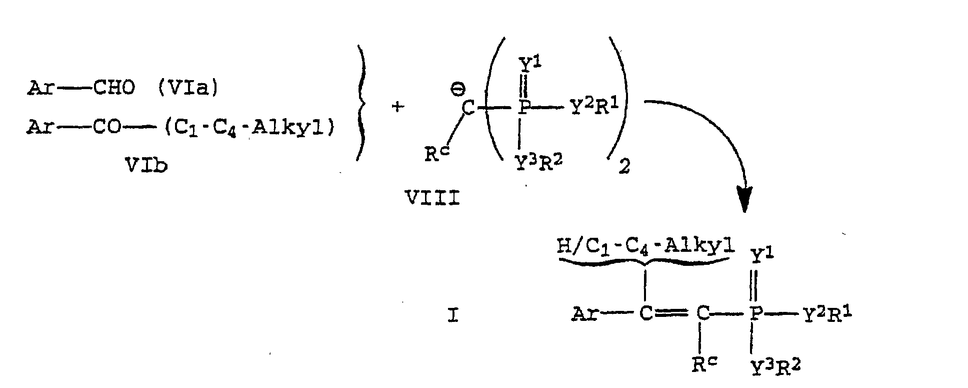 Bezüglich der Definition von Ar siehe Verfahren A.1);
      - R^{c}: steht für Wasserstoff, Halogen, C₁-C₄-Alkyl oder Di-(C₁-C₄-alkyl)amino (VIIIa = VIII mit R^{c} = H; VIIIb = VIII mit R^{c} = Halogen; VIIIc = VIII mit R^{c} = Alkyl).
      Üblicherweise arbeitet man in einem inerten organischen Lösungsmittel, z.B. in einem aromatischen Kohlenwasserstoff wie Toluol, einem halogenierten Kohlenwasserstoff wie Dichlormethan oder einem Ether wie Diethylether, Tetrahydrofuran, Dioxan und 1,2-Dimethoxyethan.
      Das Anion VIII ist beispielsweise durch Deprotonierung des entsprechenden Methandiphosphonsäurederivats mit einer starken Base wie Lithiumdiisopropylamid, Natriumhydrid und n-Butyllithium erhältlich.
      Im allgemeinen erfolgt die Reaktionsführung bei (-100)°C bis zur Siedetemperatur des Reaktionsgemisches, vorzugsweise bei (-78) bis +30°C.
   A.5) durch Wittig-Olefinierung {siehe hierzu z.B. GB-A 12 43 214}: 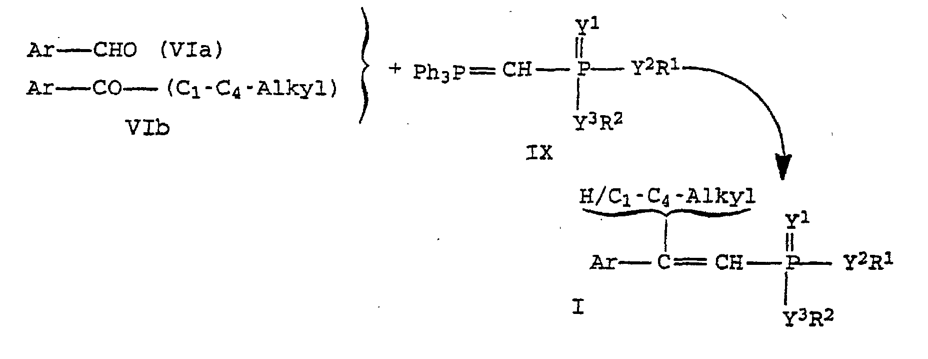 Bezüglich der Definition von Ar siehe Verfahren A.1); Ph steht für die Phenylgruppe.
      Üblicherweise arbeitet man in einem inerten organischen Lösungsmittel, z.B. in einem aromatischen Kohlenwasserstoff wie Toluol, einem halogenierten Kohlenwasserstoff wie Dichlormethan oder einem Ether wie Diethylether, Tetrahydrofuran, Dioxan und 1,2-Dimethoxyethan.
      Im allgemeinen erfolgt die Reaktionsfübrung bei (-100)°C bis zur Siedetemperatur des Reaktionsgemisches, vorzugsweise bei 20 bis 60°C.
      durch Peterson-Olefinierung {siehe hierzu z.B. O.I. Kolodyazhnyi, D.B. Golokhov, J. Gen. Chem. USSR 57 (1987) 2353; F.A. Carey, A.S. Court, J. Org. Chem. 37 (1972) 939}: 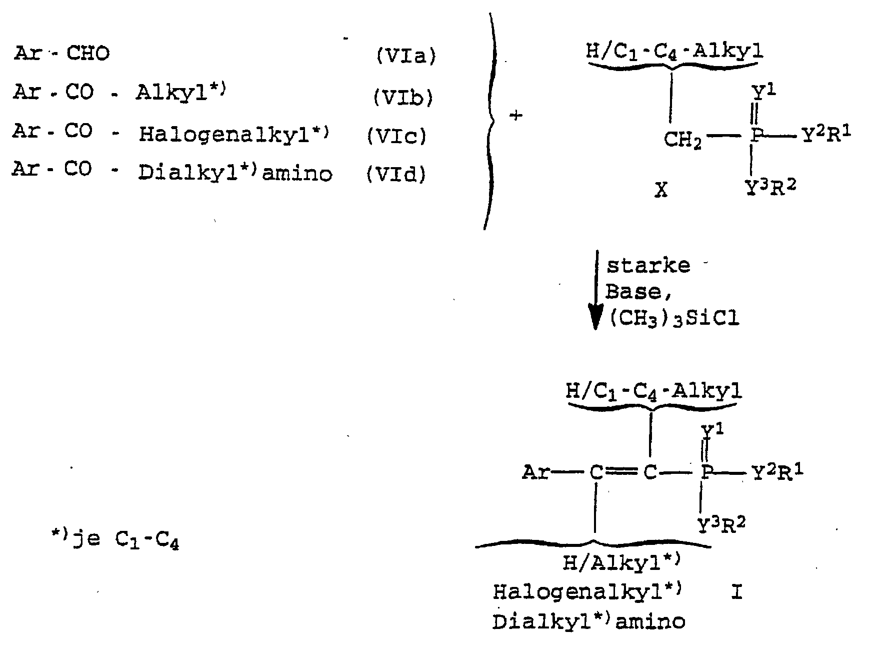 Üblicherweise arbeitet man in einem inerten organischen Lösungsmittel, z.B. in einem aromatischen Kohlenwasserstoff wie Toluol oder einem Ether wie Diethylether, Tetrahydrofuran, Dioxan und 1,2-Dimethoxyethan.
      Geeignete starke Basen sind z.B. Lithiumdiisopropylamid, Natriumhydrid oder Butyllithium.
      Im allgemeinen erfolgt die Reaktionsführung bei (-100)°C bis zur Siedetemperatur des Reaktionsgemisches, vorzugsweise bei (-70) bis +30°C.
      Vorzugsweise setzt man zunächst X in Gegenwart einer starken Base mit Chlortrimethylsilan um und versetzt erst dann das Reaktionsprodukt mit einer Verbindung VIa bis VId. In der Regel verwendet man dabei die Base im Überschuß, etwa die 2- bis 5fache - insbesondere eine ca. 2fache - molare Menge, bezogen auf die Menge an X. Chlortrimethylsilan wird zweckmäßig in etwa äquimolarer Menge, bezogen auf die Menge an X, eingesetzt.
      Die aromatischen Aldehyde VIa, Ketone VIb und VIc sowie die N,N-Dialkylbenzamide VId sind entweder bekannt oder auf an sich bekannte Weise herstellbar.
   A.7) durch Kupplung eines Styrylhalogenids XI mit einem Trialkylphosphit XII oder einem Dialkylphosphit XIII {vgl. hierzu z.B. R.S. Gross, S. Mehdi, J.R. McCarthy, Tetrahedron Lett. 34 (1993) 7197; G. Axelrad, S. Laosooksathit, R. Engel, J. Org. Chem. 46 (1981) 5200}: 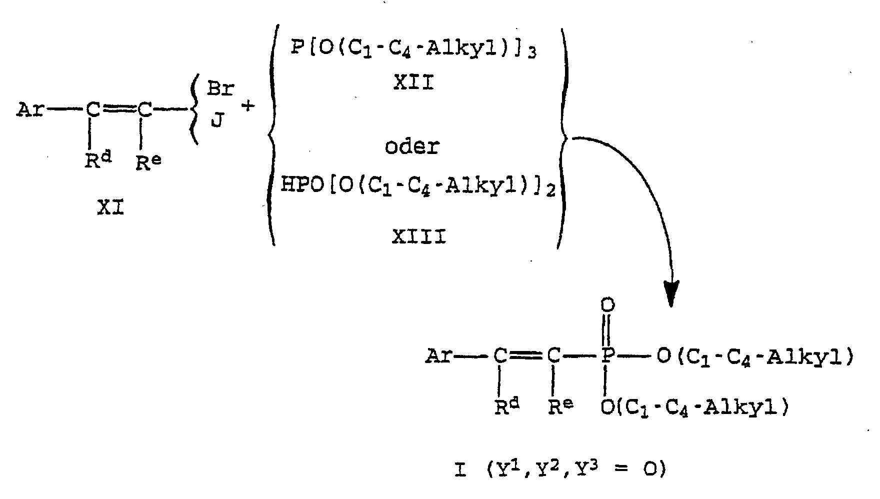 Bezüglich der Definition von Ar siehe Verfahren A.1) ; R^{d},R^{e} stehen für Wasserstoff, Halogen oder C₁-C₄-Alkyl.
      Üblicherweise arbeitet man in einem inerten organischen Lösungsmittel, vorzugsweise in einem aromatischen Kohlenwasserstoff wie Toluol oder einem Ether wie Tetrahydrofuran.
      Bei der Umsetzung von XI mit einem Trialkylphosphit XII arbeitet man vorteilhaft in Gegenwart von Kupfer(I)bromid oder -chlorid.
      Bei der Umsetzung von XI mit einem Dialkylphosphit XIII arbeitet man vorteilhaft in Gegenwart eines Übergangsmetallkatalysators, vorzugsweise einer Palladium(II)verbindung wie Dichlorobis(triphenylphosphin)palladium, und gewünschtenfalls in Gegenwart einer Base, z.B. Triethylamin.
      Im allgemeinen erfolgt die Reaktionsführung bei (-100)°C bis zur Siedetemperatur des Reaktionsgemisches, vorzugsweise bei ca. +25°C.
      Die Styrylhalogenide XI sowie die Phosphorverbindungen XII und XIII sind entweder bekannt oder auf an sich bekannte Weise herstellbar..
   A.8) durch Reaktion eines Phenylacetylens XIV
      - mit einem Trialkylphosphit XII oder
      - nacheinander mit Phosphorpentachlorid und einem Alkohol, Mercaptan oder Amin (HY²R¹/HY³R²) in Gegenwart einer Base
      {vgl. hierzu z.B. C.E. Griffin, T.D. Mitchell, J. Org. Chem. 30 (1965) 1935; A. Meisters, J.M. Swan, Aust. J. Chem. 18 (1965) 155; L. Maier, Synth. Inorg. Met. Org. Chem. 3 (1973) 329; A.A. Petrov, J. Gen. Chem. USSR 41 (1971) 1670}: 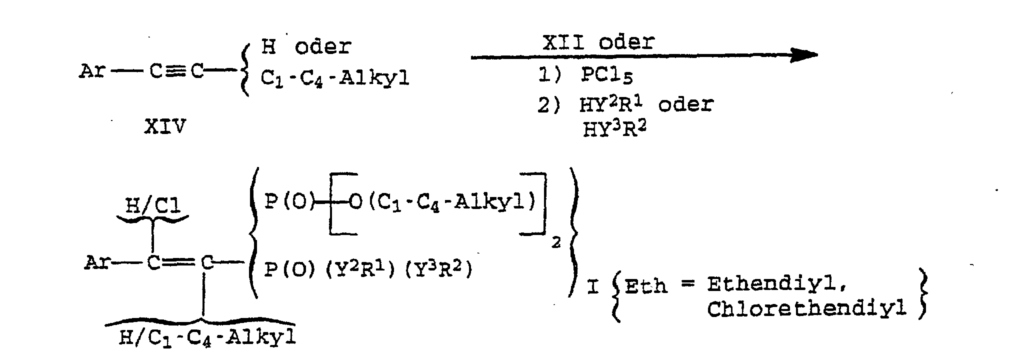 Bezüglich der Definition von Ar siehe Verfahren A.1).
      Die Umsetzung von XIV mit XII erfolgt vorzugsweise lösungsmittelfrei bei Temperaturen von 20°C bis Siedetemperatur des Trialkylphosphits XII, insbesondere bei der Siedetemperatur des Reaktionsgemisches.
      Geeignete Basen bei der Umsetzung des Phenylacetylens XIV mit PCl₅ und (HY²R¹/HY³R²) sind insbesondere tertiäre Amine wie Pyridin und Triethylamin.
      Die Umsetzung von XIV mit PCl₅ erfolgt vorzugsweise bei 50 bis 200°C, die anschließende Reaktion mit (HY²R¹/HY³R²) dagegen bei einer Reaktionstemperatur von (-100)°C bis Siedetemperatur des Reaktionsgemisches.
      Die Phenylacetylene XIV sowie die Alkohole, Mercaptane und Amine (HY²R¹/HY³R²) sind bekannt oder auf an sich bekannte Weise herstellbar.
   A.9) durch Umsetzung von Benzylidentriphenylphosphoranen XV mit einem Perfluoralkancarbonsäureanhydrid und anschließend mit einem Lithiumdialkylphosphit auf an sich bekannte Weise {vgl. hierzu z.B. Y. Shen, Q. Liao, W. Qiu, J. Chem. Soc., Perkin Trans 1, 695 (1990)}: 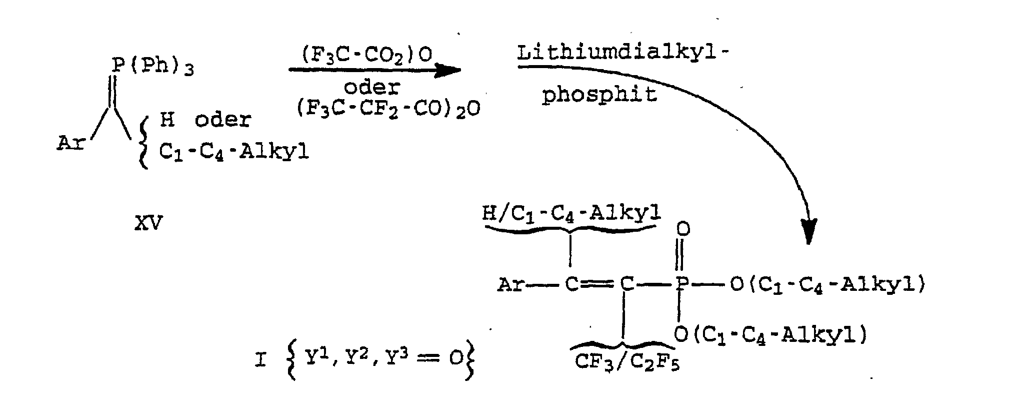 Bezüglich der Definition von Ar siehe Verfahren A.1); Ph steht für die Phenylgruppe.
      Als Lösungs-/Verdünnungsmittel für XV eignen sich insbesondere aromatische Kohlenwasserstoffe wie Toluol und Ether wie Tetrahydrofuran.
      Die Umsetzung kann allgemein bei (-100)°C bis Siedetemperatur des Reaktionsgemisches, vorzugsweise bei (-7B) bis +25°C, vorgenommen werden.
      Die Benzylidentriphenylphosphorane XV sind bekannt oder auf an sich bekannte Weise herstellbar.
   A.10) durch Alkylierung eines Phosphonsäurederivates XVI auf an sich bekannte Weise mit einem 3-Pyridylbenzylhalogenid XVII, in Gegenwart einer starken Base {vgl. hierzu z.B. G.M. Blackburn, M.J. Parratt, J. Chem. Soc., Perkin Trans 1, 1425 (1986); G.M. Kosolapoff, J.S. Powell, J. Am. Chem. Soc. 72 (1950) 4198; R.M. Keenan et al., J. Med. Chem. 35 (1992) 3858; H. Ahlbrecht, W. Farnung, Synthesis, 336 (1977); E. D'Incan, J. Seyden-Penne, Synthesis, 516 (1975); S. Hanessian, Y.L. Bennani, D. Delorme, Tetrahedron Lett. 31 (1990) 6461}: 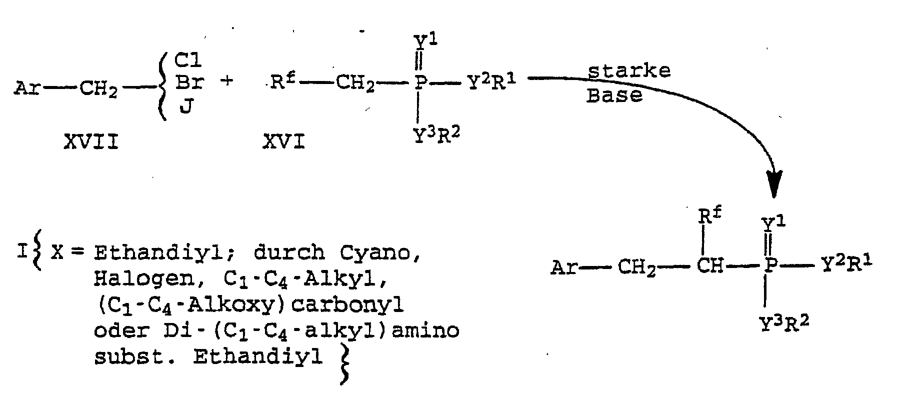 Bezüglich der Definition von Ar siehe Verfahren A.1:
      - R^{f}: steht für Wasserstoff, Cyano, Halogen, C₁-C₄-Alkyl, (C₁-C₄-Alkoxy)carbonyl oder Di-(C₁-C₄-alkyl)amino (XVIa = XVI mit R^{f} = CN; XVIb = XVI mit R^{f} = Alkyl).
      Geeignete starken Base sind z.B. Natriumhydroxid, Butyllithium und Lithiumdiisopropylamid.
      Üblicherweise arbeitet man in einem inerten organischen Lösungsmittel, vorzugsweise in einem aromatischen Kohlenwasserstoff wie Toluol oder einem cyclischen Ether wie Tetrahydrofuran.
      Allgemein arbeitet man bei Temperaturen von (-100)°C bis zum Siedepunkt des Reaktionsgemisches, vorzugsweise von (-78)°C bis 25°C.
      Die Phosphonsäurederivate XVI sowie die Benzylhalogenide XVII sind bekannt oder auf an sich bekannte Weise herstellbar.
   A.11) durch Umsetzung von Phenylacetaldehyden XVIII mit Dialkylphosphiten XIII, gewünschtenfalls in Gegenwart von Ammoniak oder einem primären oder sekundären Amin {vgl. hierzu z.B. M.E. Chalmers, G.M. Kosolapoff, J. Am. Chem. Soc. 75 (1953) 5278; C. Li, C. Yuan, Tetrahedron Lett. 34 (1993) 1515}: 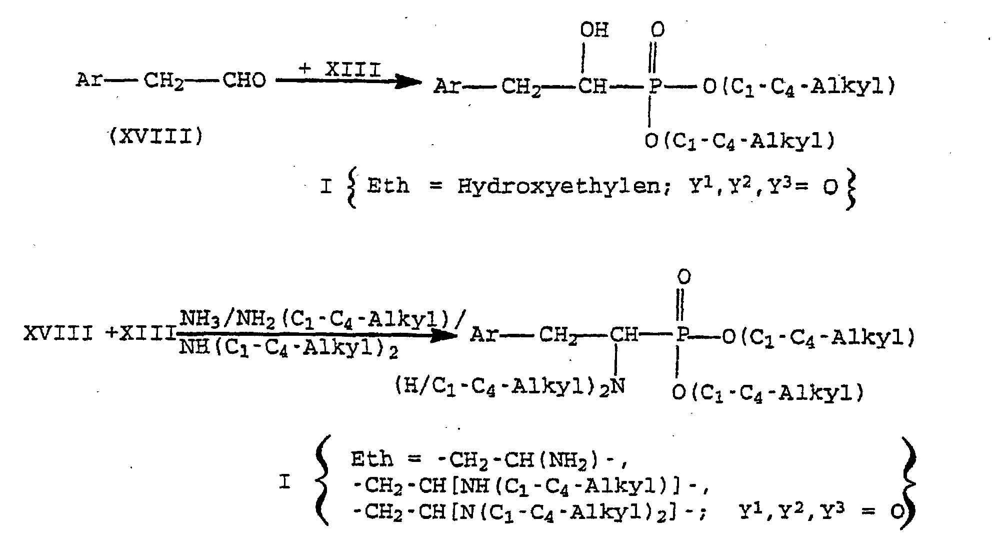 Bezüglich der Definition von Ar siehe Verfahren A.1).
      Als Lösungsmittel eignen sich beispielsweise Wasser, die niederen Alkohole wie Methanol, Ether wie Tetrahydrofuran und Diethylether sowie Pyridin.
      Allgemein arbeitet man bei Temperaturen von (-100)°C bis zum Siedepunkt des Reaktionsgemisches, vorzugsweise von 20 bis 50°C,
      Die Phenylacetaldehyde XVIII sind bekannt oder auf an sich bekannte Weise herstellbar.
   A.12) durch Umsetzung von Alkylhalogeniden XIX mit Trialkylphosphiten XII auf an sich bekannte Weise nach der Methode von Arbuzov {siehe hierzu z.B. A.Y. Garner, E.C. Chapin, P.M. Scanlon, J. Org. Chem. 24 (1959) 532}: 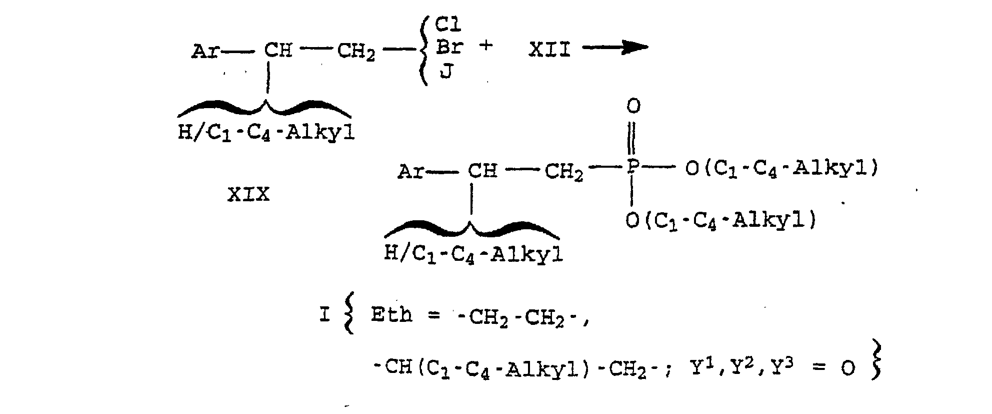 Bezüglich der Definition von Ar siehe Verfahren A.1).
      Die Umsetzung erfolgt vorzugsweise lösungsmittelfrei, wobei Reaktionstemperaturen von 0°C bis zum Siedepunkt des Trialkylphosphits XII, vorzugsweise von 20 bis 150°C, in Betracht kommen.
      Die Alkylhalogenide XIX sind bekannt oder auf an sich bekannte Weise herstellbar.
   A.13) durch Umsetzung eines Aldehyds VIa mit einem Trichlormethanphosphonsäurederivat XXVI in Gegenwart einer Alkyllithiumverbindung XXVII 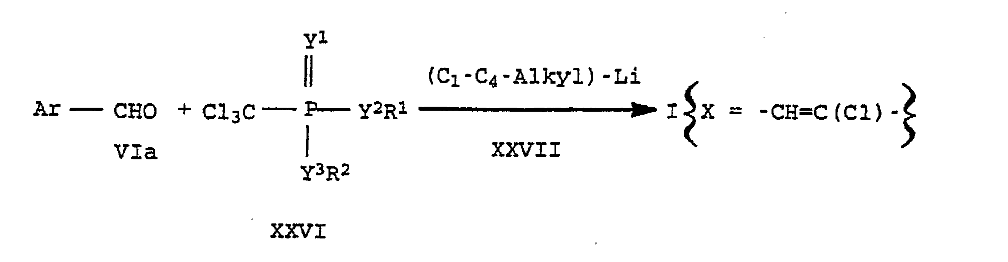 Bezüglich der Definition von Ar siehe Verfahren A.1).
      Üblicherweise wird zunächst das Trichlormethanphosphonsäurederivat XXVI mit der Alkyllithiumverbindung XXVII in einem inerten organischen Lösungsmittel, z.B. einem Ether wie Tetrahydrofuran oder einem Kohlenwasserstoff wie n-Hexan, umgesetzt. Dabei arbeitet man allgemein zwischen Schmelz- und Siedepunkt des Reaktionsgemisches, vorzugsweise bei (-80) bis (-50)°C.
      Danach wird das Reaktionsprodukt - vorzugsweise ohne vorherige Aufarbeitung - mit dem Aldehyd VIa umgesetzt, wobei die Reaktionstemperatur vorzugsweise auf ca. +20°C erhöht wird.
B) Derivatisierung von substituierten aromatischen Phosphorsäurederivaten der Formel I:
   Bezüglich der Reaktionsdurchführung und den Mengenverhältnissen der Reaktanden sei z.B. auf Houben-Weyl, Methoden der Organischen Chemie, Georg Thieme Verlag, Stuttgart, Bd. 12/1, 4. Auflage 1963, S. 387ff., 407ff. und 557ff.; Bd. E2 1982, S. 300ff. und 419ff. verwiesen.
   B.1) Hydrierung von substituierten aromatischen Phosphonsäurederivaten I, bei denen Eth für Ethen-1,2-diyl oder eine durch Halogen substituierte Ethan-1,2-diylbrücke steht {vgl. z.B. C.N. Robinson, P.K. Li. J.F. Addison, J. Org. Chem. 37 (1972) 2939; G.T. Lowen, M.R. Almond, J. Org. Chem. 59 (1994) 4548}: 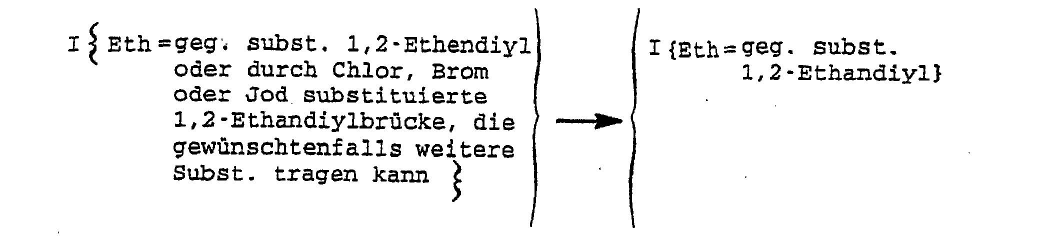 Bezüglich der Definition von Ar siehe Verfahren A.1).
      Die Hydrierung erfolgt entweder mit Wasserstoff in Gegenwart eines hierfür üblichen Katalysators wie Palladium oder Platin auf Aktivkohle oder Raney-Nickel bei 0 bis 150°C und ca. 1 bis 200 bar Wasserstoffdruck, oder mit einem Metallhydrid wie Natriumborhydrid und Lithiumaluminiumhydrid, bei Temperaturen von 0°C bis zum Siedepunkt des Reaktionsgemisches.
      Für die Hydrierung mit Wasserstoff geeignete Lösungsmittel sind beispielsweise Wasser, die niederen Alkohole wie Methanol und Ethanol, Ether wie Diethylether und Tetrahydrofuran oder Ester wie Ethylacetat.
      Bei der Umsetzung der Ausgangsverbindung mit einem Metallhydrid arbeitet man vorzugsweise in einem inerten organischen Lösungsmittel, insbesondere einem Ether wie Diethylether und Tetrahydrofuran.
   B.2) Hydrolyse von substituierten aromatischen Phosphonsäurederivaten I, Überführung der Verfahrensprodukte in Phosphonylhalogenide und deren Umsetzung mit Nucleophilen: 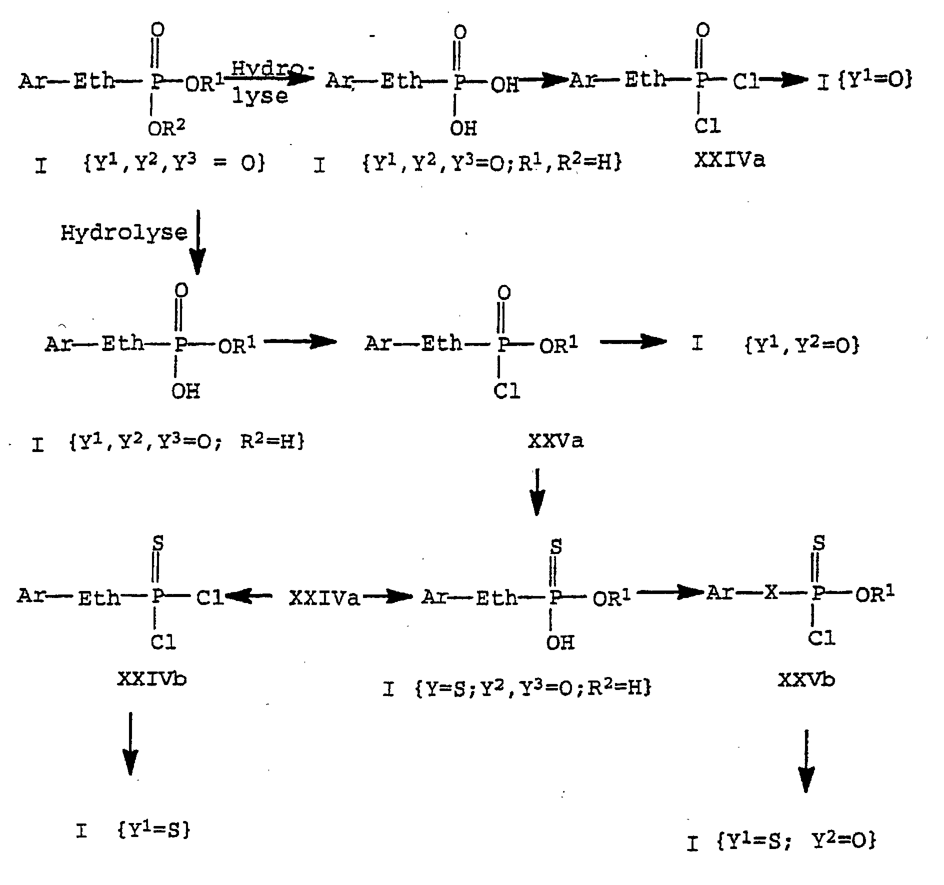 Bezüglich der Definition von Ar siehe Verfahren A.1).
      Bei diesem Verfahren werden die substituierten aromatischen Phosphonsäurederivate I zunächst hydrolytisch (sauer oder basisch) oder, falls R¹ und/oder R² ein Benzyl- oder Allylrest ist, auch hydrogenolytisch zu Phosphonsäuren und Phosphonsäurehalbestern I gespalten. Die Spaltung kann gewünschtenfalls auch durch Umsetzung mit einem Tri-(C₁-C₄-alkyl)silylhalogenid wie Chlortrimethylsilan, Iodtrimethylsilan oder einem Gemisch aus Chlortrimethylsilan und Alkalimetalliodid erfolgen.
      Die Spaltprodukte können dann durch Reaktion mit einem Halogenierungsmittel wie Oxalylchlorid, Thionylchlorid und Phosphorpentachlorid in die entsprechenden Phosphonylmonooder -dichloride XXIVa und XXVa übergeführt werden.
      Die Phosphonyldichloride XXIVa können gewünschtenfalls in an sich bekannter Weise mit einem Schwefelungsmittel wie Phosphor (V) sulfid und 2,4-Bis(4-methoxyphenyl)-1,3,2,4-dithiadiphosphetan-2,4-dithion ("Lawesson-Reagenz") zu Thionophosphonyldichloriden XXIVb geschwefelt werden. Bezüglich brauchbarer Lösungsmittel, Temperatur und Mengenverhältnissen sei auf die Ausführungen in der DE-A 19 504 188 unter Verfahren D) verwiesen.
      Durch Reaktion von XXIV und XXV mit Nucleophilen HY²R¹ oder HY³R² sind schließlich weitere substituierte aromatische Phosponsäurederivate I zugänglich.
      Die Phosphonsäuremonoesterchloride XXVa sind z.B. durch Umsetzung mit Natriumhydrogensulfid in die Thionophosphonsäuremonoester XXVb überführbar.
   B.3) Halogenwasserstoff-Eliminierung an Verbindungen I mit Eth = -CH₂-CH(Halogen)- oder -CH=C(Halogen)-: 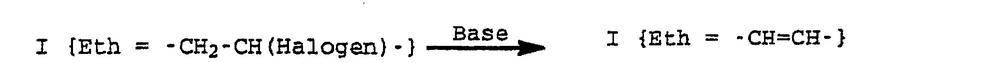 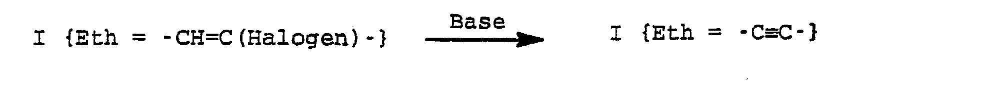 Üblicherwiese arbeitet man in Wasser oder einem inerten organischen Lösungsmittel, z.B. einem Alkohol wie Ethanol, einem Ether wie Diethylether, Tetrahydrofuran und Dioxan, oder einem aprotischen Solvens wie Acetonitril, Dimethylformamid und Dimethylsulfoxid.
      Als Basen eignen sich z.B. Alkalimetallhydroxide, -carbonate, -hydride, Alkyllithiumverbindungen wie Butyllithium, oder organische Amine wie Triethylamin, 1,4-Diazabicyclo[2.2.2.]octan (DABCO) und 1,8-Diazabicyclo[5.4.0.]undec-7-en (DBU).
      Allgemein erfolgt die Reaktionsführung bei Temperaturen von (-100)°C bis zum Siedepunkt des Reaktionsgemisches, vorzugsweise bei 20 bis 100°C.
C) Aufbau der Heterocyclen R⁵:
   C.1) Aufbau des Triazolopyridin-Rings 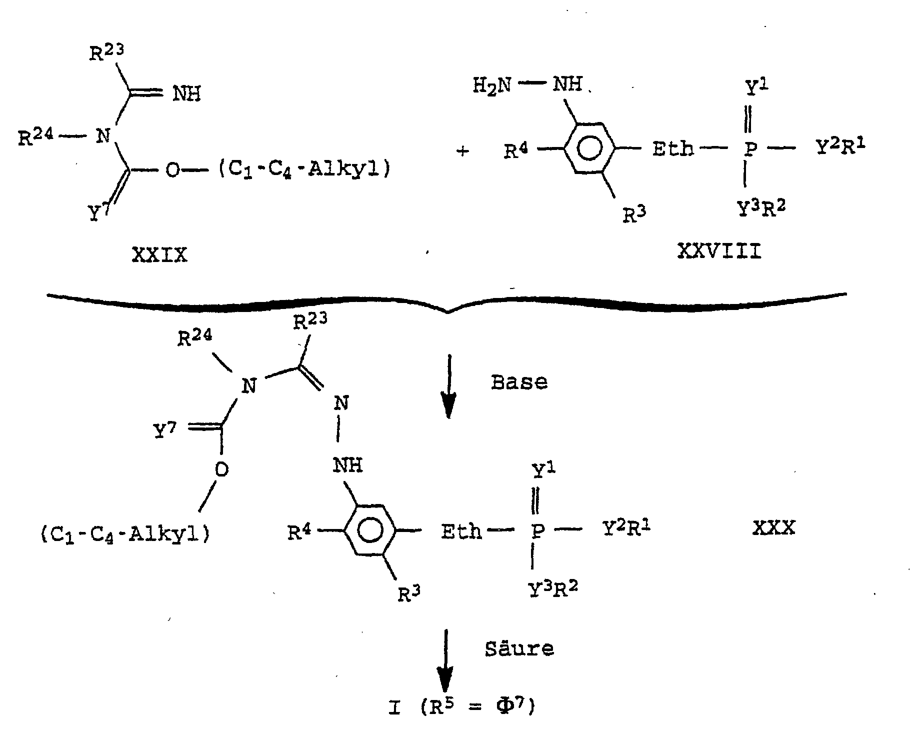 Bei diesem Verfahren setzt man ein Amidin der Formel XXIX oder dessen Säureadditionssalz (beispielsweise dessen Hydrochlorid, Hydrobromid oder Hydrogensulfat) mit einem Phenylhydrazin der Formel XXVIII oder seinem Säureadditionssalz (beispielsweise dem Hydrochlorid, Hydrobromid oder Hydrogensulfat) in Gegenwart einer Base, beispielsweise einem Alkalimetallacetat, -hydrogencarbonat, -carbonat, -hydroxid, oder einem tertiären Amin wie Triethylamin, um.
      In der Regel erfolgt die Reaktionsführung in einem inerten organischen Lösungsmittel, z.B. einem Ether wie Tetrahydrofuran, einem Alkohol wie Ethanol, oder einem aprotischen Solvens wie Dimethylformamid, Acetonitril und Dimethylsulfoxid.
      Allgemein arbeitet man zwischen dem Schmelz- und Siedepunkt des Reaktionsgemisches, vorzugsweise bei 0 bis 50°C.
      Das Reaktionsprodukt XXX wird dann in Gegenwart einer Säure, beispielsweise Essig- oder Salzsäure, in einem inerten organischen Lösungsmittel, z.B. einem Kohlenwasserstoff wie Toluol und n-Hexan, einem Ether wie Tetrahydrofuran, einem Alkohol wie Ethanol, einer Carbonsäure wie Essigsäure, oder einem aprotischen Solvens wie Dimethylformamid, Acetonitril und Dimethylsulfoxid, cyclisiert.
      Die Cyclisierung erfolgt ebenfalls zwischen Schmelz- und Siedepunkt der Reaktionsmischung, vorzugsweise bei 0 bis 150°C.
      C.1.1) Herstellung der Phenylhydrazine XXVIII aus Anilinen der Formel XXXI: 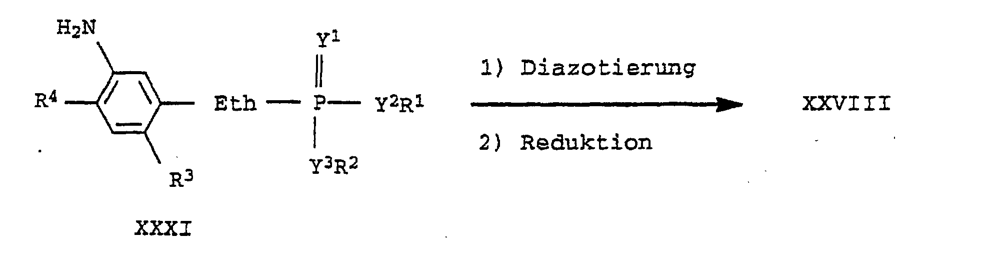 Bei diesem Verfahren diazotiert man zunächst das Anilin XXXI. Hierzu sein auf die vorstehend unter A.1) gemachten Angaben verwiesen.
         Das erhaltene Diazoniumsalz wird in einem inerten Lösungs-/Verdünnungsmittel, z.B. einem Kohlenwasserstoff wie Toluol und n-Hexan, einem Ether wie Tetrahydrofuran, einem Alkohol wie Ethanol, einer Säure wie Essigsäure und Salzsäure, einem aprotischen Solvens wie Dimethylformamid, Acetonitril und Dimethylsulfoxid, oder in Wasser mit einem Reduktionsmittel, beispielsweise einer Zinn(II)verbindung wie Zinn(II)chlorid, umgesetzt. Die Reaktionsführung erfolgt dabei zwischen dem Schmelz- und Siedepunkt des Reaktionsgemisches, vorzugsweise bei 0 bis 150°C.
         In der nachfolgenden Tabelle 2 sind besonders bevorzugte Phenylhydrazine der Formel XXVIII aufgeführt. 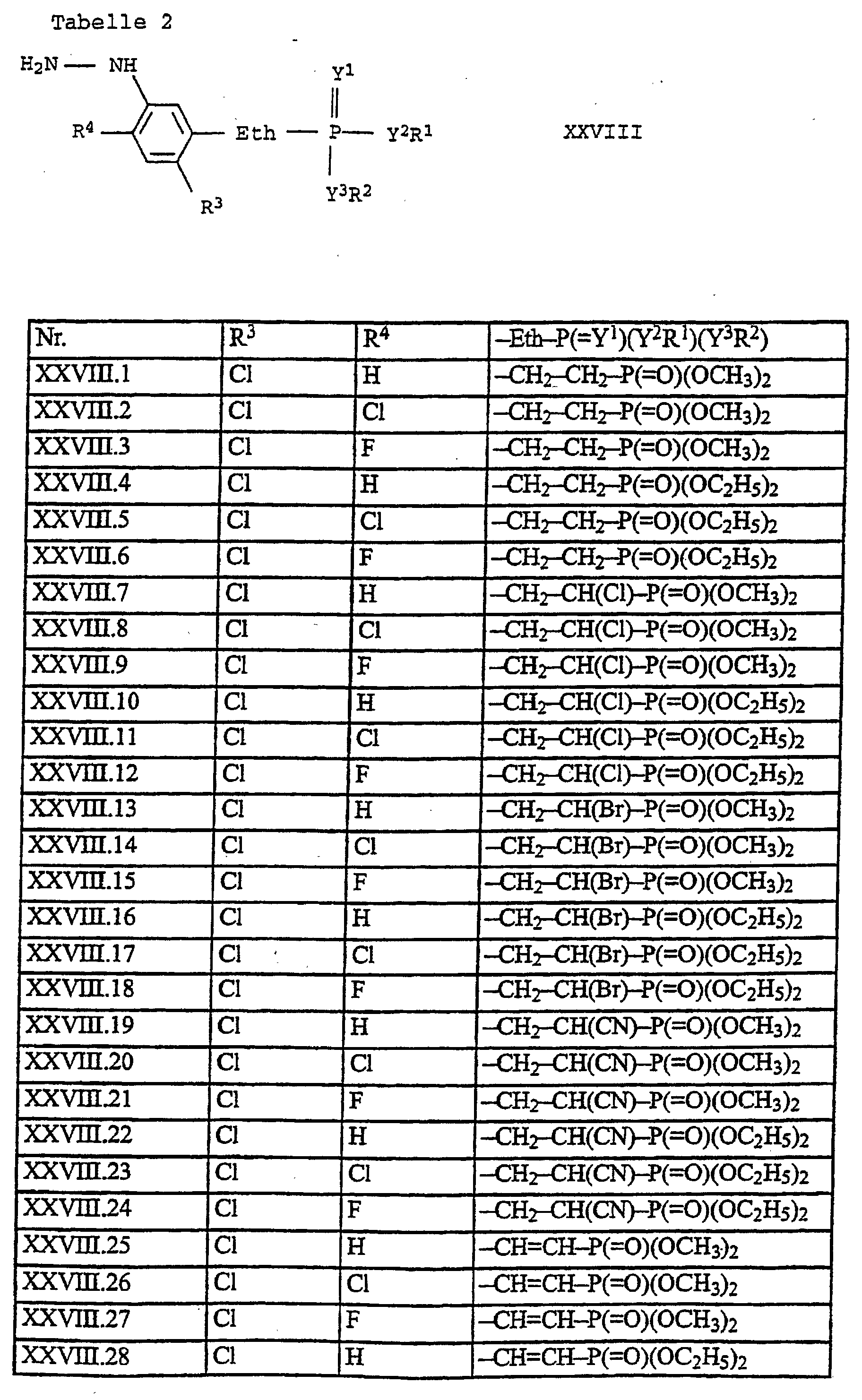 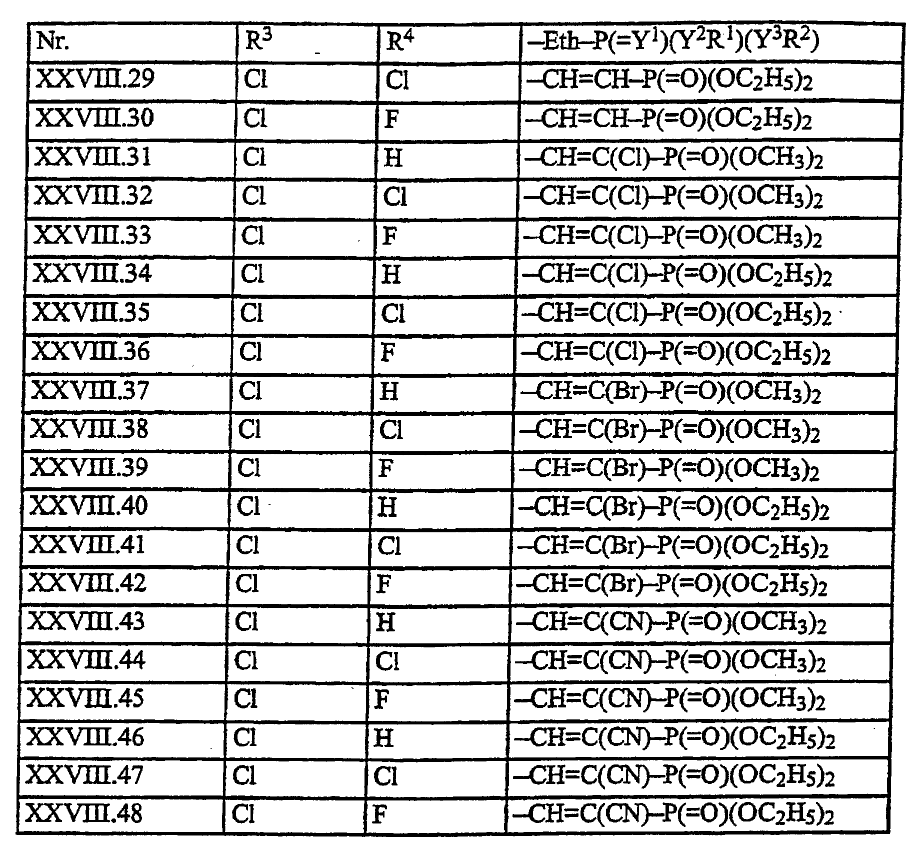
      C.1.2) Herstellung der Aniline XXXI durch Reduktion von Nitrobenzol-Derivaten XXXII: 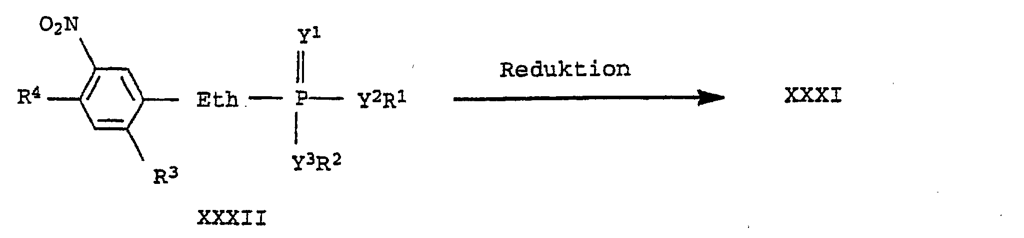 Die Reduktion kann mit einem Metall wie Eisen, Zink oder Zinn unter sauren Reaktionsbedingungen oder mit einem komplexen Hydrid wie Lithiumaluminiumhydrid und Natriumborhydrid erfolgen, wobei als Lösungsmittel - in Abhängigkeit vom gewählten Reduktionsmittel - z.B. Wasser, Alkohole wie Methanol, Ethanol und Isopropanol oder Ether wie Diethylether, Methyl-tert.-butylether, Dioxan, Tetrahydrofuran und Ethylenglykoldimethylether, in Betracht kommen.
         Bei der Reduktion mit einem Metall arbeitet man vorzugsweise lösungsmittelfrei in einer anorganischen Säure, insbesondere in konzentrierter oder verdünnter Salzsäure, oder in einer organischen Säure wie Essigsäure. Es ist aber auch möglich, der Säure ein inertes Lösungsmittel, z.B. eines der vorstehend genannten, zuzumischen.
         Die Menge an Säure ist nicht kritisch. Um die Ausgangsverbindung möglichst vollständig zu reduzieren, verwendet man zweckmäßigerweise mindestens eine äquivalente Menge an Säure.
         Die Reaktionstemperatur liegt im allgemeinen bei (-30) bis 200°C, bevorzugt bei 0 bis 80°C.
         Die Nitrogruppe der Verbindungen XXXII kann auch katalytisch mittels Wasserstoff hydriert werden. Hierfür geeignete Katalysatoren sind beispielsweise Raney-Nickel, Palladium auf Kohle, Palladiumoxid, Platin und Platinoxid, wobei im allgemeinen eine Katalysatormenge von 0,05 bis 10,0 mol-%, bezogen auf die zu reduzierende Verbindung, ausreichend ist.
         Man arbeitet entweder lösungsmittelfrei oder in einem inerten Lösungs- oder Verdünnungsmittel, z.B. in Essigsäure, einem Gemisch aus Essigsäure und Wasser, Essigsäureethylester, Ethanol oder in Toluol.
         Nach Abtrennen des Katalysators kann die Reaktionslösung wie üblich auf das Produkt hin aufgearbeitet werden.
         Die Hydrierung kann bei Normaldruck oder unter erhöhtem Druck durchgeführt werden.
         In der nachfolgenden Tabelle 3 sind besonders bevorzugte Aniline XXXI aufgeführt. 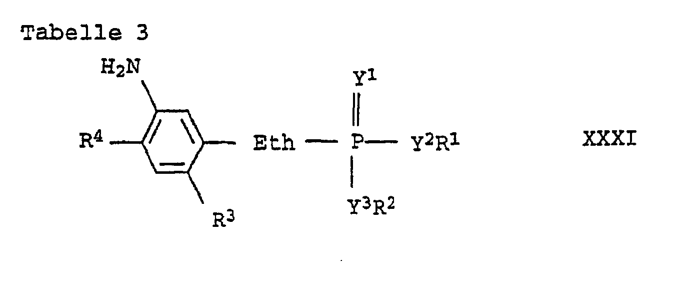 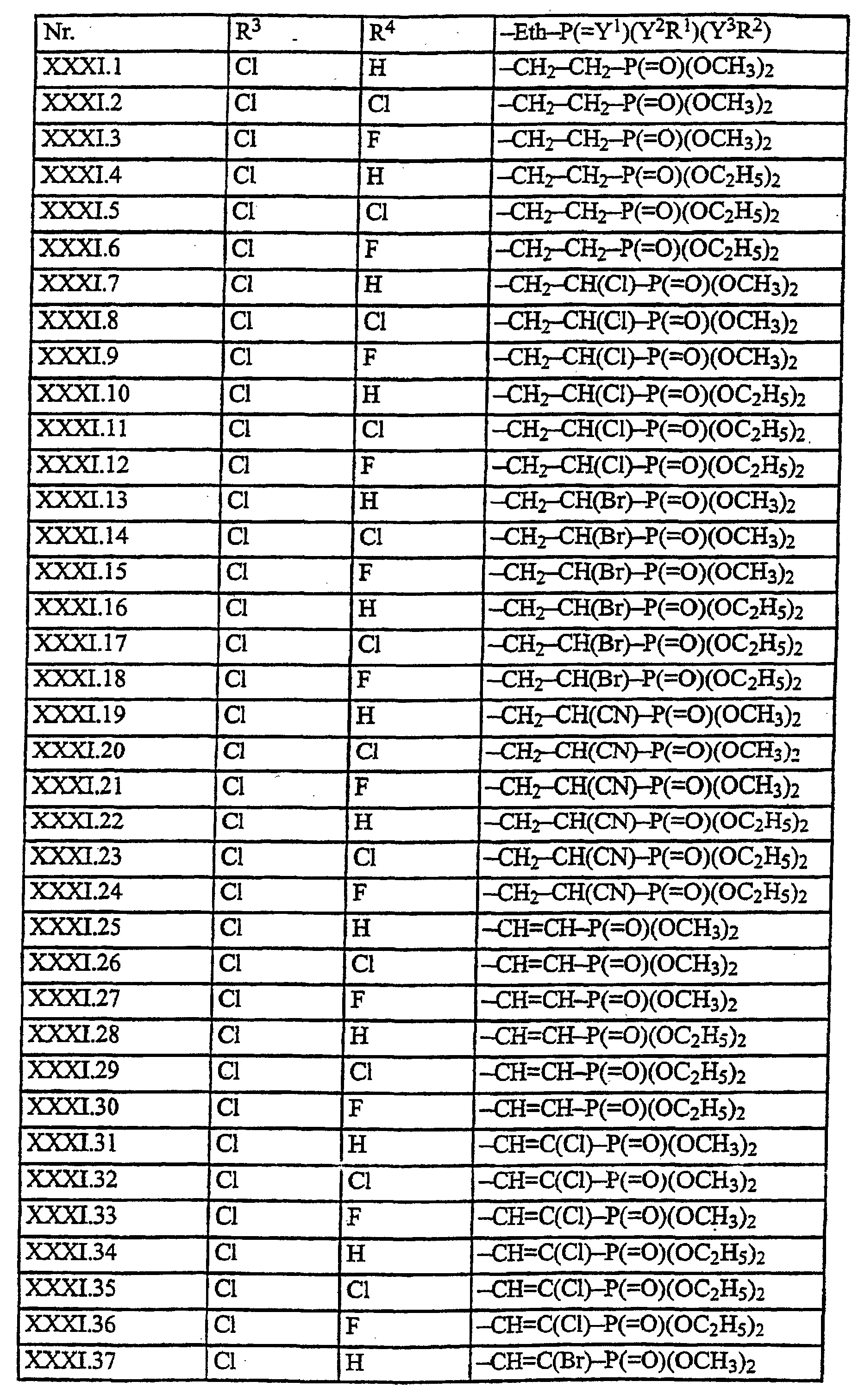 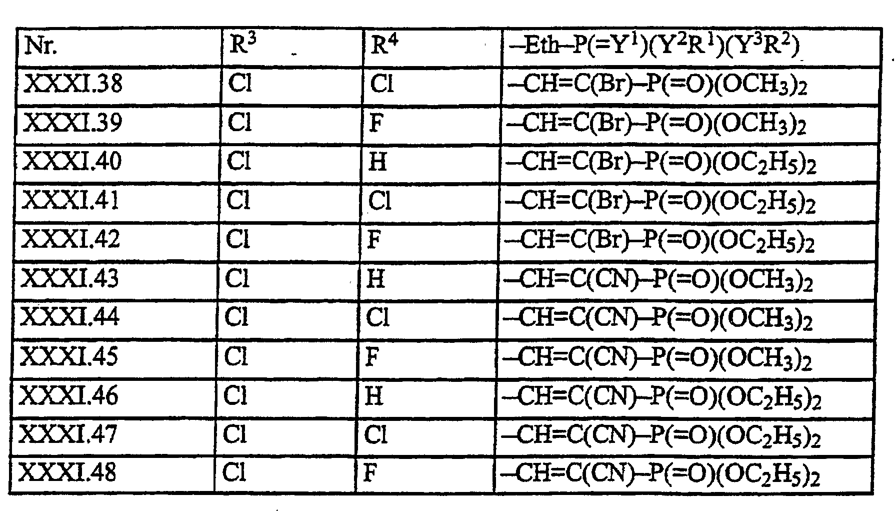
      C.1.3) Herstellung der Nitrobenzol-Derivate XXXII: 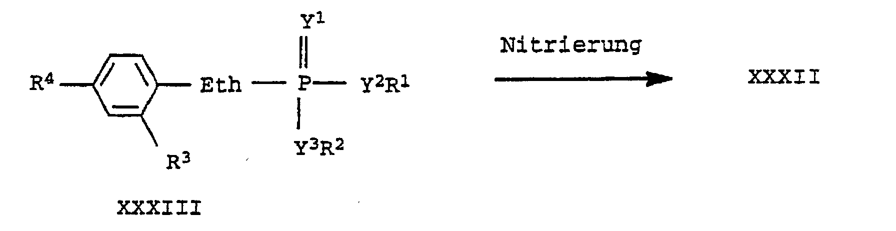 Als Nitrierungs-Reagenzien kommen beispielsweise Salpetersäure in unterschiedlicher Konzentration, auch konzentrierte und rauchende Salpetersäure, Mischungen von Schwefelsäure und Salpetersäure, Acetylnitrate und Alkylnitrate in Betracht.
         Die Reaktion kann entweder lösungsmittelfrei in einem Überschuß des Nitrier-Reagenzes oder in einem inerten Lösungsoder Verdünnungsmittel durchgeführt werden, wobei z.B. Wasser, Mineralsäuren, organische Säuren, Halogenkohlenwasserstoffe wie Methylenchlorid, Anhydride wie Essigsäureanhydrid und Mischungen dieser Solventien geeignet sind.
         Ausgangsverbindung XXXIII und Nitrier-Reagenz werden zweckmäßigerweise in etwa äquimolaren Mengen eingesetzt; zur Optimierung des Umsatzes an Ausgangsverbindung kann es jedoch vorteilhaft sein, das Nitrier-Reagenz im Überschuß zu verwenden, bis etwa zur 10fachen molaren Menge. Bei der Reaktionsführung ohne Lösungsmittel im Nitrier-Reagenz liegt dieses in einem noch größeren Überschuß vor.
         Die Reaktionstemperatur liegt normalerweise bei (-100) bis 200°C, bevorzugt bei (-30) bis +50°C.
         In der nachfolgenden Tabelle 4 sind besonders bevorzugte Nitroverbindungen der Formel XXXII aufgeführt. 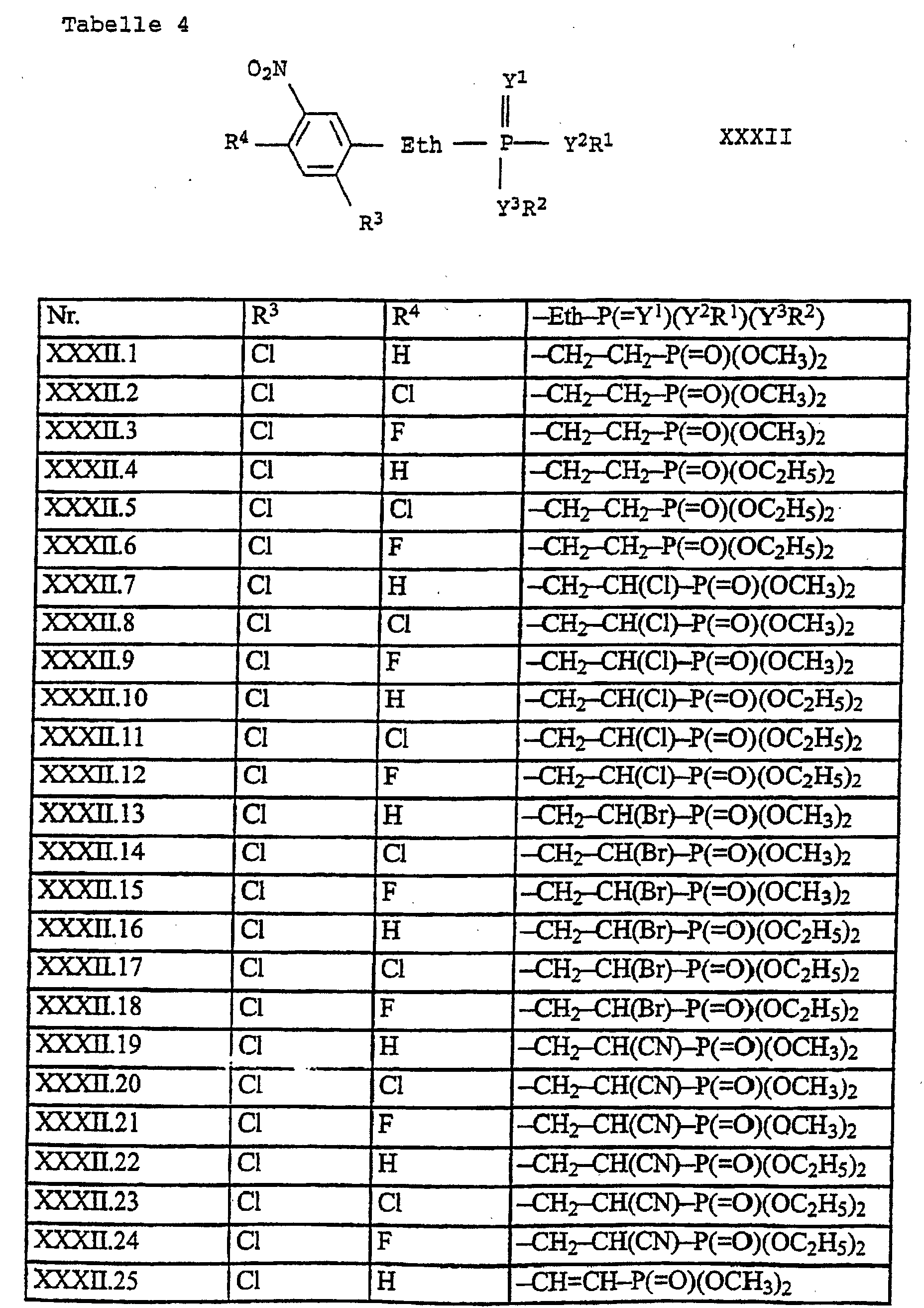 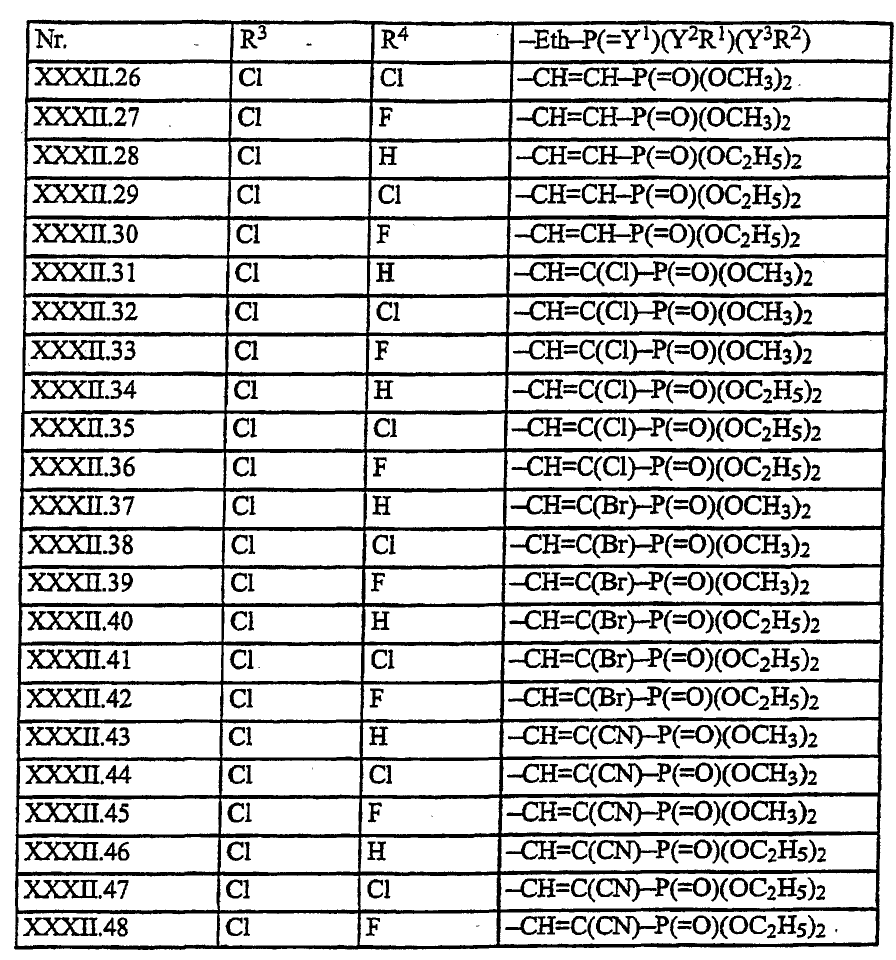
      C.1.4) Herstellung der aromatischen Phosphonsäurederivate XXXIII, bei denen Eth für -CH=C(Cl)- steht: 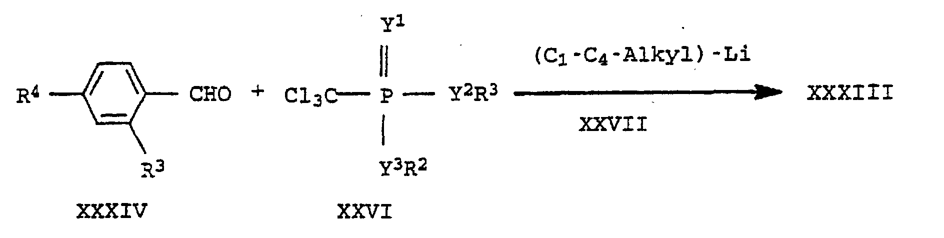 Bezüglich der Durchführung dieser Reaktion sei auf die vorstehend unter A.13) gemachten Angaben verwiesen.
         In der nachfolgenden Tabelle 5 sind besonders bevorzugte aromatische Phosphonsäurederivate der Formel XXXIIIa (= XXXIII mit R^{4'}; R⁴ = Halogen) aufgeführt. 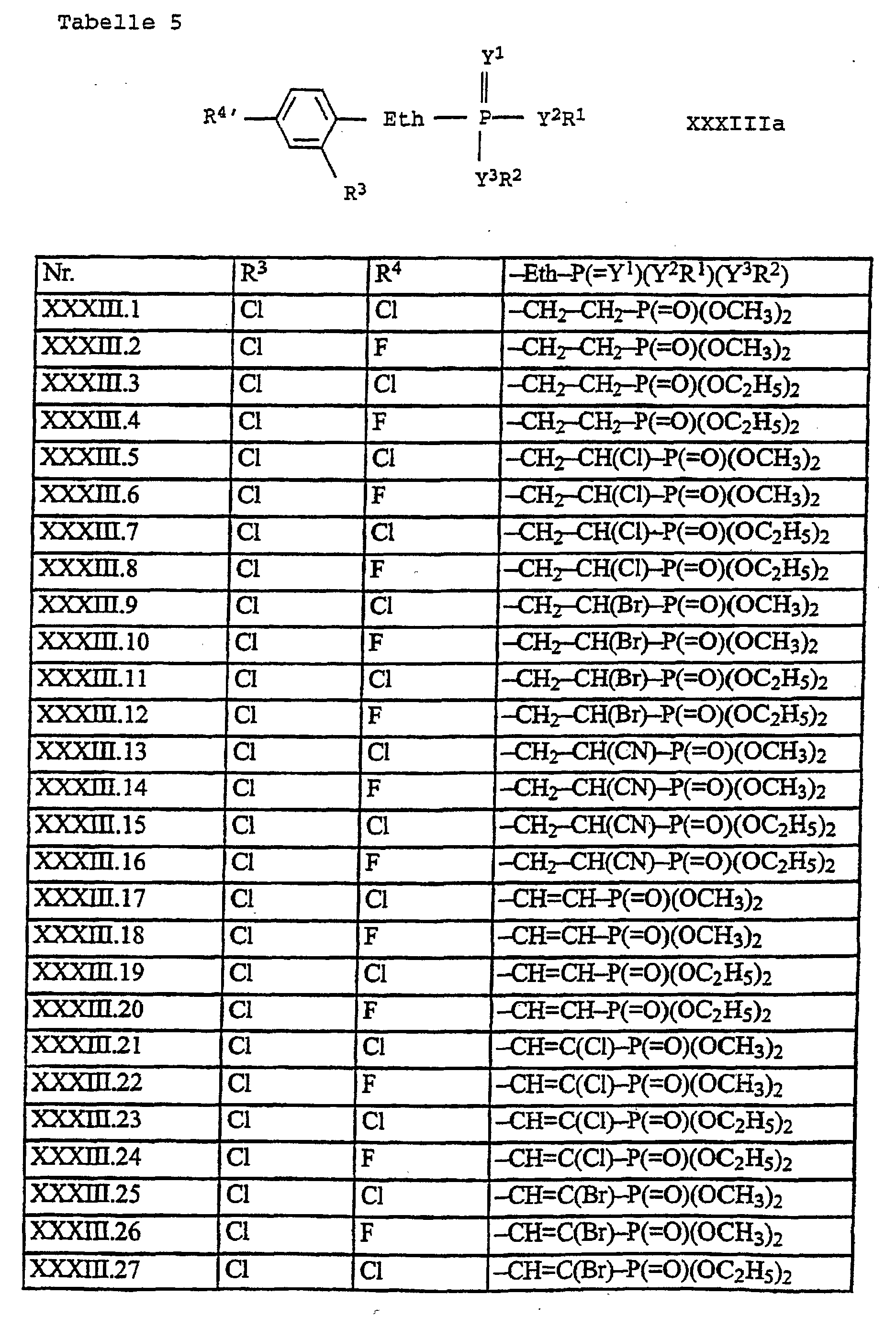 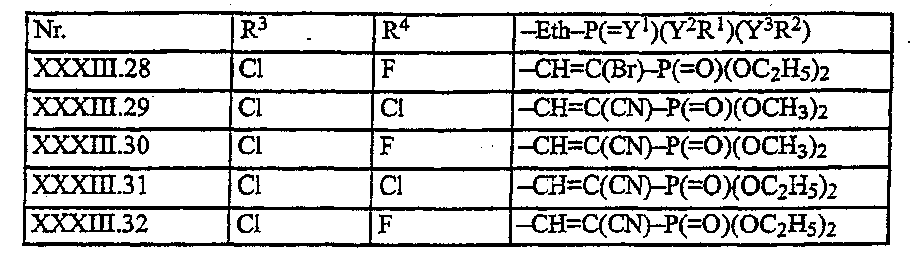
   C.2) Aufbau des Thiazol-Rings 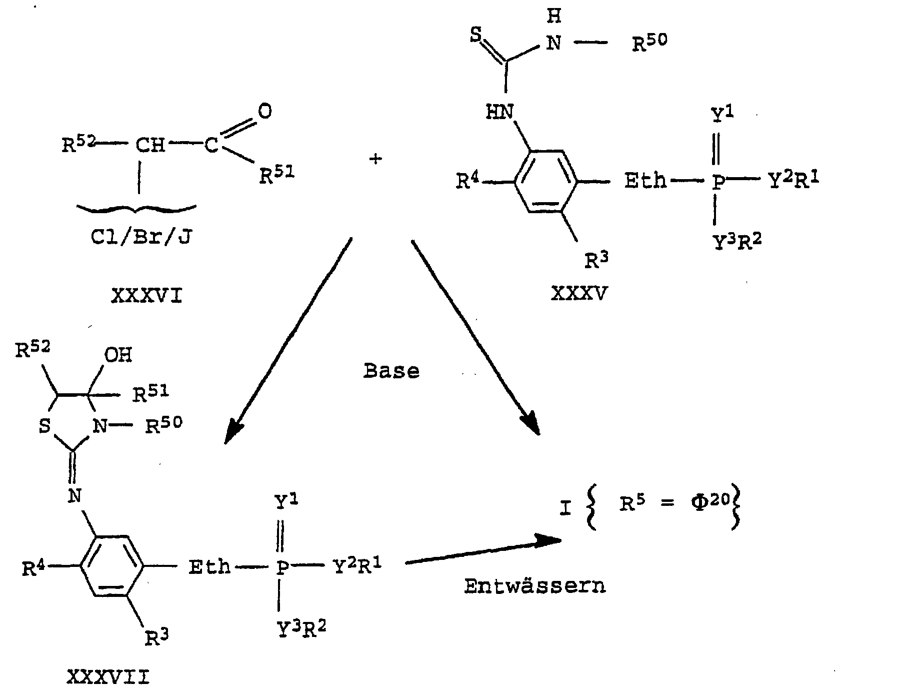 Bei diesem Verfahren setzt man ein Thioharnstoffderivat der Formel XXXV in Gegenwart einer Base - beispielsweise einem Alkalimetallacetat, -hydrogeacarbonat, -carbonat, -hydroxid oder einem tertiären Amin wie Triethylamin - mit einem Keton der Formel XXXVI um.
      Üblicherweise arbeitet man dabei in einem inerten Lösungs-/Verdünnungsmittel, z.B. in einem Kohlenwasserstoff wie Toluol und n-Hexan, einem Ether wie Tetrahydrofuran, oder in einem aprotischen Solvens wie Dimethylformamid, Acetonitril und Dimethylsulfoxid.
      Die Reaktionsführung erfolgt dabei zwischen Schmelz- und Siedepunkt des Reaktionsgemisches, vorzugsweise bei 0 bis 150°C.
      Dabei bilden sich entweder direkt die Verbindungen der Formel I mit R⁵ = Φ²⁰ oder Alkohole der Formel XXXVII, die auf übliche Weise zu I entwässert werden können, beispielsweise durch azeotrope Destillation mit einem geeigneten Schleppmittel, z.B. Toluol oder Xylol, oder durch Umsetzung mit katalytischen Mengen einer starken Säure wie Salzsäure, Schwefelsäure und Toluolsulfonsäure, oder durch Veresterung mit einem Carbonsäure- oder Sulfonsäurechlorid oder -anhydrid und Behandlung mit einer Base, beispielsweise einem Alkalimetallacetat, -hydrogencarbonat, -carbonat, -hydroxid oder einem tertiären Amin wie Triethylamin und Pyridin.
      C.2.1) Herstellung der Thioharnstoffderivate XXXV durch Umsetzung von Isocyanaten XXXVIII mit Anilinen XXXI: 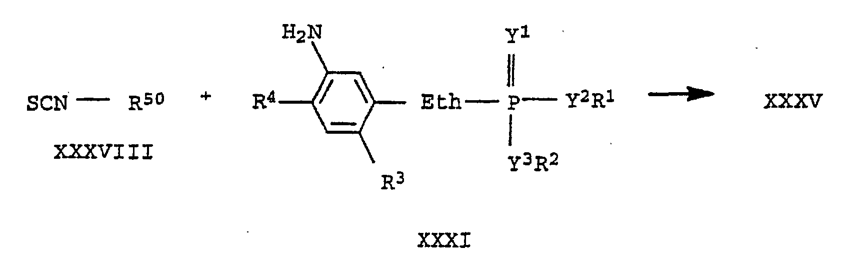 Geeignete Lösungs-/Verdünnungsmittel sind z.B. Kohlenwasserstoffe wie Toluol und n-Hexan, halogenierte Kohlenwasserstoffe wie Dichlormethan, Ether wie Tetrahydrofuran, Alkohole wie Ethanol, aprotische Solventien wie Dimethylformamid, Acetonitril und Dimethylsulfoxid.
         Die Reaktionsführung erfolgt allgemein zwischen dem Schmelz- und Siedepunkt des Reaktionsgemisches, vorzugsweise bei 0 bis 150°C.
         In der nachfolgenden Tabelle 6 sind besonders bevorzugte Thioharnstoff derivate der Formel XXXV aufgeführt. 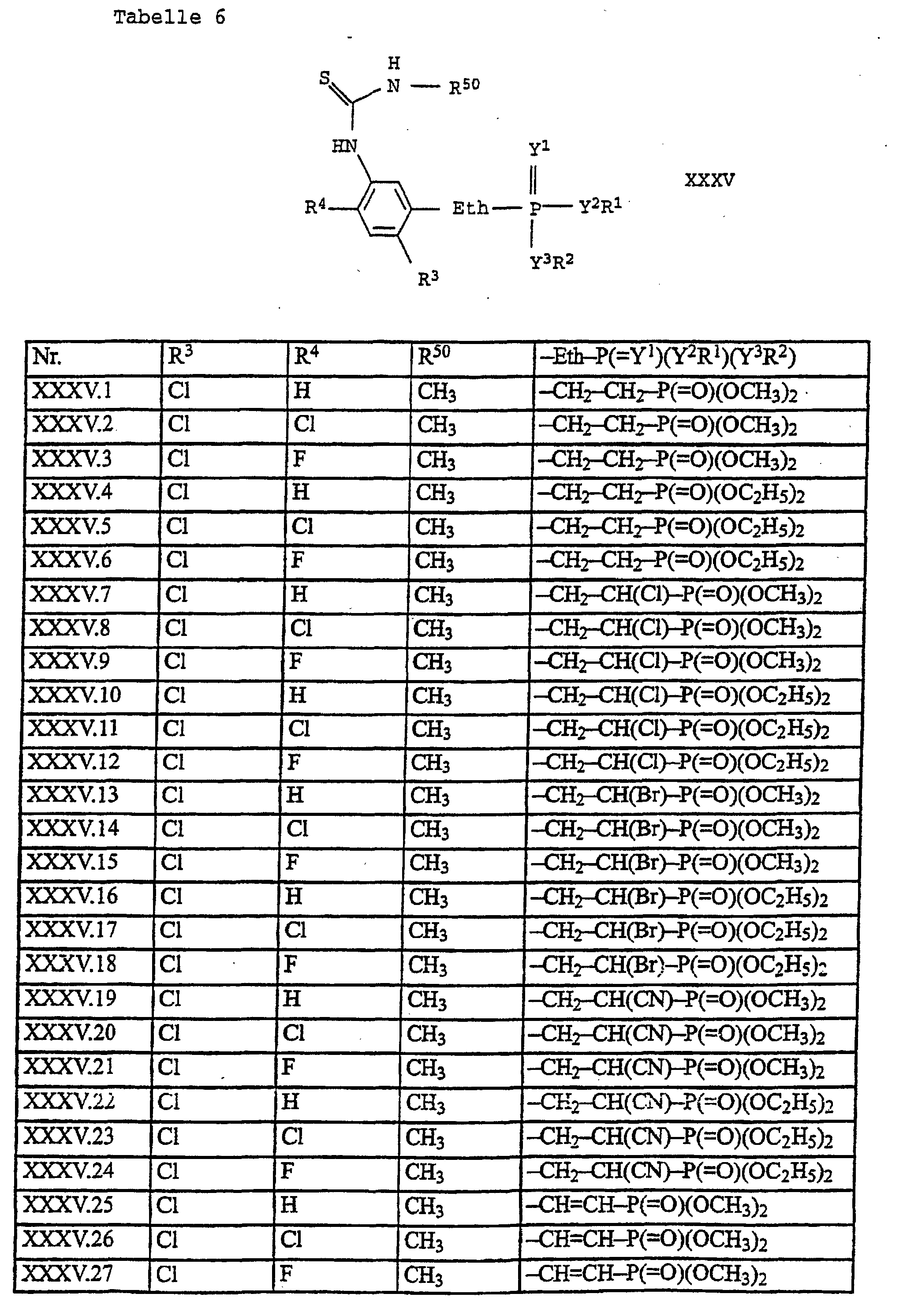 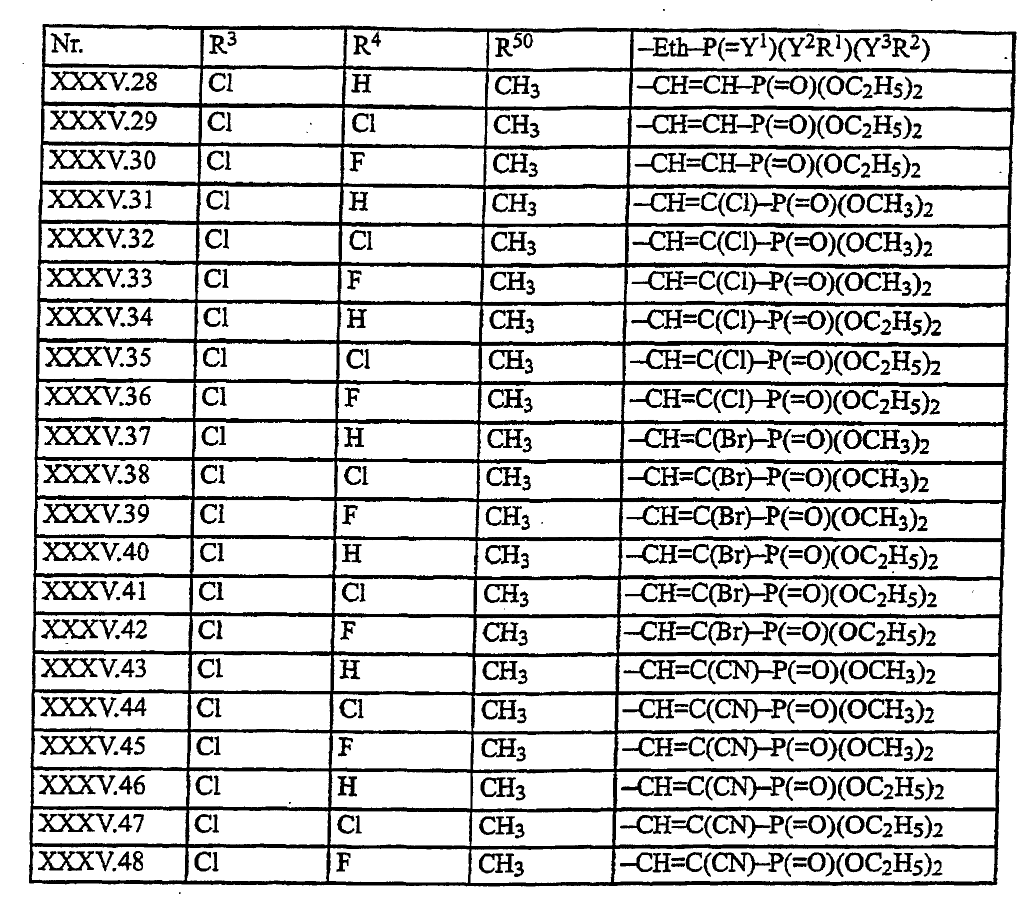
   C.3) Aufbau des Thiazolopyridazin-Rings 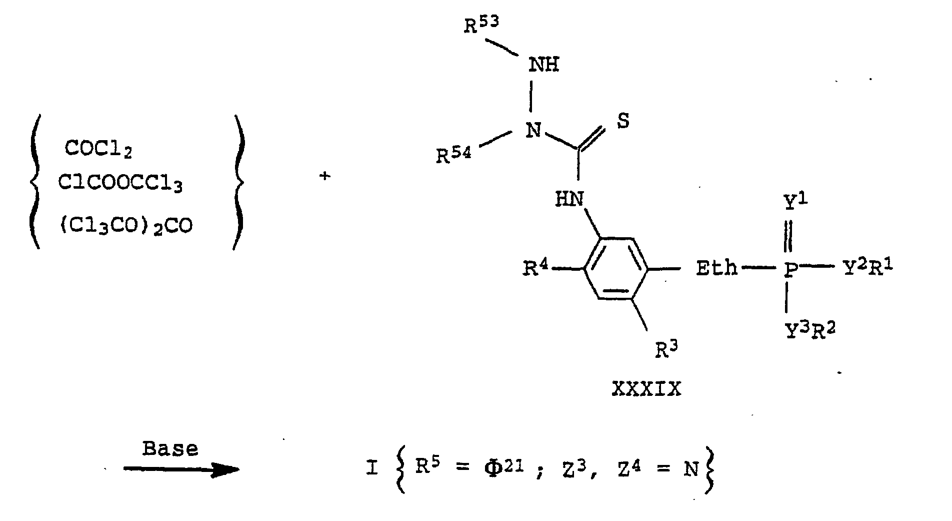 Bei diesem Verfahren setzt man ein Thiosemicarbazidderivat der Formel XXXIX in Gegenwart einer Base - beispielsweise einem Alkalimetallhydrogencarbonat, -carbonat, -hydroxid oder einem tertiären Amin wie Triethylamin und Pyridin-mit Phosgen, Diphosgen oder Triphosgen um.
      Üblicherweise arbeitet man dabei in einem inerten Lösungs-/Verdünnungsmittel, z.B. in einem Kohlenwasserstoff wie Toluol und n-Hexan, einem halogenierten Kohlenwasserstoff wie Dichlormethan, einem Ether wie Tetrahydrofuran, oder in einem aprotischen Solvens wie Dimethylformamid, Acetonitril und Dimethylsulfoxid.
      Die Reaktionsführung erfolgt dabei zwischen Schmelz- und Siedepunkt des Reaktionsgemisches, vorzugsweise bei 0 bis 150°C.
      C.3.1) Herstellung der Thiosemicarbazidderivate XXXIX durch Umsetzung von Hydrazinen XLI mit Isothiocyanaten XL: 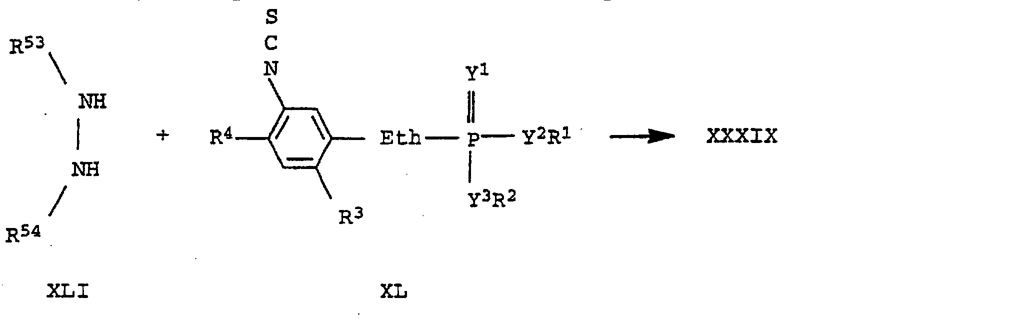 Geeignete Lösungs-/Verdünnungsmittel sind z.B. Kohlenwasserstoffe wie Toluol und n-Hexan, halogenierte Kohlenwasserstoffe wie Dichlormethan, Ether wie Tetrahydrofuran, Alkohole wie Ethanol oder aprotische Solventien wie Dimethylformamid, Acetonitril und Dimethylsulfoxid.
         Die Reaktionsführung erfolgt allgemein zwischen dem Schmelz- und Siedepunkt des Reaktionsgemisches, vorzugsweise bei 0 bis 150°C.
         In der nachfolgenden Tabelle 7 sind besonders bevorzugte Thiosemicarbazidderivate der Formel XXXIX aufgeführt. 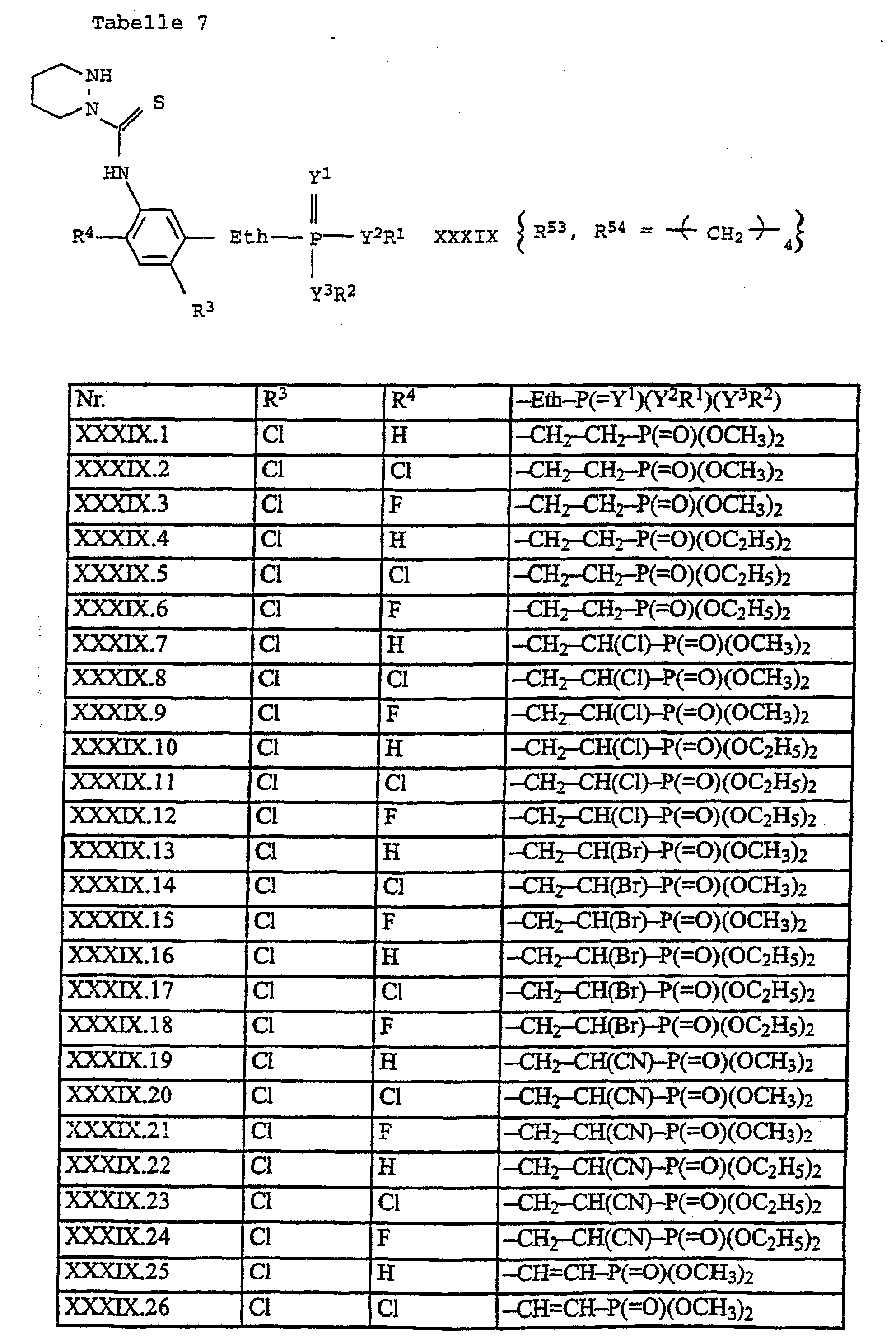 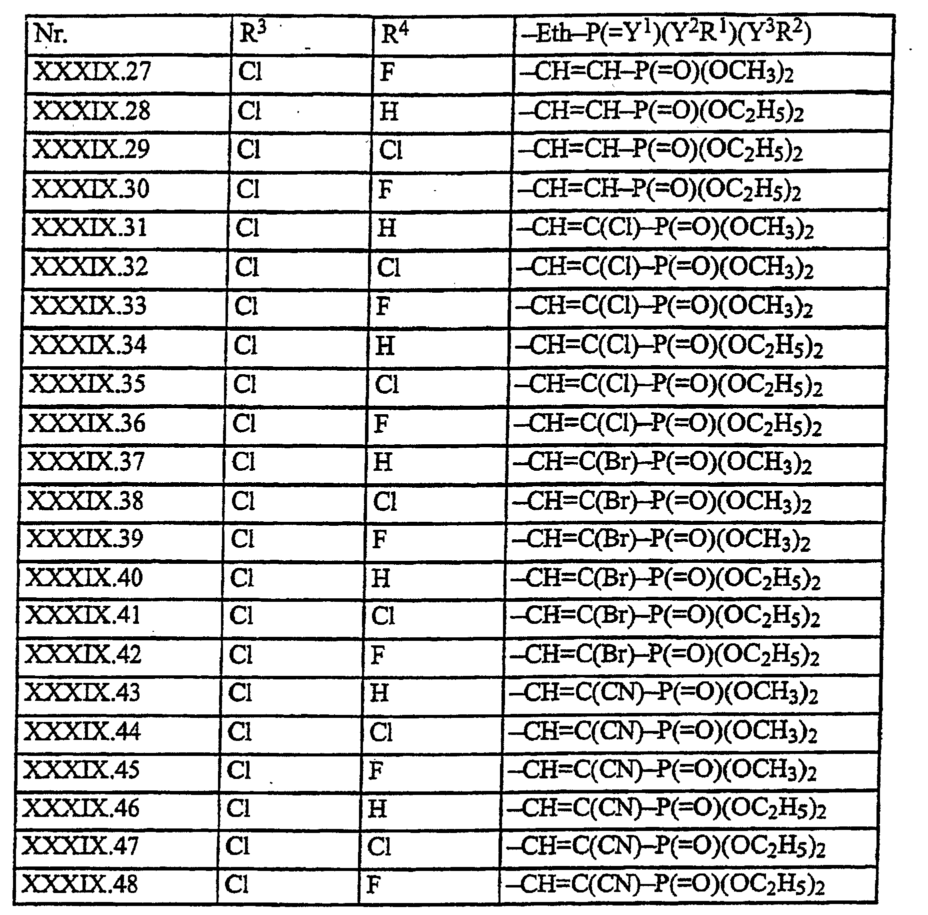
      C.3.2) Herstellung der Isothiocyanate XL durch Umsetzung von Anilinen der Formel XXXI mit Thiophosgen in Gegenwart einer Base: 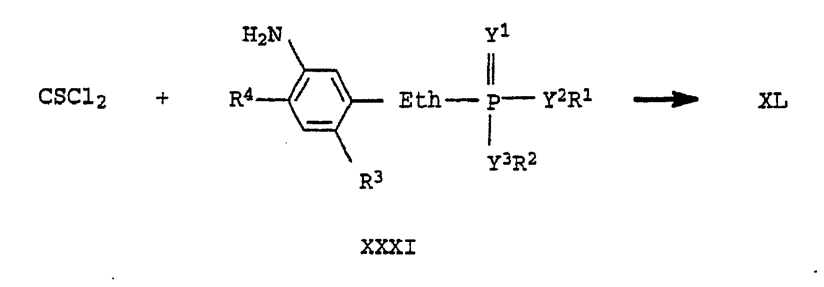 Geeignete Lösungs-/Verdünnungsmittel sind z.B. Kohlenwasserstoffe wie Toluol und n-Hexan, halogenierte Kohlenwasserstoffe wie Dichlormethan, Ether wie Tetrahydrofuran oder aprotische Solventien wie Dimethylformamid, Acetonitril und Dimethylsulfoxid.
         Als Basen kommen vornehmlich die Alkalimetallacetate, -hydrogencarbonate, -carbonate, -hydroxide oder tertiäre Amine wie Triethylamin und Pyridin in Betracht.
         Die Reaktionsführung erfolgt allgemein zwischen dem Schmelz- und Siedepunkt des Reaktionsgemisches, vorzugsweise bei 0 bis 150°C.
         In der nachfolgenden Tabelle 8 sind besonders bevorzugte Isothiocyanate der Formel XL aufgeführt. 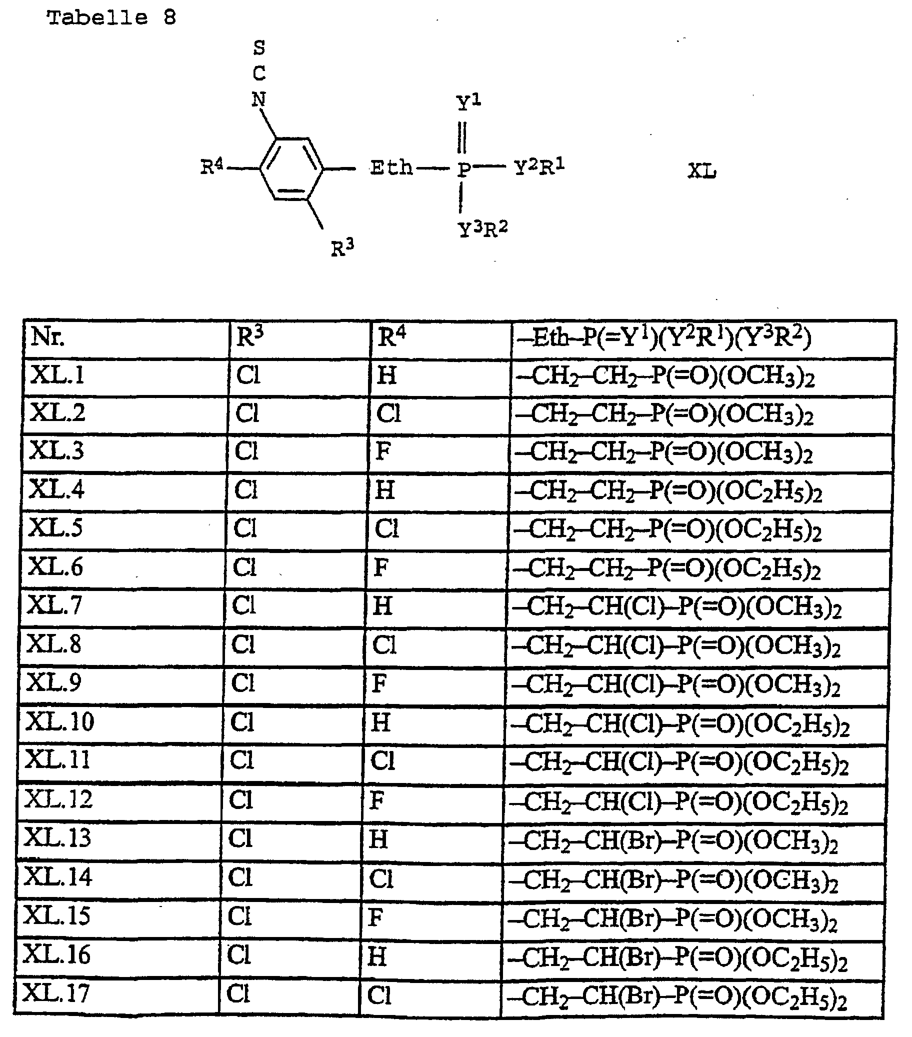 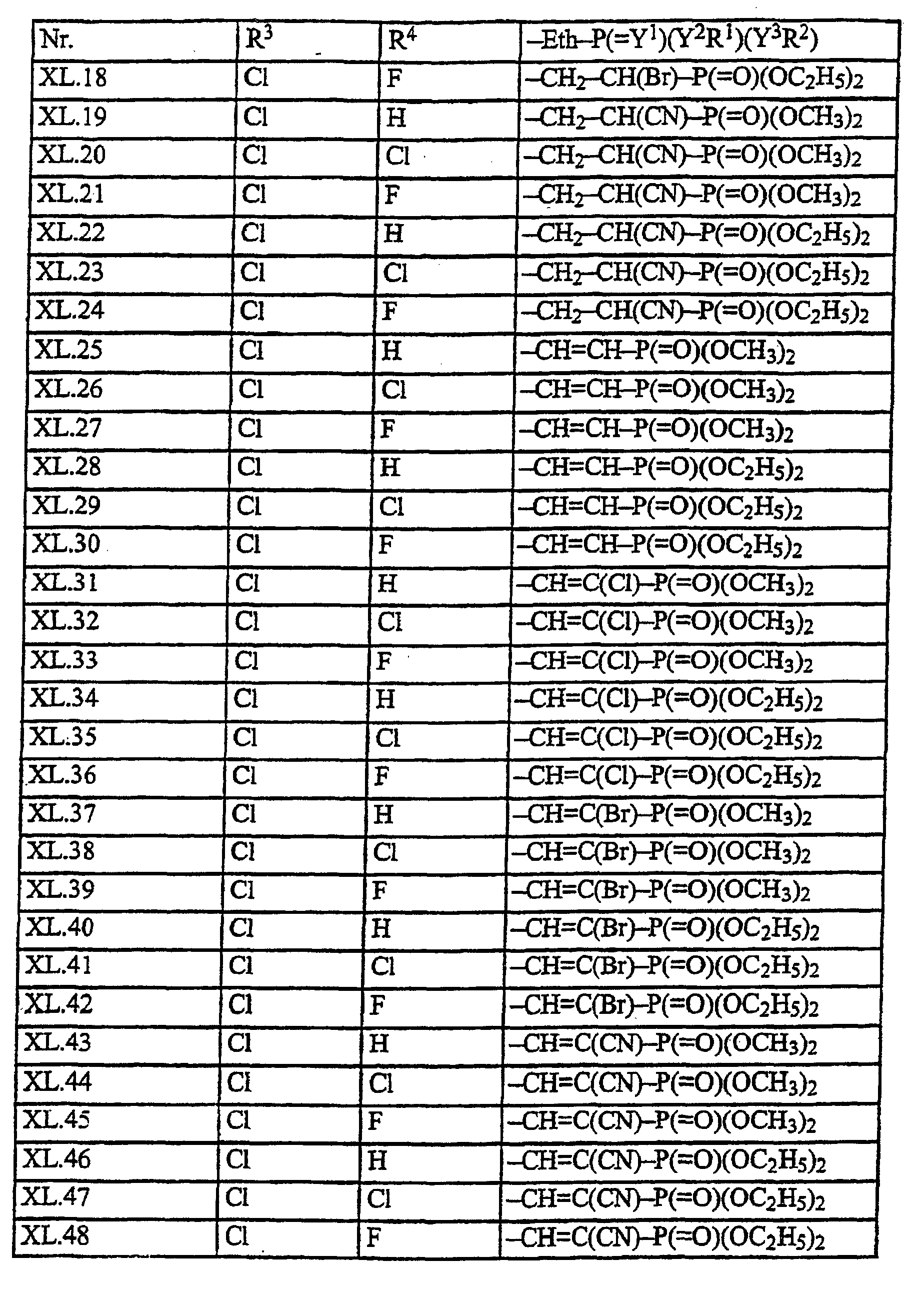
   C.4) Aufbau des Pyrrolothiadiazol-Rings 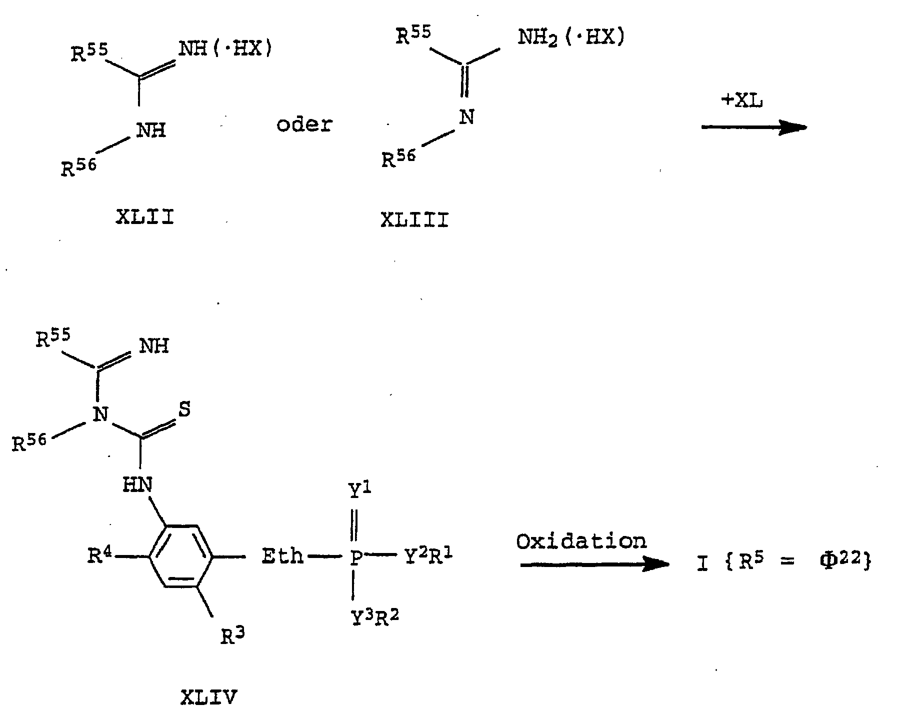 X steht für das Anion einer Säure, vorzugsweise für ein Chlorid-, Bromid-, Hydrogensulfat- oder 1/2 Sulfation.
      Bei diesem Verfahren setzt man ein Isothiocyanat der Formel XL mit einem Amidin der Formel XLII oder XLIII um.
      Üblicherweise arbeitet man dabei in einem inerten Lösungs-/Verdünnungsmittel, z.B. in einem Kohlenwasserstoff wie Toluol und n-Hexan, einem halogenierten Kohlenwasserstoff wie Dichlormethan, einem Ether wie Tetrahydrofuran, einem Alkohol wie Ethanol oder in einem aprotischen Solvens wie Dimethylformamid, Acetonitril und Dimethylsulfoxid.
      Alternativ kann XL auch mit einem Säureadditionssalz des Amidins XLII oder XLIII (beispielsweise mit Salz- oder Schwefelsäure) umgesetzt werden. In diesem Falle arbeitet man dann in Gegenwart einer Base, beispielsweise eines Alkalimetallacetats, -hydrogencarbonats, -carbonats, -hydroxids oder eines tertiären Amins wie Triethylamin und Pyridin.
      Die Reaktionsprodukte der Formel XLIV werden danach oxidiert, vorzugsweise mit einem Halogen wie Chlor und Brom in einem der für die Herstellung von XLIV genannten Lösungsmittel.
      Sowohl die Überführung von XL in XLIV als auch die Oxidation von XLIV erfolgt allgemein zwischen dem Schmelz- und Siedepunkt des jeweiligen Reaktionsgemisches, vorzugsweise bei 0 bis 150°C.
   C.5) Aufbau des Uracil-Rings durch Umsetzung eines Isocyanats der Formel XLV mit einem Aminoacrylsäurederivat der Formel XLVI in Gegenwart einer starken Base: 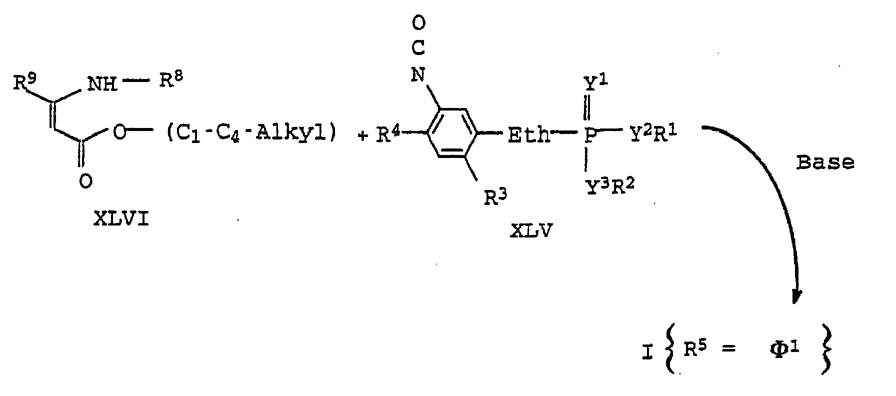 Geeignete Lösungs-/Verdünnungsmittel sind z.B. Kohlenwasserstoffe wie Toluol und n-Hexan, halogenierte Kohlenwasserstoffe wie Dichlormethan, Ether wie Tetrahydrofuran oder aprotische Solventien wie Dimethylformamid, Acetonitril und Dimethylsulfoxid.
      Als Basen kommen vornehmlich die Alkalimetallhydride, -alkoxide, -amide, -hydroxide oder Alkyllithiumverbindungen wie Butyllithium in Betracht.
      Die Reaktionsführung erfolgt allgemein zwischen dem Schmelz- und Siedepunkt des Reaktionsgemisches, vorzugsweise bei 0 bis 150°C.
      Solche Verfahrensprodukte I, bei denen R⁵ für Φ¹ und R⁸ für Wasserstoff stehen, können anschließend in Gegenwart von Base alkyliert oder aminiert werden: 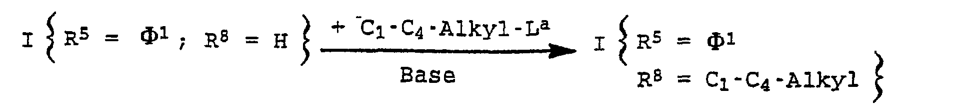 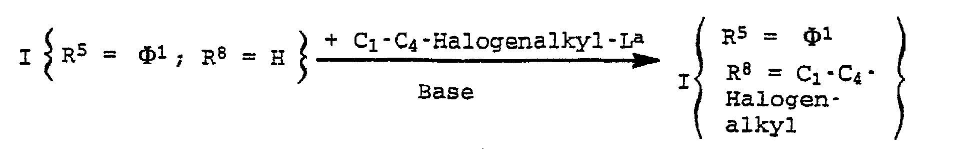 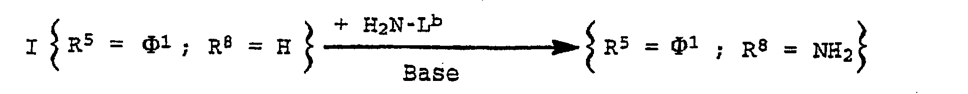 L^{a} steht für eine übliche Abgangsgruppe, insbesondere für Halogenid, Triflat, Tosylat oder Mesylat;
      L^{b} steht für eine übliche Abgangsgruppe, insbesondere für Halogenid, Hydrogensulfat, Mono- oder Dinitrophenoxy, also beispielsweise Chloramin, Hydroxylamin-O-Schwefelsäure oder 2,4-Dinitrophenoxyamin.
      Die für den Aufbau des Uracilrings genannten Lösungsmittel kommen hier ebenfalls in Betracht.
      Brauchbare Basen sind z.B. die Alkalimetallacetate, -hydrogencarbonate, -carbonate und -hydroxide sowie tertiäre Amine wie Triethylamin und Pyridin.
      Die Reaktionsführung erfolgt allgemein zwischen dem Schmelz- und Siedepunkt des Reaktionsgemisches, vorzugsweise bei 0 bis 150°C.
      C.5.1) Herstellung der Isocyanate XLV durch Umsetzung von Anilinen der Formel XXXI mit Phosgen, Diphosgen oder Triphosgen in Gegenwart einer Base: 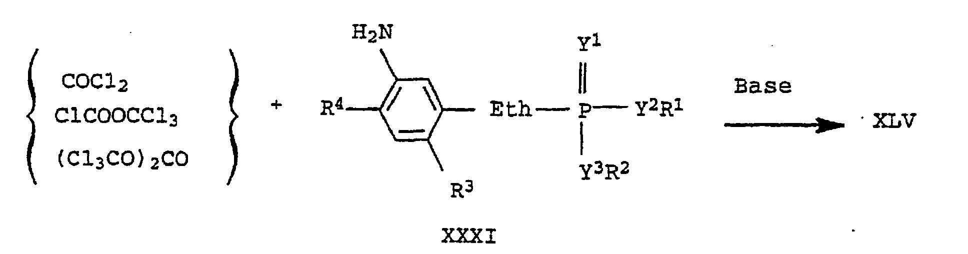 Geeignete Lösungs-/Verdünnungsmittel sind z.B. Kohlenwasserstoffe wie Toluol und n-Hexan, halogenierte Kohlenwasserstoffe wie Dichlormethan, Ether wie Tetrahydrofuran oder aprotische Solventien wie Dimethylformamid, Acetonitril und Dimethylsulfoxid.
         Als Basen kommen vornehmlich die Alkalimetallacetate, -hydrogencarbonate, -carbonate, -hydroxide oder tertiäre Amine wie Triethylamin und Pyridin in Betracht.
         Die Reaktionsführung erfolgt allgemein zwischen dem Schmelz- und Siedepunkt des Reaktionsgemisches, vorzugsweise bei 0 bis 150°C.
   C.6) Aufbau eines cyclischen Imid-Ringes durch Umsetzung eines Anilins der Formel XXXI in Gegenwart einer Säure mit einem Anhydrid der Formel XLVII: 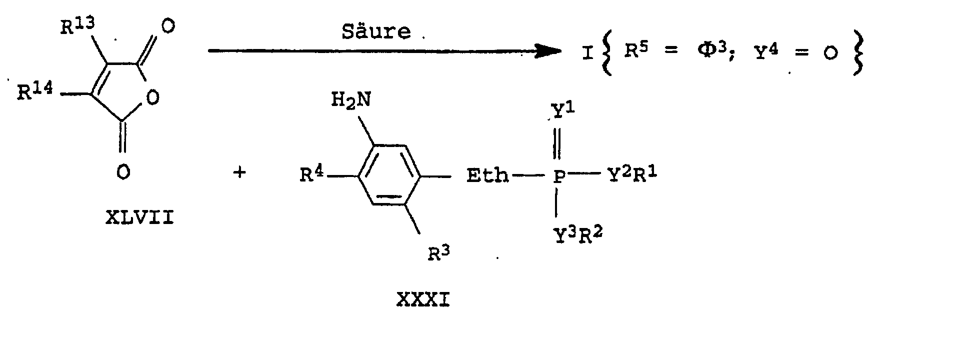 Als Säuren kommen beispielsweise Mineralsäuren wie Salzsäure, Schwefelsäure und Phosphorsäure, Carbonsäuren wie Essigsäure oder Sulfonsäuren wie Benzol- und Toluolsulfonsäure in Betracht.
      Üblicherweise arbeitet man dabei in einem inerten Lösungs-/Verdünnungsmittel, z.B. in einem Kohlenwasserstoff wie Toluol und n-Hexan, einem halogenierten Kohlenwasserstoff wie Dichlormethan, einem Ether wie Tetrahydrofuran, einem Alkohol wie Ethanol, einer Carbonsäure wie Essigsäure oder in einem aprotischen Solvens wie Dimethylformamid, Acetonitril und Dimethylsulfoxid.
      Die Reaktionsführung erfolgt dabei zwischen Schmelz- und Siedepunkt des Reaktionsgemisches, vorzugsweise bei 0 bis 150°C.

Sofern nicht anders angegeben werden alle vorstehend beschriebenen Verfahren zweckmäßigerweise bei Atmosphärendruck oder unter dem Eigendruck des jeweiligen Reaktionsgemisches vorgenommen. Im allgemeinen setzt man die Reaktionspartner in einem Molverhältnis von 0,95:1 bis 5:1 ein.

Die Aufarbeitung der Reaktionsgemische erfolgt in der Regel nach an sich bekannten Methoden, beispielsweise durch Verdünnen der Reaktionslösung mit Wasser und anschließender Isolierung des Produktes mittels Filtration, Kristallisation oder Lösungsmittelextraktion, oder
durch Entfernen des Lösungsmittels, Verteilen des Rückstandes in einem Gemisch aus Wasser und einem geeigneten organischen Lösungsmittel und Aufarbeiten der organischen Phase auf das Produkt hin.

Die substituierten aromatischen Phosphonsäurederivate I können bei der Herstellung als Isomerengemische anfallen, die jedoch gewünschtenfalls nach den hierfür üblichen Methoden wie Kristallisation oder Chromatographie, auch an einem optisch aktiven Adsorbat, in die reinen Isomeren getrennt werden können. Reine optisch aktive Isomere lassen sich vorteilhaft aus entsprechenden optisch aktiven Ausgangsprodukten herstellen.

Landwirtschaftlich brauchbare Salze der Verbindungen I können durch Reaktion mit einer Base des entsprechenden Kations, vorzugsweise einem Alkalimetallhydroxid oder -hydrid, oder durch Reaktion mit einer Säure des entsprechenden Anions, vorzugsweise der Chlorwasserstoffsäure, Bromwasserstoffsäure, Schwefelsäure, Phosphorsäure oder Salpetersäure, gebildet werden.

Salze von I, deren Metallion kein Alkalimetallion ist, können auch durch Umsalzen des entsprechenden Alkalimetallsalzes in üblicher Weise hergestellt werden, ebenso Ammonium-, Phosphonium-, Sulfonium- und Sulfoxoniumsalze mittels Ammoniak, Phosphonium-, Sulfonium- oder Sulfoxoniumhydroxiden.

Die Verbindungen I und deren landwirtschaftlich brauchbaren Salze eignen sich - sowohl als Isomerengemische als auch in Form der reinen Isomeren - als Herbizide. Die I enthaltenden herbiziden Mittel bekämpfen Pflanzenwuchs auf Nichtkulturflächen sehr gut, besonders bei hohen Aufwandmengen. In Kulturen wie Weizen, Reis, Mais, Soja und Baumwolle wirken sie gegen Unkräuter und Schad-gräser, ohne die Kulturpflanzen nennenswert zu schädigen. Dieser Effekt tritt vor allem bei niedrigen Aufwandmengen auf.

In Abhängigkeit von der jeweiligen Applikationsmethode können die Verbindungen I bzw. sie enthaltenden herbiziden Mittel noch in einer weiteren Zahl von Kulturpflanzen zur Beseitigung unerwünschter Pflanzen eingesetzt werden. In Betracht kommen beispielsweise folgende Kulturen:
Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N. rustica), Olea europaea, Oryza sativa, Phaseolus lunatus, Phaseolus vulgaris, Picea abies, Pinus spec., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera und Zea mays.

Darüber hinaus können die Verbindungen I auch in Kulturen, die durch Züchtung einschließlich gentechnischer Methoden gegen die Wirkung von Herbiziden tolerant sind, verwandt werden.

Des weiteren eignen sich die substituierten aromatischen Phosphonsäurederivate I auch zur Desikkation und/oder Defoliation von Pflanzen.

Als Desikkantien eignen sie sich insbesondere zur Austrocknung der oberirdischen Teile von Kulturpflanzen wie Kartoffel, Raps, Sonnenblume und Sojabohne. Damit wird ein vollständig mechanisches Beernten dieser wichtigen Kulturpflanzen ermöglicht.

Von wirtschaftlichem Interesse ist ferner die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- oder Blatt- und Sproßteil der Pflanzen ist auch für ein gut kontrollierbares Entblättern von Nutzpflanzen, insbesondere Baumwolle, wesentlich.

Außerdem führt die Verkürzung des Zeitintervalls, in dem die einzelnen Baumwollpflanzen reif werden, zu einer erhöhten Faserqualität nach der Ernte.

Die Verbindungen I bzw. die sie enthaltenden Mittel können beispielsweise in Form von direkt versprühbaren wäßrigen Lösungen, Pulvern, Suspensionen, auch hochprozentigen wäßrigen, öligen oder sonstigen Suspensionen oder Dispersionen, Emulsionen, Öldispersionen, Pasten, Stäubemitteln, streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungsgemäßen Wirkstoffe gewährleisten.

Als inerte Hilfsstoffe kommen im Wesentlichen in Betracht: Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Ketone wie Cyclohexanon, stark polare Lösungsmittel, z.B. Amine wie N-Methylpyrrolidon und Wasser.

Wäßrige Anwendungsformen können aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen können die Substrate als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Konzentrationen der Wirkstoffe I in den anwendungsfertigen Zubereitungen können in weiten Bereichen variiert werden. Im allgemeinen enthalten die Formulierungen etwa von 0,001 bis 98 Gew.-%, vorzugsweise 0,01 bis 95 Gew,-%, mindestens eines Wirkstoffs. Die Wirkstoffe werden dabei in einer Reinheit von 90% bis 100-%, vorzugsweise 95-% bis 100-% (nach NMR-Spektrum) eingesetzt.

Die folgenden Formulierungsbeispiele verdeutlichen die Herstellung solcher Zubereitungen:
I. 20 Gewichtsteile der Verbindung Nr. IAh.432 werden in einer Mischung gelöst, die aus 80 Gewichtsteilen alkyliertem Benzol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100000 Gewichtsteilen Wasser erhält man eine wäßrige Dispersion, die 0,02 Gew.-% des Wirkstoffs enthält.
II. 20 Gewichtsteile der Verbindung Nr. IAh.861 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteilen des Anlagerungsproduktes von 40 Mol Ethylenoxid an 1 Mol Ricinusöl besteht. Durch Eingießen und feines Verteilen der Lösung in 100000 Gewichtsteilen Wasser erhält man eine wäßrige Dispersion, die 0,02 Gew.-% des Wirkstoffs enthält.
III. 20 Gewichtsteile des Wirkstoffs Nr. IBg.861 werden in einer Mischung gelöst, die aus 25 Gewichtsteilen Cyclohexanon, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht. Durch Eingießen und feines Verteilen der Lösung in 100000 Gewichtsteilen Wasser erhält man eine wäßrige Dispersion, die 0,02 Gew.-% des Wirkstoffs enthält.
IV. 20 Gewichtsteile des Wirkstoffs Nr. ICh.860 werden mit 3 Gewichtsteilen des Natriumsalzes der Diisobutylnaphthalin-α-sulfonsäure, 17 Gewichtsteilen des Natriumsalzes einer Ligninsulfonsäure aus einer Sulfit-Ablauge und 60 Gewichtsteilen pulverförmigem Kieselsäuregel gut vermischt und in einer Hammermühle vermahlen. Durch feines Verteilen der Mischung in 20 000 Gewichtsteilen Wasser enthält man eine Spritzbrühe, die 0,1 Gew.-% des Wirkstoffs enthält.
V. 3 Gewichtsteile des Wirkstoffs Nr. ICh.1154 werden mit 97 Gewichtsteilen feinteiligem Kaolin vermischt. Man erhält auf diese Weise ein Stäubemittel, das 3 Gew.-% des Wirkstoffs enthält.
VI. 20 Gewichtsteile des Wirkstoffs Nr. IBh.860 werden mit 2 Gewichtsteilen Calciumsalz der Dodecylbenzolsulfonsäure, 8 Gewichtsteilen Fettalkohol-polyglykolether, 2 Gewichtsteilen Natriumsalz eines Phenol-Harnstoff-Formaldehyd-Kondensates und 68 Gewichtsteilen eines paraffinischen Mineralöls innig vermischt. Man erhält eine stabile ölige Dispersion.
VII. 1 Gewichtsteil der Verbindung Nr. IBh.861 wird in einer Mischung gelöst, die aus 70 Gewichtsteilen Cyclohexanon, 20 Gewichtsteilen ethoxyliertem Isooctylphenol und 10 Gewichtsteilen ethoxyliertem Rizinusöl besteht. Anschließend kann mit Wasser auf die gewünschte Wirkstoffkonzentration verdünnt werden. Man erhält ein stabiles Emulsionskonzentrat.
VIII. 1 Gewichtsteil der Verbindung Nr. IBh.1154 wird in einer Mischung gelöst, die aus 80 Gewichtsteilen Cyclohexanon und 20 Gewichtsteilen Wettol® EM 31 (= nichtionischer Emulgator auf der Basis von ethoxyliertem Rizinusöl; BASF AG) besteht. Danach kann mit Wasser auf die gewünschte Wirkstoffkonzentration verdünnt werden. Man erhält ein stabiles Emulsionskonzentrat.

Die Applikation der Wirkstoffe I bzw. der herbiziden Mittel kann im Vorauflauf- oder im Nachauflaufverfahren erfolgen. Sind die Wirkstoffe für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Aufwandmengen an Wirkstoff I betragen je nach Bekämpfungsziel, Jahreszeit, Zielpflanzen und Wachstumsstadium 0,001 bis 3,0, vorzugsweise 0,01 bis 1,0 kg/ha aktive Substanz (a.S.).

Zur Verbreiterung des Wirkungsspektrums und zur Erzielung synergistischer Effekte können die substituierten aromatischen Phosphonsäurederivate I mit zahlreichen Vertretern anderer herbizider oder wachstumsregulierender Wirkstoffgruppen gemischt und gemeinsam ausgebracht werden. Beispielsweise kommen als Mischungspartner 1,2,4-Thiadiazole, 1,3,4-Thiadiazole, Amide, Aminophosphorsäure und deren Derivate, Aminotriazole, Anilide, Aryloxy-/Heteroaryloxyalkansäuren und deren Derivate, Benzoesäure und deren Derivate, Benzothiadiazinone, 2-(Hetaroyl/Aroyl)-1,3-cyclohexandione, Heteroaryl-Aryl-Ketone, Benzylisoxazolidinone, meta-CF₃-Phenylderivate, Carbamate, Chinolincarbonsäure und deren Derivate, Chloracetanilide, Cyclohexan-1,3-dionderivate, Diazine, Dichlorpropionsäure und deren Derivate, Dihydrobenzofurane, Dihydrofuran-3-one, Dinitroaniline, Dinitrophenole, Diphenylether, Dipyridyle, Halogencarbonsäuren und deren Derivate, Harnstoffe, 3-Phenyluracile, Imidazole, Imidazolinone, N-Phenyl-3,4,5,6-tetrahydrophthalimide, Oxadiazole, Oxirane, Phenole, Aryloxy- und Heteroaryloxyphenoxypropionsäureester, Phenylessigsäure und deren Derivate, 2-Phenylpropionsäure und deren Derivate, Pyrazole, Phenylpyrazole, Pyridazine, Pyridincarbonsäure und deren Derivate, Pyrimidylether, Sulfonamide, Sulfonylharnstoffe, Triazine, Triazinone, Triazolinone, Triazolcarboxamide und Uracile in Betracht.

Außerdem kann es von Nutzen sein, die Verbindungen I allein oder in Kombination mit anderen Herbiziden auch noch mit weiteren Pflanzenschutzmitteln gemischt, gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

### Herstellungsbeispiele

### Beispiel 1

### 2-(2-Chlor-5-(4-chlor-5-difluormethoxy-1-methyl-1H-pyrazol-3-yl)-4-fluorphenyl)vinylphosphonsäurediethylester (Nr. IBg.861)

1 g (3 mmol) Methandiphosphonsäuretetraethylester wurden in 50 ml Toluol gelöst und mit 80 mg (3,2 mmol) Natriumhydrid versetzt. Nach beendeter Gasentwicklung wurde eine Lösung von 1 g (2,9 mmol) 2-Chlor-5-(4-chlor-5-difluormethoxy-1-methyl-lHpyrazol-3-yl)-4-fluorbenzaldehyd in 50 ml Toluol zugegeben. Anschließend rührte man das Reaktionsgemisch 16 Stunden bei Raumtemperatur und versetzte es danach mit 0,15 1 Wasser. Aus der wässrigen Phase wurde das Wertprodukt mit 50 ml Toluol extrahiert. Schließlich wurden die vereinigten organischen Phasen ihrerseits mit Wasser gewaschen, dann über Magnesiumsulfat getrocknet und eingeengt. Ausbeute: 1,1 g.

### Vorstufe 1.1

### 5-(4-Chlor-2-fluor-5-methylphenyl)-1,2-dihydro-2-methyl-3H-pyrazol-3-on

Zu einer Lösung von 177 g (0,68 mol) 3-(4-Chlor-2-fluor-5-methylphenyl)-3-oxopropionsäureethylester in 500 ml Diethylenglycol wurden 34,7 g (0,75 mol) Methylhydrazin gegeben. Nach 6 Stunden bei 100°C wurde auf 4 1 Wasser gegossen. Anschließend wurde der Feststoffanteil abgetrennt und getrocknet. Ausbeute: 133 g; Smp.: 155-156°C.

### Vorstufe 1.2

### 3-(4-Chlor-2-fluor-5-methylphenyl)-5-difluormethoxy-1-methyl-lHpyrazol

In eine Lösung von 133 g (0,55 mol) 5-(4-Chlor-2-fluor-5-methylphenyl)-1,2-dihydro-2-methyl-3H-pyrazol-3-on und 110 g (2,7 mol) Natriumhydroxid in 1 1 Dioxan und 0,5 1 Wasser wurde bei Raumtemperatur 2 Stunden lang gasförmiges Chlordifluormethan eingeleitet. Dann wurde die Reaktionslösung auf 2 1 Wasser gegossen, wonach man die wäßrige Phase dreimal mit Ethylacetat extrahierte. Die vereinigten organischen Phasen wurden über Magnesiumsulfat getrocknet, dann filtriert und eingeengt. Die Reinigung des Rückstandes erfolgte mittels Säulenchromatographie an Kieselgel (Eluent: Cyclohexan/Ethylacetat = 9:1) und anschließender präparativer MPLC an Kieselgel (gleicher Eluent). Ausbeute: 43 g. ¹H-NMR (250 MHz; in CDCl₃): δ [ppm] = 2,37 (s,3H), 3,80 (s,3H), 6,30 (s,1H), 6,57 (t,1H), 7,14 (d,1H), 7,82 (d,1H).

### Vorstufe 1.3

### 4-Chlor-3-(4-chlor-2-fluor-5-methylphenyl)-5-difluormethoxy-1-methyl-1H-pyrazol

Zu einer Lösung von 43 g (0,15 mol) 3-(4-Chlor-2-fluor-5-methylphenyl)-5-difluormethoxy-1-methyl-1H-pyrazol in 250 ml Tetrachlormethan wurden 22 g (0,16 mol) Sulfurylchlorid getropft. Nach anschließendem 16stündigem Rühren tropfte man zu der Reaktionslösung 200 ml gesättigte wäßrige Natriumhydrogencarbonat-Lösung. Danach wurde die organische Phase abgetrennt, mit gesättigter Kochsalzlösung gewaschen, über Magnesiumsulfat getrocknet, dann filtriert und schließlich eingeengt. Ausbeute: 46 g. ¹H-NMR (250 MHz; in CDCl₃): δ [ppm] = 2,37 (s,3H), 3,84 (s,3H), 6,71 (t,1H), 7,21 (d,1H), 7,40 (d,1H).

### Vorstufe 1.4

### 4-Chlor-3-(4-chlor-5-dibrommethyl-2-fluorphenyl)-5-difluormethoxy-l-methyl-lH-pyrazol

Eine Lösung von 46 g (0,14 mol) 4-Chlor-3-(4-chlor-2-fluor-5-methylphenyl)-5-difluormethoxy-1-methyl-1H-pyrazol und 62,9 g (0,35 mol) N-Bromsuccinimid in 2 1 Tetrachlormethan wurde 3,5 Stunden lang mit einer 1500-Watt-Quecksilberhochdrucklampe und einer UV-Lampe bestrahlt. Anschließend wurde der Feststoffanteil abfiltriert und noch zweimal mit Tetrachlormethan gewaschen. Die vereinigten Filtrate wurden dann eingeengt. Ausbeute: 68 g. ¹H-NMR (270 MHz; in CDCl₃): δ [ppm] = 3,86 (s,3H), 6,72 (t,1H), 7,05 (s,1H), 7,19 (d,1H), 8,23 (d,1H).

### Vorstufe 1.5

### 2-Chlor-5-(4-chlor-5-difluormethoxy-1-methyl-1H-pyrazol-3-yl)-4-fluorbenzaldehyd

### Unter Eiskühlung wurden 68 g (0,14 mol)

4-Chlor-3-(4-chlor-5-dibrommethyl-2-fluorphenyl)-5-difluormethoxy-1-methyl-lH-pyrazol in 200 ml konzentrierter Schwefelsäure gelöst, wonach man bis zur beendigten Gasentwicklung auf 100°C erwärmte. Danach wurde in 4 1 Eiswasser gegossen. Anschließend extrahierte man dreimal mit Ethylacetat. Die vereingten organischen Phasen wurden mit Wasser gewaschen, dann über Magnesiumsulfat getrocknet und schließlich eingeengt. Die Reinigung des Rohprodukts erfolgte mittels Säulenchromatographie an Kieselgel (Eluent: Hexan/Ethylacetat = 8:1). Ausbeute: 35 g; Smp.: 95-98 °C.

### Beispiel 2

### 1-Chlor-2-[2-chlor-5-(4-chlor-5-difluormethoxy-1-methyl-1Hpyrazol-3-yl)-4-fluorphenyl]vinylphosphonsäurediethylester (Nr. IBh.861)

Zu einer auf (-70)°C gekühlten Lösung von 1,63 g (6,4 mmol) Trichlormethanphosphonsäurediethylester in 20 ml Tetrahydrofuran wurden 2 ml einer Butyllithium-Lösung (1,6 M in Hexan; 3,2 mmol) so zugegeben, daß die Temperatur nicht über (-65)°C stieg. Anschließend rührte man noch 1 Std. bei (-65) bis (-70)°C, wonach eine Lösung von 1 g (2,9 mmol) 2-Chlor-5-(4-chlor-5-difluormethoxy-1-methyl-lH-pyrazol-3-yl)-4-fluorbenzaldehyd in 20 ml Tetrahydrofuran langsam zugetropft wurde. Man rührte noch 30 Minuten, entfernte dann das Kühlbad und rührte weitere 16 Stunden, wobei sich die Mischung auf etwa 20°C erwärmte. Nach Zuzatz von 5 g Ammoniumchlorid wurde das Reaktionsgemisch auf 50 ml Wasser gegossen. Aus der wässrigen Phase extrahierte man dann das Wertprodukt zweimal mit je 50 ml Methyl-tert.-butylether. Die vereinigten organischen Phasen wurden mit gesättigter wässriger Kochsalzlösung und Wasser gewaschen, über Magnesiumsulfat getrocknet und schließlich eingeengt. Die Reinigung des Rohprodukts erfolgte mittels Säulenchromatographie an Kieselgel (Eluens: Hexan/Ethylacetat = 4:1). Ausbeute: 0,7 g.

### Beispiel 3

### 2- [2-Chlor-4-fluor-5- (1-methyl-6-trifluormethyl-2,4(1H,3H)-pyrimidindion-3-yl)phenyl]vinylphosphonsäurediethylester (Nr. IAg.861)

Zu einer Lösung von 1,5 g (5,2 mmol) Methandiphosphonsäuretetraethylester in 50 ml Toluol wurden 0,12 g (4,7 mmol) Natriumhydrid gegeben. Nach beendeter Gasentwicklung wurde eine Lösung von 1,5 g (4,3 mmol) 2-Chlor-4-fluor-5-(1-methyl-6-trifluormethyl-2,4(1H,3H)-pyrimidindion-3-yl)benzaldehyd in 50 ml Toluol zugegeben. Anschließend rührte man noch 16 Stunden bei ca. 20°C. Zur Aufarbeitung wurde das Reaktionsgemisch mit 0,15 1 Wasser versetzt. In der wässrigen Phase verbliebene Restmengen an Wertprodukt wurden mit 50 ml Toluol extrahiert. Anschließend wurden die vereinigten organischen Phasen mit Wasser gewaschen, über Magnesiumsulfat getrocknet und schließlich eingeengt. Ausbeute: 1,4 g.

### Vorstufe 3.1

### 2-Chlor-4-fluor-5-isocyanatobenzaldehyd-(O-methyl)oxim

Zu einer Lösung von 383 g (1,89 mol) 5-Amino-2-chlor-4-fluorbenzaldehyd(O-methyl)oxim in 2 1 Tolupl wurden tropfenweise 411,3 g Diphosgen (2,08 mol) gegeben. Dann erhöhte man im Verlauf von etwa 6 Std. langsam die Temperatur bis 110 °C, so daß die Gasentwicklung kontrolliert verlief. Anschließlich wurde noch 5 Std. auf Rückflußtemperatur erhitzt. Danach ließ man das Reaktionsgemisch abkühlen und engte es schließlich ein. Ausbeute: 432 g. Das Produkt wurde ohne Reinigung weiterverarbeitet.

### Vorstufe 3.2

### 2-Chlor-4-fluor-5-(6-trifluormethyl-2,4(1H,3H)-pyrimidindion-3-yl)benzaldehyd-(O-methyl)oxim

30,4 g (1,01 mol) 80 gew.%iges Natriumhydrid in 0,5 1 Dimethylformamid wurden unter Eiskühlung tropfenweise mit einer Lösung von 168,5 g (0,92 mol) 3-Amino-4,4,4-trifluorcrotonsäureethylester in 0,1 1 Dimethylformamid versetzt. Nach einer Stunde bei dieser Temperatur kühlte man auf (-30) bis (-35)°C ab und tropfte eine Lösung von 210,3 g (0,92 mol) 2-Chlor-4-fluor-5-isocyanatobenzaldehyd-(O-methyl)oxim in 0,15 1 Tetrahydrofuran zu. Dann wurde die Reaktionsmischung 20 Stunden bei ca. 20°C gerührt und anschließend unter Eiskühlung mit 1,5 1 Wasser versetzt. Die in der entstandenen Mischung nicht gelösten Anteile wurden abgetrennt und mit 300 ml Wasser gewaschen. Die vereinigten Filtrate wurden mit verdünnter Salzsäure angesäuert. Aus der erhaltenen Lösung extrahierte man dann das Wertprodukt mit Dichlormethan. Der Extrakt wurde mit Wasser gewaschen, über Natriumsulfat getrocknet und schließlich eingeengt. Ausbeute: 289 g; Smp.: 176-177°C (Diisopropylether/Petrolether).

### Vorstufe 3.3

### 2-Chlor-4-fluor-5-(1-methyl-6-trifluormethyl-2,4(1H,3H)-pyrimidindion-3-yl)benzaldehyd-(O-methyl)oxim

Zu einer Lösung von 281,6 g (0,77 mol) 2-Chlor-4-fluor-5-(6-trifluormethyl-2,4(1H,3H)-pyrimidindion-3-yl)benzaldehyd-(O-methyl)-oxim in 0,8 1 Dimethylformamid wurden zuerst 117,1 g (0,85 mol) Kaliumcarbonat gegeben, wonach man im Verlauf von 1 Std. eine Lösung von 120,2 g Methyliodid (0,85 mol) in 0,1 1 Dimethylformamid zutropfte. Anschließend wurde die Reaktionsmischung 20 Stunden bei ca. 20°C gerührt und danach unter Eiskühlung tropfenweise mit 0,9 1 Wasser versetzt. Aus der dabei erhaltenen Lösung extrahierte man das Wertprodukt mit 1 1 Dichlormethan. Der Extrakt wurde dreimal mit 300 ml Wasser gewaschen, über Natriumsulfat getrocknet und schließlich eingeengt. Ausbeute: 241 g; Smp.: 141-142°C (Diisopropylether).

### Vorstufe 3.4

### 2-Chlor-4-fluor-5-(1-methyl-6-trifluormethyl-2,4(1H,3H)-pyrimidindion-3-yl)benzaldehyd

Zu einer Lösung von 189,9 g (0,50 mol) 2-Chlor-4-fluor-5-(l-methyl-6-trifluormethyl-2,4(1H,3H)-pyrimidindion-3-yl)benzaldehyd-(O-methyl)oxim in 0,75 1 Eisessig wurden 150 ml einer 30 gew.%igen wäßrigen Formaldehyd-Lösung und 150 ml konzentrierte Salzsäure getropft. Dann erhitzte man zwei Stunden auf Rückflußtemperatur. Nach dem Abkühlen wurden 0,75 1 Wasser zugesetzt, wonach das entstandene feste Wertprodükt abgetrennt und zunächst mit Wasser bis zur neutralen Reaktion und dann mit Petrolether gewaschen wurde. Ausbeute: 140 g; Smp.: 175-178°C.

### Beispiel 4

### l-Chlor-2-[2-chlor-4-fluor-5-(1-methyl-6-trifluormethyl-2,4-(1H,3H)-pyrimidindion-3-yl)phenyl]vinylphosphonsäurediethylester (Nr. IAh.861)

Zu einer auf (-70)°C gekühlten Lösung von 2,4 g (9,5 mmol) Trichlormethanphosphonsäurediethylester in 30 ml Tetrahydrofuran wurden 3,2 ml einer Butyllithium-Lösung (1,5 M in Hexan; 4,8 mmol) so zugegeben, daß die Temperatur nicht über (-65)°C stieg. Dann rührte man 1 Std. bei (-65) bis (-70)°C, wonach eine Lösung von 1,5 g (4,3 mmol) 2-Chlor-4-fluor-5-(1-methyl-6-trifluormethyl-2,4(1H,3H)-pyrimidindion-3-yl)benzaldehyd in 20 ml Tetrahydrofuran langsam zugetropft wurde. 30 Minuten später entfernte man das Kühlbad und ließ innerhalb von 16 Stunden auf Raumtemperatur kommen. Nach Zugabe von 3,6 g Ammoniumchlorid wurde die Reaktionsmischung auf 20 ml Wasser gegossen. Aus der wäßrigen Phase extrahierte man das Wertprodukt zweimal mit je 50 ml Methyl-tert.-butylether. Die vereinigten organischen Phasen wurden mit gesättigter wässriger Kochsalzlösung und Wasser gewaschen, über Magnesiumsulfat getrocknet und schließlich eingeengt. Die Reinigung des Rohprodukts erfolgte mittels Säulenchromatographie an Kieselgel (Eluens: Hexan/Ethylacetat = 4:1). Ausbeute: 0,7 g.

### Beispiel 5

### 1-Chlor-2-(2-chlor-5-(1,3,4,5,6,7-hexahydro-1,3-dioxo-2H-isoindol-2-yl)phenyl)ethylphosphonsäuredimethylester (Nr. IEb.2)

Zu einer Lösung von 31,2 g (0,23 mol) Vinylphosphonsäuredimethylester, 1,6 g (12 mmol) Kupfer(II)chlorid und 1,6 g (16 mmol) tert.-Butylnitrit in 200 ml Acetonitril wurden 2,8 g (10 mmol) 2-Chlor-5-(1,3,4,5,6,7-hexahydro-1,3-dioxo-2H-isoindol-2-yl)-anilin gegeben. Nach 2 Std. Rühren versetzte man die Reaktionsmischung mit 200 ml Methyl-tert.-butylether. Die organische Phase wurde anschließend zweimal mit je 50 ml Wasser gewaschen, dann über Magnesiumsulfat getrocknet und schließlich eingeengt. Die Reinigung des Rohprodukts erfolgte mittels Säulenchromatographie an Kieselgel (Eluens: zunächst Cyclohexan/Methyl-tert.-butylether = 4:1, dann Ethylacetat). Ausbeute: 2,0 g.

### Beispiel 6

### 1-Chlor-2- (2-chlor-5-(5-chlor-1-difluormethyl-2-methyl-1H-imidazol-4-yl)phenyl)ethylphosphonsäuredimethylester (Nr. IHb.2)

Eine Lösung von 42,5 g (0,26 mol) Vinylphosphonsäuredimethylester, 2,5 g Kupfer(II)chlorid (19 mmol) und 1,7 g (17 mmol) tert.-Butylnitrit in 100 ml Acetonitril wurde 30 Minuten gerührt und anschließend mit einer Lösung von 3,8 g (13 mmol) 2-Chlor-5-(5-chlor-1-difluormethyl-2-methyl-1H-imidazol-4-yl)-anilin in 20 ml Acetonitril versetzt. Nach 1 weiteren Std. engte man ein und versetzte dann den Rückstand mit 50 ml Wasser. Aus der wässrigen Phase wurde das Podukt mit 50 ml Ethylacetat extrahiert. Die organische Phase wurde über Magnesiumsulfat getrocknet, filtriert und schließlich eingeengt. Die Reinigung des Rohprodukts erfolgte mittels Säulenchromatographie an Kieselgel (Eluens: Hexan/Ethylacetat = 4:1). Ausbeute: 0,8 g.

### Vorstufe 6.1

### 4(5)-(4-Chlorphenyl) -2-methyl-1H-imidazol

Zu 320 ml 25 gew%iger wäßriger Ammoniaklösung wurden unter Kühlung 28,6 g (0,65 mol) Acetaldehyd getropft. Dann wurden nacheinander 86,3 g (0,43 mol) Kupfer(II)acetat-Monohydrat und eine Lösung von 46g (0,22 mol) Essigsäure-[1-(4-chlorphenyl)ethanon-2-yl]ester in 300 ml Dimethylformamid zugegeben, wonach man die Mischung 30 Minuten auf 100°C erhitzte. Anschließend goß man das Reaktionsgemisch auf 3 1 Eiswasser. Der Feststoffanteil wurde abfiltriert und dann in 300 ml Ethanol aufgenommen. In diese Lösung gaste man bis zur Sättigung Schwefelwasserstoff ein, wobei schwarzes Kupfersulfid ausfiel. Nach Zugabe von 5 g Aktivkohle wurde das Gemisch noch 2 Stunden bei Rückflußtemperatur gerührt, dann abgekühlt, filtriert und eingeengt. Ausbeute: 31,5 g. ¹H-NMR (270 MHz; in CDCl₃): δ [ppm] = 2,41 (s,3H), 7,17 (s,2H), 7,30 (d,2H), 7,61 (d,2H).

### Vorstufe 6.2

### 4-(4-Chlorphenyl)-1-difluormethyl-2-methyl-1H-imidazol

Zu einer Lösung von 31,5 g (0,16 mol) 4(5)-(4-Chlorphenyl)-2-methyl-1H-imidazol in 150 ml Dimethylformamid gab man 45,2 g (0,33 mol) Kaliumcarbonat. Dann wurde auf 90°C erwärmt und für 2 Stunden Chlordifluormethan eingegast. Anschließend goß man das Reaktionsgemisch auf 300 ml Wasser. Aus der wässrigen Phase wurde das Produkt dreimal mit je 300 ml Essigester extrahiert, wonach die vereinigten organischen Phasen mit Wasser und gesättigter wässriger Kochsalzlösung gewaschen, über Magnesiumsulfat getrocknet und schließlich eingeengt wurden. Ausbeute: 36 g. ¹H-NMR (270 MHz; in CDCl₃): δ [ppm] = 2,56 (s,3H), 7,04 (t,1H), 7,35 (m,3H), 7,68 (d,2H).

### Vorstufe 6.3

### 5-Chlor-4-(4-chlorphenyl)-1-difluormethyl-2-methyl-1H-imidazol

Zu einer Suspension von 24 g (98 mmol) 4-(4-Chlorphenyl)-1-difluormethyl-2-methyl-1H-imidazol in 200 ml Tetrachlormethan wurden unter Eiskühlung 26,7 g (0,19 mol) Sulfurylchlorid getropft. Nach 2 Stunden Rühren versetzte man die Reaktionsmischung (weiterhin unter Eiskühlung) tropfenweise mit einem Überschuß an gesättigter wässriger Natriumhydrogencarbonat-Lösung. Anschließend wurde der Feststoffanteil abfiltriert. Die organische Phase wurde mit Wasser neutral gewaschen, über Magnesiumsulfat getrocknet und eingeengt. Die Reinigung des Rohprodukts erfolgte mittels Säulenchromatographie an Kieselgel (Eluent: Hexan/Esssigester = 8:1). Ausbeute: 7,4 g. ¹H-NMR (270 MHz; in CDCl₃): δ [ppm] = 2,60 (s,3H), 7,14 (t,1H), 7,38 (d,2H), 7,84 (d,2H).

### Vorstufe 6.4

### 5-Chlor-4-(4-chlor-3-nitrophenyl)-1-difluormethyl-2-methyl-1Himidazol

8 g (28 mmol) 5-Chlor-4-(4-chlorphenyl)-1-difluormethyl-2-methyl-1H-imidazol wurden auf (-40)°C gekühlt und mit 100 ml konzentrierter Salpetersäure versetzt. Nach 2 Stunden bei (-20)°C goß man auf Eiswasser, wonach das feste Wertprodukt abfiltriert, mit Wasser gewaschen und getrocknet wurde. Ausbeute: 7 g.
¹H-NMR (270 MHz; in CDCl₃): δ [ppm] = 2,63 (s,3H), 7,16 (t,1H), 7,59 (d,1H), 8,09 (dd,1H), 8,47 (d,2H).

### Vorstufe 6.5

### 2-Chlor-5-(5-chlor-1-difluormethyl-2-methyl-1H-imidazol-4-yl)-anilin

7 g (22 mmol) 5-Chlor-4-(4-chlor-3-nitrophenyl)-2-difluormethyl-2-methyl-1H-imidazol wurden in 200 ml Methanol unter Erwärmen gelöst. Diese Lösung tropfte man zu einer bei Rückflußtemperatur gerührten Suspension von 3,6 g (65 mmol) Eisenpulver in 150 ml Eisessig. Nach 3 Stunden wurde das Reaktionsgemisch auf 500 ml Wasser gegossen. Zu der Mischung gab man noch 500 ml Ethylacetat, wonach die Eisenrückstände abfiltriert wurden. Die wäßrige Phase wurde abgetrennt und nochmals mit 500 ml Ethylacetat vermischt. Die vereinigten organischen Phasen wurden mit Wasser und gesättigter wässriger Kochsalzlösung gewaschen, über Magnesiumsulfat getrocknet und schließlich eingeengt. Zur Entfernung der restlichen Essigsäure versetzte man das Rohprodukt mit 100 ml Toluol, wonach wieder zur Trockene eingeengt wurde. Ausbeute: 5,7 g.
¹H-NMR (270 MHz; in CDCl₃): δ [ppm] = 2,60 (s,3H), 4,13 (s,2H), 7,12 (t,1H), 7,15-7,35 (m,3H).

### Beispiel 7

### 1-Brom-2-[2-chlor-4-fluor-5-(1,3,4,5,6,7-hexahydro-1,3-dioxo-2Hisoindol-2-yl)phenyl]ethylphosphonsäuredimethylester (Nr. IEc.860)

Auf die in Beispiel 5 beschriebene Weise erhielt man unter Verwendung von 21,2 g (0,16 mol) Vinylphosphonsäuredimethylester, 1,8 g (8 mmol) Kupfer(II)bromid, 1,1 g (11 mmol) tert.-Butylnitrit und 2,0 g (6,8 mmol) 2-Chlor-4-fluor-5-(1,3,4,5,6,7-hexahydro-1,3-dioxo-2H-isoindol-2-yl)anilin 0,7 g dieses Wertproduktes.

### Beispiel 8

### 1-Chlor-2-(2-chlor-4-fluor-5-(1,3,4,5,6,7-hexahydro-1,3-dioxo-2H-isoindol-2-yl)phenyl)ethylphosphonsäuredimethylester (Nr. IEb.860)

Auf die in Beispiel 5 beschriebene Weise erhielt man unter Verwendung von 21,2 g (0,16 mol) Vinylphosphonsäuredimethylester, 1,1 g (8 mmol) Kupfer(II)chlorid, 1,1 g (11 mmol) tert.-Butylnitrit und 2,0 g (6,8 mmol) 2-Chlor-4-fluor-5-(1,3,4,5,6,7-hexahydro-1,3-dioxo-2H-isoindol-2-yl)anilin 1,0 g dieses Wertproduktes.

### Beispiel 9

### l-Chlor-2-[2-chlor-5-(3-chlor-4,5,6,7-tetrahydro-2H-indazol-2-yl)phenyl]ethylphosphonsäuredimethylester (Nr. IGb.2)

Auf die in Beispiel 5 beschriebene Weise erhielt man unter Verwendung von 42,4 g (0,31 mol) Vinylphosphonsäuredimethylester, 2,2 g (16 mmol) Kupfer(II)chlorid, 2,2 g (22 mmol) tert.-Butylnitrit und 4,0 g (14 mmol) 2-Chlor-5-(3-chlor-4,5,6,7-tetrahydro-2H-indazol-2-yl)anilin 0,8 g dieses Wertproduktes.

### Beispiel 10

### 1-Chlor-2-[2,4-dichlor-5-(4-chlor-5-difluormethoxy-1-methyl-1Hpyrazol-3-yl)phenyl]ethylphosphonsäuredimethylester (Nr. IBb.431)

Auf die in Beispiel 5 beschriebene Weise erhielt man unter Verwendung von 32,6 g (0,24 mol) Vinylphosphonsäuredimethylester, 3,6 g (26 mmol) Kupfer(II)chlorid, 2,6 g (25 mmol) tert.-Butylnitrit und 13,6 g (24 mmol) 2,4-Dichlor-5-(4-chlor-5-difluormethoxy-1-methyl-1H-pyrazol-3-yl)anilin 3,6 g dieses Wertproduktes.

### Beispiel 11

### 1-Chlor-2-(2-chlor-5-(1-methyl-6-trifluormethyl-2,4(1H,3H)-pyrimidindion-3-yl)phenyl)ethylphosphonsäuredimethylester (Nr. IAb.2)

Auf die in Beispiel 5 beschriebene Weise erhielt man unter Verwendung von 17,9 g (0,13 mol) Vinylphosphonsäuredimethylester, 0,9 g (7 mmol) Kupfer(II)chlorid, 0,65 g (6,5 mmol) tert.-Butylnitrit und 2,0 g (6,3 mmol) 2-Chlor-5-(1-methyl-6-trifluormethyl-2,4(1H,3H)-pyrimidindion-3-yl)anilin 1,0 g dieses Wertproduktes.

### Beispiel 12

### 1-Chlor-2-(2-chlor-4-fluor-5-[1-methyl-4,5-di(trifluormethyl)-1Hpyrazol-3-yl]phenyl)ethylphosphonsäuredimethylester (Nr. IDb.860)

Auf die in Beispiel 5 beschriebene Weise erhielt man unter Verwendung von 13,1 g (96 mmol) Vinylphosphonsäuredimethylester, 0,7 g (5 mmol) Kupfer(II)chlorid, 0,5 g (5 mmol) tert.-Butylnitrit und 1,2 g (4,6 mmol) 2-Chlor-4-fluor-5-(1-methyl-4,5-di(trifluormethyl)-1H-pyrazol-3-yl)anilin 0,6 g dieses Wertproduktes.

### Beispiel 13

### 1-Chlor-2-[2-chlor-5-(4-chlor-5-difluormethoxy-1-methyl-1Hpyrazol-3-yl)-4-fluorphenyl]ethylphosphonsäurediethylester (Nr. IBb.861)

Auf die in Beispiel 5 beschriebene Weise erhielt man unter Verwendung von 12,5 g (85 mmol) Vinylphosphonsäurediethylester, 0,7 g (5 mmol) Kupfer(II)chlorid, 0,5 g (5 mmol) tert.-Butylnitrit und 1,5 g (4,6 mmol) 2-Chlor-4-fluor-5-(4-chlor-5-difluormethoxy-1-methyl-lH-pyrazol-3-yl)anilin 0,6 g dieses Wertproduktes.

### Beispiel 14

### 1-Brom-2-(2-chlor-5-(4-chlor-5-difluormethoxy-1-methyl-1Hpyrazol-3-yl)-4-fluorphenyl)ethylphosphonsäurediethylester (Nr. IBc.861)

Auf die in Beispiel 5 beschriebene Weise erhielt man unter Verwendung von 12,5 g (85 mmol) Vinylphosphonsäurediethylester, 1,1 g (5 mmol) Kupfer(II)bromid, 0,5 g (5 mmol) tert.-Butylnitrit und 1,5 g (4,6 mmol) 2-Chlor-4-fluor-5-(4-chlor-5-difluormethoxy-1-methyl-1H-pyrazol-3-yl)anilin 0,8 g dieses Wertproduktes.

### Beispiel 15

### 2-(2-Chlor-5-(4-chlor-1-methyl-5-trifluormethyl-1H-pyrazol-3-yl)-4-fluorphenyl)vinylphosphonsäurediethylester (Nr. ICg.861)

Auf die in Beispiel 1 beschriebene Weise erhielt man unter Verwendung von 0,45 g (1,5 mmol) Methandiphosphonsäuretetraethylester, 36 mg (1,5 mmol) Natriumhydrid und 0,5 g (1,5 mmol) 2-Chlor-5-(4-chlor-1-methyl-5-trifluormethyl-lH-pyrazol-3-yl)-4-fluorbenzaldehyd 0,4 g dieses Wertproduktes.

### Beispiel 16

### 2-(2-Chlor-5-(1,3,4,5,6,7-hexahydro-1,3-dioxo-2H-isoindol-2-yl)-phenyl)vinylphosphonsäurediethylester (Nr. IEg.3)

Auf die in Beispiel 1 beschriebene Weise erhielt man unter Verwendung von 0,5 g (1,7 mmol) Methandiphosphonsäuretetraethylester, 40 mg (1,7 mmol) Natriumhydrid und 0,5 g (1,7 mmol) 2-Chlor-5-(1,3,4,5,6,7-hexahydro-1,3-dioxo-2H-isoindol-2-yl)benzaldehyd 0,2 g dieses Wertproduktes.

### Beispiel 17

### 2-(2-Chlor-4-fluor-5-(1,3,4,5,6,7-hexahydro-1,3-dioxo-2H-isoindol-2-yl)phenyl)vinylphosphonsäurediethylester (Nr. IEg.861)

Auf die in Beispiel 1 beschriebene Weise erhielt man unter Verwendung von 0,5 g (1,7 mmol) Methandiphosphonsäuretetraethylester, 39 mg (1,7 mmol) Natriumhydrid und 0,5 g (1,6 mmol) 2-Chlor-4-fluor-5-(1,3,4,5,6,7-hexahydro-1,3-dioxo-2H-isoindol-2-yl)benzaldehyd 0,4 g dieses Wertproduktes.

### Beispiel 18

### 2-[2-Chlor-5-(3,4-dimethyl-lH-pyrrol-2,5-dion-1-yl)phenyl]vinylphosphonsäurediethylester (Nr. IFg.3)

Auf die in Beispiel 1 beschriebene Weise erhielt man unter Verwendung von 0,55 g (1,9 mmol) Methandiphosphonsäuretetraethylester, 45 mg (1,9 mmol) Natriumhydrid und 0,5 g (1,9 mmol) 2-Chlor-5- (3,4-dimethyl-1H-pyrrol-2,5-dion-1-yl)benzaldehyd 0,5 g dieses Wertproduktes. Smp.: 93-94°C.

### Beispiel 19

### 2- (2-Chlor-5- (1-methyl-6-trifluormethyl-2,4(1H,3H)-pyrimidindion-3-yl)phenyl)vinylphosphonsäurediethylester (Nr. IAg.3)

Auf die in Beispiel 1 beschriebene Weise erhielt man unter Verwendung von 0,73 g (2,5 mmol) Methandiphosphonsäuretetraethylester, 57 mg (2,4 mmol) Natriumhydrid und 0,5 g (1,5 mmol) 2-Chlor-5-(1-methyl-6-trifluormethyl-2,4(1H,3H)-pyrimidindion-3-yl)benzaldehyd 0,4 g dieses Wertproduktes.

### Beispiel 20

### 2-(2,4-Dichlor-5-(1-methyl-6-trifluormethyl-2,4(1H,3H)-pyrimidindion-3-yl)phenyl)vinylphosphonsäurediethylester (Nr. IAg.432)

Auf die in Beispiel 1 beschriebene Weise erhielt man unter Verwendung von 0,7 g (2,3 mmol) Methandiphosphonsäuretetraethylester, 52 mg (2,3 mmol) Natriumhydrid und 0,5 g (1,4 mmol) 2,4-Dichlor-5-(1-methyl-6-trifluormethyl-2,4(1H,3H)-pyrimidindion-3-yl)benzaldehyd 0,5 g dieses Wertproduktes.

### Vorstufe 20.1

### 2,4-Dichlor-5-isocyanatobenzaldehyd-(O-ethyl)oxim

65,3 g (0,28 mol) 5-Amino-2,4-dichlorbenzaldehyd-(O-ethyl)oxim (herstellbar nach dem bei den Vorstufen 28.1-28.3 angegebenen Verfahren) und 60,9 g (0,31 mol) Diphosgen wurden auf die in Vorstufe 3.1 beschriebene Weise umgesetzt. Ausbeute: 72,9 g.

### Vorstufe 20.2

### 2,4-Dichlor-5-(6-trifluormethyl-2,4(1H,3H)-pyrimidindion-3-yl)-benzaldehyd-(O-ethyl)oxim

9,2 g (0,31 mol) Natriumhydrid, 51,3 g (0,28 mol) 3-Amino-4,4,4-trifluorcrotonsäureethylester und 72,6 g (0,28 mol) 2,4-Dichlor-5-isocyanatobenzaldehyd-(O-ethyl)oxim wurden auf die in Vorstufe 3.2 beschriebene Weise umgesetzt. Ausbeute: 72,0 g; Smp.: 205-209°C.

### Vorstufe 20.3

### 2,4-Dichlor-5-(1-methyl-6-trifluormethyl-2,4(1H,3H)-pyrimidindion-3-yl)benzaldehyd-(O-ethyl)oxim

69,3 g (0,175 mol) 2,4-Dichlor-5-(6-trifluormethyl-2,4(1H,3H)-pyrimidindion-3-yl)benzaldehyd-(O-ethyl)oxim, 26,6 g (0,19 mol) Kaliumcarbonat und 27,3 g (0,19 mol) Methyliodid wurden auf die in Vorstufe 3.3 beschriebene Weise umgesetzt. Ausbeute: 69,0 g; Smp.: 140-143°C.

### Vorstufe 20.4

### 2,4-Dichlor-5-(1-methyl-6-trifluormethyl-2,4(1H,3H)-pyrimidindion-3-yl)benzaldehyd

61,5 g (0,15 mol) 2,4-Dichlor-5-(1-methyl-6-trifluormethyl-2,4(1H,3H)-pyrimidindion-3-yl)benzaldehyd-(O-ethyl)oxim wurden auf die in Vorstufe 3.4 beschriebene Weise umgesetzt. Ausbeute: 50,0 g; Smp.: 117-120°C.

### Beispiel 21

### 2-(2-Chlor-5-(1,3,4,5,6,7-hexahydro-1,3-dioxo-2H-isoindol-2-yl)phenyl)vinylphosphonsäurediphenylester (Nr. IEg.56)

2,6 g (5,2 mmol) (Triphenylphosphoranyliden)methanphosphonsäurediphenylester und 1 g (3,4 mmol) 2-Chlor-5-(1,3,4,5,6,7-hexahydro-1,3-dioxo-2H-isoindol-2-yl)benzaldehyd wurden in 100 ml Toluol gelöst, wonach man 4 Std. lang auf Rückflußtemperatur erhitzte. Anschließend wurde die Reaktionsmischung eingeengt. Die Reinigung des als Rückstand erhaltenen Rohproduktes erfolgte mittels Kieselgelchromatographie (Eluens: Hexan/Ethylacetat = 2:1) und anschließender Kristallisation aus Hexan/Ethylacetat. Ausbeute: 0,8 g.

### Beispiel 22

### 1-Chlor-2-(2-chlor-5-(4-chlor-1-methyl-5-trifluormethyl-1Hpyrazol-3-yl)-4-fluorphenyl)vinylphosphonsäurediethylester (Nr.ICh.861)

Auf die in Beispiel 2 beschriebene Weise erhielt man unter Verwendung von 37,3 g (0,15 mol) Trichlormethanphosphonsäurediethylester, 42 ml (67 mmol) einer 1,6-molaren Buthyllithium-Lösung und 10 g (29 mmol) 2-Chlor-5-(4-chlor-1-methyl-5-trifluormethyl-1H-pyrazol-3-yl)-4-fluorbenzaldehyd 12,8 g dieses Wertproduktes.

### Beispiel 23

### 1-Chlor-2-(2-chlor-5-(1,3,4,5,6,7-hexahydro-1,3-dioxo-2H-isoindol-2-yl)phenyl)vinylphosphonsäurediethylester (Nr. IEh.3)

Auf die in Beispiel 2 beschriebene Weise erhielt man unter Verwendung von 4,4 g (17 mmol) Trichlormethanphosphonsäurediethylester, 5 ml (8 mmol) einer 1,6-molaren Buthyllithium-Lösung und 1 g (3,5 mmol) 2-Chlor-5-(1,3,4,5,6,7-hexahydro-1,3-dioxo-2Hisoindol-2-yl)benzaldehyd 0,6 g dieses Wertproduktes.

### Beispiel 24

### 1-Chlor-2-(2-chlor-4-fluor-5-(1,3,4,5,6,7-hexahydro-1,3-dioxo-2Hisoindol-2-yl)phenyl)vinylphosphonsäurediethylester (Nr. IEh.861)

Auf die in Beispiel 2 beschriebene Weise erhielt man unter Verwendung von 4,1 g (16 mmol) Trichlormethanphosphonsäurediethylester, 5 ml (8 mmol) einer 1,6-molaren Buthyllithium-Lösung und 1 g (3,2 mmol) 2-Chlor-4-fluor-5-(1,3,4,5,6,7-hexahydro-1,3-dioxo-2H-isoindol-2-yl)benzaldehyd 0,6 g dieses Wertproduktes.

### Beispiel 25

### 1-Chlor-2-(2-chlor-5-(3,4-dimethyl-1H-pyrrol-2,5-dion-1-yl)-phenyl)vinylphosphonsäurediethylester (Nr. IFh.3)

Auf die in Beispiel 2 beschriebene Weise erhielt man unter Verwendung von 4,8 g (19 mmol) Trichlormethanphosphonsäurediethylester, 5 ml (8 mmol) einer 1,6-molaren Buthyllithium-Lösung und 1 g (3,8 mmol) 2-Chlor-5-(3,4-dimethyl-1H-pyrrol-2,5-dion-1-yl)benzaldehyd 0,4 g dieses Wertproduktes.

### Beispiel 26

### 1-Chlor-2-[2-chlor-5-(1-methyl-6-trifluormethyl-2,4(1H,3H)-pyrimidindion-3-yl)phenyl]vinylphosphonsäuredlethylester (Nr. IAh.3)

Auf die in Beispiel 2 beschriebene Weise erhielt man unter Verwendung von 4 g (16 mmol) Trichlormethanphosphonsäurediethylester, 5 ml (8 mmol) einer 1,6-molaren Buthyllithium-Lösung und 0,7 g (2,8 mmol) 2-Chlor-5-(1-methyl-6-trifluormethyl-2,4(1H,3H)-pyrimidindion-3-yl)benzaldehyd 0,5 g dieses Wertproduktes.

### Beispiel 27

### 1-Chlor-2-[2,4-dichlor-5-(1-methyl-6-trifluormethyl-2,4(1H,3H)-pyrimidindion-3-yl)phenyl]vinylphosphonsäurediethylester (Nr. IAh.432)

Auf die in Beispiel 2 beschriebene Weise erhielt man unter Verwendung von 4 g (16 mmol) Trichlormethanphosphonsäurediethylester, 5 ml (8 mmol) einer 1,6-molaren Buthyllithium-Lösung und 1 g (2,7 mmol) 2,4-Dichlor-5-(1-methyl-6-trifluormethyl-2,4-(1H,3H)-pyrimidindion-3-yl)benzaldehyd 0,3 g dieses Wertproduktes.

### Beispiel 28

### 1-Chlor-2-[2,4-dichlor-5-(1,3,4,5,6,7-hexahydro-1,3-dioxo-2H-isoindol-2-yl)phenyl]vinylphosphonsäurediethylester (Nr. IEh.432)

Auf die in Beispiel 2 beschriebene Weise erhielt man unter Verwendung von 1,5 g (6 mmol) Trichlormethanphosphonsäurediethylester, 1,8 ml (2,9 mmol) einer 1,8-molaren Buthyllithium-Lösung und 0,3 g (0,9 mmol) 2,4-Dichlor-5-(1,3,4,5,6,7-hexahydro-1,3-dioxo-2H-isoindol-2-yl)benzaldehyd 0,3 g dieses Wertproduktes.

### Vorstufe 28.1

### 2,4-Dichlor-5-nitrobenzaldehyd

Zu einer Lösung von 262,5 g (1,5 mol) 2,4-Dichlorbenzaldehyd in 560 ml Schwefelsäure wurde bei (-5)°C eine unter Eiskühlung hergestellte Lösung von 125 g Salpetersäure in 153 g Schwefelsäure getropft. Nach 2 Std. rühren bei 10°C goß man die Reaktionsmischung auf 4 kg Eis. Anschließend wurde der entstandene Feststoffanteil abgetrennt, mit Wasser gewaschen und in 2 1 Dichlormethan gelöst. Die erhaltene Lösung wurde mit ges. wässriger Natriumhydrogencarbonat-Lösung gewaschen, dann über Magnesiumsulfat getrocknet, und schließlich eingeengt. Ausbeute: 329,5 g; Smp.: 61-63°C.

### Vorstufe 28.2

### 2,4-Dichlor-5-nitrobenzaldehyd-(O-methyl)oxim

93,1 g (0,223 mol) Methoxyaminhydrochlorid (20 gew.-%ige Lösung in Wasser) wurden mit 100 ml Wasser und 18,7 g (0,223 mol) Natriumhydrogencarbonat versetzt. Zu dieser Mischung tropfte man eine Lösung von 44 g (0,2 mol) 2,4-Dichlorbenzaldehyd in 200 ml Toluol. Anschießend wurde 5 Std, lang auf 50°C erwärmt. Dann trennte man die organische Phase ab. Nach waschen mit Wasser und ges. wässriger Kochsalzlösung wurde die erhaltene Rohprodukt-Lösung noch über Magnesiumsulfat getrocknet und schließlich eingeengt. Ausbeute: 39,2 g; Smp.: 77-79°C.

### Vorstufe 28.3

### 5-Amino-2,4-dichlorbenzaldehyd-(O-methyl)oxim

16,8 g (0,3 mol) Eisenpulver wurden in 130 ml Methanol und 100 ml Essigsäure gelöst. In diese Lösung tropfte man bei 70°C eine Lösung von 24,9 g (0,1 mol) 2,4-Dichlor-5-nitrobenzaldehyd-(Omethyl)oxim in 100 ml Essigsäure und 100 ml Methanol. Dann erwärmte man 1 Std. auf 75-80°C, wonach die Reaktionsmischung auf 3 kg Eis gegossen wurde. Anschließend extrahierte man das Wertprodukt mit 2 1 Dichlormethan. Die organische Phase wurde noch über Magnesiumsulfat getrocknet und schließlich eingeengt. Die Reinigung des Rohproduktes erfolgte durch verrühren mit wenig Pentan. Nach Filtration erhielt man 18,5 g Wertprodukt. Smp.: 129-132°C.

### Vorstufe 28.4

### 2,4-Dichlor-5-(1,3,4,5,6,7-hexahydro-1,3-dioxo-2H-isoindol-2-yl)benzaldehyd-(O-methyl)oxim

Zu einer Lösung von 12,5 g (82 mmol) 3,4,5,6-Tetrahydrophthalsäureanhydrid in 300 ml Essigsäure wurden 18 g (82 mmol) 5-Amino-2,4-dichlorbenzaldehyd-(O-methyl)oxim gegeben, wonach man 15 Std. bei Rückflußtemperatur rührte. Anschließend wurde die Reaktionsmischung auf 1 1 Wasser gegossen. Dann extrahierte man das Produkt mit 300 ml Methyl-tert.-butylether. Der Extrakt wurde mit ges. wässriger Natriumhydrogencarbonat-Lösung gewaschen, über Magnesiumsulfat getrocknet und schließlich eingeengt. Die Reinigung des Rückstandes erfolgte mittels Kieselgelchromatographie (Eluens: Hexan/Ethylacetat = 4:1). Ausbeute: 20,9 g; Smp.: 122-124°C.

### Vorstufe 28.5

### 2,4-Dichlor-5-(1,3,4,5,6,7-hexahydro-1,3-dioxo-2H-isoindol-2-yl)benzaldehyd

Zu einer Lösung von 10,6 g (30 mmol) 2,4-Dichlor-5-(1,3,4,5,6,7-hexahydro-1,3-dioxo-2H-isoindol-2-yl)benzaldehyd-(0-methyl)oxim in 45 ml Essigsäure wurden 9 ml einer 37 gew.-%igen wäßrigen Formaldehyd-Lösung und 9 ml konz. Salzsäure gegeben. Anschließend erhitzte man 1 Std. lang auf 50-60°C, wonach die Reaktionsmischung auf 300 ml Eiswasser gegossen wurde. Aus dem erhaltenen Gemisch extrahierte man das Produkt mit 200 ml Dichlormethan. Der Extrakt wurde über Magnesiumsulfat getrocknet und dann eingeengt. Die Reinigung des Rückstandes erfolgte mittels Kieselgelchromatographie (Eluens: Hexan/Ethylacetat = 4:1). Ausbeute: 5,2 g; ¹H-NMR (270 MHz; in CDCl₃): δ [ppm] = 1,85 (S,4H), 2,45 (s,4H), 7,67 (s,1H), 7,81 (s,1H), 10,40 (s,1H).

### Beispiel 29

### 2-(2-Chlor-5-(4-chlor-1-methyl-5-trifluormethyl-1H-pyrazol-3-yl)-4-fluorphenyl)ethylphosphonsäurediisopropylester (Nr. ICa.863)

Zu einer Suspension von 6 g (11 mmol) 1-Chlor-2-(2-chlor-5-(4-chlor-1-methyl-5-trifluormethyl-1H-pyrazol-3-yl)-4-fluorphenyl)vinylphosphonsäurediisopropylester, 1,1 g (13 mmol) Natriumacetat und 50 mg 5 %iges Palladium auf Aktivkohle in 100 ml Ethanol wurden 5 bar Wasserstoff gegeben. Nach einem Tag rühren filtrierte man vom Katalysator ab. Das Filtrat wurde eingeengt. Zum erhaltenen Rückstand gab man 100 ml Wasser und 100 ml Ethylacetat. Die organische Phase wurde abgetrennt, über Magnesiumsulfat getrocknet und schließlich eingeengt. Kieselgelchromatographie des Rückstandes (Eluens: Hexan/Ethylacetat = 3:1) ergab zunächst 0,2 g Wertprodukt und danach 1,5 g 2-[5-(4-chlor-1-methyl-5-trifluormethyl-1H-pyrazol-3-yl)-4-fluorphenyl]ethylphosphonsäurediisopropylester.

### Beispiel 30

### l-Chlor-2-(2-chlor-5-(4-chlor-1-methyl-5-trifluormethyl-lHpyrazol-3-yl)-4-fluorphenyl)vinylphosphonsäure (Nr. ICh.859)

Eine Lösung von 1 g (2 mmol) 1-Chlor-2-[2-chlor-5-(4-chlor-1-methyl-5-trifluormethyl-lH-pyrazol-3-yl)-4-fluorphenyl)vinylphosphonsäurediethylester, 0,97 g (5,9 mmol) Kaliumiodid und 0,6 g (5,9 mmol) Chlortrimethylsilan in 20 ml Acetonitril wurde 3 Std. auf 50-60°C erwärmt. Anschließend engte man ein. Der Rückstand wurde mit 50 ml Wasser und 50 ml Ethylacetat versetzt. Nach Abtrennen der organischen Phase und Trocknen über Magnesiumsulfat engte man ein. Ausbeute: 0,7 g.

### Beispiel 31

### 1-Chlor-2-[2-chlor-5-(4-chlor-5-difluormethoxy-1-methyl-1Hpyrazol-3-yl)-4-fluorphenyl]vinylphosphonsäure (Nr. IBh.859)

Auf die in Beispiel 3'0 beschriebene Weise erhielt man unter Verwendung von 11,4 g (22,6 mmol) 1-Chlor-2-[2-chlor-5-(4-chlor-5-difluormethoxy-1-methyl-1H-pyrazol-3-yl)-4-fluorphenyl]vinylphosphonsäurediethylester, 11,3 g (68 mmol) Kaliumiodid und 7,8 g (67 mmol) Chlortrimethylsilan 9 g dieses Wertproduktes.

### Beispiel 32

### 1-Chlor-2-[2-chlor-4-fluor-5-(1-methyl-6-trifluormethyl-2,4-(1H,3H)-pyrimidindion-3-yl)phenyl]vinylphosphonsäure

### (Nr. IAh.859)

Auf die in Beispiel 30 beschriebene Weise erhielt man unter Verwendung von 5 g (9,6 mmol) 1-Chlor-2-[2-chlor-4-fluor-5-(l-methyl-6-trifluormethyl-2,4(1H,3H)-pyrimidindion-3-yl)-phenyl]vinylphosphonsäurediethylester, 4,8 g (29 mmol) Kaliumiodid und 3,1 g (29 mmol) Chlortrimethylsilan 4,5 g dieses Wertproduktes.

### Beispiel 33

### 1-Chlor-2-[2-chlor-5-(4-chlor-1-methyl-5-trifluormethyl-1Hpyrazol-3-yl)-4-fluorphenyl]vinylphosphonsäuredimethylester (Nr. ICh.860)

Zu einer Lösung von 0,7 g (1,5 mmol) 1-Chlor-2-[2-chlor-5-(4-chlor-1-methyl-5-trifluormethyl-1H-pyrazol-3-yl)-4-fluorphenyl]vinylphosphonsäure in 30 ml Dichlormethan wurden 0,7 g (5,5 mmol) Oxalylchlorid und einem Tropfen Dimethylformamid gegeben. Nach beendeter Gasentwicklung tropfte man zu der erhaltenen Mischung eine Lösung von 2,3 g (15 mmol) Methanol und 0,6 g (8 mmol) Pyridin in 50 ml Dichlormethan. Das Reaktionsgemisch wurde noch 2 Std. gerührt und anschließend eingeengt. Den Rückstand versetzte man mit 50 ml Wasser und 50 ml Ethylacetat. Die organische Phase wurde über Magnesiumsulfat getrocknet und dann eingeengt. Die Reinigung des Rohproduktes erfolgte mittels Kieselgelchromatographie (Eluens: Hexan/Ethylacetat = 3:1). Ausbeute: 0,25 g.

### Beispiel 34

### 2- (1-Chlor-2-[2-chlor-5-(4-chlor-1-methyl-5-trifluormethyl-lHpyrazol-3-yl)-4-fluorphenyl]vinyl)-2,1,3-phosphadioxan-2-on (Nr. ICh.1154)

Auf die in Beispiel 33 beschriebene Weise erhielt man unter Verwendung von 1 g (2,2 mmol) 1-Chlor-2-[2-chlor-5-(4-chlor-1-methyl-5-trifluormethyl-1H-pyrazol-3-yl)-4-fluorphenyl]vinylphosphonsäure, 0,7 g (5,5 mmol) Oxalylchlorid, 1,5 g (20 mmol) 1,3-Propandiol und 0,8 g (10 mmol) Pyridin 0,6 g dieses Wertproduktes.

### Beispiel 35

### 1-Chlor-2-[2-chlor-5-(4-chlor-5-difluormethoxy-1-methyl-1Hpyrazol-3-yl)-4-fluorphenyl]vinylphosphonsäuredimethylester (Nr. IBh.860)

Auf die in Beispiel 33 beschriebene Weise erhielt man unter Verwendung von 0,7 g (1,5 mmol) 1-Chlor-2-[2-chlor-5-(4-chlor-5-difluormethoxy-1-methyl-lH-pyrazol-3-yl)-4-fluorphenyl]vinylphosphonsäure, 0,7 g (5,5 mmol) Oxalylchlorid, 0,45 g (14 mmol) Methanol und 0,56 g (7,2 mmol) Pyridin 0,3 g dieses Wertproduktes.

### Beispiel 36

### 2-(1-Chlor-2-[2-chlor-5-(4-chlor-5-difluormethoxy-1-methyl-1Hpyrazol-3-yl)-4-fluorphenyl]vinyl)-2,1,3-phosphadioxan-2-on (Nr. IBh.1154)

Auf die in Beispiel 33 beschriebene Weise erhielt man unter Verwendung von 0.7 g (1,5 mmol) 1-Chlor-2-[2-chlor-5-(4-chlor-5-difluormethoxy-1-methyl-1H-pyrazol-3-yl)-4-fluorphenyl]vinylphosphonsäure, 0,7 g (5,5 mmol) Oxalylchlorid, 1 g (14 mmol) 1,3-Propandiol und 0,56 g (7,2 mmol) Pyridin 0,3 g dieses Wertproduktes.

### Beispiel 37

### 1-Chlor-2-[2-chlor-5-(4-chlor-5-difluormethoxy-1-methyl-1Hpyrazol-3-yl)-4-fluorphenyl]vinyldithiophosphonsäure-S,S-diethylester (Nr. IBh.1271)

Auf die in Beispiel 33 beschriebene Weise erhielt man unter Verwendung von 0,8 g (1,8 mmol) 1-Chlor-2-[2-chlor-5-(4-chlor-5-difluormethoxy-1-methyl-1H-pyrazol-3-yl)-4-fluorphenyl] vinylphosphonsäure, 0,5 g (3,9 mmol) Oxalylchlorid, 1,0 g (18 mmol) Ethylmercaptan und 0,7 g (8,8 mmol) Pyridin 0,5 g dieses Wertproduktes.

### Beispiel 38

### 2- (1-Chlor-2- [2-chlor-5-(4-chlor-5-difluormethoxy-1-methyl-1Hpyrazol-3-yl)-4-fluorphenyl]vinyl)-1,3-dimethyl-perhydro-2,1,3-phosphadiazin-2-on (Nr. IBh.1256)

Auf die in Beispiel 33 beschriebene Weise erhielt man unter Verwendung von 0,8 g (1,8 mmol) 1-Chlor-2-[2-chlor-5-(4-chlor-5-difluormethoxy-1-methyl-1H-pyrazol-3-yl)-4-fluorphenyl]vinylphosphonsäure, 0,5 g (3,9 mmol) Oxalylchlorid, 1,8 g (18 mmol) N,N'-Dimethyl-1,3-diaminopropan und 0,7 g (8,8 mmol) Pyridin 0,34 g dieses Wertproduktes.

### Beispiel 39

### 1-Chlor-2-[2-chlor-4-fluor-5-(1-methyl-6-trifluormethyl-2,4-(1H,3H)-pyrimidindion-3-yl)phenyl]vinylphosphonsäuredimethylester (Nr. IAh.860)

Auf die in Beispiel 33 beschriebene Weise erhielt man unter Verwendung von 0,9 g (1,9 mmol) 1-Chlor-2-[2-chlor-4-fluor-5-(1-methyl-6-trifluormethyl-2,4(1H,3H)-pyrimidindion-3-yl)phenyl]-vinylphosphonsäure, 0,7 g (5,5 mmol) Oxalylchlorid, 0,6 g (19 mmol) Methanol und 0,75 g (9,5 mmol) Pyridin 0,2 g dieses Wertproduktes.

### Beispiel 40

### 1-Chlor-2-[2-chlor-4-fluor-5-(1-methyl-6-trifluormethyl-2,4-(1H,3H)-pyrimidindion-3-yl)phenyl]vinylphosphonsäurediisopropylester (Nr. IAh.863)

Zu einer Lösung von 5,8 g (15 mmol) Chlormethandiphosphonsäuretetraisopropylester in 100 ml Tetrahydrofuran wurden 0,4 g (15 mmol) Natriumhydrid gegeben. Nach 30 Minuten Rühren gab man noch 3,2 g (9 mmol) 2-Chlor-4-fluor-5-(1-methyl-6-trifluormethyl-2,4(1H,3H)-pyrimidindion-3-yl)benzaldehyd zu der Mischung. Anschließend wurde 1 Std. gerührt. Dann versetzte man das Reaktionsgemisch mit 50 ml Wasser und 50 ml Ethylacetat. Die organische Phase wurde abgetrennt, über Magnesiumsulfat getrocknet und schließlich eingeengt. Die Reinigung des erhaltenen Rohproduktes erfolgte mittels MPLC an Kieselgel (Eluens: Hexan/Ethylacetat = 2:1). Ausbeute: 1,1 g.

### Beispiel 41

### 1-Brom-2-[2-chlor-4-fluor-5-(1-methyl-6-trifluormethyl-2,4-(1H,3H)-pyrimidindion-3-yl)phenyl]vinylphosphonsäurediisopropylester (Nr. IAi.863)

Auf die in Beispiel 40 beschriebene Weise erhielt man unter Verwendung von 6,5 g (15 mmol) Brommethandiphosphonsäuretetraisopropylester, 0,4 g (15 mmol) Natriumhydrid und 3,2 g (9 mmol) 2-Chlor-4-fluor-5-(1-methyl-6-trifluormethyl-2,4(1H,3H)-pyrimidindion-3-yl)benzaldehyd 2,6 g dieses Wertproduktes.

### Beispiel 42

### 2-[2-Chlor-4-fluor-5-(1-methyl-6-trifluormethyl-2,4(1H,3H)-pyrimidindion-3-yl)phenyl]-1-cyanovinylphosphonsäurediethylester (Nr. IAj.861)

Eine Lösung von 1,6 g (9 mmol) Cyanomethanphosphonsäurediethylester, 3,2 g (9 mmol) 2-Chlor-4-fluor-5-(1-methyl-6-trifluormethyl-2,4(1H,3H)-pyrimidindion-3-yl)benzaldehyd, 0,6 ml Essigsäure und 0,18 ml Piperidin in 60 ml Toluol wurde 6 Std, auf Rückflußtemperatur erhitzt, wonach man einengte. Das erhaltene Rohprodukt wurde durch Kieselgelchromatographie (Eluens: Hexan/Ethylacetat = 1:1) gereinigt. Ausbeute: 1,8 g.

### Beispiel 43

### 1-[2-Chlor-4-fluor-5-(1-methyl-6-trifluormethyl-2,4(1H,3H)-pyrimidindion-3-yl)phenyl]prop-1-en-2-ylphosphonsäurediethylester (Nr. IAk.861)

Eine Lösung von 10 ml (20 mmol) einer 2-molaren Lösung von Lithiumdiisopropylamid in 50 ml Tetrahydrofuran wurde auf (-60)°C gekühlt und bei dieser Temperatur mit 1,5 g (9 mmol) Ethanphosphonsäurediethylester versetzt, wonach man 15 Minuten rührte. Anschließend wurde auf (-70)°C gekühlt und bei dieser Temperatur 1 g (9,5 mmol) Chlortrimethylsilan zugegeben. Nach weiteren 15 Minuten Rühren erwärmte man auf (-20)°C und versetzte das Gemisch mit 3,2 g (9 mmol) 2-Chlor-4-fluor-5-(1-methyl-6-trifluormethyl-2,4(1H,3H)-pyrimidindion-3-yl)benzaldehyd. Dann wurde noch 2 Std. bei Raumtemperatur gerührt. Zur Aufarbeitung versetzte man die Reaktionsmischung mit 10 ml verd. Salzsäure. Das Produkt wurde mit Ethylacetat extrahiert. Schließlich trennte man die Ethylacetat-Phase ab, trocknete sie über Magnesiumsulfat und engte ein. Das Rohprodukt wurde mittels MPLC an Kieselgel (Eluens: Hexan/Ethylacetat = 1:2) gereinigt. Ausbeute: 0,2 g.

### Beispiel 44

### l-Chlor-2-[2-chlor-4-fluor-5-(5,6,7,8-tetrahydro-1,2,4-triazolo-[4,3-a]pyridin-3(2H)-on-2-yl)phenyl]vinylphosphonsäurediethylester (Nr. IKh.861)

Zu einer Lösung von 2 g (5,6 mmol) 1-Chlor-2-(2-chlor-4-fluor-5-hydrazinophenyl)vinylphosphonsäurediethylester in 50 ml Acetonitril wurden 1,4 g (16,8 mmol) Natriumacetat gegeben. Nach 30 Minuten rühren kühlte man auf 0°C ab und versetzte die Mischung mit 1,1 g (5,6 mmol) 2-Iminopiperidin-1-carbonsäuremethylester-Hydrochlorid. Anschließend wurde 3 Std. gerührt. Dann versetzte man das Reaktionsgemisch mit 50 ml Wasser und 50 ml Ethylacetat. Die organische Phase wurde abgetrennt, über Magnesiumsulfat getrocknet und schließlich eingeengt.

Den Rückstand, enthaltend 2-[2-(4-Chlor-2-fluor-5-[2-chlor-(2-diethylphosphoryl)vinyl]phenyl)hydrazin-1-yliden]piperidin-1-carbonsäuremethylester, löste man in 50 ml Toluol und versetzte ihn noch mit 0,1 ml Essigsäure. Anschließend wurde die Mischung 2 Std. auf Rückflußtemperatur erhitzt und danach eingeengt. Die Reinigung des erhaltenen Rohproduktes erfolgte mittels Kieselgelchromatographie (Eluens: Ethylacetat). Ausbeute: 0,3 g.

### Vorstufe 44.1

### 1-Chlor-2-(2-chlor-4-fluorphenyl)vinylphosphonsäurediethylester (Nr. XXXIII.24)

Zu einer auf (-70) °C gekühlten Lösung von 408 g (1,6 mol) Trichlormethanphosphonsäurediethylester in 1,5 1 Tetrahydrofuran wurden 462 ml (0,74 mol) einer 1,6-molaren Buthyllithium-Lösung (in Hexan) gegeben, wonach man noch 1 Std. bei (-70)°C rührte. Anschließend wurden 51 g (0,32 mol) 2-Chlor-4-fluorbenzaldehyd (gelöst in 200 ml Tetrahydrofuran) in die Mischung getropft. Dann ließ man das Reaktionsgemisch auf ca. 20°C erwärmen und versetzte es bei dieser Temperatur mit 10 ml Wasser. Schließlich wurde eingeengt (zuletzt im Hochvakuum). Zwecks Reinigung suspendierte man das Rohprodukt in 50 ml Hexan und filtrierte den Feststoffanteil ab. Nach Einengen des Filtrats erhielt man 47,5 g des Wertproduktes.
¹H-NMR (270 MHz; in CDCl₃): δ [ppm] = 1,20-1,40 (m, 6H), 4,10-4,30 (m,4H), 6,95-7,20 (m,2H), 7,45-7,95 (m,2H).

### Vorstufe 44.2

### 1-Chlor-2-(2-chlor-4-fluor-5-nitrophenyl)vinylphosphonsäurediethylester (Nr. XXXII.36)

47,5 g (0,16 mol) 1-Chlor-2-(2-chlor-4-fluorphenyl)vinylphosphonsäurediethylester wurden bei (-40)°C in. 320 ml konz. Salpetersäure gelöst, wonach man 1 Std. rührte. Anschließend wurde die Reaktionsmischung in 2,5 1 Eiswasser eingerührt. Danach extrahierte man das Produkt mit Dichlormethan. Die organische Phase wurde mit ges. wässriger Kochsalzlösung gewaschen, über Magnesiumsulfat getrocknet und schließlich eingeengt. Die Reinigung des Rohproduktes erfolgte mittles MPLC an Kieselgel (Eluens: Hexan/Ethylacetat = 2:1). Ausbeute: 33 g; ¹H-NMR (270 MHz; in CDCl₃): δ [ppm] = 1,30-1,45 (m,6H), 4,10-4,30 (m,4H), 7,35-7,85 (m,2H), 8,30-8,70 (m,1H).

### Vorstufe 44.3

### 1-Chlor-2-(5-amino-2-chlor-4-fluorphenyl)vinylphosphonsäurediethylester (Nr. XXXI.36)

Zu einer Suspension von 13,1 g (0,24 mol) Eisenpulver in 40 ml Ethanol und 88 ml Essigsäure wurden bei 60-65°C 17,5 g (47 mmol) 1-Chlor-2-(2-chlor-4-fluor-5-nitrophenyl)vinylphosphonsäurediethylester gegeben, wonach man 2 Std. bei Rückflußtemperatur rührte. Anschließend wurde die Mischung mit 200 ml Ethylacetat versetzt. Die erhaltene Suspension filtrierte man über ein Kieselgurbett. Dann wurde das Filtrat eingeengt. Den Rückstand löste man in 200 ml Ethylacetat. Die organische Phase wurde noch mit Wasser gewaschen, über Magnesiumsulfat getrocknet und schließlich eingeengt. Ausbeute: 14,8 g; ¹H-NMR (270 MHz; in CDCl₃): δ [ppm] = 1,41 (t,6H), 3,90 (s,2H), 4,20 (m,4H), 7,09 (d,1H), 7,37 (d,1H), 7,80 (d,1H).

### Vorstufe 44.4

### 1-Chlor-2-(2-chlor-4-fluor-5-hydrazinophenyl)vinylphosphonsäurediethylester (Nr. XXVIII.36)

2,5 g (7,3 mmol) 1-Chlor-2-(5-amino-2-chlor-4-fluorphenyl)vinylphosphonsäurediethylester wurden in 13,1 g konz. Salzsäure durch kurzes Erwämen auf 60°C gelöst. Die erhaltene Lösung hühlte man auf 0°C ab und versetzte sie mit einer Lösung von 0,5 g (7,3 mmol) Natriumnitrit in 1,5 ml Wasser. Nach 1 Std. Rühren wurde eine Lösung von 4,15 g (18,4 mmol) Zinn(II)chlorid-Dihydrat in 2,6 ml konz. Salzsäure zugetropft. Anschließend rührte man 2 Std. bei ca. 20°C. Dann wurde mit 100 ml Wasser verdünnt. Den Feststoffanteil filtrierte man ab. Das Filtrat wurde durch Zugabe von 50 %iger Natronlauge alkalisch gemacht. Aus der wäßrigen Phase extrahierte man das Produkt mit dreimal 50 ml Dichlormethan. Die vereinigten organischen Phasen wurden mit Wasser gewaschen, über Magnesiumsulfat getrocknet und schließlich eingeengt. Ausbeute: 2 g; ¹H-NMR (270 MHz; in CDCl₃): δ [ppm] = 1,40 (t,6H), 3,60 (s,2H), 4,22 (m,4H), 5,48 (s,1H), 7,07 (d,1H), 7,73 (d,1H), 7,85 (d,1H).

### Beispiel 45

### 1-Chlor-2- (2-chlor-4-f luor-5-[(3-methyl-4-trifluormethyl-2 (3H)-thiazolyliden)amino]phenyl)vinylphosphonsäurediethylester (Nr. ILh.861)

Zu einer Lösung von 1,2 g (2,9 mmol) 1-Chlor-2-(2-chlor-4-fluor-5-[(methylaminothiocarbonyl)amino]phenyl)vinylphosphonsäurediethylester in 50 ml Toluol wurden 0,3 g (3,5 mmol) Natriumacetat und 0,6 g (2,9 mmol) 3-Brom-1,1,1-trifluoraceton gegeben, wonach man eine Woche auf Ruckflußtemperatur erhitzte. Danach wurde die Reaktionsmischung mit Wasser gewaschen, über Magnesiumsulfat getrocknet und eingeengt. Die Reinigung des Rohproduktes erfolgte mittels Kieselgelchromatographie (Eluens: Hexan/Ethylacetat = 1:1). Ausbeute: 0,2 g.

### Vorstufe 45.1

### 1-Chlor-2-(2-chlor-4-fluor-5-[(methylaminothiocarbonyl)amino]-phenyl)vinylphosphonsäurediethylester (Nr. XXXV.36)

Zu einer Lösung von 3 g (8,7 mmol) 1-Chlor-2-(5-amino-2-chlor-4-fluorphenyl)vinylphosphonsäurediethylester in 50 ml Ethanol wurden 1,2 g (16,4 mmol) Methylisothiocyanat gegeben. Nach 8 Std. rühren bei Rückflußtemperatur engte man ein. Die Reinigung des Rohproduktes erfolgte mittels Kieselgelchromatographie (Eluens: Hexan/Ethylacetat = 1:1). Ausbeute: 1,3 g; ¹H-NMR (270 MHz; in CDCl₃): δ [ppm] = 1,41 (t,6H), 3,15 und 3,17 (2s, zusammen 3H), 4,22 (m,4H), 6,40 (s,1H), 7,29 (d,1H), 7,60 (s,1H), 7,81 (d,1H), 8,16 (s,1H).

### Beispiel 46

### 1-Chlor-2-(2-chlor-4-fluor-5-((tetrahydro-3-oxo-1H,3H-[1,3,4]-thiadiazolo[3,4-a]pyridazin-1-yliden)amino)phenyl)vinylphosphonsäurediethylester (Nr. IMh.861)

Zu einer Lösung von 3,3 g (7 mmol) 1-Chlor-2-(2-chlor-4-fluor-5-((hexahydropyridazin-1-ylthiocarbonyl)amino)phenyl)vinylphosphonsäurediethylester in 100 ml Dichlormethan wurden 2,2 g (28 mmol) Pyridin und 1,4 g (7 mmol) Diphosgen gegeben, wonach man 1 Std. rührte. Anschließend wurde die Reaktionsmischung mit Wasser gewaschen, über Magnesiumsulfat getrocknet und eingeengt.

Die Reinigung des Rohproduktes erfolgte mittels Kieselgelchromatographie (Eluens: Hexan/Ethylacetat = 1:2). Ausbeute: 1 g.

### Vorstufe 46.1

### 1-Chlor-2-(2-chlor-4-fluor-5-isothiocyanatophenyl)vinylphosphonsäurediethylester (Nr. XL.36)

Zu einer Lösung von 1,6 g (19 mmol) Natriumhydrogencarbonat in 10 ml Wasser und 10 ml Dichlormethan wurden 1,1 g (9,7 mmol) Thiophosgen und eine Lösung von 3 g (8,7 mmol) 1-Chlor-2-(5-amino-2-chlor-4-fluorphenyl)vinylphosphonsäurediethylester in 15 ml Dichlormethan gegeben, wonach man 5 Std. rührte. Anschließend wurde die Reaktionsmischung mit Wasser gewaschen, über Magnesiumsulfat getrocknet und eingeengt. Ausbeute: 3 g; ¹H-NMR (270 MHz; in CDCl₃): δ [ppm] = 1,40 (t,6H), 4,22 (m,4H), 7,30 (d,1H), 7,74 (d,1H), 7,78 (d,1H).

### Vorstufe 46.2

### 1-Chlor-2-(2-chlor-4-fluor-5-[(hexahydropyridazin-1-ylthiocarbonyl)amino]phenyl)vinylphosphonsäurediethylester (Nr. XXXIXa.36)

Zu einer Lösung von 0,8 g (9,3 mmol) Hexahydropyridazin in 20 ml Tetrahydrofuran wurde eine Lösung von 3 g (8,7 mmol) 1-Chlor-2-(2-chlor-4-fluor-5-isothiocyanatophenyl)vinylphosphonsäurediethylester in 20 ml Tetrahydrofuran gegeben, wonach man 16 Std. rührte. Dann wurde die Reaktionsmischung eingeengt. Den Rückstand versetzte man mit 50 ml Ethylacetat. Anschließend wurde die organische Phase mit Wasser gewaschen, über Magnesiumsulfat getrocknet und eingeengt. Ausbeute: 3,3 g. Das Rohprodukt wurde ohne Reinigung weiter umgesetzt.

### Beispiel 47

### 1-Chlor-2-(2-chlor-5-[(6,7-dihydro-6,6-dimethyl-3H,5H-pyrrolo-[2,1-c][1,2,4]thiadiazol-3-yliden) amino] -4-fluorphenyl)vinylphosphonsäurediethylester (Nr. INh.861)

Zu einer Lösung von 1,3 g (8,8 mmol) 5-Amino-3,4-dihydro-3,3-dimethyl-2H-pyrrol-Hydrochlorid in 50 ml Dichlormethan wurden bei 0-5°C 10,5 g (26,4 mmol) einer 10 gew.-%iger Natronlauge gegeben. Nach einer Stunde rühren versetzte man die Mischung mit 2,5 g (6,5 mmol) 1-Chlor-2- (2-chlor-4-fluor-5-isothiocyanatophenyl)vinylphosphonsäurediethylester. Anschließend wurde das Reaktionsgemisch 3 Std. gerührt, dann auf (-20)°C gekühlt und mit 1,2 g (6,9 mmol) Brom versetzt. Zur weitgebenden Umsetzung aller Reaktionspartner rührte man noch 16 Std. bei ca. 20°C. Schließlich wurde die organische Phase abgetrennt, über Magnesiumsulfat getrocknet und eingeengt. Die Reinigung des Rohproduktes erfolgte mittels Kieselgelchromatographie (Eluens: Hexan/Ethylacetat = 1:1). Ausbeute: 1,7 g.

### Beispiel 48

### 1-Brom-2-[2-chlor-5-(4-chlor-5-difluormethoxy-1-methyl-1H-pyrazol-3-yl)-4-fluorphenyl]vinylphosphonsäurediisopropylester (Nr. IBi.863) und 2-[2-Chlor-5-(4-chlor-5-difluormethoxy-1-methyl-1Hpyrazol-3-yl)-4-fluorphenyl]ethinylphosphonsäurediisopropylester (Nr. IBn.863)

Auf die in Beispiel 40 beschriebene Weise erhielt man unter Verwendung von 3,4 g (8 mmol) Brommethandiphosphonsäuretetraisopropylester, 0,2 g (8 mmol) Natriumhydrid und 1,6 g (4 mmol) 2-Chlor-5-(4-chlor-5-difluormethoxy-1-methyl-lH-pyrazol-3-yl)-4-fluorbenzaldehyd ein Rohprodukt, dessen Kieselgelchromatographie zunächst 0,5 g 1-Brom-2-[2-chlor-5-(4-chlor-5-difluormethoxy-1-methyl-1H-pyrazol-3-yl)-4-fluorphenyl]vinylphosphonsäurediisopropylester und danach 0,4 g 2-[2-Chlor-5-(4-chlor-5-difluormethoxy-1-methyl-1H-pyrazol-3-yl)-4-fluorphenyl]ethinylphosphonsäurediisopropylester ergab.

### Beispiel 49

### 2-[2-Chlor-5-(4-chlor-5-difluormethoxy-1-methyl-1H-pyrazol-3-yl)-4-fluorphenyl]-1-cyanoethylphosphonsäurediethylester (Nr. IBd.861)

Zu einer Suspension von 80 mg (3,4 mmol) Natriumhydrid in 50 ml Tetrahydrofuran wurden 0,66 g (3,7 mmol) Cyanomethanphosphonsäurediethylester gegeben. Nach 10 Minuten Rühren versetzte man die Mischung mit 1 g (2,5 mmol) 2-Chlor-5-(4-chlor-5-difluormethoxy-1-methyl-1H-pyrazol-3-yl)-4-fluorbenzylbromid. Anschließend wurde 16 Std. gerührt. Dann engte man das Reaktionsgemisch ein. Der Rückstand wurde mit 100 ml Wasser und 100 ml Ethylacetat versetzt. Nach Durchmischung der Phasen trennte man die organische Phase ab, trocknete über Magnesiumsulfat und engte ein. Das Rohprodukt wurde durch Kieselgelchromatographie (Eluens: Hexan/Ethylacetat = 4:1) gereinigt. Ausbeute: 0,7 g.

### Beispiel 50

### 3-[2-Chlor-5-(4-chlor-5-difluormethoxy-1-methyl-lH-pyrazol-3-yl) -4-fluorphenyl]-2- (diethylphosphoryl)propionsäuremethylester (Nr. IBf.861)

Auf die in Beispiel 49 beschriebene Weise erhielt man unter Verwendung von 80 mg (3,4 mmol) Natriumhydrid, 0,78 g (3,7 mmol) Diethylphosphorylessigsäuremethylester und 1 g (2,5 mmol) 2-Chlor-5-(4-chlor-5-difluormethoxy-1-methyl-1H-pyrazol-3-yl)-4-fluorbenzylbromid 0,7 g des gewünschten Wertproduktes.

In den nachfolgenden Tabellen 9-20 sind neben den vorstehend beschriebenen noch weitere aromatische Phosphonsäurederivate der Formel I aufgeführt, die auf analoge Weise hergestellt wurden oder herstellbar sind:

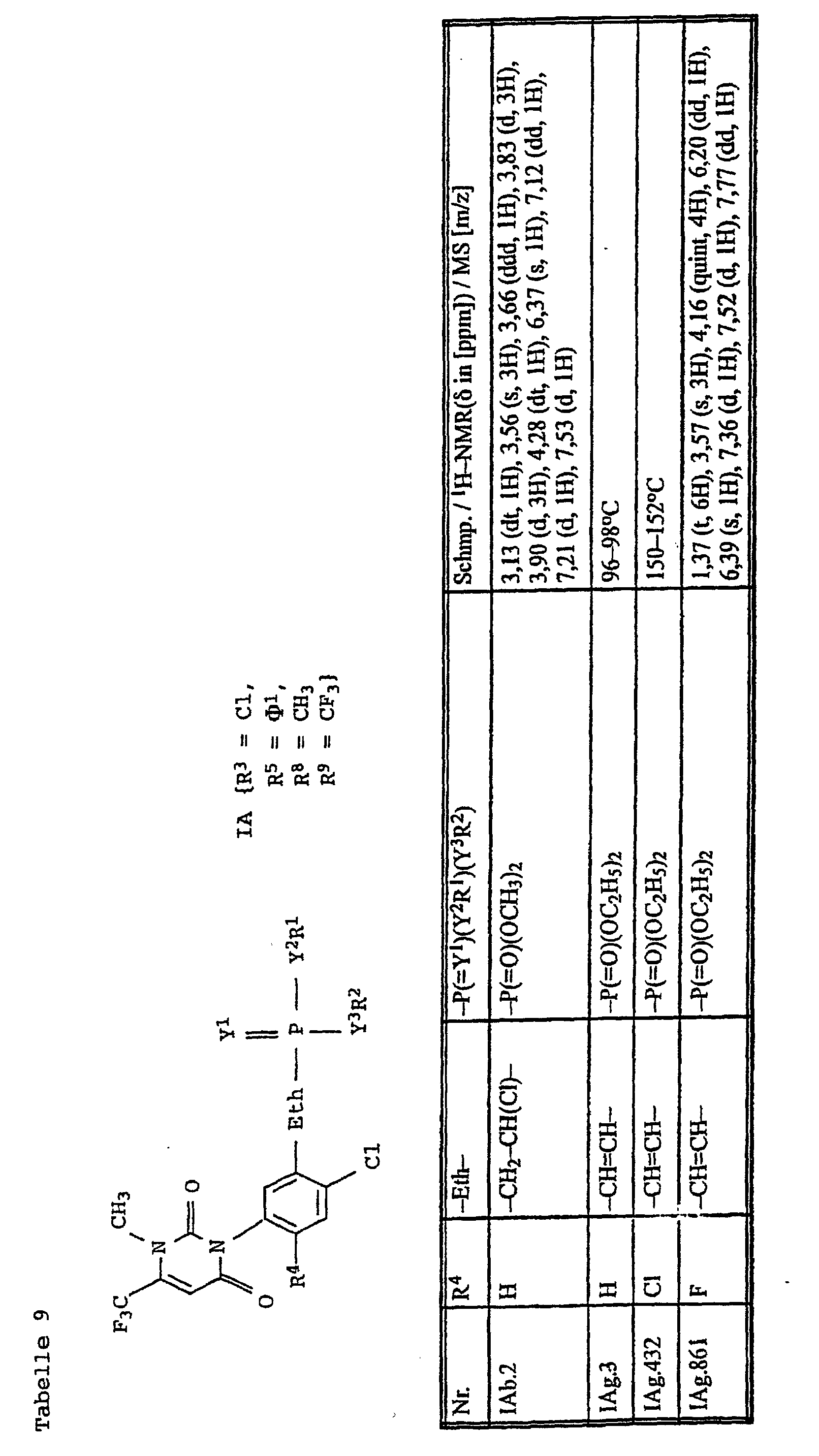

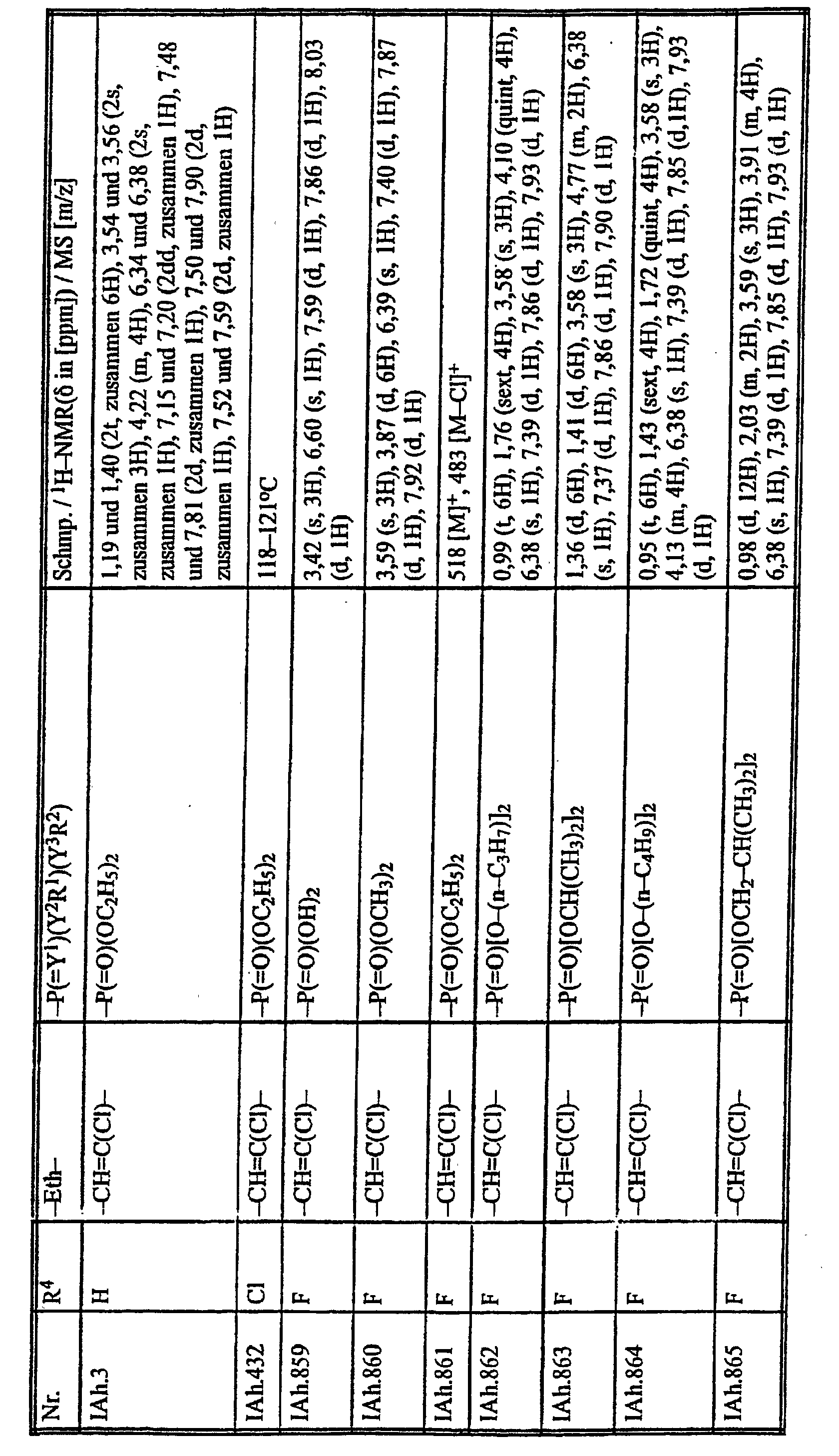

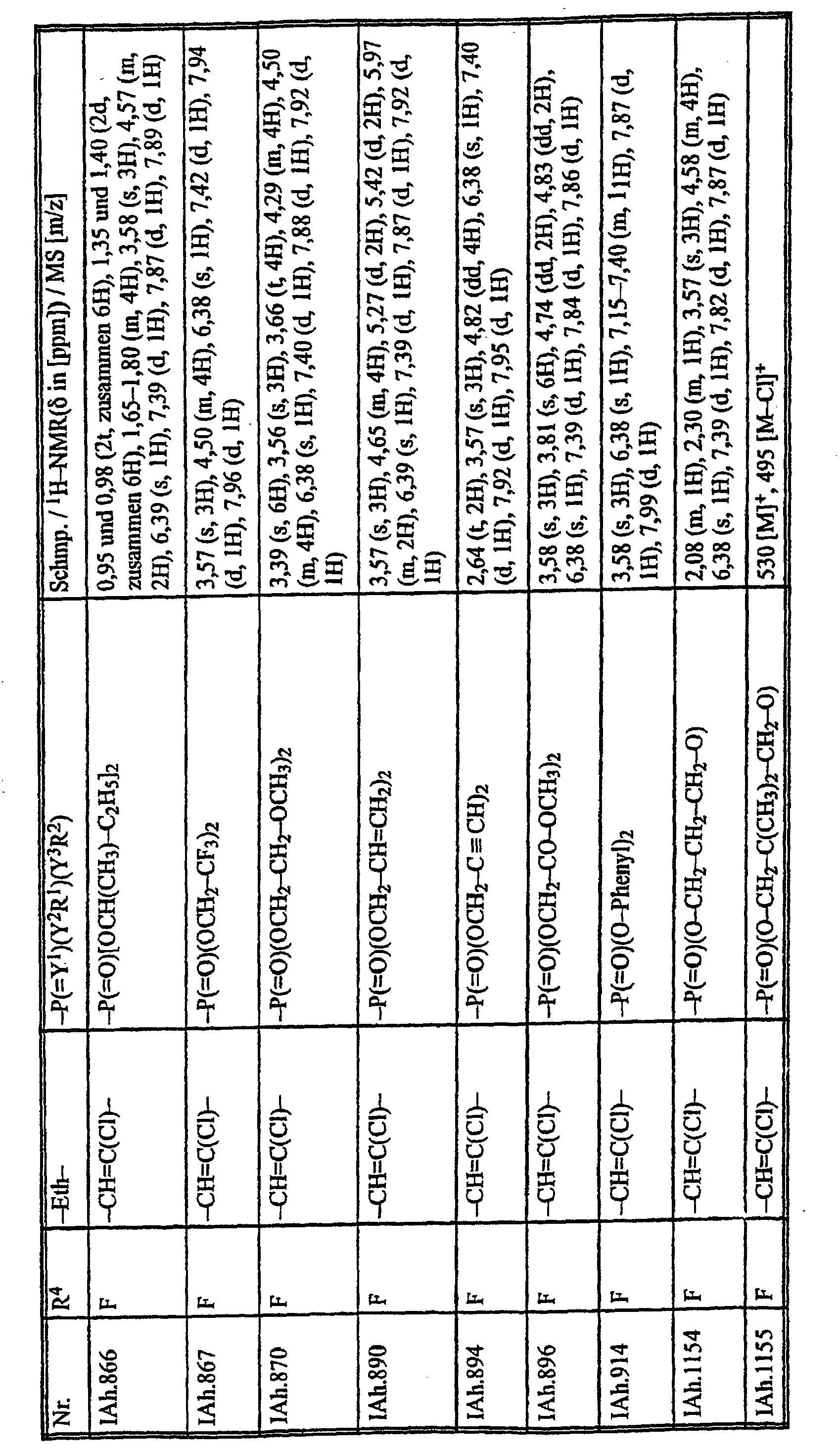

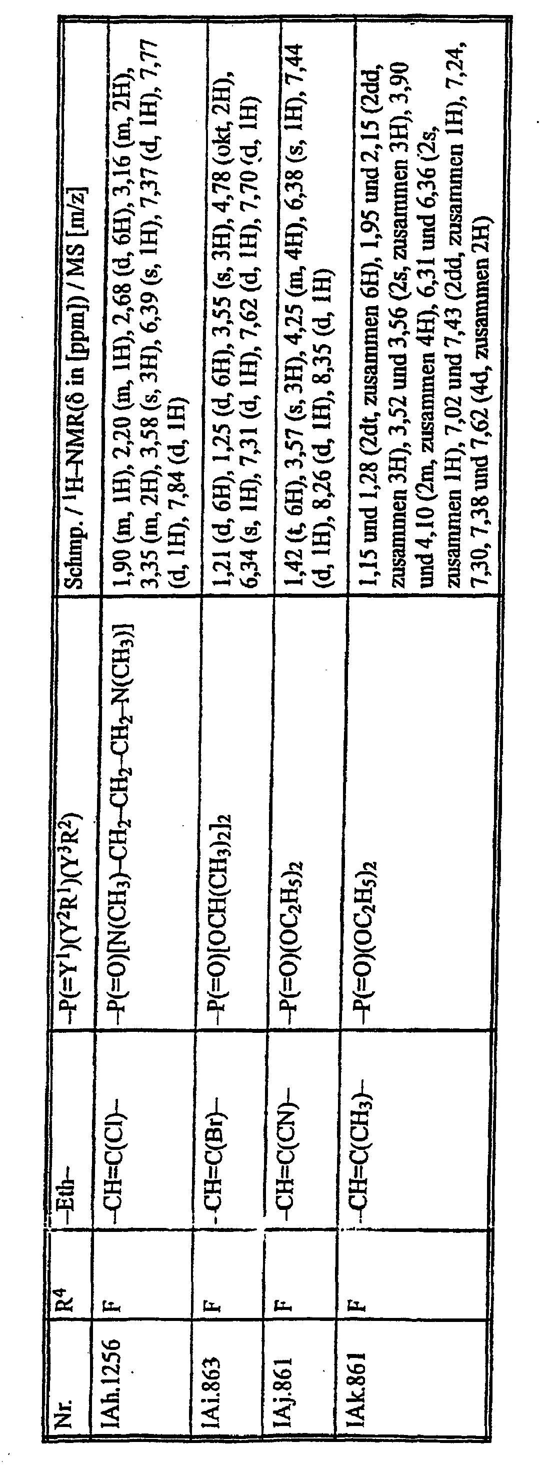

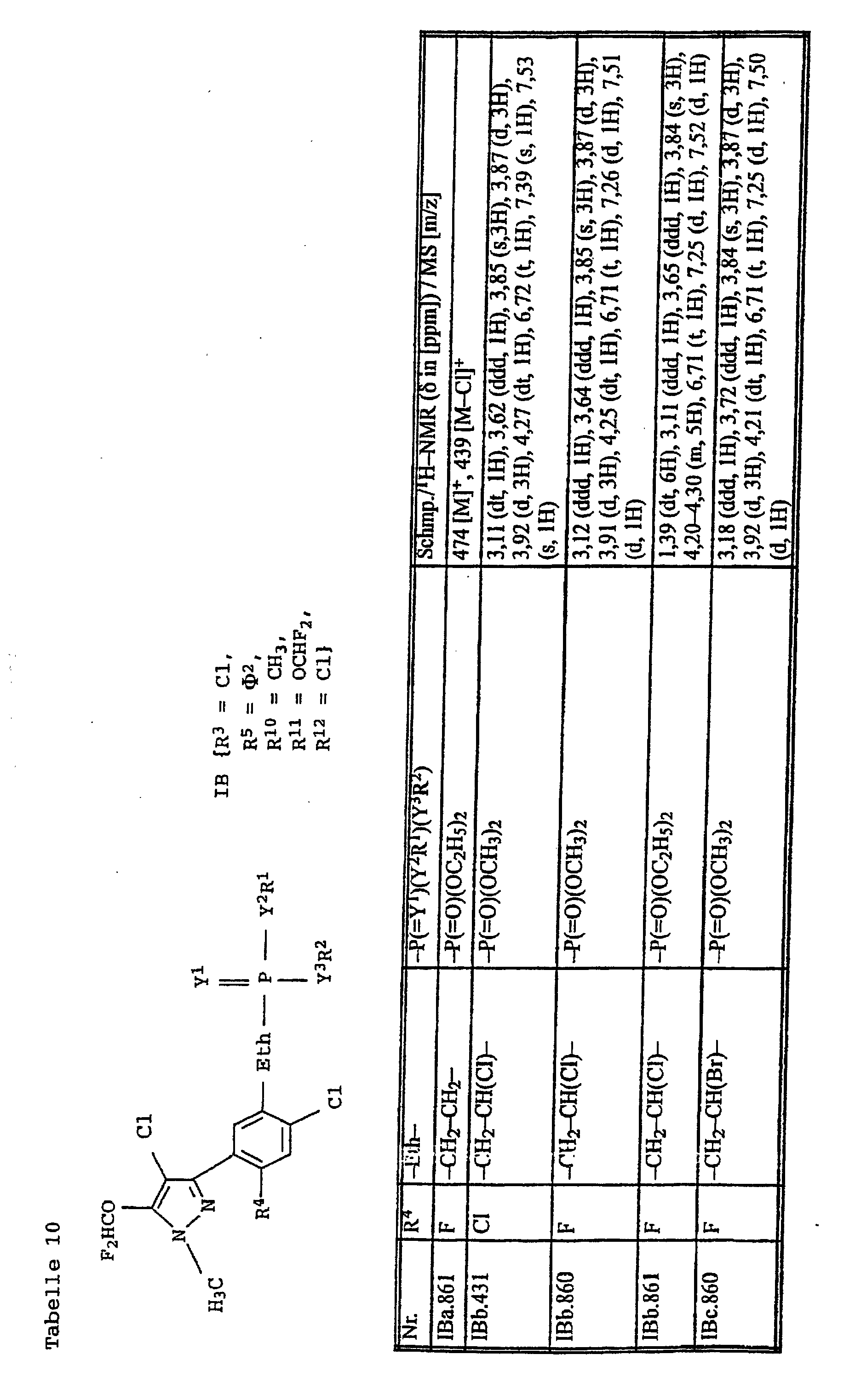

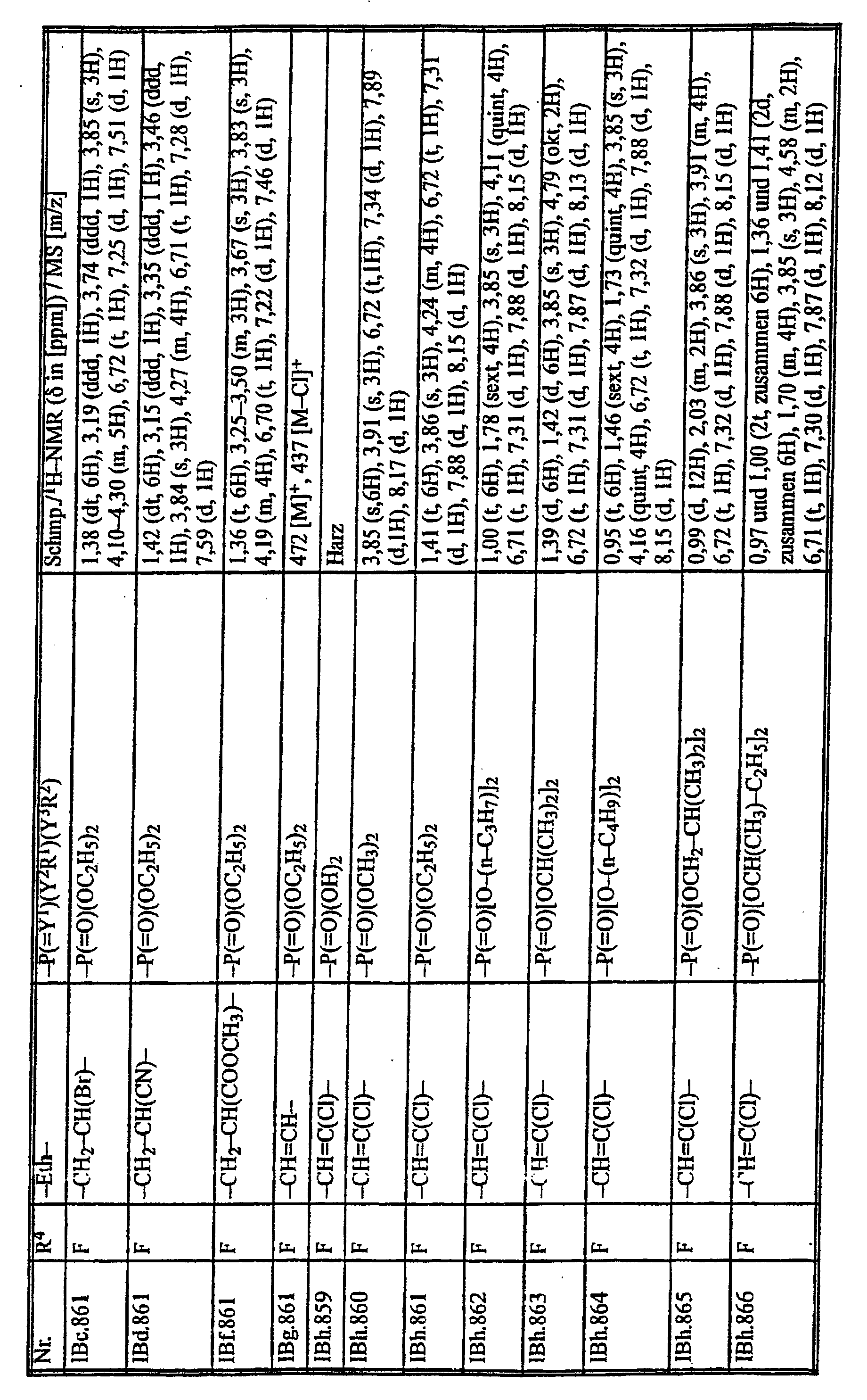

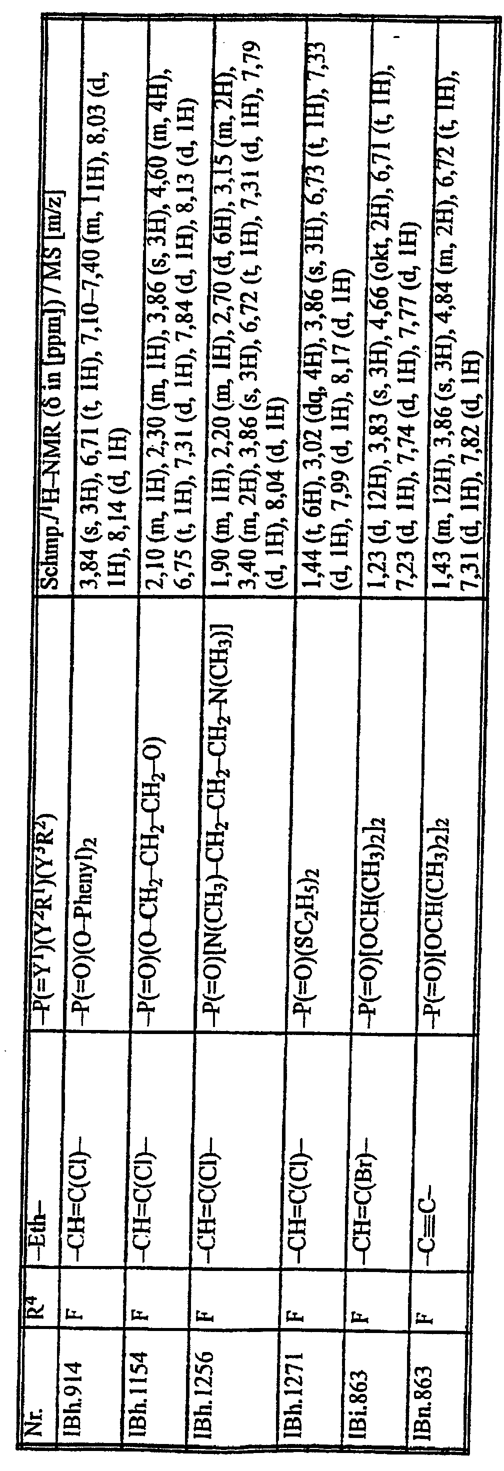

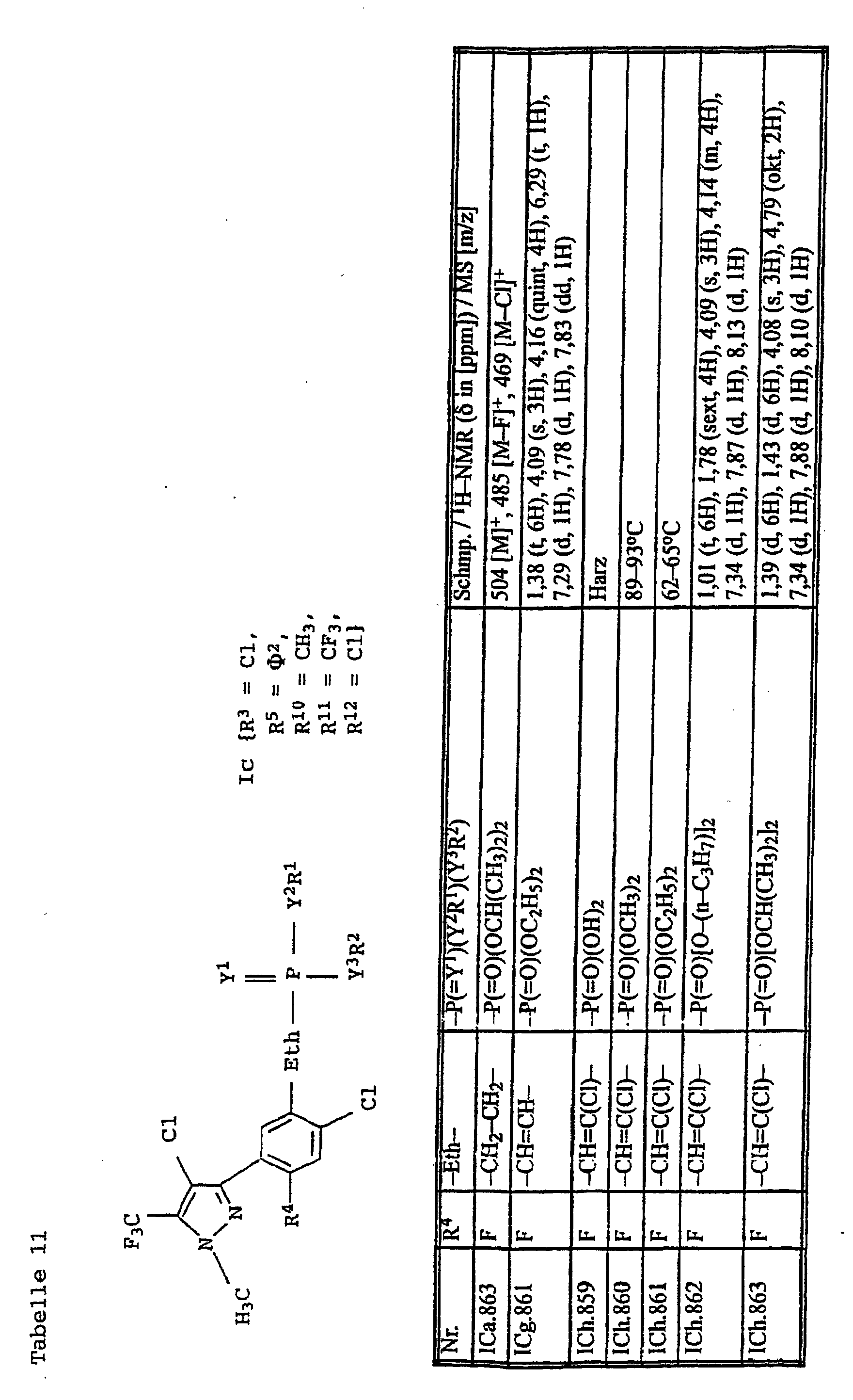

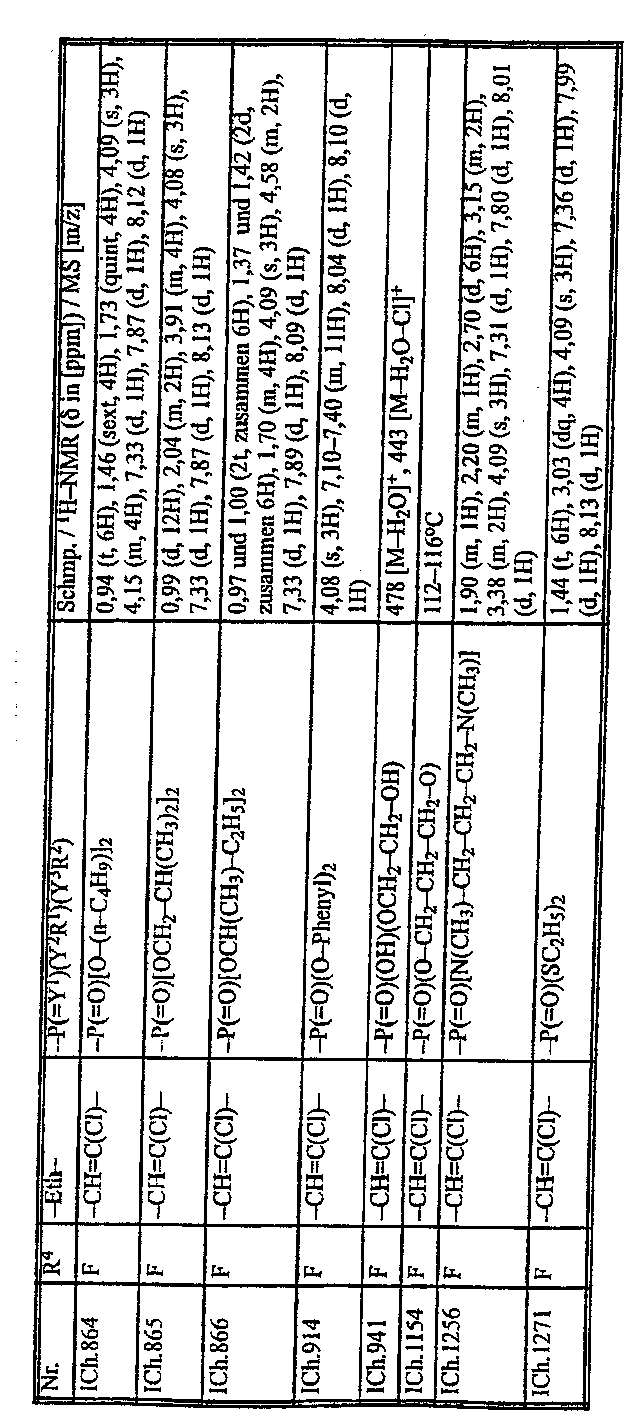

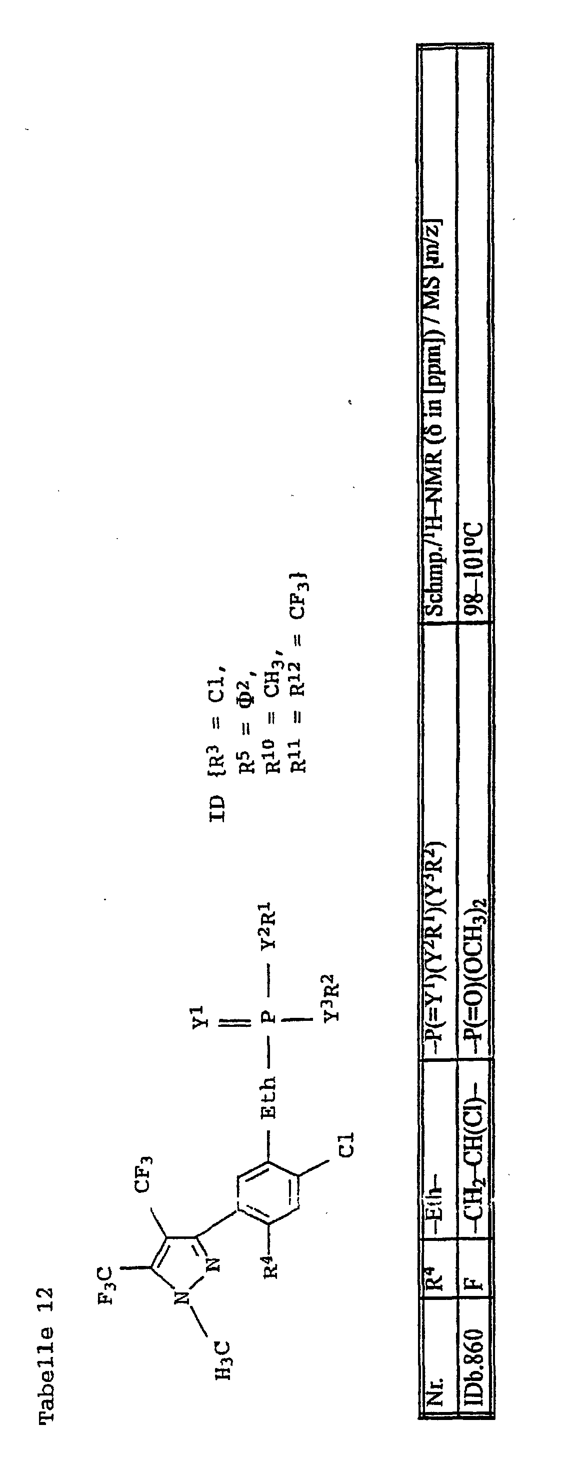

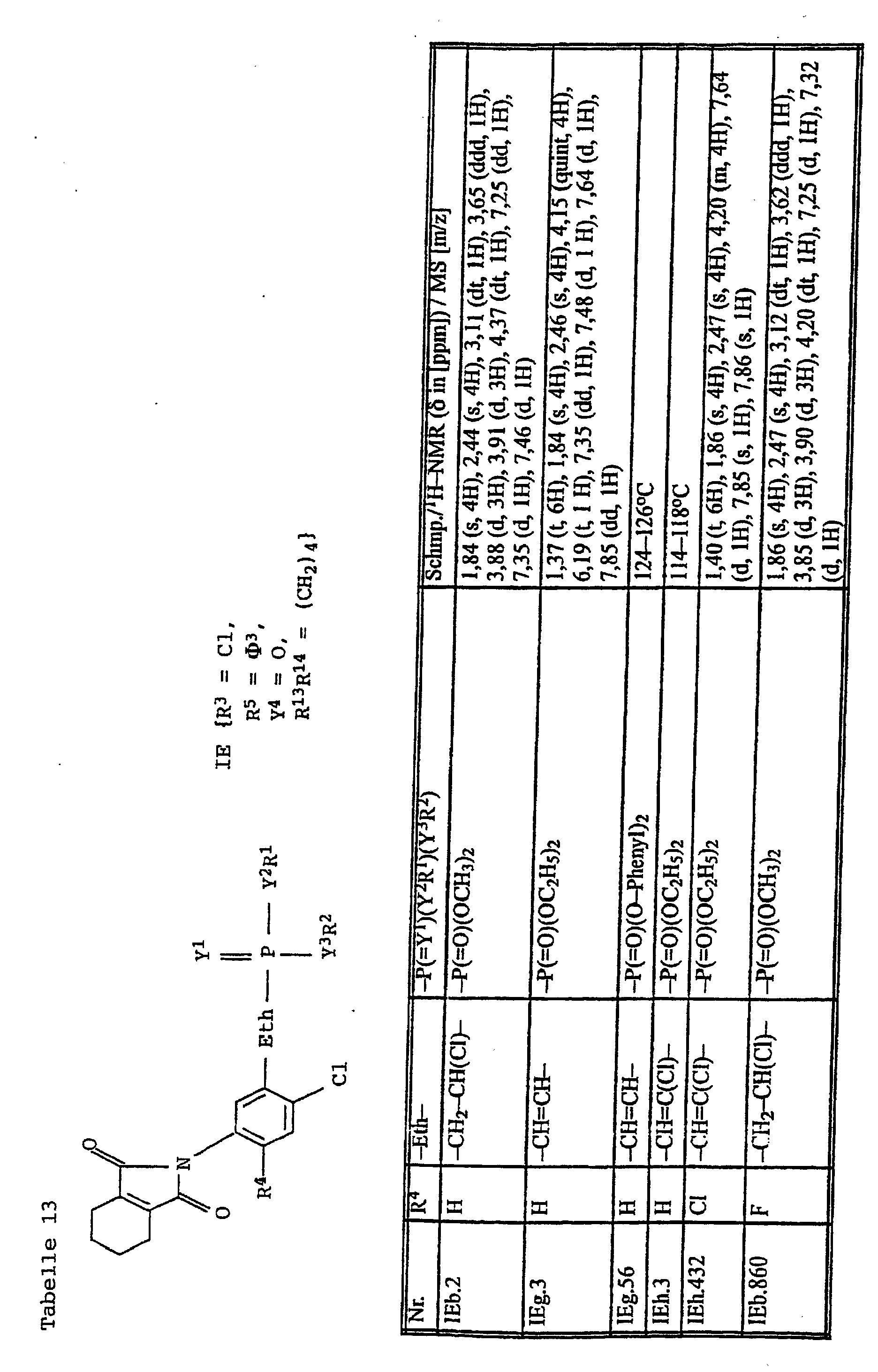

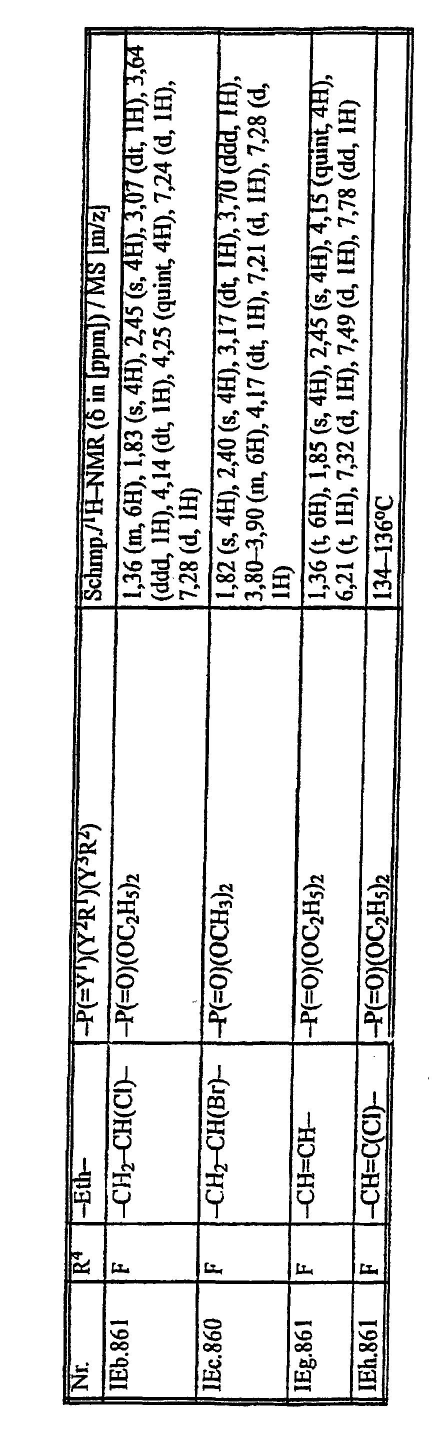

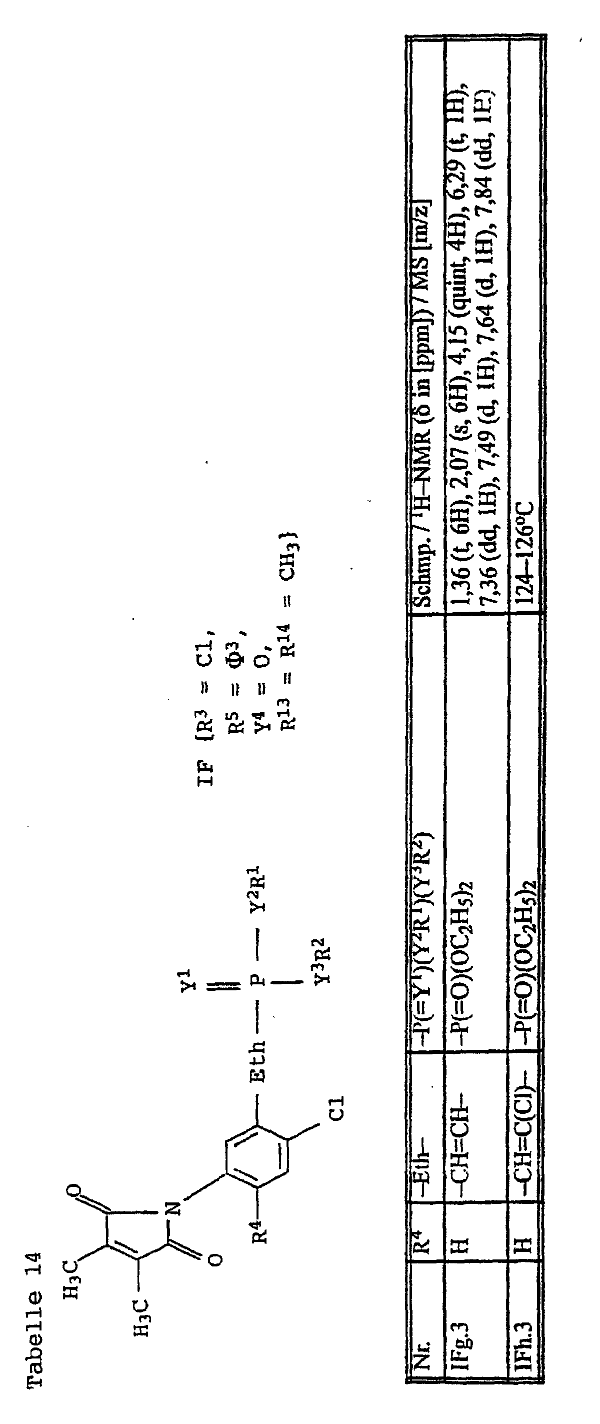

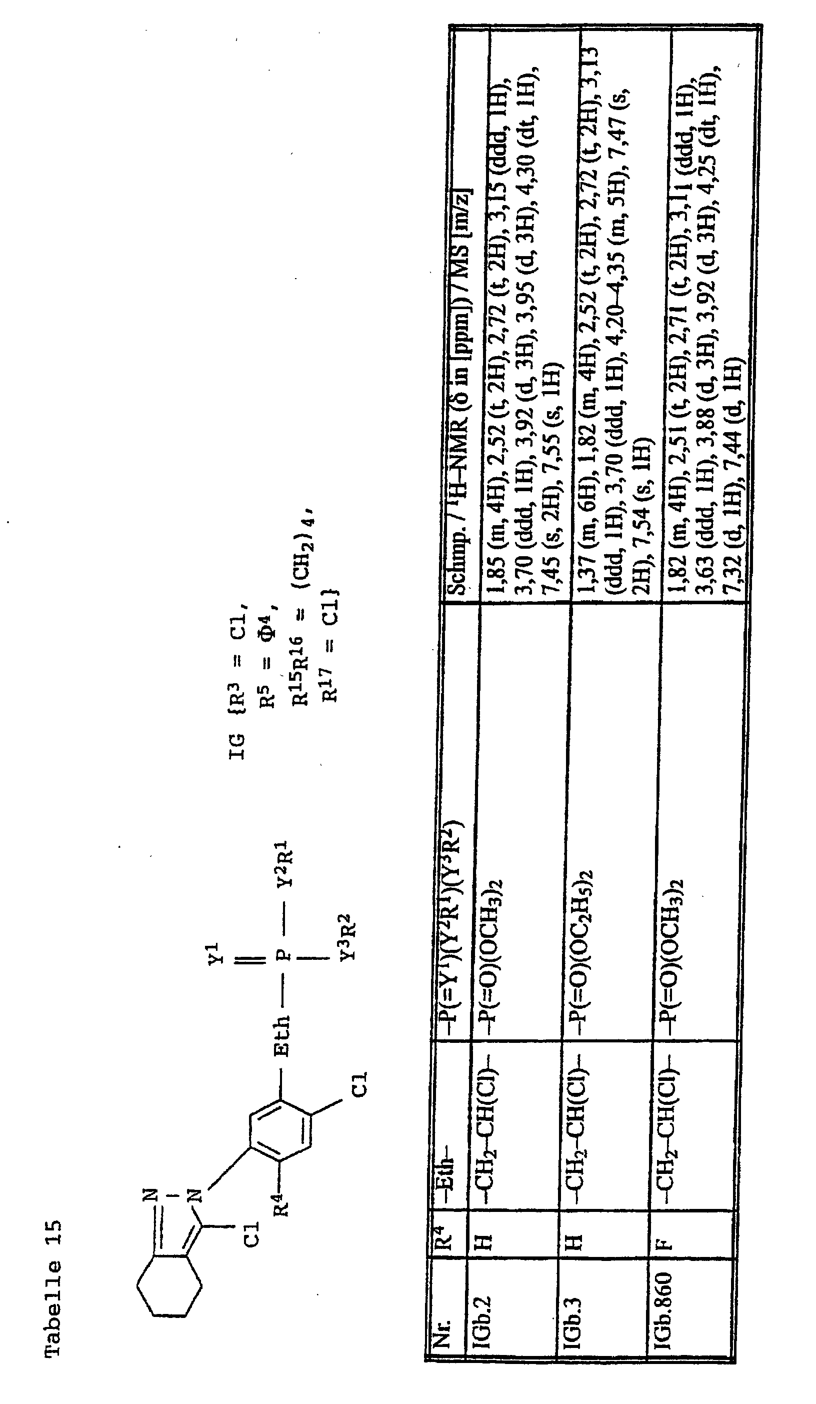

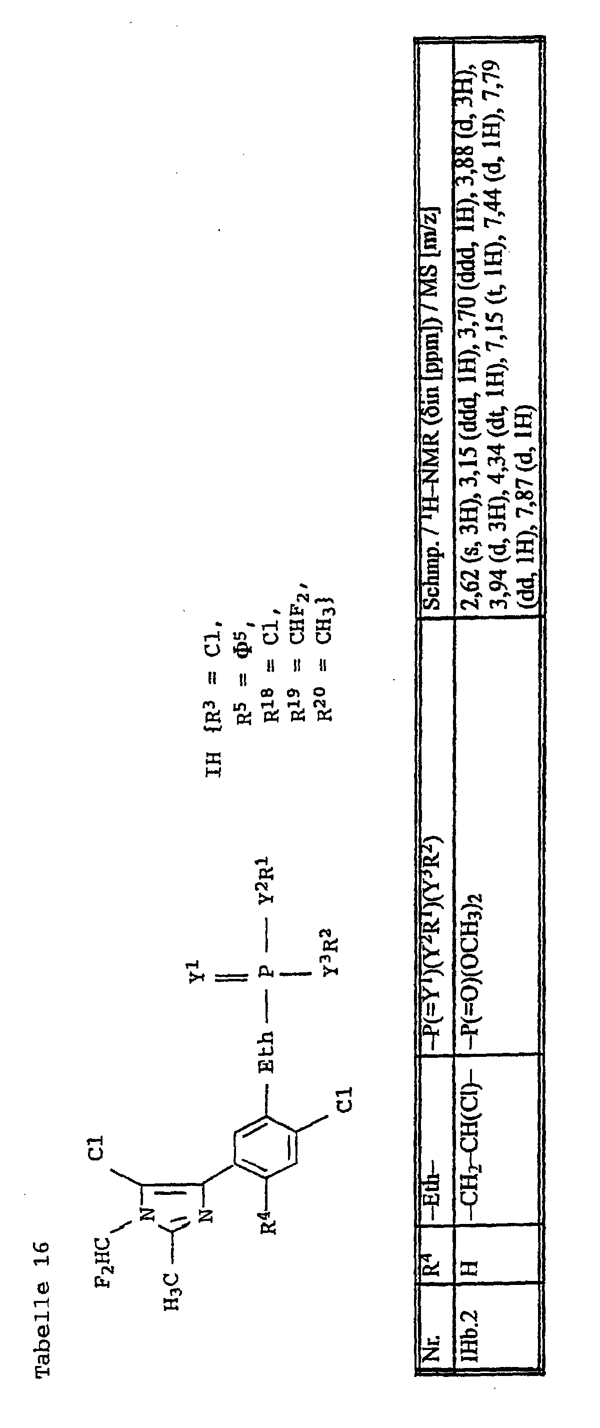

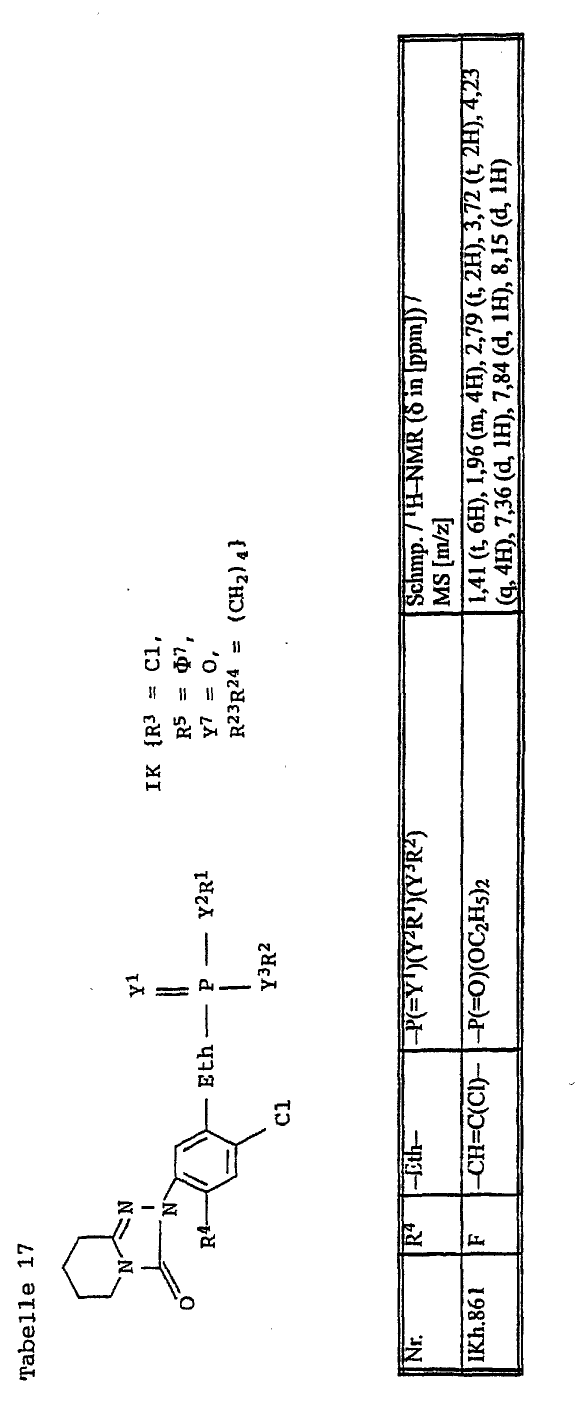

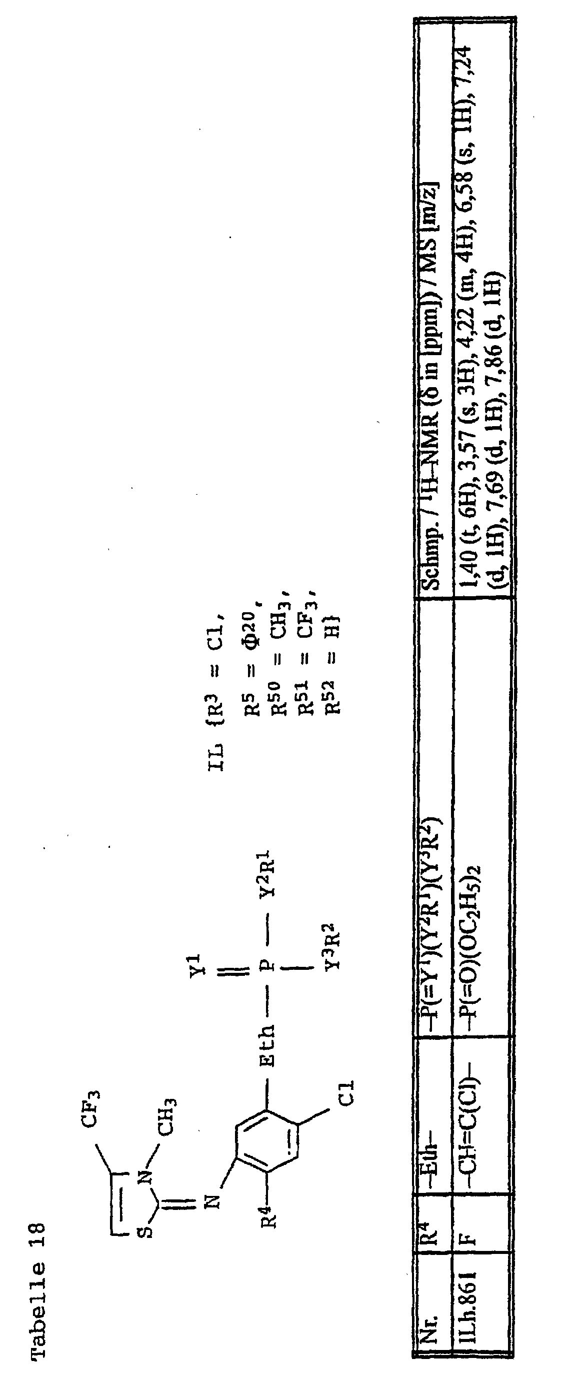

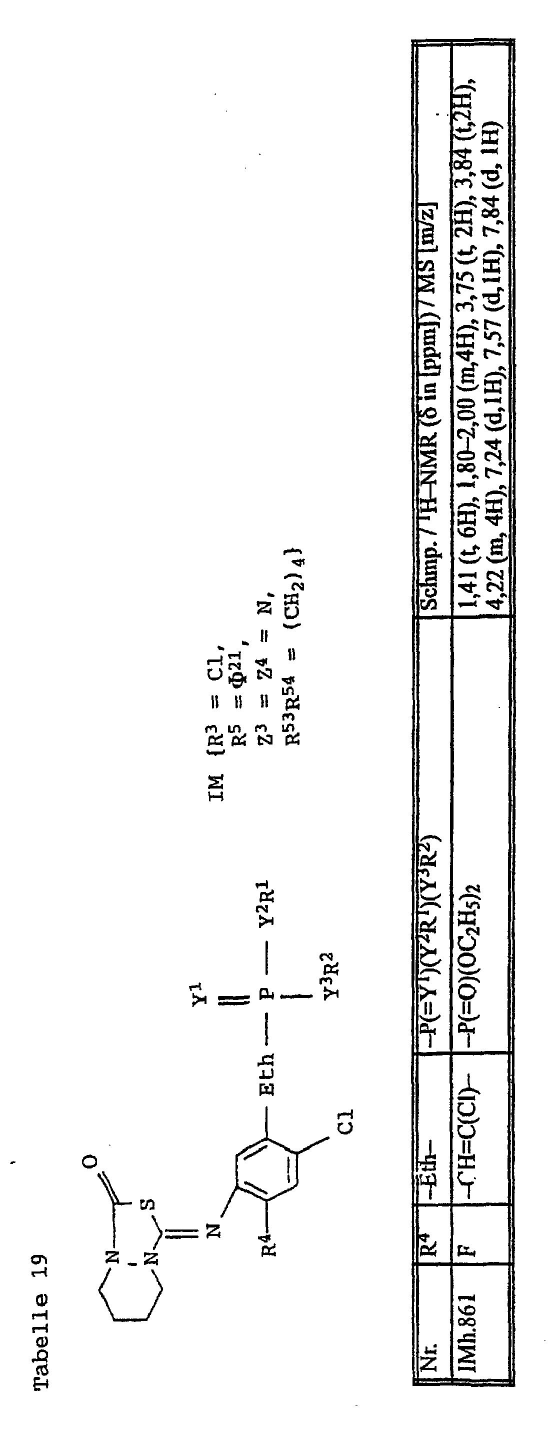

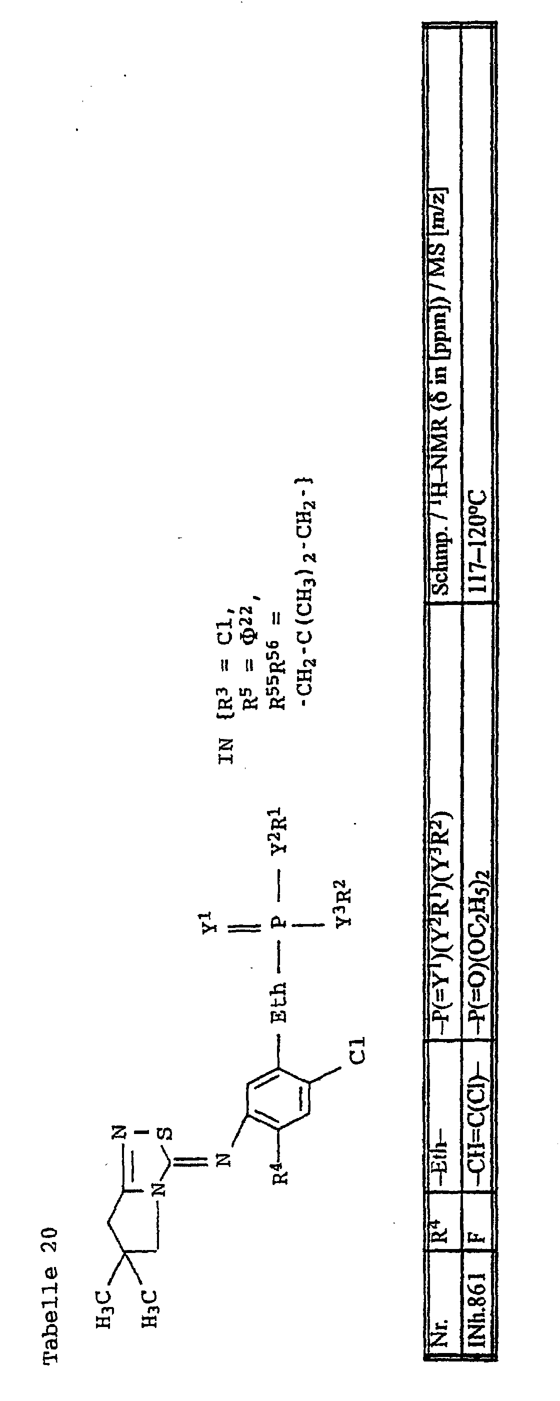

### Anwendungsbeispiele (herbizide Wirksamkeit)

Die herbizide Wirkung der substituierten aromatischen Phosphonsäurederivate I ließ sich durch die folgenden Gewächshausversuche zeigen:
Als Kulturgefäße dienten Plastikblumentöpfe mit lehmigem Sand mit etwa 3,0 % Humus als Substrat. Die Samen der Testpflanzen wurden nach Arten getrennt eingesät.

Bei Vorauflaufbehandlung wurden die in Wasser suspendierten oder emulgierten Wirkstoffe direkt nach Einsaat mittels fein verteilender Düsen aufgebracht. Die Gefäße wurden leicht beregnet, um Keimung und Wachstum zu fördern, und anschließend mit durchsichtigen Plastikhauben abgedeckt, bis die Pflanzen angewachsen waren. Diese Abdeckung bewirkt ein gleichmäßiges Keimen der Testpflanzen, sofern dies nicht durch die Wirkstoffe beeinträchtigt wurde.

Zum Zweck der Nachauf laufbehandlung wurden die Testpflanzen je nach Wuchsform erst bis zu einer Wuchshöhe von 3 bis 15 cm angezogen und erst dann mit den in Wasser suspendierten oder emulgierten Wirkstoffen behandelt. Die Testpflanzen wurden dafür entweder direkt gesät und in den gleichen Gefäßen aufgezogen oder sie wurden erst als Keimpflanzen getrennt angezogen und einige Tage vor der Behandlung in die Versuchsgefäße verpflanzt. Die Aufwandmenge für die Nachauflaufbehandlung betrug 15,6, 7,8, 1,9 oder 0,9 g/ha a.S. (aktive Substanz).

Die Pflanzen wurden artenspezifisch bei Temperaturen von 10 - 25°C bzw. 20 - 35°C gehalten. Die Versuchsperiode erstreckte sich über 2 bis 4 Wochen. Während dieser Zeit wurden die Pflanzen gepflegt, und ihre Reaktion auf die einzelnen Behandlungen wurde ausgewertet.

Bewertet wurde nach einer Skala von 0 bis 100. Dabei bedeutet 100 kein Aufgang der Pflanzen bzw. völlige Zerstörung zumindest der oberirdischen Teile und 0 keine Schädigung oder normaler Wachstumsverlauf.

Die in den Gewächshausversuchen verwendeten Pflanzen setzten sich aus folgenden Arten zusammen:

| Lateinischer Name | Deutscher Name | Englischer Name |
|---|---|---|
| Oryza sativa | Reis | rice |
| Abutilon theophrasti | Chinesischer Hanf | velvet leaf |
| Amaranthus retroflexus | Zuruckgekrümmter Fuchsschwanz | redroot pigweed |
| Chenopodium album | Weißer Gansefüß | lambsquarters (goosefoot) |
| Galium aparine | Klettenlabkraut | catchweed bedstraw |
| Ipomoea subspecies | Prunkwindearten | morningglory |
| Polygonum persicaria | Flohknöterich | ladysthumb |
| Solanum nigrum | Schwarzer Nachtschatten | black nightshade |
| Veronica subspecies | Ehrenpreisarten | speedwell |

Bei Aufwandmengen von 1,9 und 0,9 g/ha a.S. zeigte die Verbindungen Nr. IBg.861 im Nachauflaufverfahren eine selektive herbizide Wirkung gegen Abutilon theophrasti, Amaranthus retroflexus und Solanum nigrum in der Kultur Reis, die selbst nur wenig geschädigt wurde.

Die Verbindungen Nr. IBh.861 und Nr. IAh.861 zeigten im Nachauflaufverfahren bei den gleichen Aufwandmengen eine sehr gute Wirkung gegen Abutilon theophrasti, Amaranthus retroflexus und Solanum nigrum.

Bei Aufwandmengen von 15,6 und 7,8 g/ha a.S. bekämpften die Verbindungen Nr. IBg.861, IBh.861 und IAh.861 Amaranthus retroflexus, Chenopodium album, Galium aparine und Solanum nigrum besser als die aus ACS Symp. Ser. 584, 90 (1995) bekannte Vergleichsverbindung A

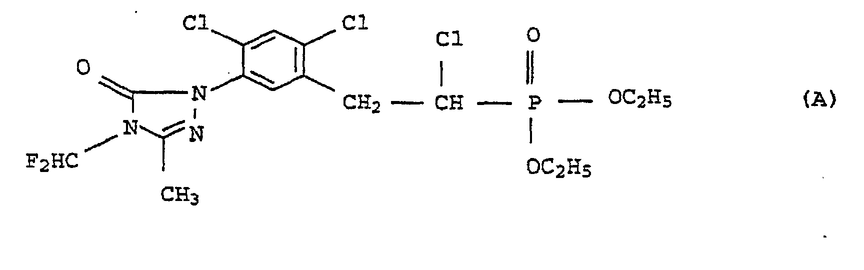

### Anwendungsbeispiele (desikkative/defoliante Wirksamkeit)

Als Testpflanzen dienten junge, 4-blättrige (ohne Keimblätter) Baumwollpflanzen, die unter Gewächshausbedingungen angezogen wurden (rel. Luftfeuchtigkeit 50 bis 70 %; Tag-/Nachttemperatur 27/20°C).

Die jungen Baumwollpflanzen wurden tropfnaß mit wässrigen Aufbereitungen der Wirkstoffe (unter Zusatz von 0,15 Gew.% des Fettalkoholalkoxylats Plurafac® LF 700¹⁾, bezogen auf die Spritzbrühe) blattbehandelt. Die ausgebrachte Wassermenge betrug umgerechnet 1000 1/ha. Nach 13 Tagen wurde die Anzahl der abgeworfenen Blätter und der Grad der Entblätterung in % bestimmt.

Bei den unbehandelten Kontrollpflanzen trat kein Blattfall auf.
¹⁾ ein schaumarmes, nichtionisches Tensid der BASF AG

## Patentansprüche

1. Substituierte aromatische Phosphonsäurederivate der Formel I 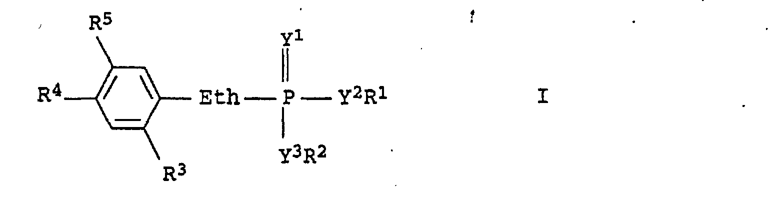 in der die Variablen folgende Bedeutungen haben:
Eth 1,2-Ethindiyl oder eine Ethan- oder Ethen-1,2-diyl-Kette, die jeweils unsubstituiert sein oder einen oder zwei der folgenden Substituenten tragen kann: Halogen, Cyano, Carboxy, C₁-C₄-Alkyl, C₁-C₄-Halogenalkyl, C₁-C₄-Alkoxy, C₁-C₄-Halogenalkoxy, (C₁-C₄-Alkoxy)carbonyl und/oder Di(C₁-C₄-alkyl)amino;
Y¹ Sauerstoff oder Schwefel;
Y² Sauerstoff, Schwefel oder -N(R⁶)-;
Y³ Sauerstoff, Schwefel oder -N(R⁷)-;
R¹, R², R⁶, R⁷ unabhängig voneinander Wasserstoff, C₁-C₆-Alkyl, C₁-C₆-Halogenalkyl, Hydroxy-C₁-C₄-alkyl, Cyano-C₁-C₄-alkyl, C₁-C₄-Alkoxy-C₁-C₄-alkyl, C₁-C₄-Halogenalkoxy-C₁-C₄-alkyl, C₃-C₄-Alkenyloxy-C₁-C₄-alkyl, C₃-C₄-Alkinyloxy-C₁-C₄-alkyl, C₃-C₈-Cycloalkoxy-C₁-C₄-alkyl, Amino-C₁-C₄-alkyl, C₁-C₄-Alkylamino-C₁-C₄-alkyl, Di- (C₁-C₄-alkyl) amino-C₁-C₄-alkyl, C₁-C₄-Alkylthio-C₁-C₄-alkyl, C₁-C₄-Halogenalkylthio-C₁-C₄-alkyl, C₃-C₄-Alkenylthio-C₁-C₄-alkyl, C₃-C₄-Alkinylthio-C₁-C₄-alkyl, C₁-C₄-Alkylsulfinyl-C₁-C₄-alkyl, C₁-C₄-Halogenalkylsulfinyl-C₁-C₄-alkyl, C₃-C₄-Alkenylsulfinyl-C₁-C₄-alkyl, C₃-C₄-Alkinylsulfinyl-C₁-C₄-alkyl, C₁-C₄-Alkylsulfonyl-C₁-C₄-alkyl, C₁-C₄-Halogenalkylsulfonyl-C₁-C₄-alkyl, C₃-C₄-Alkenylsulfonyl-C₁-C₄-alkyl, C₃-C₄-Alkinylsulfonyl-C₁-C₄-alkyl, C₃-C₆-Alkenyl, C₃-C₆-Halogenalkenyl, Cyano-C₃-C₆-alkenyl, C₃-C₆-Alkinyl, C₃-C₆-Halogenalkinyl, Cyano-C₃-C₆-alkinyl, Hydroxycarbonyl-C₁-C₄-alkyl, (C₁-C₄-Alkoxy) carbonyl-C₁-C₄-alkyl, (C₁-C₄-Alkylthio)carbonyl-C₁-C₄-alkyl, Aminocarbonyl-C₁-C₄-alkyl, (C₁-C₄-Alkyl)aminocarbonyl-C₁-C₄-alkyl, Di- (C₁-C₄-alkyl)aminocarbonyl-C₁-C₄-alkyl,
C₃-C₈-Cycloalkyl, C₃-C₈-Cycloalkyl-C₁-C₄-alkyl, Phenyl, Phenyl-C₁-C₄-alkyl oder
3- bis 7-gliedriges Heterocyclyl oder Heterocyclyl-C₁-C₄-alkyl, wobei alle Heterocyclen gewünschtenfalls ein Carbonyl- oder Thiocarbonyl-Ringglied enthalten können,
und wobei alle Cycloalkyl-, Phenyl- und Heterocyclylringe unsubstituiert sein oder ein bis vier Substituenten tragen können, jeweils ausgewählt aus der Gruppe bestehend aus Halogen, Cyano, Nitro, Amino, Hydroxy, Carboxy, C₁-C₄-Alkyl, C₁-C₄-Halogenalkyl, C₁-C₄-Alkoxy, C₁-C₄-Halogenalkoxy, C₁-C₄-Alkylthio, C₁-C₄-Halogenalkylthio, C₁-C₄-Alkylsulfonyl, C₁-C₄-Halogenalkylsulfonyl, (C₁-C₄-Alkyl)carbonyl, (C₁-C₄-Halogenalkyl)carbonyl, (C₁-C₄-Alkoxy)carbonyl, (C₁-C₄-Alkyl)carbonyloxy, (C₁-C₄-Halogenalkyl)carbonyloxy und Di-(C₁-C₄-alkyl)amino,
oder
R¹ und R² oder R¹ und R⁶ und/oder R² und R⁷ bilden jeweils zusammen eine 1,2-Ethandiyl-, 1,3-Propylen-, Tetramethylen-, Pentamethylen- oder Ethylenoxyethylen-Kette, die gewünschtenfalls durch ein bis vier C₁-C₄-Alkyl- und/oder ein oder zwei (C₁-C₄-Alkoxy)carbonylgruppen substituiert sein kann,
oder
R¹ und R² bedeuten zusammen 1,2-Phenylen, das unsubstituiert sein oder ein bis drei Substituenten tragen kann, jeweils ausgewählt aus der Gruppe bestehend aus Cyano, Nitro, Halogen, C₁-C₄-Alkyl, C₁-C₄-Halogenalkyl, C₁-C₄-Alkoxy und C₁-C₄-Halogenalkoxy;
R³ Cyano, Halogen, C₁-C₄-Alkyl, C₁-C₄-Halogenalkyl, C₁-C₄-Alkoxy oder C₁-C₄-Halogenalkoxy;
R⁴ Wasserstoff oder Halogen;
R⁵ einen der folgenden Heterocyclen Φ¹, Φ², Φ³, Φ⁴, Φ⁵, Φ⁷, Φ²⁰, Φ²¹ oder Φ²²: 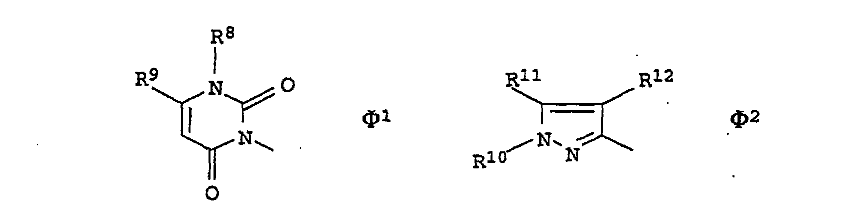 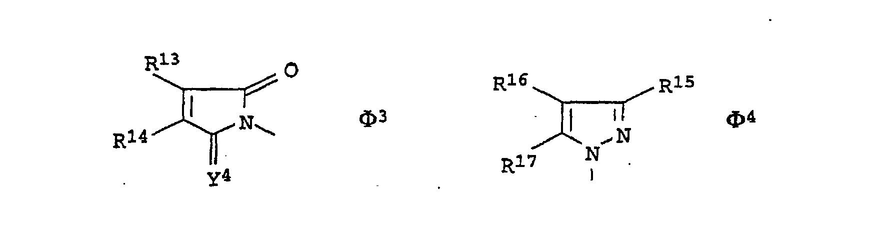 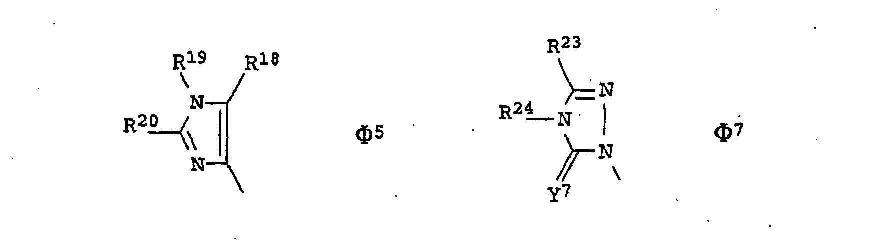 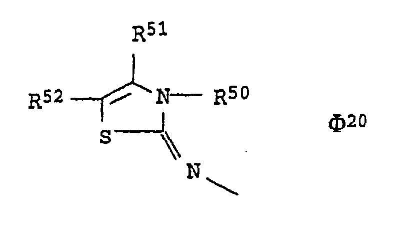 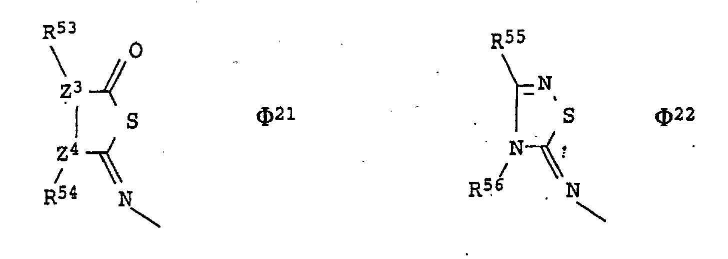
wobei
R⁸ für Wasserstoff, Amino, C₁-C₄-Alkyl oder C₁-C₄-Halogenalkyl;
R⁹ für Cyano, C₁-C₄-Alkyl, C₁-C₄-Halogenalkyl, C₁-C₄-Alkylsulfonyl oder C₁-C₄-Halogenalkylsulfonyl;
R¹⁰ für C₁-C₄-Alkyl oder C₁-C₄-Halogenalkyl;
R¹¹ für Cyano, C₁-C₄-Alkyl, C₁-C₄-Halogenalkyl, C₁-C₄-Alkoxy, C₁-C₄-Halogenalkoxy, C₁-C₄-Alkylthio, C₁-C₄-Halogenalkylthio, C₁-C₄-Alkylsulfinyl, C₁-C₄-Halogenalkylsulfinyl, C₁-C₄-Alkylsulfonyl oder C₁-C₄-Halogenalkylsulfonyl,
oder
R¹⁰ und R¹¹ zusammen mit den sie verbindenden Ringatomen für einen 5- bis 7-gliedrigen Heterocyclus mit ein oder zwei Heteroatomen, der unsubstituiert sein oder ein oder zwei C₁-C₄-Alkylreste tragen kann;
R¹² für Wasserstoff, Cyano, Halogen, C₁-C₄-Alkyl oder C₁-C₄-Halogenalkyl;
Y⁴ für Sauerstoff, Schwefel oder Methylen;
R¹³, R¹⁴ unabhängig voneinander für Wasserstoff oder C₁-C₄-Alkyl,
oder
R¹³ und R¹⁴ zusammen mit den sie verbindenden Ringatomen für einen 5- bis 7-gliedrigen carbo- oder heterocyclischen Ring, wobei der Ring gewünschtenfalls noch ein oder zwei Halogen- und/oder C₁-C₄-Alkylreste oder einen weiteren 3- bis 6-gliedrigen carbooder heterocyclischen Ring annelliert tragen kann;
R¹⁵, R¹⁶ unabhängig voneinander für Wasserstoff, Halogen, C₁-C₄-Alkyl oder C₁-C₄-Halogenalkyl,
oder
R¹⁵ und R¹⁶ zusammen mit den sie verbindenden Ringatomen für einen 5- bis 7-gliedrigen carbo- oder heterocyclischen Ring, der gewünschtenfalls noch ein oder zwei C₁-C₄-Alkylreste tragen kann;
R¹⁷ für Halogen oder C₁-C₄-Alkyl;
R¹⁸, R³³, R³⁵ unabhängig voneinander für Halogen;
R¹⁹, R²⁰, R⁵⁵, R⁵⁶ unabhängig voneinander für Wasserstoff, C₁-C₄-Alkyl oder C₁-C₄-Halogenalkyl,
oder
R¹⁹ und R²⁰ und/oder R⁵⁵ und R⁵⁶ zusammen mit den sie verbindenden Ringatomen für einen 5- bis 7-gliedrigen Ring, der gewünschtenfalls noch ein oder zwei C₁-C₄-Alkyl- oder C₁-C₄-Halogenalkylreste tragen kann;
Y⁷ für Sauerstoff oder Schwefel;
Z³, Z⁴ unabhängig voneinander für Stickstoff oder CH;
R²³ und R²⁴ und/oder R⁵³ und R⁵⁴ zusammen mit den sie verbindenden Ringatomen für einen 5- bis 7-gliedrigen Ring, der gewünschtenfalls noch ein oder zwei C₁-C₄-Alkylreste tragen kann;
R⁵² für Wasserstoff, C₁-C₄-Alkyl, C₃-C₆-Cycloalkyl oder C₁-C₄-Halogenalkyl;
R⁵⁰, R⁵¹ unabhängig voneinander für C₁-C₄-Alkyl, C₁-C₄-Halogenalkyl oder C₃-C₆-Cycloalkyl
stehen,
sowie die landwirtschaftlich brauchbaren Salze der Verbindungen I,
ausgenommen diejenigen Verbindungen I, bei denen R⁴ für Wasserstoff und R⁵ für Φ² stehen.

2. Substituierte aromatische Phosphonsäurederivate der Formel I und deren Salze, gemäß Anspruch 1, wobei R⁵ für 1-Methyl-6-trifluormethyl-2,4(1H,3H)-pyrimidindion-3-yl, 4-Chlor-5-difluormethoxy-1-methyl-1H-pyrazol-3-yl, 4-Chlor-l-methyl-5-trifluormethyl-lH-pyrazol-3-yl, 1-Methyl-4,5-di(trifluormethyl)-1H-pyrazol-3-yl, 1,3,4,5,6,7-Hexahydro-1,3-dioxo-2H-isoindol-2-yl, 3,4-Dimethyl-1H-pyrrol-2,5-dion-1-yl, 3-Chlor-4,5,6,7-tetrahydro-2H-indazol-2-yl, 5-Chlor-1-difluormethyl-2-methyl-1Himidazol-4-yl, 5,6,7,8-Tetrahydro-1,2,4-triazolo[4,3-a]pyridin-3(2H)-on-2-yl, (3-Methyl-4-trifluormethyl-2(3H)-thiazolyliden)amino, (Tetrahydro-3-oxo-1H,3H-[1,3,4]thiadiazolo[3,4-a]pyridazin-1-yliden)amino oder (6,7-Dihydro-6,6-dimethyl-3H,5H-pyrrolo[2,1-c][1,2,4]thiadiazol-3-yliden)amino steht.

3. Verwendung der substituierten aromatischen Phosphonsäurederivate I und ihrer Salze, gemäß den Ansprüchen 1 bis 2, als Herbizide oder zur Desikkation/Defoliation von Pflanzen.

4. Herbizides Mittel, enthaltend eine herbizid wirksame Menge mindestens eines substituierten aromatischen Phosphonsäurederivats der Formel I oder eines Salzes von I, gemäß den Ansprüchen 1 bis 2, und mindestens einen flüssigen und/oder festen Trägerstoff sowie gewünschtenfalls mindestens einen oberflächenaktiven Stoff.

5. Mittel zur Desikkation und/oder Defoliation von Pflanzen, enthaltend eine desikkant und/oder defoliant wirksame Menge mindestens eines substituierten aromatischen Phosphonsäurederivats der Formel I oder eines Salzes von I, gemäß den Ansprüchen 1 bis 2, und mindestens einen inerten flüssigen und/oder festen Trägerstoff sowie gewünschtenfalls mindestens einen oberflächenaktiven Stoff.

6. Verfahren zur Herstellung von herbizid wirksamen Mitteln, **dadurch gekennzeichnet, daß** man eine herbizid wirksame Menge mindestens eines substituierten aromatischen Phosphonsäurederivats der Formel I oder eines Salzes von I, gemäß den Ansprüchen 1 bis 2, mit mindestens einem flüssigen und/oder festen Trägerstoff sowie gewünschtenfalls mindestens einem oberflächenaktiven Stoff mischt.

7. Verfahren zur Herstellung von desikkant und/oder defoliant wirksamen Mitteln, **dadurch gekennzeichnet, daß** man eine desikkant/defoliant wirksame Menge mindestens eines substituierten aromatischen Phosphonsäurederivats der Formel I oder eines Salzes von I, gemäß den Ansprüchen 1 bis 2, mit mindestens einem flüssigen und/oder festen Trägerstoff sowie gewünschtenfalls mindestens einem oberflächenaktiven Stoff mischt.

8. Verfahren zur Bekämpfung von unerwünschtem Pflanzenwuchs, **dadurch gekennzeichnet, daß** man eine herbizid wirksame Menge mindestens eines substituierten aromatischen Phosphonsäurederivats der Formel I oder eines Salzes von I, gemäß den Ansprüchen 1 bis 2, auf Pflanzen, deren Lebensraum oder auf Saatgut einwirken läßt.

9. Verfahren zur Desikkation und/oder Defoliation von Pflanzen, **dadurch gekennzeichnet, daß** man eine desikkant/defoliant wirksame Menge mindestens eines substituierten aromatischen Phosphonsäurederivats der Formel I oder eines Salzes von I, gemäß den Ansprüchen 1 bis 2, auf Pflanzen einwirken läßt.

10. Verfahren nach Anspruch 9, **dadurch gekennzeichnet, daß** man Baumwolle behandelt.

11. Verfahren zur Herstellung von substituierten aromatischen Phosphonsäurederivaten der Formel I gemäß den Ansprüchen 1 bis 2, bei denen Eth für -CH₂-CH(Cl)-, -CH₂-CH(Br)-, -CH=C(Cl)- oder -CH=C(Br)- steht, **dadurch gekennzeichnet, daß** man Aniline der Formel II 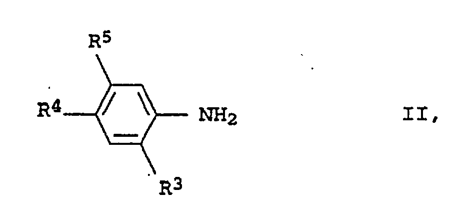 wobei R³, R⁴ und R⁵ die in Anspruch 1 angegebene Bedeutung haben, diazotiert und die erhaltenen Diazonium-Kationen in Gegenwart eines Kupfersalzes mit Vinylphosphonsäurederivaten der Formel IIIa 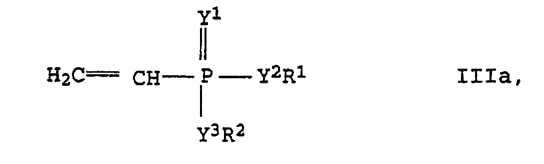 oder mit Alkinylphosphonsäurederivaten der Formel IIIb 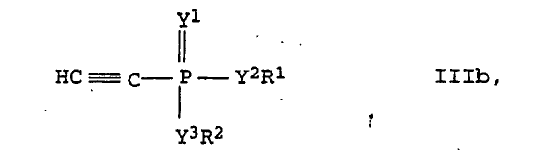 wobei Y¹, Y², Y³, R¹ und R² die in Anspruch 1 angegebenen Bedeutungen haben, umsetzt.

12. Verfahren zur Herstellung von substituierten aromatischen Phosphonsäurederivaten der Formel I gemäß Anspruch 1, bei denen Eth für -CH=C(CN)- oder -CH=C[CO-O-(C₁-C₄-Alkyl)]-steht, **dadurch gekennzeichnet, daß** man entweder aromatische Aldehyde der Formel VIa 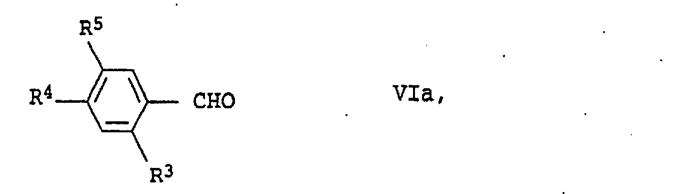 wobei R³, R⁴ und R⁵ die in Anspruch 1 angegebenen Bedeutungen haben, mit Phosphonsäurederivaten VIIa oder VIIb 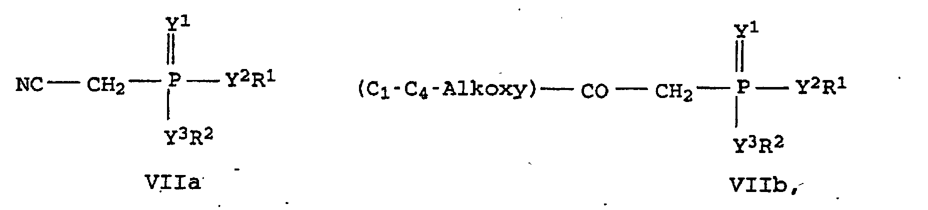 wobei Y¹, Y², Y³, R¹ und R² die in Anspruch 1 angegebenen Bedeutungen haben,
oder Phosphonsäurederivate der Formel XVIa oder XVIb 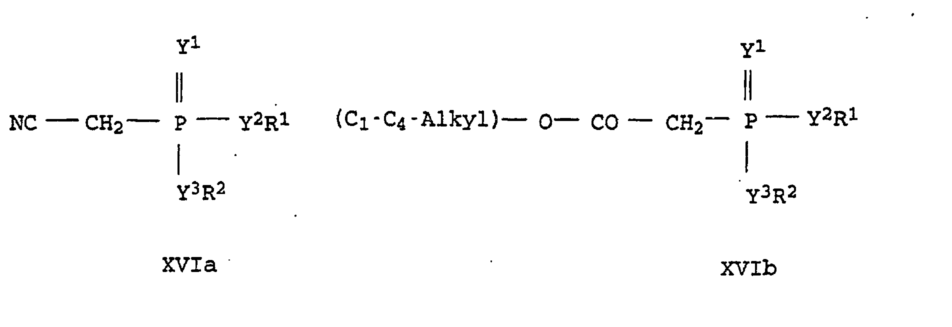 wobei Y¹, Y², Y³, R¹ und R² die in Anspruch 1 angegebenen Bedeutungen haben, in Gegenwart einer starken Base mit 3-Pyridylbenzylhalogeniden der Formel XVII 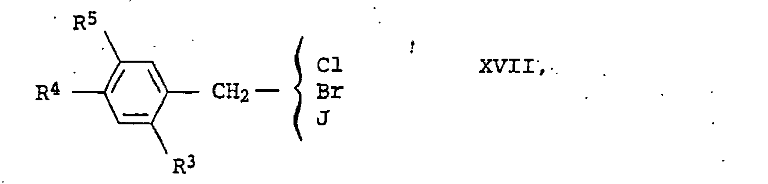 wobei R³, R⁴ und R⁵ die in Anspruch 1 angegebenen Bedeutungen haben, umsetzt.

13. Verfahren zur Herstellung von substituierten aromatischen Phosphonsäurederivaten der Formel I gemäß Anspruch 1, bei denen Eth für -CH=CH-, -CH=C(Halogen)- oder -CH=C(C₁-C₄-Alkyl)- steht, **dadurch gekennzeichnet, daß** man Aldehyde der Formel VIa 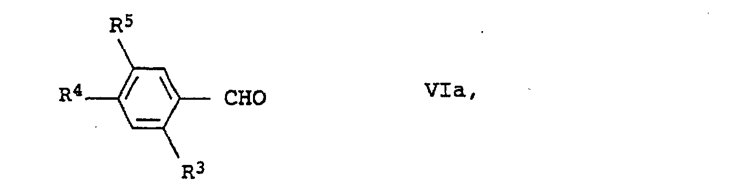 wobei R³, R⁴ und R⁵ die in Anspruch 1 angegebenen Bedeutungen haben, mit Anionen VIIIa, VIIIb oder VIIIc 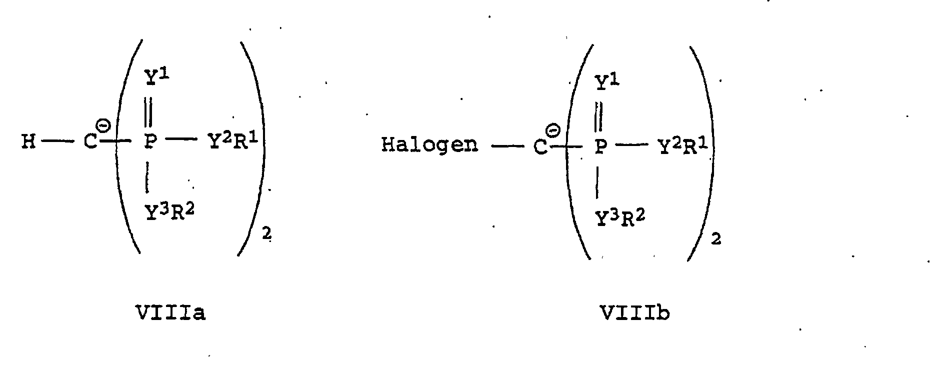 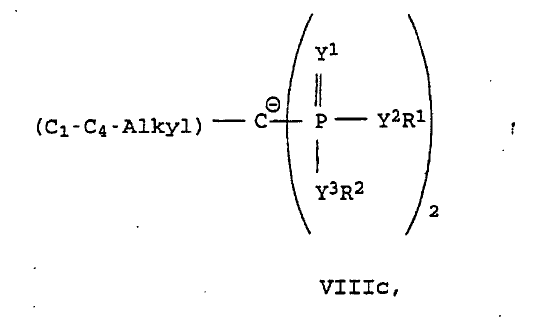 wobei Y¹, Y², Y³, R¹ und R² die in Anspruch 1 angegebenen Bedeutungen haben, umsetzt.

14. Verfahren zur Herstellung von substituierten aromatischen Phosphonsäurederivaten der Formel I gemäß Anspruch 1, bei denen Eth für -CH=CH- steht, **dadurch gekennzeichnet, daß** man aromatische Aldehyde der Formel VIa 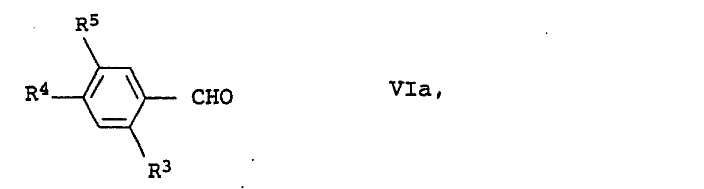 mit Yliden IX 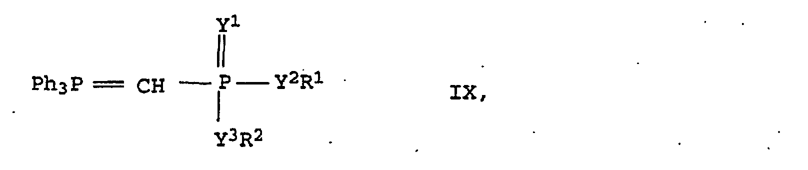 wobei Y¹, Y², Y³, R¹ bis R⁵ die in Anspruch 1 angegebenen Bedeutungen haben und Ph für Phenyl steht, umsetzt.

15. Verfahren zur Herstellung von substituierten aromatischen Phosphonsäurederivaten der Formel I gemäß Anspruch 1, bei denen Eth für -CH=CH- oder -CH=C(C₁-C₄-Alkyl)- steht, **dadurch gekennzeichnet, daß** man Phosphonsäurederivate der Formel X 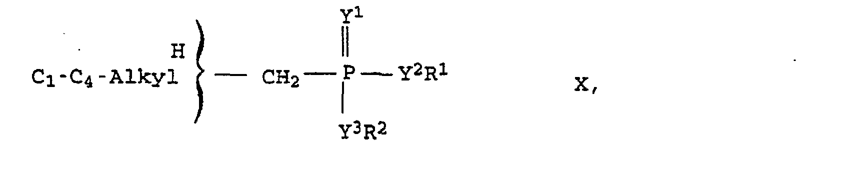 wobei Y¹, Y², Y³, R¹ und R² die in Anspruch 1 angegebenen Bedeutungen haben, in Gegenwart einer starken Base mit Chlortrimethylsilan und aromatischen Aldehyden der Formel VIa 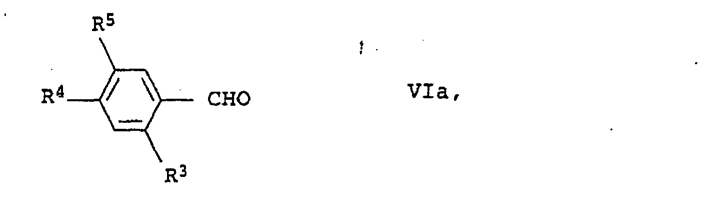 wobei R³, R⁴ und R⁵ die in Anspruch 1 angegebenen Bedeutungen haben, umsetzt.

16. Verfahren zur Herstellung von substituierten aromatischen Phosphonsäurederivaten der Formel I gemäß Anspruch 1, bei denen Eth für -CH=C(Cl)- steht, **dadurch gekennzeichnet, daß** . man Aldehyde der Formel VIa 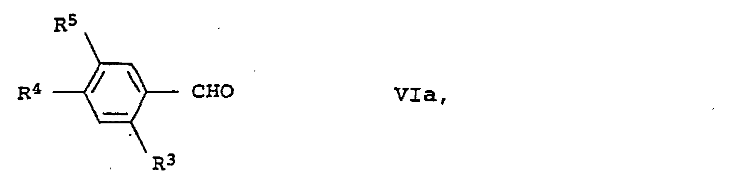 wobei R³, R⁴ und R⁵ die in Anspruch 1 angegebenen Bedeutungen haben, in Gegenwart einer Alkyllithiumverbindung XXVII
(C₁-C₄-Alkyl)-Li XXVII
mit Trichlormethanphosphonsäurederivaten XXVI 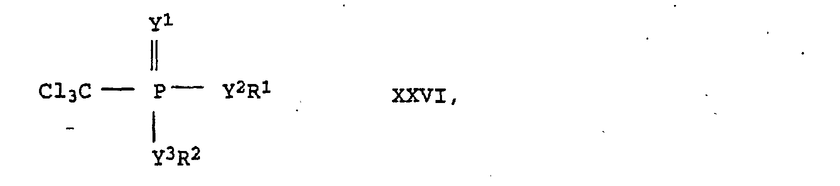 wobei Y¹, Y², Y³, R¹ und R² die in Anspruch 1 angegebenen Bedeutungen haben, umsetzt.

17. Verfahren zur Herstellung von substituierten aromatischen Phosphonsäurederivaten der Formel I gemäß Anspruch 1, bei denen Eth für Ethan-1,2-diyl steht, **dadurch gekennzeichnet, daß** man eine Verbindung der Formel I, bei der Eth eine Ethan-1,2-diyl- oder Ethen-1,2-diyl-Kette bedeutet, die durch Chlor, Brom oder Iod substituiert sein kann, in Gegenwart eines Katalysators mit Wasserstoff hydriert.

18. Verfahren zur Herstellung von substituierten aromatischen Phosphonsäurederivaten der Formel I gemäß Anspruch 1, bei denen Y¹, Y² und Y³ für Sauerstoff und R¹ und R² für Wasserstoff stehen, **dadurch gekennzeichnet, daß** man Verbindungen der Formel I, bei denen Y¹, Y² und Y³ jeweils Sauerstoff und R¹ und R² jeweils C₁-C₆-Alkyl bedeuten,
entweder mit einer Halogenwasserstoffsäure hydrolysiert, oder zunächst mit einem Tri-(C₁-C₄-Alkyl)silylhalogenid umsetzt und dann mit Wasser hydrolysiert.

19. Verfahren zur Herstellung von substituierten aromatischen Phosphonsäurederivaten der Formel I gemäß Anspruch 1, bei denen Y¹ für Sauerstoff steht, **dadurch gekennzeichnet, daß** man Verbindungen der Formal I, bei denen Y¹, Y² und Y³ Sauerstoff und R¹ und R² Wasserstoff bedeuten, chloriert und die Produkte XXIVa anschließend mit Nucleophilen HY²R¹ und/oder HY³R² umsetzt.

20. Verfahren zur Herstellung von substituierten aromatischen Phosphonsäurederivaten der Formel I gemäß Anspruch 1, bei denen R⁵ für Φ⁷ mit Y⁷ = Sauerstoff steht, **dadurch gekennzeichnet, daß** man Phenylhydrazine der Formel XXVIII oder deren Säureadditionssalze 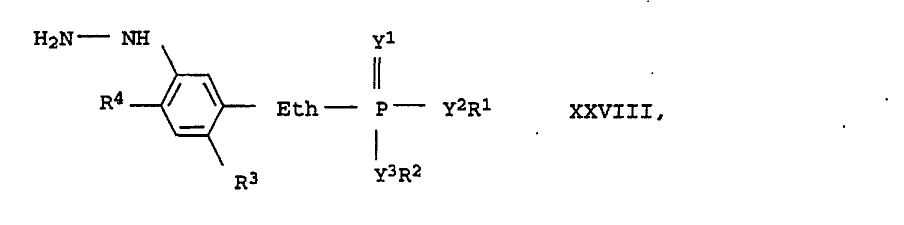 wobei Eth, Y¹, Y², Y³ und R¹-R⁴ die in Anspruch 1 angegebenen Bedeutungen haben, in Gegenwart einer Base mit Amidinen der Formel XXIXa oder deren Säureadditionssalzen 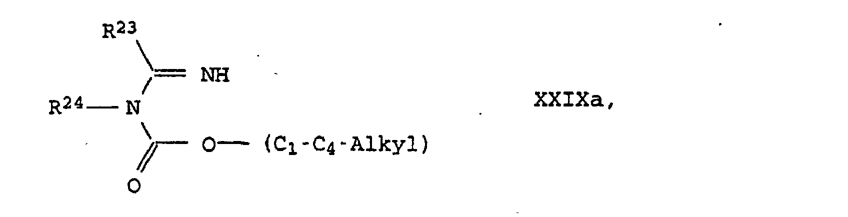 wobei Y⁷ für Sauerstoff steht und R²³ und R²⁴ die in Anspruch 1 angegebenen Bedeutungen haben, umsetzt und das Reaktionsprodukt mittels Säure cyclisiert.

21. Phenylhydrazine der Formel XXVIII 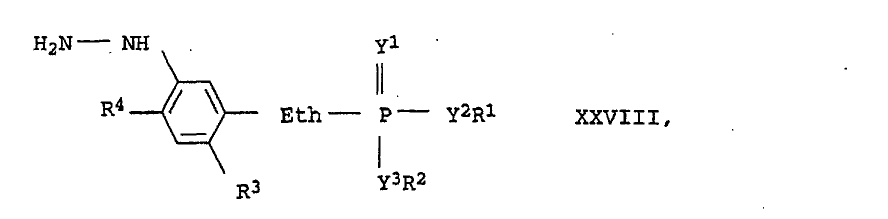 wobei Eth, Y¹, Y², Y³ und R¹-R⁴ die in Anspruch 1 angegebenen Bedeutungen haben.

22. Verfahren zur Herstellung von Phenylhydrazinen der Formel XXVIII 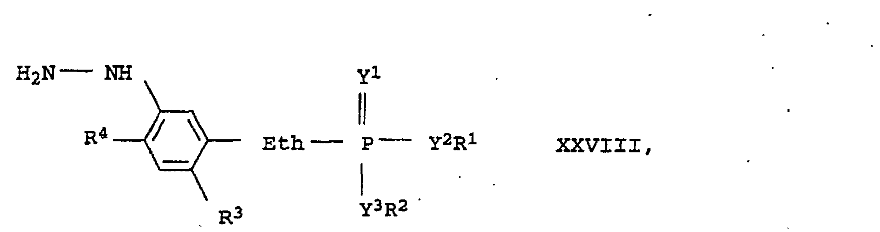 wobei Eth, Y¹, Y², Y³ und R¹-R⁴ die in Anspruch 1 angegebenen Bedeutungen haben, **dadurch gekennzeichnet, daß** man Aniline der Formel XXXI 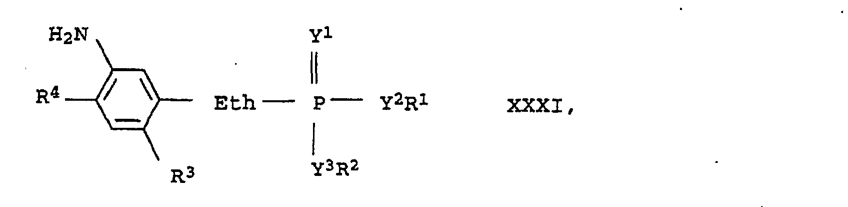 diazotiert und die erhaltenen Diazonium-Kationen reduziert.

23. Aniline der Formel XXXI 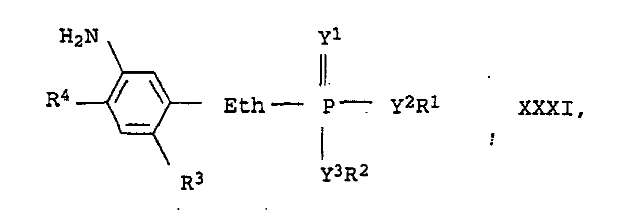 wobei Eth, Y¹, Y², R³ und R¹-R⁴ die in Anspruch 1 angegebenen Bedeutungen haben.

24. Verfahren zur Herstellung von Anilinen der Formel XXXI 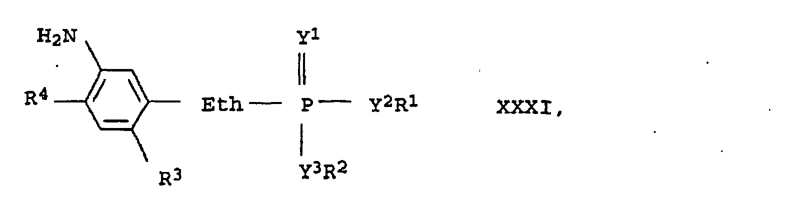 wobei Eth, Y¹, Y², Y³ und R¹-R⁴ die in Anspruch 1 angegebenen Bedeutungen haben, **dadurch gekennzeichnet, daß** man entsprechende Nitroverbindungen der Formel XXXII 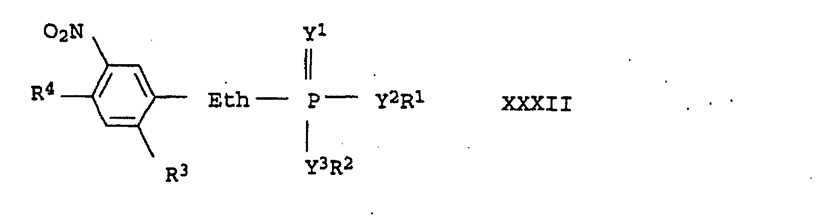 reduziert.

25. Nitroverbindungen der Formel XXXII 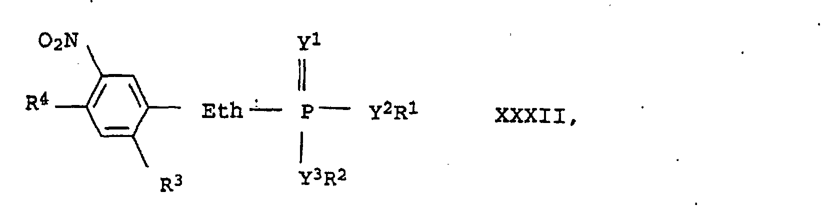 wobei Eth, Y¹, Y², Y³ und R¹-R⁴ die in Anspruch 1 angegebenen Bedeutungen haben.

26. Verfahren zur Herstellung von Nitroverbindungen der Formel XXXII 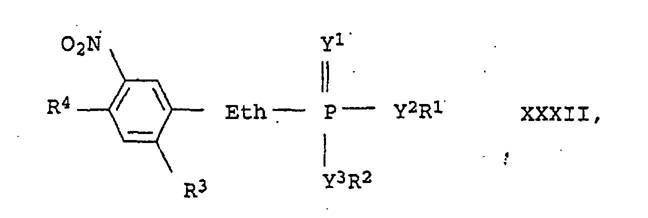 wobei Eth, Y¹, Y², Y³ und R¹-R⁴ die in Anspruch 1 angegebenen Bedeutungen haben, **dadurch gekennzeichnet, daß** man entsprechende aromatische Phosphonsäurederivate der Formel XXXIII 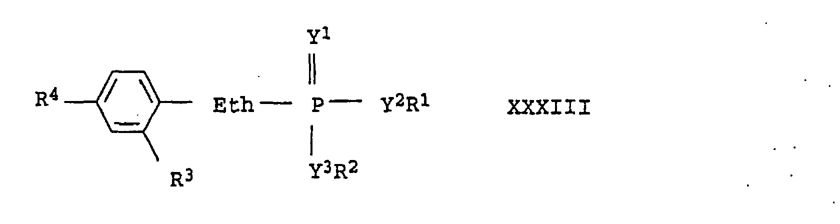 nitriert.

27. Aromatische Phosphonsäurederivate der Formel XXXIIIa 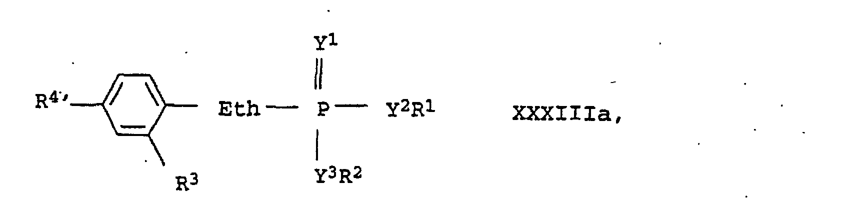 wobei Eth, Y¹, Y², Y³ und R¹-R³ die in Anspruch 1 angegebenen Bedeutungen haben und R⁴' für Halogen steht.

28. Verfahren zur Herstellung von aromatischen Phosphonsäurederivaten der Formel XXXIII 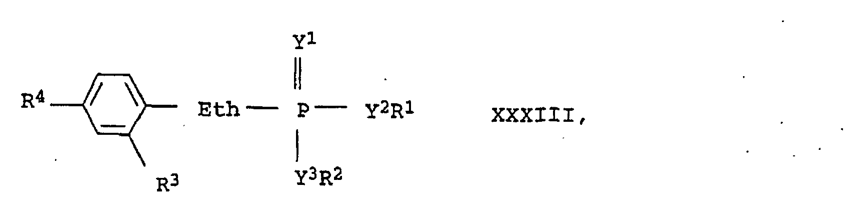 wobei Eth für -CH=C(C1)- steht und Y¹, Y², Y³ und R¹-R⁴ die in Anspruch 1 angegebenen Bedeutungen haben, **dadurch gekennzeichnet, daß** man Aldehyde der Formel XXXIV 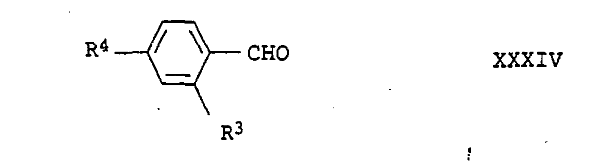 in Gegenwart einer Alkyllithiumverbindung XXVII
(C₁-C₄-Alkyl)-Li XXVII
mit Trichlormethanphosphonsäurederivaten XXVI 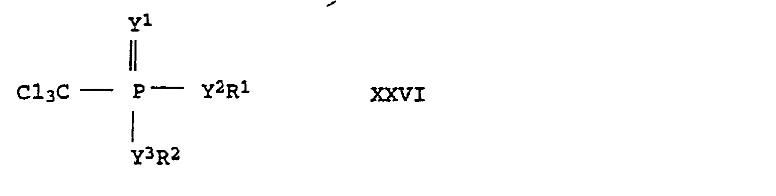 umsetzt.

29. Verfahren zur Herstellung von substituierten aromatischen Phosphonsäurederivaten der Formel I gemäß Anspruch 1, bei denen R⁵ für Φ²⁰ steht, **dadurch gekennzeichnet, daß** man Thioharnstoffderivate der Formel XXXV 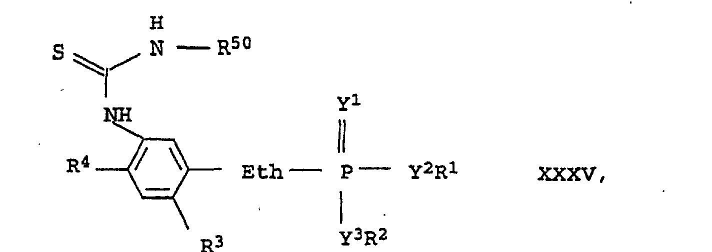 wobei Eth, Y¹, Y², Y³, R¹-R⁴ und R⁵⁰ die in Anspruch 1 angegebenen Bedeutungen haben, in Gegenwart einer Base mit Ketonen der Formel XXXVI 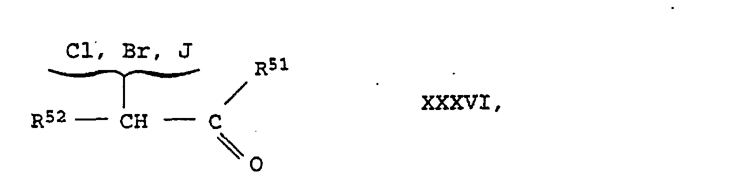 wobei R⁵¹ und R⁵² die in Anspruch 1 angegebenen Bedeutungen haben, umsetzt.

30. Thioharnstoffderivate der Formel XXXV 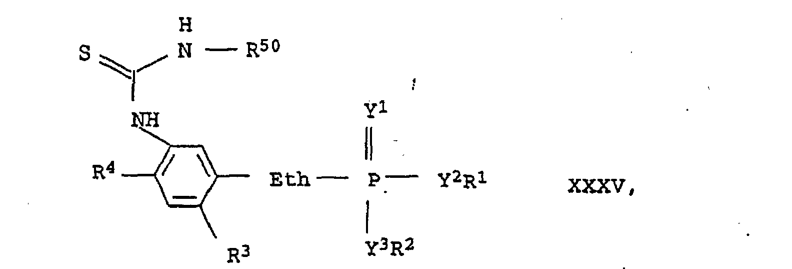 wobei Eth, Y¹, Y², Y³, R¹-R⁴ und R⁵⁰ die in Anspruch 1 angegebenen Bedeutungen haben.

31. Verfahren zur Herstellung von Thioharnstoffderivaten der Formel XXXV 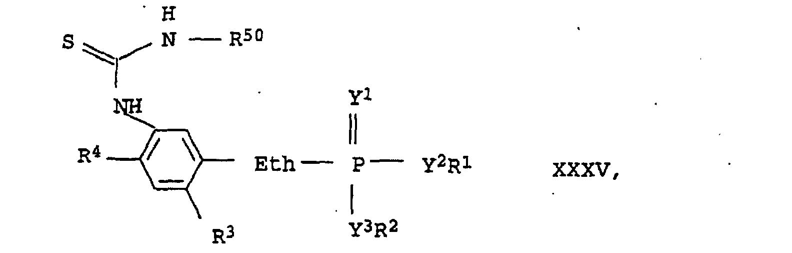 wobei Eth, Y¹, Y², Y³, R¹-R⁴ und R⁵⁰ die in Anspruch 1 angegebenen Bedeutungen haben, **dadurch gekennzeichnet, daß** man Aniline der Formel XXXI 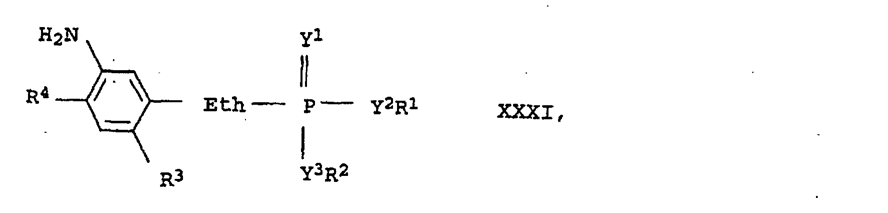 mit Isothiocyanaten der Formel XXXVIII
SCN-R⁵⁰ XXXVIII
umsetzt.

32. Verfahren zur Herstellung von substituierten aromatischen Phosphonsäurederivaten der Formel I gemäß Anspruch 1, bei denen R⁵ für Φ²¹ steht und Z³ und Z⁴ jeweils Stickstoff bedeuten, **dadurch gekennzeichnet, daß** man Thiosemicarbazidderivate der Formel XXXIX 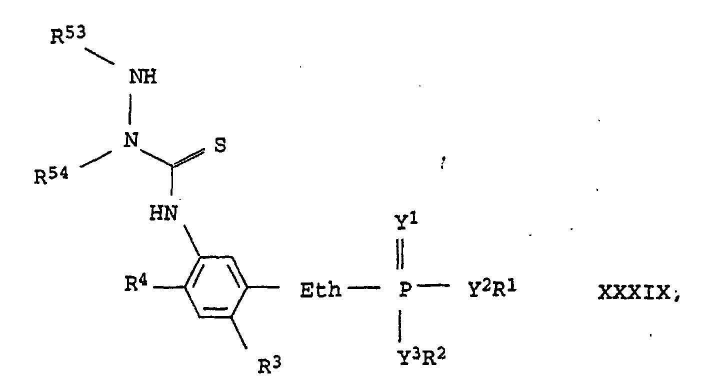 wobei Eth, Y¹, Y², Y³, R¹-R⁴, R⁵³ und R⁵⁴ die in Anspruch 1 angegebenen Bedeutungen haben, in Gegenwart einer Base mit Phosgen, Diphosgen oder Triphosgen umsetzt.

33. Thiosemicarbazidderivate der Formel XXXIX 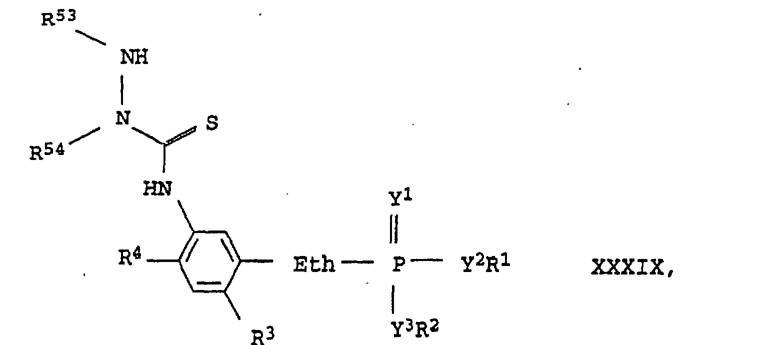 wobei Eth, Y¹, Y², Y³, R¹-R⁴, R⁵³ und R⁵⁴ die in Anspruch 1 angegebenen Bedeutungen haben.

34. Verfahren zur Herstellung von Thiosemicarbazidderivaten der Formel XXXIX 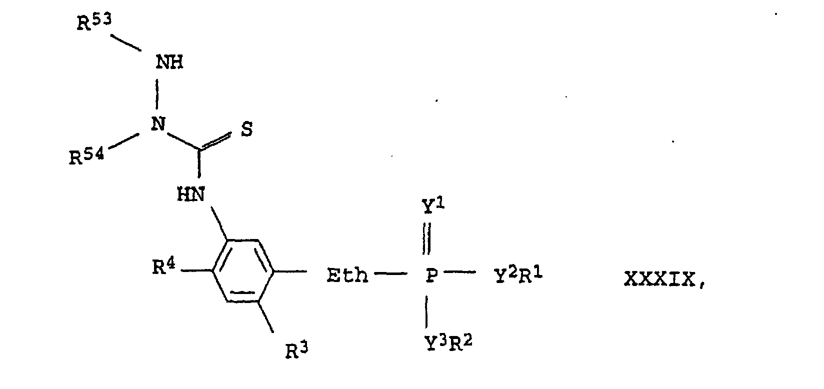 wobei Eth, Y¹, Y², Y³, R¹-R⁴, R⁵³ und R⁵⁴ die in Anspruch 1 angegebenen Bedeutungen haben, **dadurch gekennzeichnet, daß** man entsprechende Isothiocyanate der Formel XL 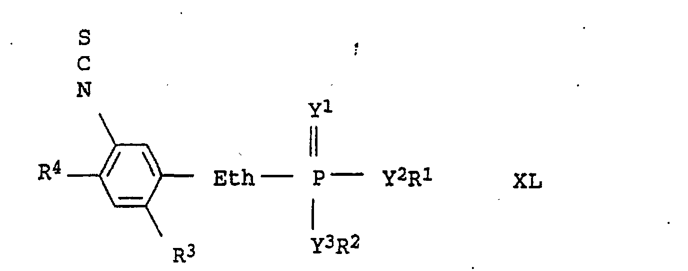 mit Hydrazinen der Formel XLI
R⁵³-NH-NH-R⁵⁴ XLI
umsetzt.

35. Isothiocyanate der Formel XL 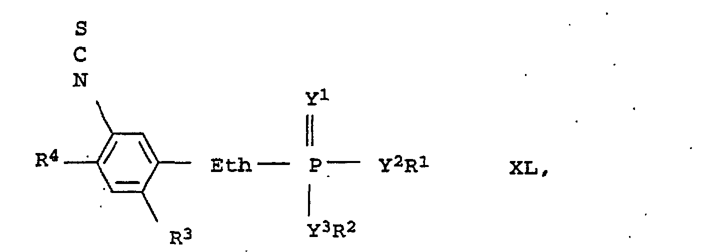 wobei Eth, Y¹, Y², Y³ und R¹-R⁴ die in Anspruch 1 angegebenen Bedeutungen haben.

36. Verfahren zur Herstellung von Isothiocyanaten der Formel XL 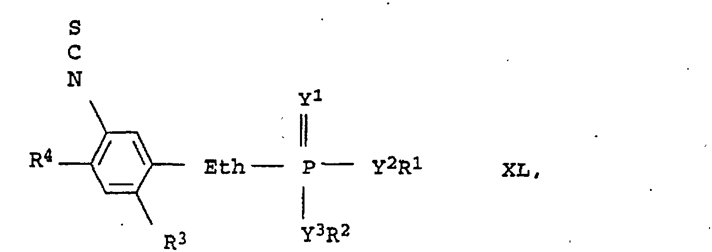 wobei Eth, Y¹, Y², Y³ und R¹-R⁴ die in Anspruch 1 angegebenen Bedeutungen haben, **dadurch gekennzeichnet, daß** man entsprechende Aniline der Formel XXXI 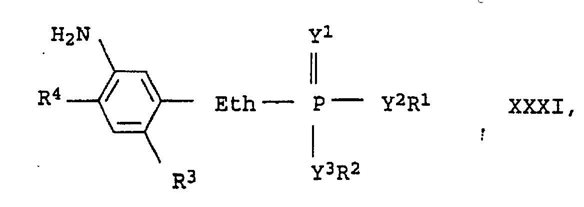 in Gegenwart einer Base mit Thiophosgen umsetzt.

37. Verfahren zur Herstellung von substituierten aromatischen Phosphonsäurederivaten der Formel I gemäß Anspruch 1, wobei R⁵ für Φ²² steht, **dadurch gekennzeichnet, daß** man Isothiocyanate der Formel XL 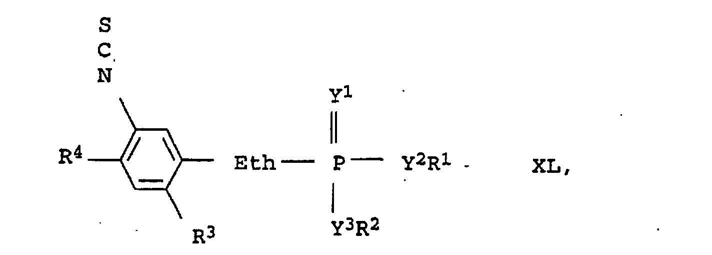 wobei Eth, Y¹, Y², Y³ und R¹-R⁴ die in Anspruch 1 angegebenen Bedeutungen haben, mit Amidinen der Formel XLII oder XLIII 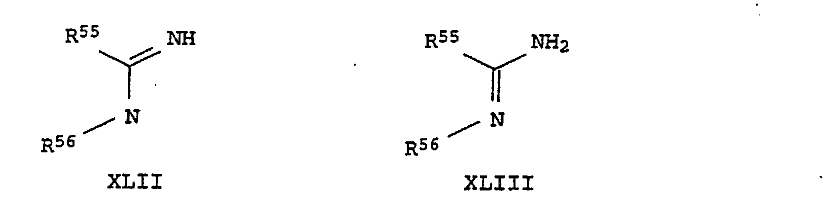 wobei R⁵⁵ und R⁵⁶ die in Anspruch 1 angegebenen Bedeutungen haben,
oder mit deren Säureadditionssalzen in Gegenwart von Base, umsetzt und die Reaktionsprodukte oxidiert.

## Claims

1. A substituted aromatic phosphonic acid derivative of the formula I 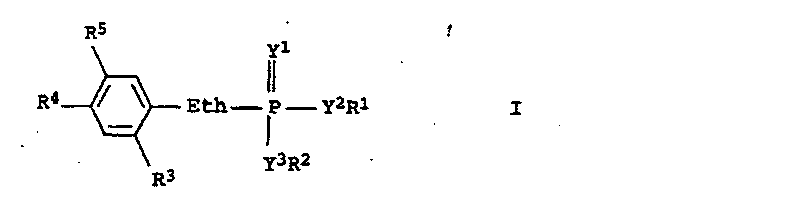 where the variables have the following meanings:
Eth is (1,2-ethynediyl or an ethane- or ethene-1,2-diyl chain, each of which can be unsubstituted or have attached to it one or two of the following substituents: halogen, cyano, carboxyl, C₁-C₄-alkyl, C₁-C₄-haloalkyl, C₁-C₄-alkoxy, C₁-C₄-haloalkoxy, (C₁-C₄-alkoxy)carbonyl and/or di (C₁-C₄-alkyl)amino,
Y¹ is oxygen or sulfur;
Y² is oxygen, sulfur or -N(R⁶)-;
Y³ is oxygen, sulfur or -N(R⁷)-;
R¹, R², R⁶ and R⁷ independently of one another are hydrogen, C₁-C₆-alkyl, C₁-C₆-haloalkyl, hydroxy-C₁-C₄-alkyl, cyano-C₁-C₄-alkyl, C₁-C₄-alkoxy-C₁-C₄-alkyl, C₁-C₄-haloalkoxy-C₁-C₄-alkyl, C₃-C₄-alkenyloxy-C₁-C₄-alkyl, C₃-C₄-alkynyloxy-C₁-C₄-alkyl, C₃-C₈-cycloalkoxy-C₁-C₄-alkyl, amino-C₁-C₄-alkyl, C₁-C₄-alkylamino-C₁-C₄-alkyl, di(C₁-C₄-alkyl)amino-C₁-C₄-alkyl, C₁-C₄-alkylthio-C₁-C₄-alkyl, C₁-C₄-haloalkylthio-C₁-C₄-alkyl,
C₃-C₄-alkenylthio-C₁-C₄-alkyl, C₃-C₄-alkynylthio-C₁-C₄-alkyl, C₁-C₄-alkylsulfinyl-C₁-C₄-alkyl, C₁-C₄-haloalkylsulfinyl-C₁-C₄-alkyl, C₃-C₄-alkenylsulfinyl-C₁-C₄-alkyl, C₃-C₄-alkynylsulfinyl-C₁-C₄-alkyl, C₁-C₄-alkylsulfonyl-C₁-C₄-alkyl, C₁-C₄-haloalkylsulfonyl-C₁-C₄-alkyl, C₃-C₄-alkenylsulfonyl-C₁-C₄-alkyl, C₃-C₄-alkynylsulfonyl-C₁-C₄-alkyl, C₃-C₆-alkenyl, C₃-C₆-haloalkenyl, cyano-C₃-C₆-alkenyl, C₃-C₆-alkynyl, C₃-C₆-haloalkynyl, cyano-C₃-C₆-alkynyl, hydroxycarbonyl-C₁-C₄-alkyl, (C₁-C₄-alkoxy)carbonyl-C₁-C₄-alkyl, (C₁-C₄-alkylthio)carbonyl-C₁-C₄-alkyl, aminocarbonyl-C₁-C₄-alkyl, (C₁-C₄-alkyl)aminocarbonyl-C₁-C₄-alkyl, di (C₁-C₄-alkyl)aminocarbonyl-C₁-C₄-alkyl,
C₃-C₈-cycloalkyl, C₃-C₈-cycloalkyl-C₁-C₄-alkyl, phenyl, phenyl-C₁-C₄-alkyl or
3- to 7-membered heterocyclyl or heterocyclyl-C₁-C₄-alkyl, it being possible for all heterocycles, if desired, to contain a carbonyl or thiocarbonyl ring member,
and it being possible for all cycloalkyl, phenyl and heterocyclyl rings to be unsubstituted or to have attached to them one to four substituents, in each case selected from the group consisting of halogen, cyano, nitro, amino, hydroxyl, carboxyl, C₁-C₄-alkyl, C₁-C₄-haloalkyl, C₁-C₄-alkoxy, C₁-C₄-haloalkoxy, C₁-C₄-alkylthio, C₁-C₄-haloalkylthio, C₁-C₄-alkylsulfonyl, C₁-C₄-haloalkylsulfonyl, (C₁-C₄-alkyl)carbonyl, (C₁-C₄-haloalkyl)carbonyl, (C₁-C₄-alkoxy)-carbonyl, (C₁-C₄-alkyl)carbonyloxy, (C₁-C₄-haloalkyl)carbonyloxy and di (C₁-C₄-alkyl)amino,
or
R¹ and R² or R¹ and R⁶ and/or R² and R⁷ in each case together form a 1,2-ethanediyl, 1,3-propylene, tetramethylene, pentamethylene or ethyleneoxyethylene chain which, if desired, can be substituted by one to four C₁-C₄-alkyl and/or one or two (C₁-C₄-alkoxy)carbonyl groups,
or
R¹ and R² together are 1,2-phenylene which can be unsubstituted or have attached to it one to three substituents, in each case selected from the group consisting of cyano, nitro, halogen, C₁-C₄-alkyl, C₁-C₄-haloalkyl, C₁-C₄-alkoxy and C₁-C₄-haloalkoxy;
R³ is cyano, halogen, C₁-C₄-alkyl, C₁-C₄-haloalkyl, C₁-C₄-alkoxy or C₁-C₄-haloalkoxy;
R⁴ is hydrogen or halogen;
R⁵ is cyano, one of the following heterocycles Φ¹, Φ², Φ³, Φ⁴, Φ⁵, Φ⁷, Φ²⁰, Φ²¹ or Φ²²: 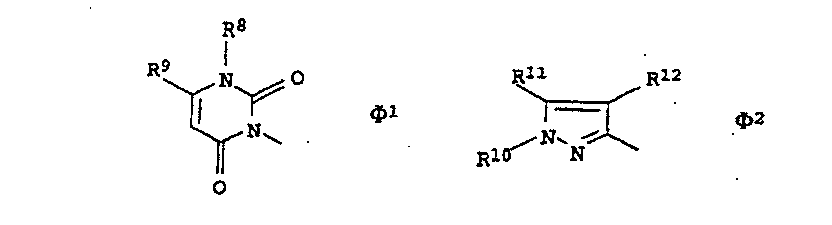 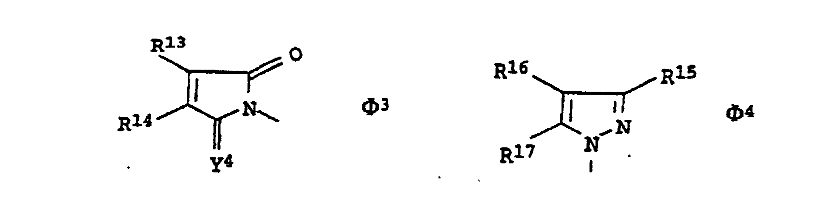 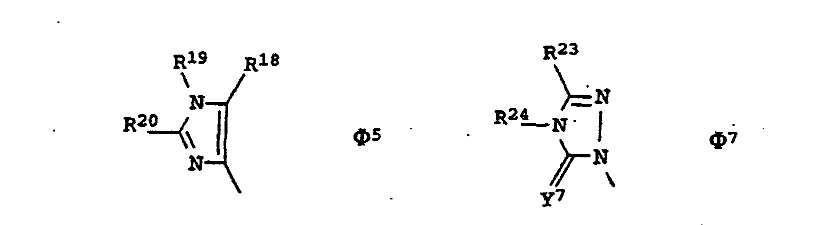 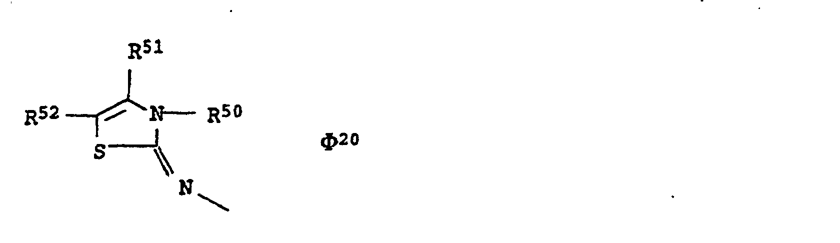 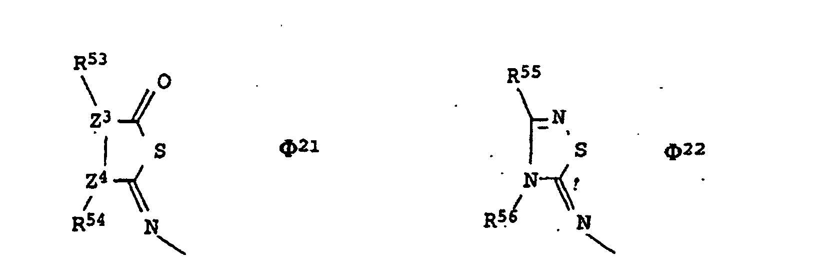
where
R⁸ is hydrogen, amino, C₁-C₄-alkyl or C₁-C₄-haloalkyl;
R⁹ is cyano, C₁-C₄-alkyl, C₁-C₄-haloalkyl, C₁-C₄-alkylsulfonyl or C₁-C₄-haloalkylsulfonyl;
R¹⁰ is C₁-C₄-alkyl or C₁-C₄-haloalkyl;
R¹¹ is cyano, C₁-C₄-alkyl, C₁-C₄-haloalkyl, C₁-C₄-alkoxy, C₁-C₄-haloalkoxy, C₁-C₄-alkylthio, C₁-C₄-haloalkylthio, C₁-C₄-alkylsulfinyl, C₁-C₄-haloalkylsulfinyl, C₁-C₄-alkylsulfonyl or C₁-C₄-haloalkylsulfonyl,
or
R¹⁰ and R¹¹ together with the ring atoms linking them are a 5- to 7-membered heterocycle which has one or two heteroatoms and which can be unsubstituted or have attached to it one or two C₁-C₄-alkyl radicals;
R¹² is hydrogen, cyano, halogen, C₁-C₄-alkyl or C₁-C₄-haloalkyl;
Y⁴ is oxygen, sulfur or methylene;
R¹³ and R¹⁴ independently of one another are hydrogen or C₁-C₄-alkyl,
or
R¹³ and R¹⁴ together with the ring atoms linking them are a 5- to 7-membered carbo- or heterocyclic ring, it being possible for the ring, if desired, additionally to have attached to it one or two halogen and/or C₁-C₄-alkyl radicals or a further, fused 3- to 6-membered carbo- or heterocyclic ring;
R¹⁵ and R¹⁶ independently of one another are hydrogen, halogen, C₁-C₄-alkyl or C₁-C₄-haloalkyl,
or
R¹⁵ and R¹⁶ together with the ring atoms linking them are a 5- to 7-membered carbo- or heterocyclic ring which, if desired, can additionally have attached to it one or two C₁-C₄-alkyl radicals;
R¹⁷ is halogen or C₁-C₄-alkyl;
R¹⁸, R³³ and R³⁵ independently of one another are halogen;
R¹⁹, R²⁰, and R⁵⁵ independently of one another are hydrogen, C₁-C₄-alkyl or C₁-C₄-haloalkyl,
or
R¹⁹ and R²⁰ and/or
R⁵⁵ and R⁵⁶ together with the ring atoms linking them are a 5- to 7-membered ring which, if desired, can additionally have attached to it one or two C₁-C₄-alkyl or C₁-C₄-haloalkyl radicals;
Y⁷ is oxygen or sulfur;
Z³, and Z⁴ independently of one another are nitrogen or CH;
R²³ and R²¹ and/or R⁵³ and R⁵⁴ together with the ring atoms linking them are a 5- to 7-membered ring which, if desired, can additionally have attached to it one or two C₁-C₄-alkyl radicals;
R⁵² is hydrogen, C₁-C₄-alkyl, C₃-C₆-cycloalkyl or C₁-C₄-haloalkyl;
R⁵⁰ and R⁵¹ independently of one another are C₁-C₄-alkyl, C₁-C₄-haloalkyl or C₃-C₆-cycloalkyl,
or an agriculturally useful salt of a compound I,
with the exception of compounds I where any R⁴ is hydrogen and R⁵ is Φ².

2. A substituted aromatic phosphonic acid derivative of the formula I or a salt thereof as claimed in claim 1 where R⁵ is 1-methyl-6-trifluoromethyl-2,4(1H,3H)-pyrimidinedion-3-yl, 4-chloro-5-difluoromethoxy-1-methyl-lH-pyrazol-3-yl, 4-chloro-l-methyl-5-trifluoromethyl-lH-pyrazol-3-yl, l-methyl-4,5-di(trifluoromethyl)-lH-pyrazol-3-yl, 1,3,4,5,6,7-hexahydro-1,3-dioxo-2H-isoindol-2-yl, 3,4-dimethyl-lH-pyrrole-2,5-dion-1-yl, 3-chloro-4,5,6,7-tetrahydro-2H-indazol-2-yl, 5-chloro-1-difluoromethyl-2-methyl-lH-imidazol-4-yl, 5,6,7,8-tetrahydro-1,2,4-triazolo[4,3-a]pyridin-3(2H)-on-2-yl, (3-methyl-4-trifluoromethyl-2(3H)-thiazolylidene)amino, (tetrahydro-3-oxo-1H,3H-[1,3,4]thiadiazolo[3,4-a]pyridazin-1-ylidene)amino or (6,7-dihydro-6,6-dimethyl-3H,5H-pyrrolo[2,1-c][1,2,4]thiadiazol-3-ylidene)amino.

3. The use of a substituted aromatic phosphonic acid derivative I or a salt thereof as claimed in claim 1 or 2 as a herbicide or for the desiccation/defoliation of plants.

4. A herbicidal composition comprising a herbicidally active amount of at least one substituted aromatic phosphonic acid derivative of the formula I or of a salt of I as claimed in claim 1 or 2 and at least one liquid and/or solid carrier and, if desired, at least one surfactant.

5. A composition for the desiccation and/or defoliation of plants, comprising such an amount of at least one substituted aromatic phosphonic acid derivative of the formula I or of a salt of I as claimed in claim 1 or 2 that it acts as a desiccant and/or defoliant, and at least one inert liquid and/or solid carrier and, if desired, at least one surfactant.

6. A process for the preparation of herbicidally active compositions, which comprises mixing a herbicidally active amount of at least one substituted aromatic phosphonic acid derivative of the formula I or of a salt of I as claimed in claim 1 or 2 with at least one liquid and/or solid carrier and, if desired, at least one surfactant.

7. A process for the preparation of compositions which act as desiccants and/or defoliants, which comprises mixing such an amount of at least one substituted aromatic phosphonic acid derivative of the formula I or of a salt of I as claimed in claim 1 or 2 that it acts as a desiccant/defoliant with at least one liquid and/or solid carrier and, if desired, at least one surfactant.

8. A method of controlling unwanted vegetation, which comprises allowing a herbicidally active amount of at least one substituted aromatic phosphonic acid derivative of the formula I or of a salt of I as claimed in claim 1 or 2 to act on plants, their environment or on seed.

9. A method of desiccating and/or defoliating plants, which comprises allowing such an amount of at least one substituted aromatic phosphonic acid derivative of the formula I or of a salt of I as claimed in claim 1 or 2 that it acts as a desiccant/defoliant to act on plants.

10. A method as claimed in claim 9, which comprises the treatment of cotton.

11. A process for the preparation of substituted aromatic phosphonic acid derivatives of the formula I as claimed in claim 1 or 2, where Eth is -CH₂-CH(Cl)-, -CH₂-CH(Br)-, -CH=C(Cl)- or-CH=C(Br)-, which comprises diazotizing anilines of the formula II 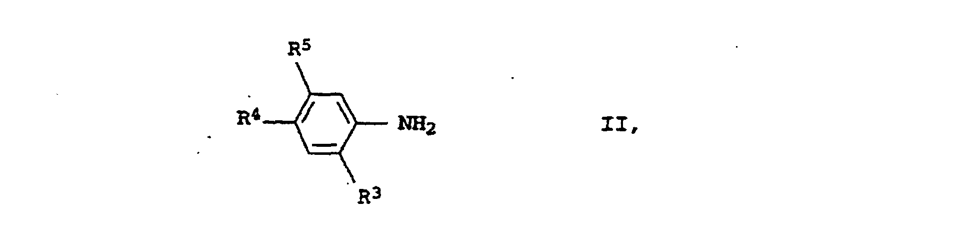 where R³, R⁴ and R⁵ have the meaning given in claim 1, and reacting the resulting diazonium cations with vinylphosphonic acid derivatives of the formula IIIa 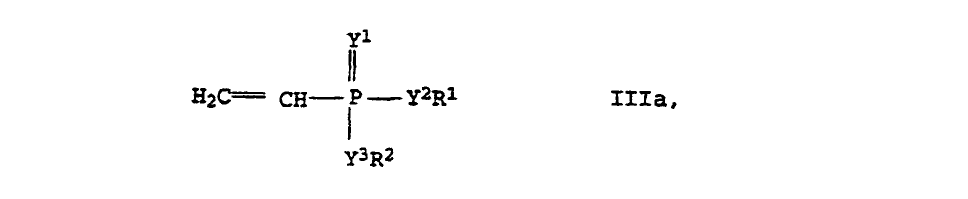 or with alkynylphosphonic acid derivatives of the formula IIIb 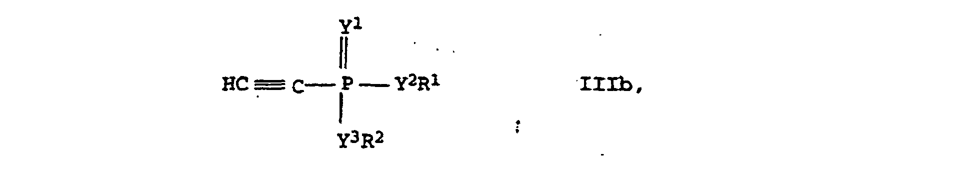 where Y¹, Y², Y³, R¹ and R² have the meanings given in claim 1, in the presence of a copper salt.

12. A process for the preparation of substituted aromatic phosphonic acid derivatives of the formula I as claimed in claim 1 where Eth is -CH=C(CN)- or -CH=C[CO-O-(C₁-C₄-alkyl)]-, which comprises reacting either aromatic aldehydes of the formula VIa 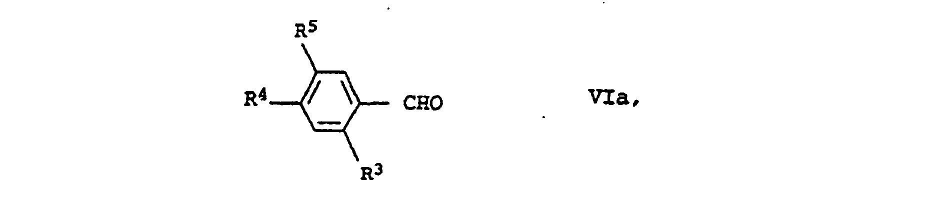 where R³, R⁴ and R⁵ have the meanings given in claim 1, with phosphonic acid derivatives VIIa or VIIb 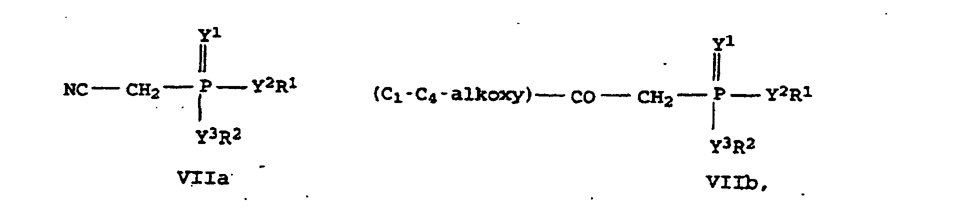 where Y¹, Y², Y³, R¹ and R² have the meanings given in claim 1,
or phosphonic acid derivatives of the formula XVIa or XVIb 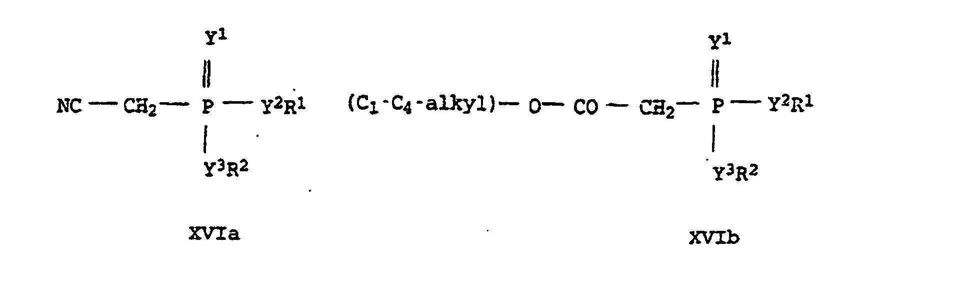 where Y¹, Y², Y³, R¹ and R² have the meanings given in claim 1, with 3-pyridylbenzyl halides of the formula XVII 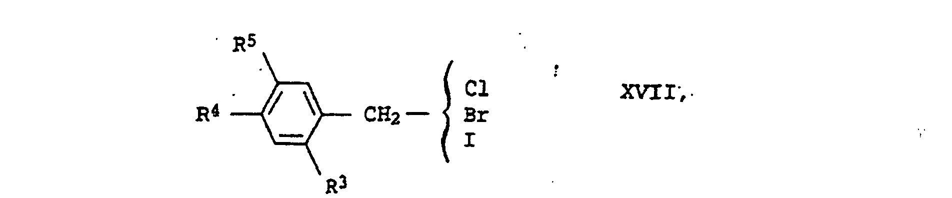 where R³, R⁴ and R⁵ have the meanings given in claim 1, in the presence of a strong base.

13. A process for the preparation of substituted aromatic phosphonic acid derivatives of the formula I as claimed in claim. 1 where Eth is -CH=CH-, -CH=C(halogen)- or -CH=C(C₁-C₄-alkyl)-, which comprises reacting aldehydes of the formula VIa 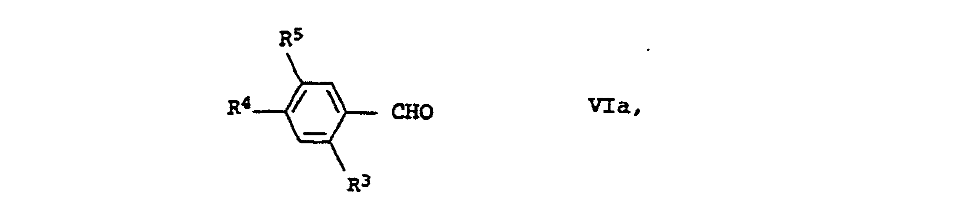 where R³, R⁴ and R⁵ have the meanings given in claim 1, with anions VIIIa, VIIIb or VIIIc 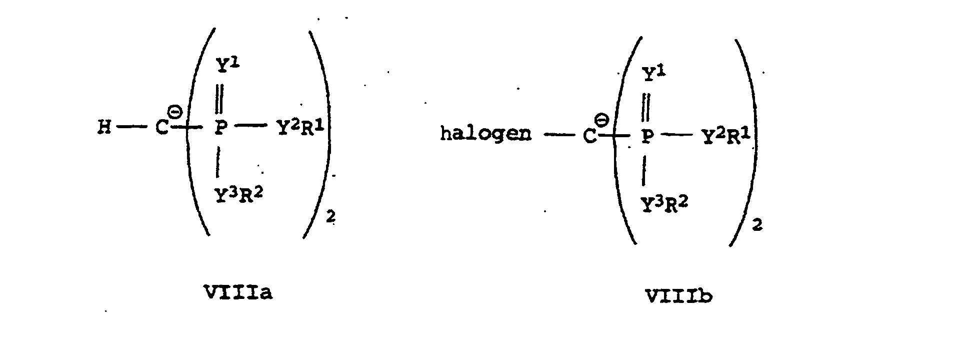 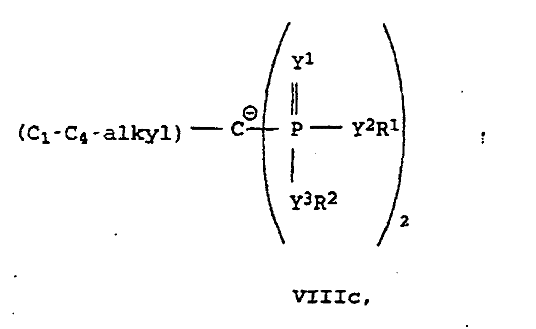 where Y¹, Y², Y³, R¹ and R² have the meanings given in claim 1.

14. A process for the preparation of substituted aromatic phosphonic acid derivatives of the formula I as claimed in claim 1 where Eth is -CH=CH-, which comprises reacting aromatic aldehydes of the formula VIa 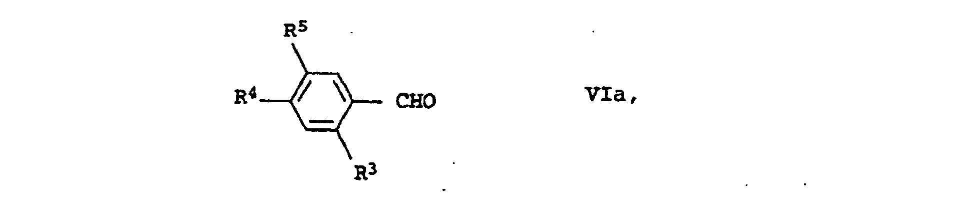 with ylides IX 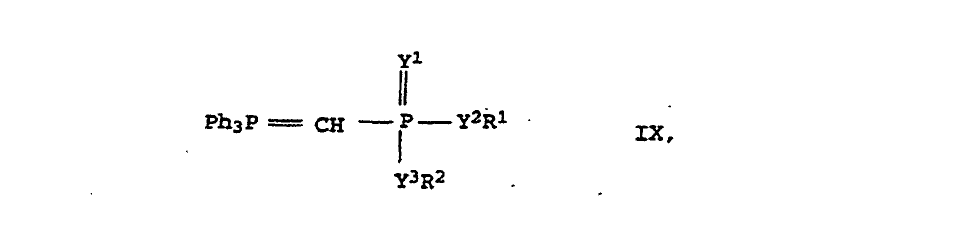 where Y¹, Y², Y³, R¹ to R⁵ have the meanings given in claim 1 and Ph is phenyl.

15. A process for preparing substituted aromatic phosphonic acid derivatives of the formula I as claimed in claim 1 where Eth is -CH=CH- or -CH=C(C₁-C₄-alkyl)-, which comprises reacting phosphonic acid derivatives of the formula X 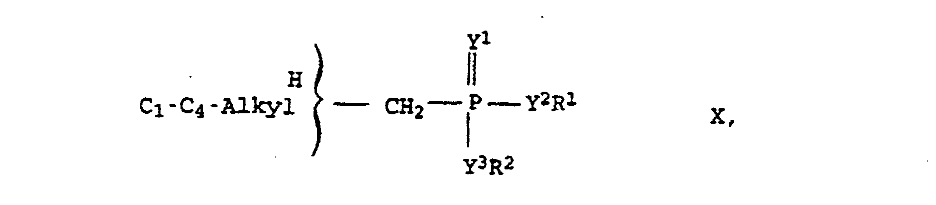 where Y¹, Y², Y³, R¹ and R² have the meanings given in claim 1, with chlorotrimethylsilane and aromatic aldehydes of the formula VIa 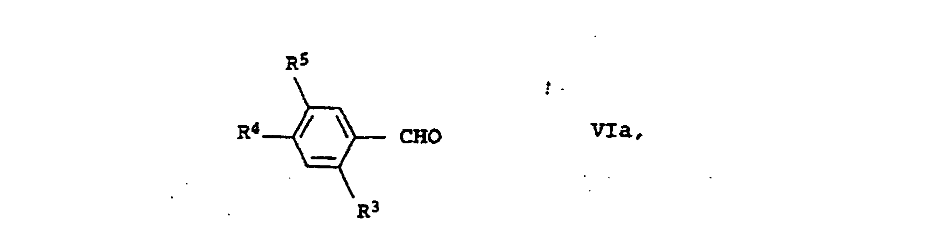 where R³, R⁴ and R⁵ have the meanings given in claim 1, in the presence of a strong base.

16. A process for the preparation of substituted aromatic phosphonic acid derivatives of the formula I as claimed in claim 1 where Eth is -CH=C(Cl)-, which comprises reacting aldehydes of the formula VIa 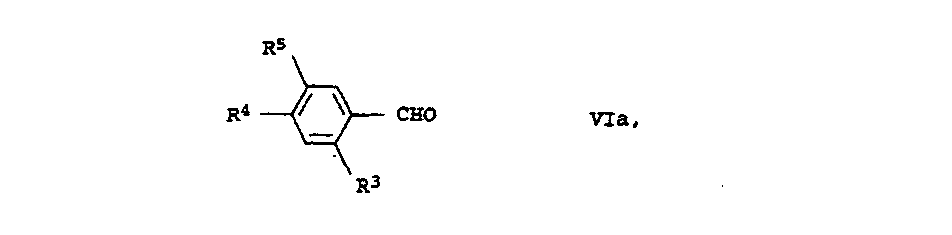 where R³, R⁴ and R⁵ have the meanings given in claim 1 with trichloromethanephosphonic acid derivatives XXVI 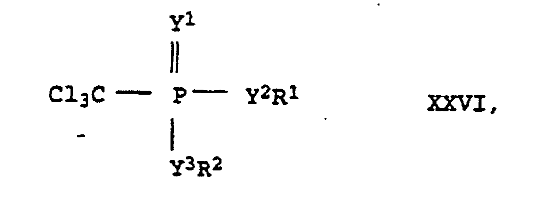 where Y¹, Y², Y³, R¹ and R² have the meanings given in claim 1, in the presence of an alkyllithium compound XXVII
(C₁-C₄-alkyl)-Li XXVII.

17. A process for the preparation of substituted aromatic phosphonic acid derivatives of the formula I as claimed in claim 1 where Eth is ethane-1,2-diyl, which comprises hydrogenating a compound of the formula I where Eth is an ethane-1,2-diyl or ethene-1,2-diyl chain which can be substituted by chlorine, bromine or iodine with hydrogen in the presence of a catalyst.

18. A process for the preparation of substituted aromatic phosphonic acid derivatives of the formula I as claimed in claim 1 where Y¹, Y² and Y³ are oxygen and R¹ and R² are hydrogen, which comprises subjecting compounds of the formula I where Y¹, Y² and Y³ are each oxygen and R¹ and R² are each C₁-C₆-alkyl either to hydrolysis with a hydrohalic acid or first to reaction with a tri(C₁-C₄-alkyl)silyl halide and then to hydrolysis with water.

19. A process for the preparation of substituted aromatic phosphonic acid derivatives of the formula I as claimed in claim 1 where Y¹ is oxygen, which comprises chlorinating compounds of the formula I where Y¹, Y² and Y³ are oxygen and R¹ and R² are hydrogen and then reacting the products XXIVa with nucleophiles HY²R¹ and/or HY³R².

20. A process for the preparation of substituted aromatic phosphonic acid derivatives of the formula I as claimed in claim 1 where R⁵ is Φ⁷ where Y⁷ is oxygen, which comprises reacting phenylhydrazines of the formula XXVIII or their acid addition salts 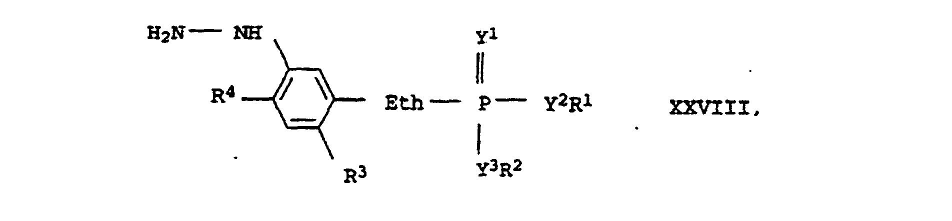 where Eth, Y¹, Y², Y³ and R¹-R⁴ have the meanings given in claim 1, with amidines of the formula XXIXa or their acid addition salts 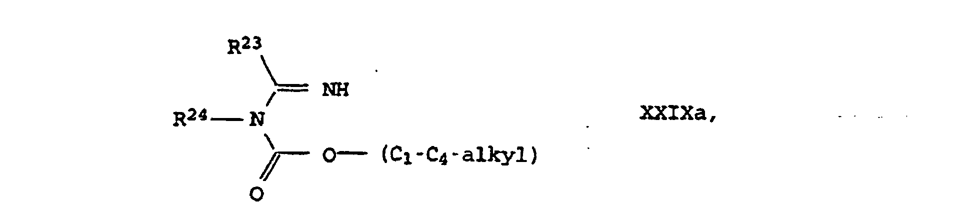 where Y⁷ is oxygen and R²³ and R²⁴ have the meanings given in claim 1, in the presence of a base, and cyclizing the reaction product by means of acid.

21. A phenylhydrazine of the formula XXVIII 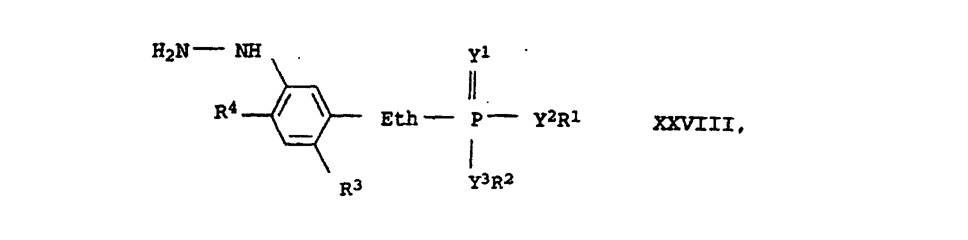 where Eth, Y¹, Y², Y³ and R¹-R⁴ have the meanings given in claim 1.

22. A process for the preparation of phenylhydrazines of the formula XXVIII 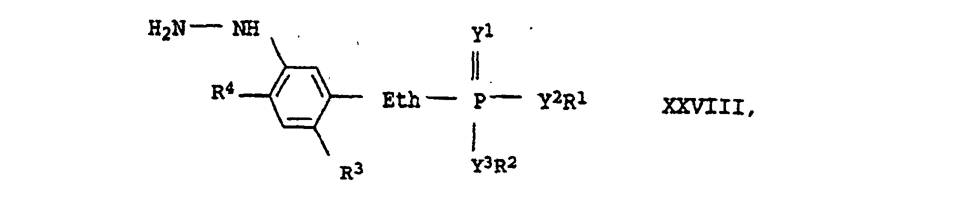 where Eth, Y¹, Y², Y³ and R¹-R⁴ have the meanings given in claim 1, which comprises diazotizing anilines of the formula XXXI 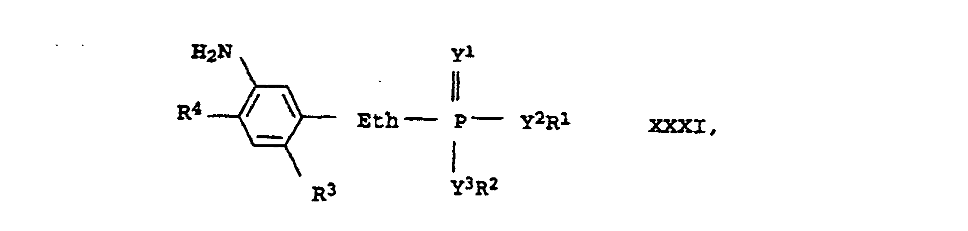 and reducing the resulting diazonium cations.

23. An aniline of the formula XXXI 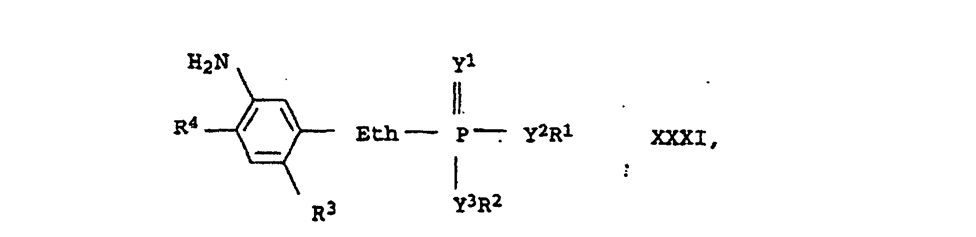 where Eth, Y¹, Y², Y³ and R¹-R⁴ have the meanings given in claim 1.

24. A process for the preparation of anilines of the formula XXXI 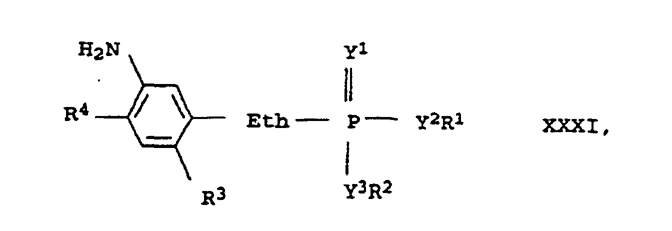 where Eth, Y¹, Y², Y³ and R¹-R⁴ have the meanings given in claim 1, which comprises reducing corresponding nitro compounds of the formula XXXII

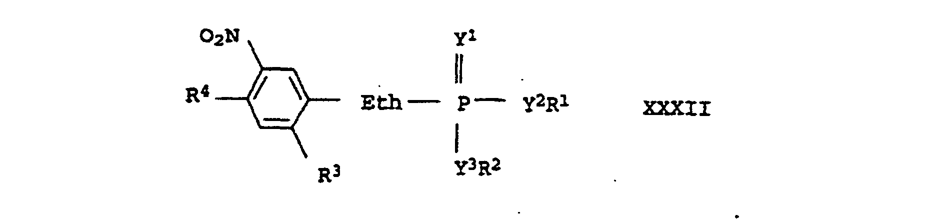

25. A nitro compound of the formula XXXII 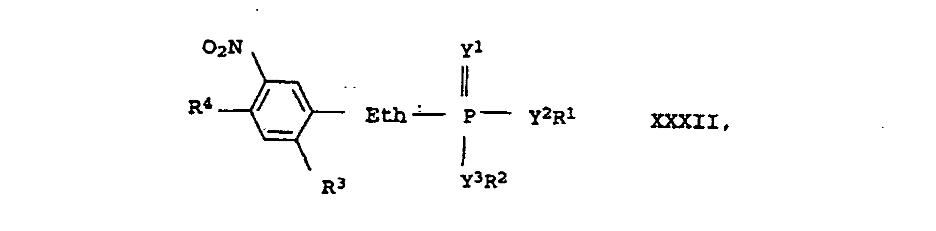 where Eth, Y¹, Y², Y³ and R¹-R⁴ have the meanings given in claim 1.

26. A process for the preparation of nitro compounds of the formula XXXII 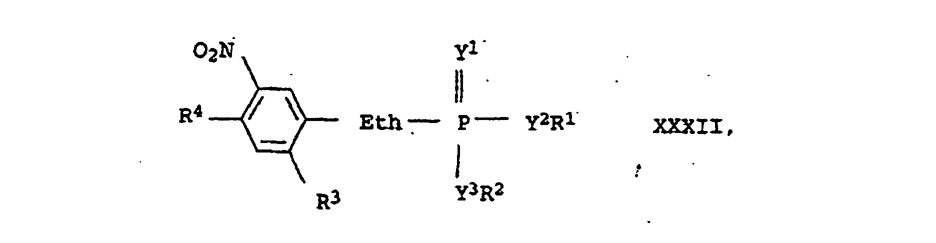 where Eth, Y¹, Y², Y³ and R¹-R⁴ have the meanings given in claim 1, which comprises nitrating corresponding aromatic phosphonic acid derivatives of the formula XXXIII

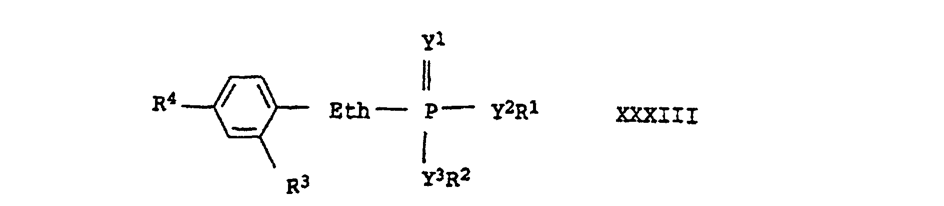

27. An aromatic phosphonic acid derivative of the formula XXXIIIa 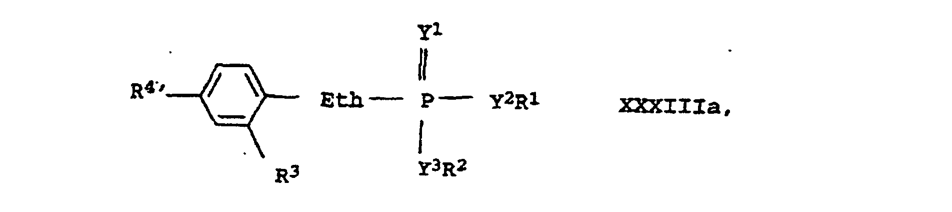 where Eth, Y¹, Y², Y³ and R¹-R³ have the meanings given in claim 1 and R^{4'} is halogen.

28. A process for the preparation of aromatic phosphonic acid derivatives of the formula XXXIII 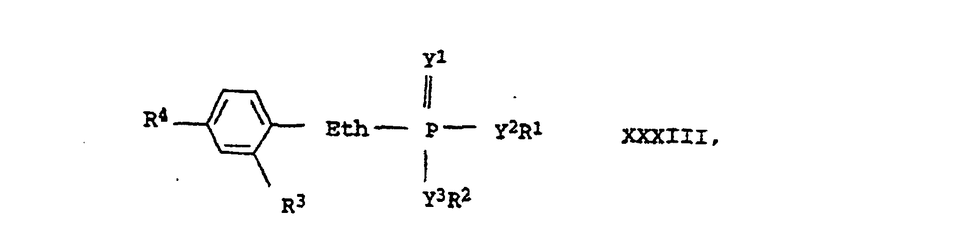 where Eth is -CH=C(Cl)- and Y¹, Y², Y³ and R¹-R⁴ have the meanings given in claim 1, which comprises reacting aldehydes of the formula XXXIV 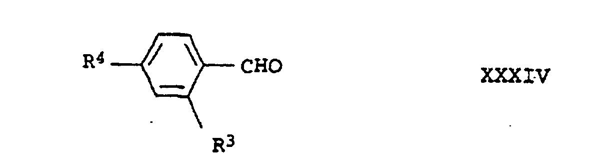 with trichloromethanephosphonic acid derivatives XXVI 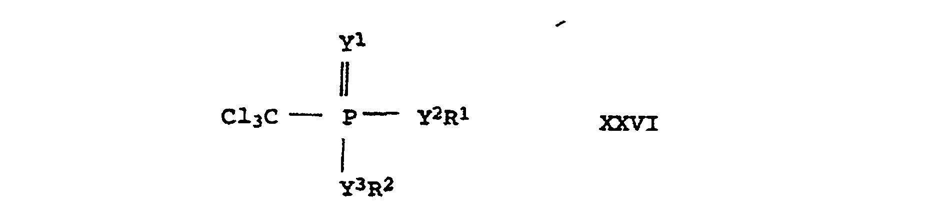 in the presence of an alkyllithium compound XXVII
(C₁-C₄-alkyl)-Li XXVII.

29. A process for the preparation of substituted aromatic phosphonic acid derivatives of the formula I as claimed in claim 1 where R⁵ is Φ²⁰, which comprises reacting thiourea derivatives of the formula XXXV 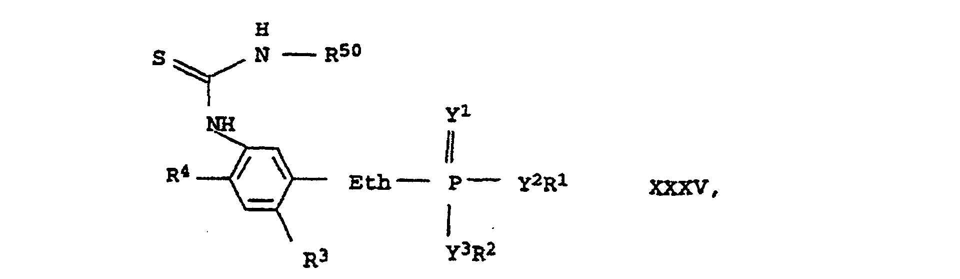 where Eth, Y¹, Y², Y³, R¹-R⁴ and R⁵⁰ have the meanings given in claim 1, with ketones of the formula XXXVI 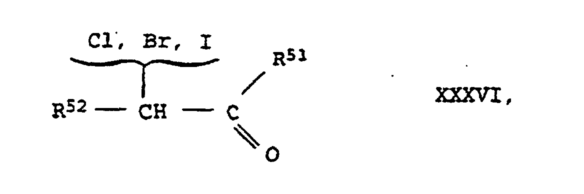 where R⁵¹ and R⁵² have the meanings given in claim 1, in the presence of a base.

30. A thiourea derivative of the formula XXXV 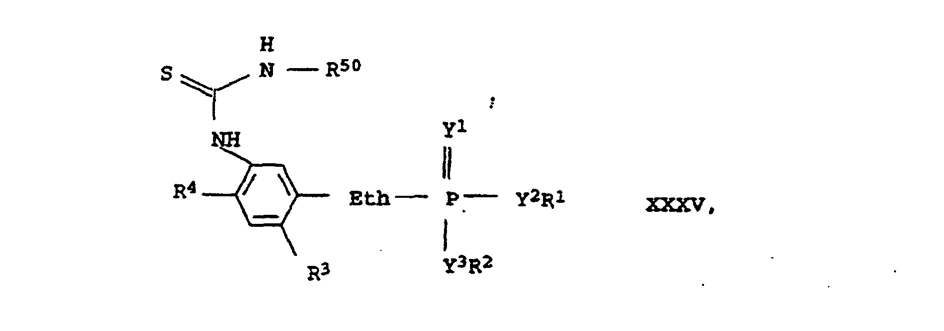 where Eth, Y¹, Y², Y³, R¹-R⁴ and R⁵⁰ have the meanings given in claim 1.

31. A process for the preparation of thiourea derivatives of the formula XXXV 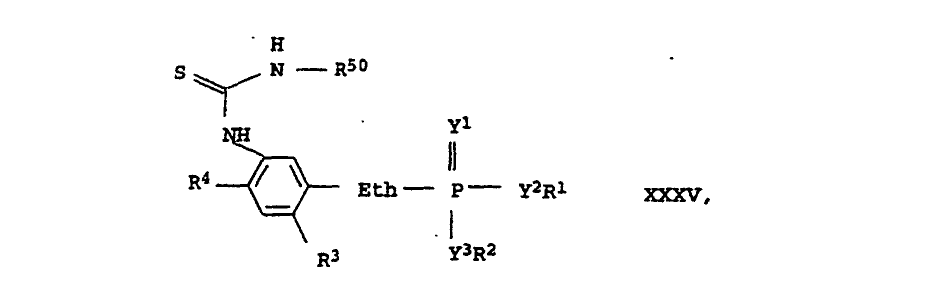 where Eth, Y¹, Y², Y³, R¹-R⁴ and R⁵⁰ have the meanings given in claim 1, which comprises reacting anilines of the formula XXXI 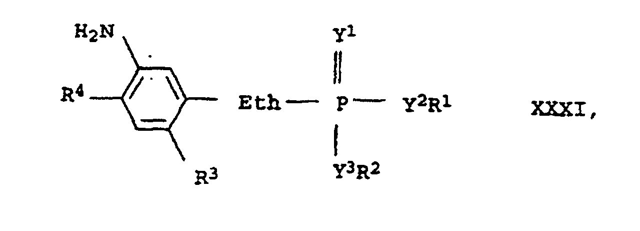 with isothiocyanates of the formula XXXVIII
SCN-R⁵⁰ XXXVIII.

32. A process for the preparation of substituted aromatic phosphonic acid derivatives of the formula I as claimed in claim 1 where R⁵ is Φ²¹ and Z³ and Z⁴ are each nitrogen, which comprises reacting thiosemicarbazide derivatives of the formula XXXIX 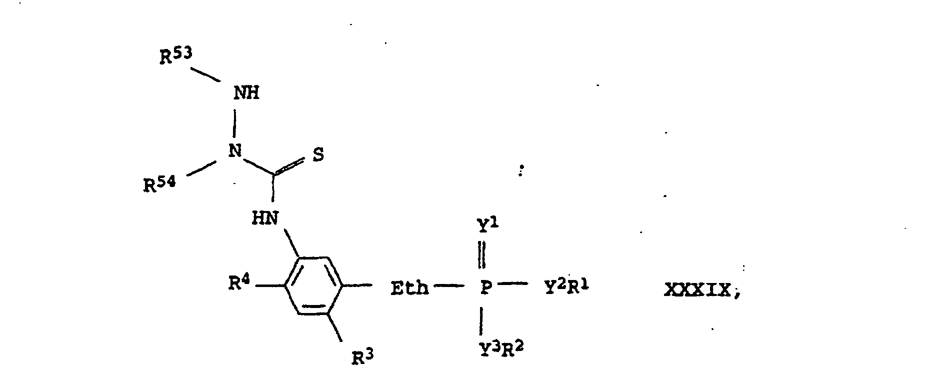 where Eth, Y¹, Y², Y³, R¹-R⁴, R⁵³ and R⁵⁴ have the meanings given in claim 1, with phosgene, diphosgene or triphosgene in the presence of a base.

33. A thiosemicarbazide derivative of the formula XXXIX 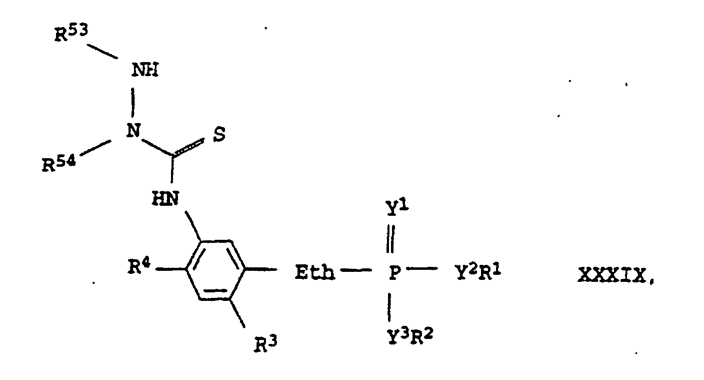 where Eth, Y¹, Y², Y³, R¹-R⁴, R⁵³ and R⁵⁴ have the meanings given in claim 1.

34. A process for the preparation of thiosemicarbazide derivatives of the formula XXXIX 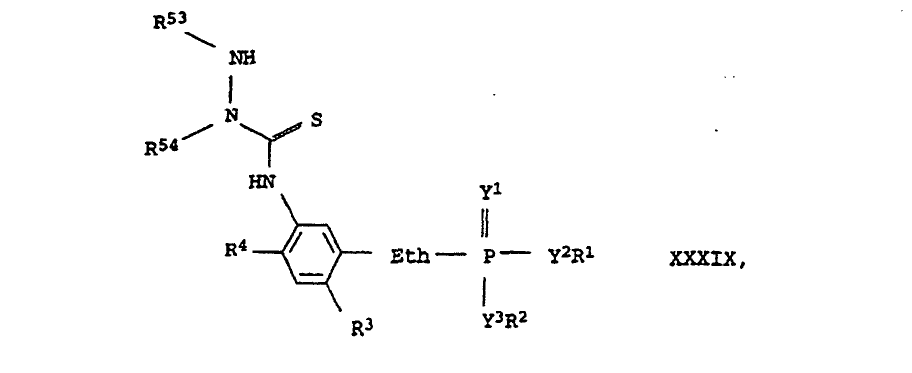 where Eth, Y¹, Y², Y³, R¹-R⁴, R⁵³ and R⁵⁴ have the meanings given in claim 1, which comprises reacting corresponding isothiocyanates of the formula XL 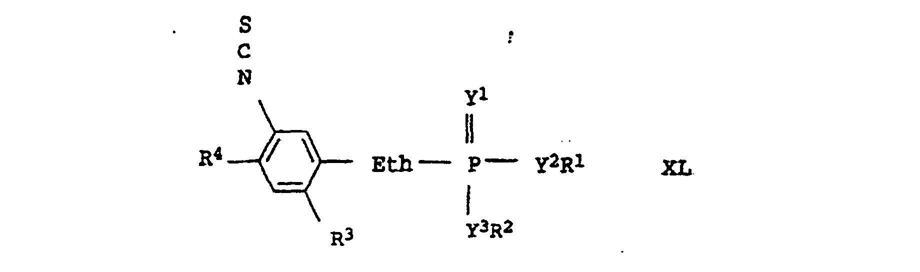 with hydrazines of the formula XLI
R⁵³-NH-NH-R⁵⁴ XLI.

35. An isothiocyanate of the formula XL 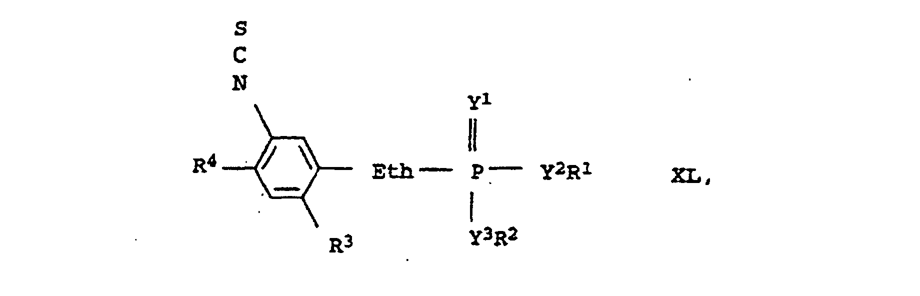 where Eth, Y¹, Y², Y³ and R¹-R⁴ have the meanings given in claim 1.

36. A process for the preparation of isothiocyanates of the formula XL 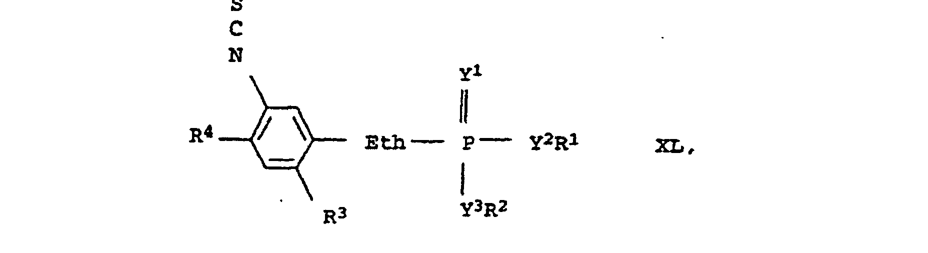 where Eth, Y¹, Y², Y³ and R¹-R⁴ have the meanings given in claim 1, which comprises reacting corresponding anilines of the formula XXXI 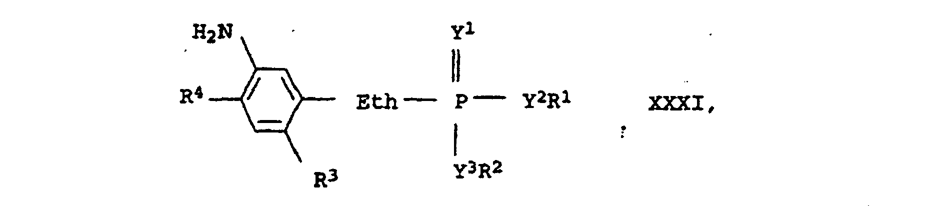 with thiophosgene in the presence of a base.

37. A process for the preparation of substituted aromatic phosphonic acid derivatives of the formula I as claimed in claim 1 where R⁵ is Φ²², which comprises reacting isothiocyanates of the formula XL 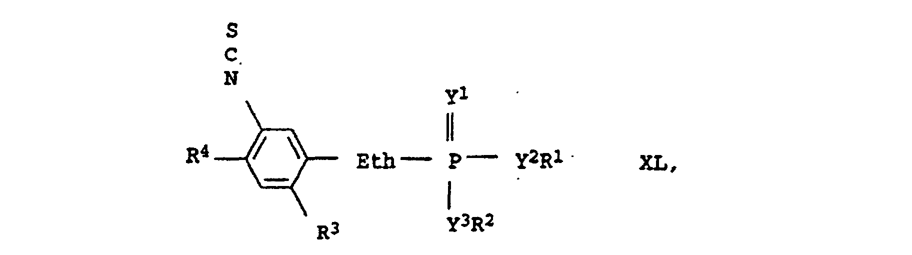 where Eth, Y¹, Y², Y³ and R¹-R⁴ have the meanings given in claim 1, with amidines of the formula XLII or XLIII 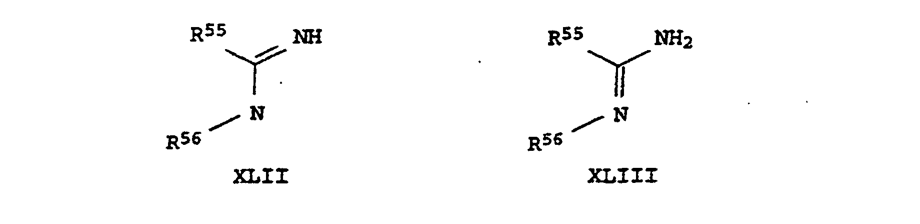 where R⁵⁵ and R⁵⁶ have the meanings given in claim 1, or with their acid addition salts, in the presence of base, and oxidizing the reaction products.

## Revendications

1. Dérivés d'acides phosphoniques aromatiques substitués de formule I 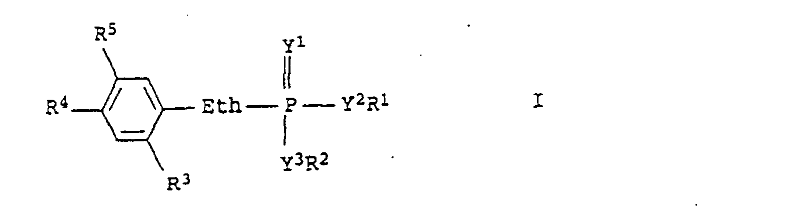 dans laquelle les symboles ont les significations suivantes :
Eth représente un groupe 1,2-éthynediyle ou une chaîne éthane- ou éthène-1,2-diyle qui peuvent être non substitués ou porter un ou deux des substituants suivants : halogéno, cyano, carboxy, alkyle en C1-C4, halogénoalkyle en C1-C4, alcoxy en C1-C4, halogénoalcoxy en C1-C4, ou (alcoxy en C1-C4)carbonyle et/ou di-(alkyle en C1-C4)amino;
Y¹ représente l'oxygène ou le soufre ;
Y² représente l'oxygène, le soufre ou un groupe N(R⁶)- ;
Y³ représente l'oxygène, le soufre ou un groupe -N(R⁷)- ;
R¹, R², R⁶, R⁷ représentent chacun, indépendamment les uns des autres, l'hydrogène, un groupe alkyle en C1-C6, halogénoalkyle en C1-C6, hydroxyalkyle en C1-C6, cyano-alkyle en C1-C4, (alcoxy en C1-C4)alkyle en C1-C4, (halogénoalcoxy en C1-C4)alkyle en C1-C4, (alcényloxy en C3-C4)alkyle en C1-C4, (alcynyloxy en C3-C4)alkyle en C1-C4, (cycloalcoxy en C3-C8)alkyle en C1-C4, aminoalkyle-en C1-C4, (alkylamino en C1-C4)alkyle en C1-C4, di-(alkyle en C1-C4)amino-alkyle en C1-C4, (alkylthio en C1-C4)alkyle en C1-C4, (halogénoalkylthio en C1-C4)alkyle en C1-C4, (alcénylthio en C3-C4)alkyle en C1-C4, (alcynylthio en C3-C4)alkyle en C1-C4, (alkylsulfinyle en C1-C4)alkyle en C1-C4, (halogénoalkylsulfinyle en C1-C4)alkyle en C1-C4, (alcénylsulfonyle en C3-C4)alkyle en C1-C4, (alcynylsulfonile en C3-C4)alkyle en C1-C4, (alkylsulfonyle en C1-C4)alkyle en C1-C4, (halogénoalkylsulfonyle en C1-C4)alkyle en C1-C4, (alcénylsulfonyle en C3-C4)alkyle en C1-C4, (alcynylsulfonyle en C3-C4)alkyle en C1-C4, alcényle en C3-C6, halogénoalcényle en C3-C6, cyano-alcényle en C3-C6, alcynyle en C3-C6, halogénoalcényle en C3-C6, cyanoalcynyle en C3-C6, hydroxycarbonylalkyle en C1-C4, (alcoxy en C1-C4)carbonylalkyle en C1-C4, (alkylthio en C1-C4)carbonyl-alkyle en C1-C4, aminocarbonylalkyle en C1-C4, (alkyle en C1-C4)aminocarbonyl-alkyle en C1-C4, di-(alkyle en C1-C4)aminocarbonyl-alkyle en C1-C4,
cycloalkyle en C3-C8, (cycloalkyle en C3-C8)alkyle en C1-C4, phényle, phénylalkyle en C1-C4 ou hétérocyclyle ou hétérocyclyl-alkyle en C1-C4 de 3 à 7 chaînons, tous les hétérocycles pouvant le cas échéant contenir un chaînon carbonyle ou thiocarbonyle,
tous les noyaux cycloalkyle, phényle et hétérocyclyle pouvant être non substitués ou pouvant porter 1 à 4 substituants choisis parmi les halogènes, les groupes cyano, nitro, amino, hydroxy, carboxy, alkyle en C1-C4, halogénoalkyle en C1-C4, alcoxy en C1-C4, halogénoalcoxy en C1-C4, alkylthio en C1-C4, halogénoalkylthio en C1-C4, alkylsulfonyle en C1-C4, halogénoalkylsulfonyle en C1-C4, (alkyle en C1-C4)carbonyle, (halogénoalkyle en C1-C4)carbonyle, (alcoxy en C1-C4)carbonyle, (alkyle en C1-C4)carbonyloxy, (halogénoalkyle en C1-C4)carbonyloxy et di-(alkyle en C1-C4)amino,
ou bien
R¹ et R² ou R¹ et R⁶ et/ou R² et R⁷ forment ensemble respectivement une chaîne 1,2-éthane-diyle, 1,3-propylène, tétraméthylène, pentaméthylène ou éthylèneoxyéthylène qui peut le cas échéant porter un à quatre substituants alkyle en C1-C4 et/ou un ou deux substituants (alcoxy en C1-C4)carbonyle,
ou bien
R¹ et R² forment ensemble un groupe 1,2-phénylène qui peut être non substitué ou peut porter un à trois substituants choisis parmi les groupes cyano, nitro, les halogènes, les groupes alkyle en C1-C4, halogénoalkyle en C1-C4, alcoxy en C1-C4 et halogénoalcoxy en C1-C4 ;
R³ représente un groupe cyano, un halogène, un groupe alkyle en C1-C4, halogénoalkyle en C1-C4, alcoxy en C1-C4 ou halogénoalcoxy en C1-C4 ; R⁴ représente l'hydrogène ou un halogène ;
R⁵ représente l'un des hétérocycles (Φ¹, Φ², Φ³, Φ⁴, Φ⁵, Φ⁷, Φ²⁰, Φ²¹ ou Φ²² ci-après : 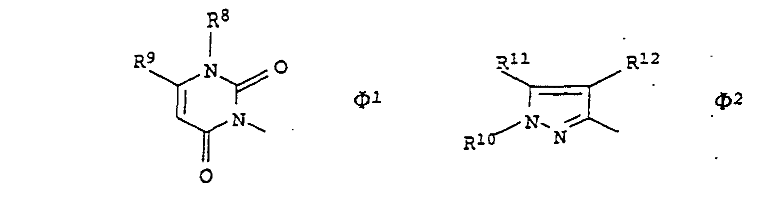 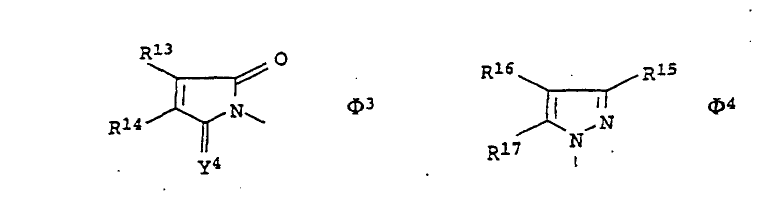 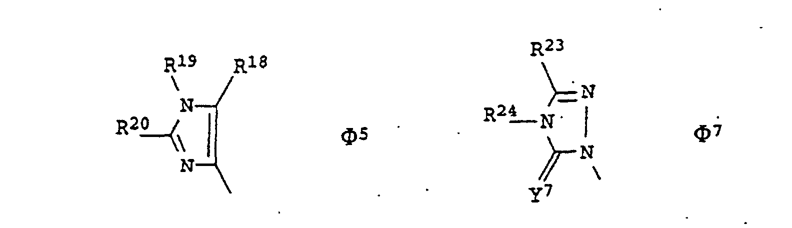 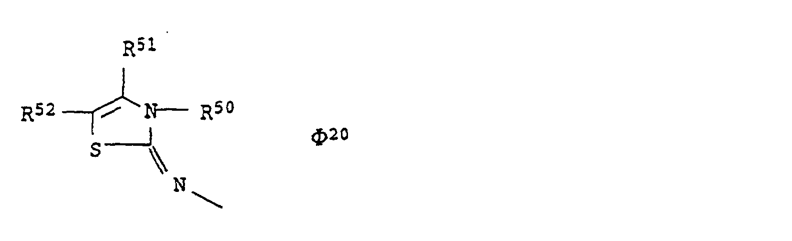 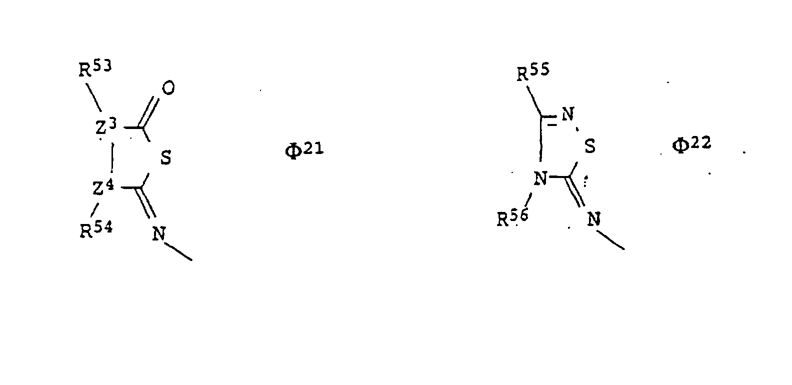 dans lesquels
R⁸ représente l'hydrogène, un groupe maino, alkyle en C1-C4 ou halogénoalkyle en C1-C4 ;
R⁹ représente un groupe cyano, alkyle en C1-C4, halogénoalkyle en C1-C4, alkylsulfonyle en C1-C4 ou halogénoalkylsulfonyle en C1-C4 ;
R¹⁰ représente un groupe alkyle en C1-C4 ou halogénoalkyle en C1-C4 ;
R¹¹ représente un groupe cyano, alkyle en C1-C4, halogénoalkyle en C1-C4, alcoxy en C1-C4, halogénoalcoxy en C1-C4, alkylthio en C1-C4, halogénoalkylthio en C1-C4, alkylsulfinyle en C1-C4, halogénoalkylsulfinyle en C1-C4, alkylsulfonyle en C1-C4 ou halogénoalkylsulfonyle en C1-C4,
ou bien
R¹⁰ et R¹¹ forment ensemble et avec les atomes cycliques qui les relient un hétérocycle de cinq à sept chaînons contenant un ou deux hétéroatomes et qui peut être non substitué ou porter un ou deux substituants alkyle en C 1-C4 ;
R¹² représente l'hydrogène, un groupe cyano, un halogène, un groupe alkyle en C1-C4 ou halogénoalkyle en C1-C4 ;
Y⁴ représente l'oxygène, le soufre ou un groupe méthylène ;
R¹³, R¹⁴ représentent chacun, indépendamment l'un de l'autre l'hydrogène ou un groupe alkyle en C1-C4,
ou bien
R¹³ et R¹⁴ forment ensemble et avec les atomes cycliques qui les relient un noyau carbocyclique ou hétérocyclique de cinq à sept chaînons, le cycle pouvant encore porter le cas échéant un ou deux atomes d'halogènes et/ou groupes alkyle en C1-C4 ou pouvant être condensé avec un autre noyau carbocyclique ou hétérocyclique de trois à six chaînons ;
R¹⁵, R¹⁶ représentent chacun, indépendamment l'un de l'autre,
l'hydrogène, un halogène, un groupe alkyle en C1-C4 ou halogénoalkyle en C1-C4,
ou bien
R¹⁵ et R¹⁶ forment ensemble et avec les atomes cycliques qui les relient un noyau carbocyclique ou hétérocyclique de cinq à sept chaînons qui peut encore porter le cas échéant un ou deux groupes alkyle en C1-C4 ;
R¹⁷ représente un halogène ou un groupe alkyle en C 1-C4 ;
R¹⁸, R³³, R³⁵ représentent chacun, indépendamment les uns des autres, un halogène ;
R¹⁹, R²⁰, R⁵⁵, R⁵⁶ représentent chacun, indépendamment les uns des autres, l'hydrogène, un groupe alkyle en C1-C4 ou halogénoalkyle en C1-C4,
ou bien
R¹⁹ et R²⁰ et/ou R⁵⁵ et R⁵⁶ forment ensemble et avec les atomes cycliques qui les relient un cycle de cinq à sept chaînons qui peut encore porter le cas échéant un ou deux groupes alkyle en C1-C4 ou halogénoalkyle en C1-C4; Y⁷ représente l'oxygène ou le soufre ;
Z³, Z⁴ représentent chacun, indépendamment l'un de l'autre, l'azote ou le groupe CH ;
R²³ et R²⁴ et/ou R⁵³ et R⁵⁴ forment ensemble et avec les atomes cycliques qui les relient un cycle de cinq à sept chaînons qui peut encore porter le cas échéant un ou deux groupes alkyle en C₁-C₄ ;
R⁵² représente l'hydrogène, un groupe alkyle en C1-C4, cycloalkyle en C3-C6 ou halogénoalkyle en C1-C4,
R⁵⁰, R⁵¹ représentent chacun, indépendamment l'un de l'autre, un groupe alkyle en C1-C4, halogénoalkyle en C1-C4 ou cycloalkyle en C3-C6,
ainsi que les sels des composés I aptes aux applications agricoles,
à l'exception des composés I pour lesquels R⁴ représente l'hydrogène et R⁵ représente Φ².

2. Dérivés d'acides phosphoniques aromatiques substitués de formule I et leurs sels selon la revendication 1, pour lesquels R⁵ représente 1-méthyl-6-trifluorométhyl-2,4(1H,3H)-(pyrimidinedion-3-yle, 4-chloro-5-difluorométhoxy-1-méthyl-lH-pyrazol-3-yle, 4-chloro-1-méthyl-5-trifluorméthyl-1H-pyrazol-3yle, 1-méthyl-4,5-di-trifluorométhyl)- 1H-pyrazol-3-yle, 1,3,4,5,6,7-hexahydro-1,3-dioxo-2H-isoindol-2-yle, 3,4-diméthyl-1H-pyrrol-2,5-dion-1-yle, 3-chlore-4,5,6,7-tetrahydro-2H-indazol-2-yle, 5-chlore-1-difluorométhyl-2-méthyl-1H-imidazol-4-yl, 5,6,7,8-tetrahydro-1,2,4-tria-zolo[4,3-a]pyridin-3(2H)-on-2-yle, (3-méthyl-4-trifluor-méthyl-2(3H)-thiazolylidén)amino, (tétra-hydro-3-oxo-1H, 3H-[1,3,4]thiadiazolo[3,4-a]pyridazin-1-ylidén)amino ou (6,7-dihydro-6,6-diméthyl-3H,5H-pyrrolo[2,1-c][1,2,4]thiadiazol-3-ylidén)amino.

3. Utilisation des dérivés d'acides phosphoniques aromatiques substitués I et de leurs sels selon les revendications 1 à 2 en tant qu'herbicides ou pour la dessiccation/défoliation de végétaux.

4. Produit herbicide contenant une quantité herbicide efficace d'au moins un dérivé d'acide phosphonique aromatique substitué de formule I ou d'un sel de I selon les revendications 1 à 2 et au moins un véhicule liquide et/ou solide ainsi que, le cas échéant, au moins une substance tensio-active.

5. Produit pour la dessiccation et/ou la défoliation de végétaux, contenant une quantité dessiccante et/ou défoliante efficace d'au moins un dérivé d'acide phosphonique aromatique substitué de formule I ou d'un sel de I selon les revendications 1 à 2 et au moins un véhicule liquide et/ou solide inerte ainsi que, le cas échéant, au moins une substance tensio-active.

6. Procédé pour la préparation de produits à activité herbicide, **caractérisé par le fait que** l'on mélange une quantité herbicide efficace d'au moins un dérivé d'acide phosphonique aromatique substitué de formule I ou d'un sel de I selon les revendications 1 à 2 avec au moins un véhicule liquide et/ou solide et, le cas échant, au moins une substance tensio-active.

7. Procédé pour la préparation de produits à activité dessiccante et/ou défoliante **caractérisé par le fait que** l'on mélange une quantité dessiccante/défoliante efficace d'au moins un dérivé d'acide phosphonique aromatique substitué de formule I ou d'un sel de I selon les revendications 1 à 2, avec au moins un véhicule liquide et/ou solide et, lé cas échéant, au moins une substance tensio-active.

8. Procédé pour combattre les croissances de végétaux indésirables, **caractérisé par le fait que** l'on fait agir sur les végétaux, leur habitat ou leurs semences, une quantité herbicide efficace d'au moins un dérivé d'acide phosphonique aromatique substitué de formule I ou d'un sel de I selon les revendications 1 à 2.

9. Procédé pour la dessiccation et/ou la défoliation de végétaux, **caractérisé par le fait que** l'on fait agir sur les végétaux une quantité dessiccante/défoliante efficace d'au moins un dérivé d'acide phosphonique aromatique substitué de formule I ou d'un sel de I selon les revendications 1 à 2.

10. Procédé selon revendication 2, **caractérisé par le fait que** l'on traite le coton.

11. Procédé pour la préparation des dérivés d'acides phosphoniques aromatiques substitués de formule I selon les revendications 1 à 2, pour lesquels Eth représente -CH ₂-CH(Cl)-, -CH ₂-CH(Br)-, -CH=C(Cl)- ou-CH=C(Br)-, **caractérisé par le fait que** l'on diazote une aniline de formule II 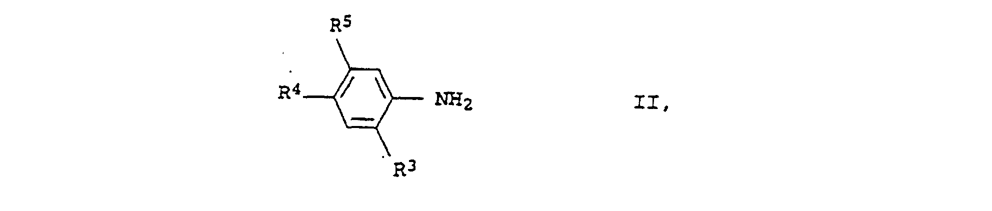 dans laquelle R³, R⁴ et R⁵ ont les significations indiquées dans la revendication 1, et on fait réagir le cation diazonium ainsi obtenu en présence d'un selde cuivre avec un dérivé d'acide vinylphosphonique de formule IIIa 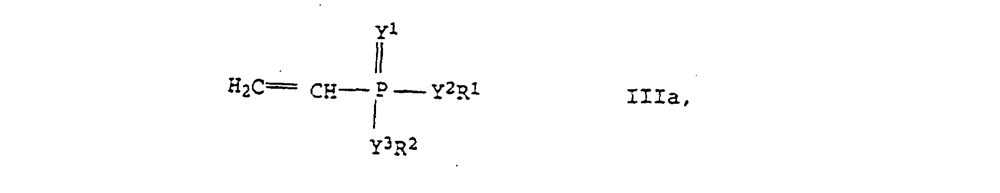 ou avec un dérivé d'acide alcynylphosphonique de formule IIIb 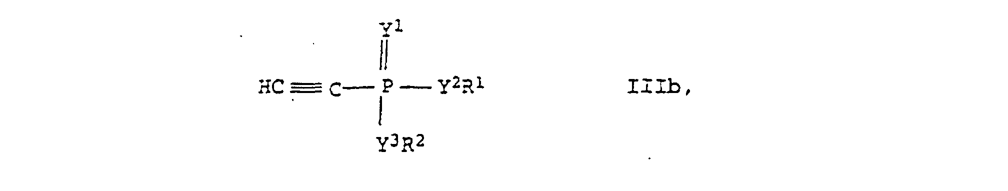 dans lesquelles Y¹, Y², Y³, R¹ et R² ont les significations indiquées dans la revendication 1.

12. Procédé pour la préparation de dérivés d'acides phosphoniques aromatiques substitués de formule I selon larevendication 1 dans laquelle-Eth représente -CH=C(CN)- ou -CH=C[CO-O-(alkyle en C1-C4)]-**caractérisé par le fait que**
ou bien on fait réagir des aldéhydes aromatiques de formule VIa 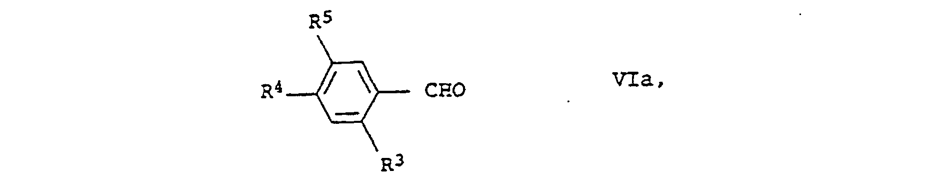 dans laquelle R³, R⁴ et R⁵ ont les significations indiquées dans la revendication 1, avec des dérivés d'acides phosphoniques VIIa ou VIIb 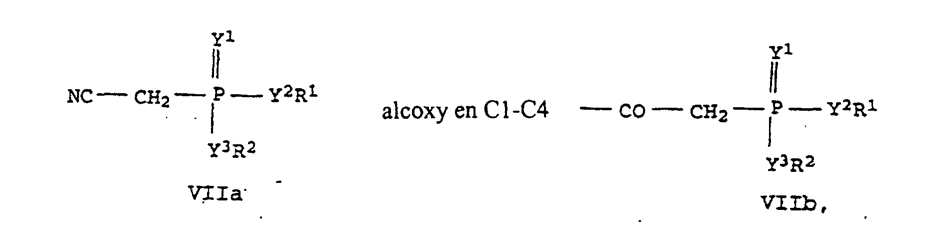 pour lesquels Y¹, Y², Y³, R¹ et R² ont les significations indiquées dans la revendication 1 ou bien on fait réagir des dérivés d'acides phosphoniques de formule XVIa ou XVIb 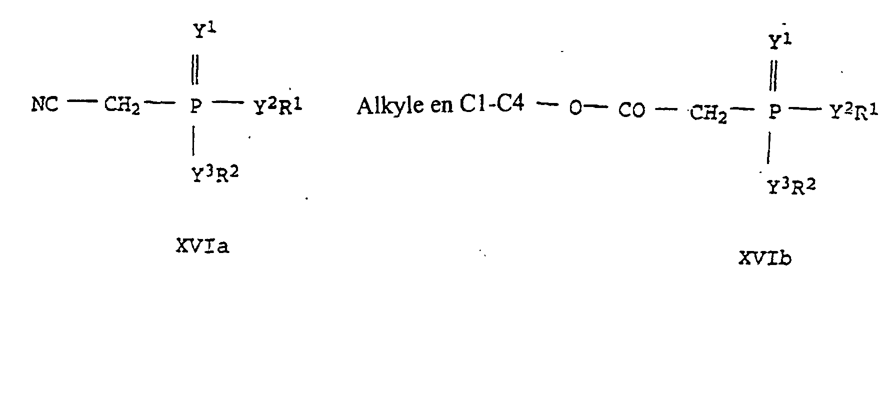 dans lesquelles Y¹, Y², Y³, R¹ et R² ont les significations indiquées dans la revendication 1, en présence d'une base forte, avec des halogénures de 3-pyridylbenzyle de formule XVII 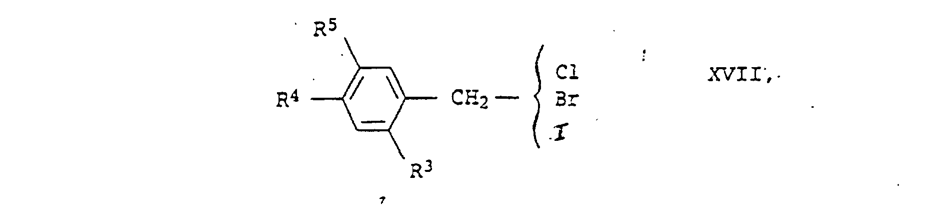 dans laquelle R³, R⁴ et R⁵ ont les significations indiquées dans la revendication 1.

13. Procédé pour la préparation de dérivés d'acides phosphoniques aromatiques U substitués de formule I selon revendication 1 dans laquelle Eth représente -CH=CH-, -CH=C(halogène)- ou -CH=C(alkyle en C1-C4)-, **caractérisé en ce que** l'on fait réagir des aldéhydes de formule VIa 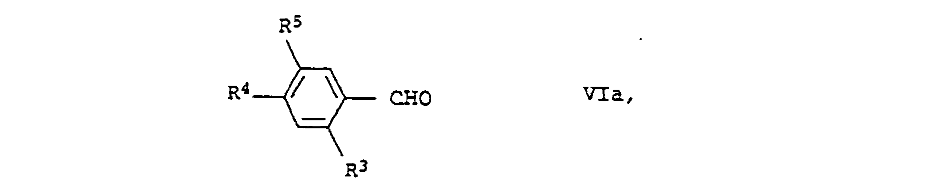 dans laquelle R³, R⁴ et R⁵ ont les significations indiquées dans la revendication 1, avec des anions VIIIa, VIIIb ou VIIIc 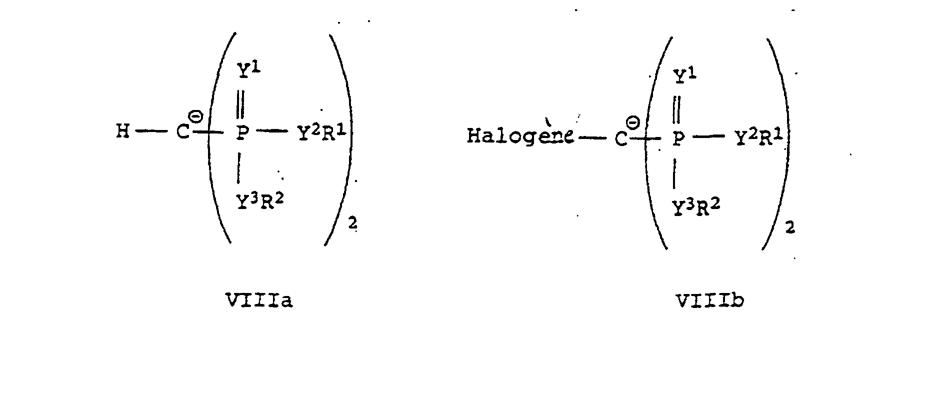 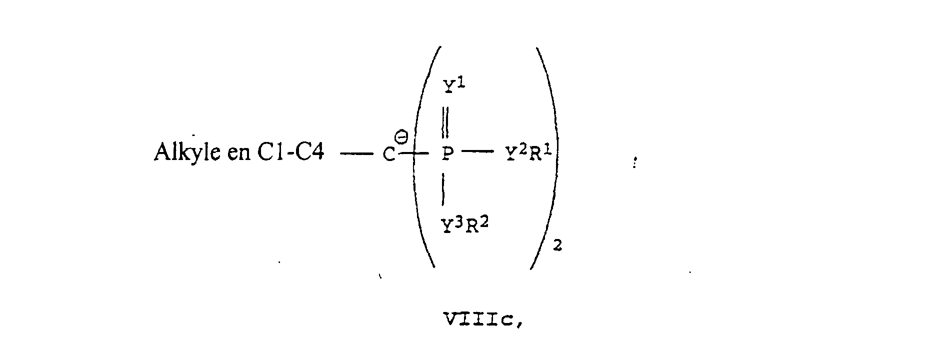 pour lesquels Y¹, Y², Y³, R¹ et R² ont les significations indiquées dans la revendication 1.

14. Procédé pour la préparation des dérivés d'acides phosphoniques aromatiques substitués de formule I selon la revendication 1 dans laquelle Eth représente -CH=CH-, **caractérisé par le fait que** l'on fait réagir un aldéhyde aromatique de formule VIa 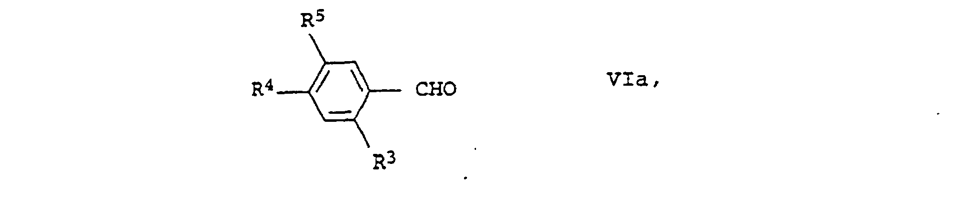 avec un ylide IX 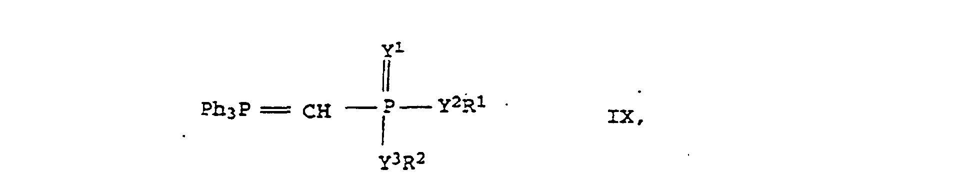 Y¹, Y², Y³, R¹ à R⁵ ayant les significations indiquées dans la revendication 1 et Ph représentant un groupe phényle.

15. Procédé pour la préparation des dérivés d'acides phosphoniques substitués de formule I selon la revendication 1 dans laquelle Eth représente -CH=CH- ou -CH=C(alkyle en C1-C4)-, **caractérisé par le fait que** l'on fait réagir des dérivés d'acides phosphoniques de formule X 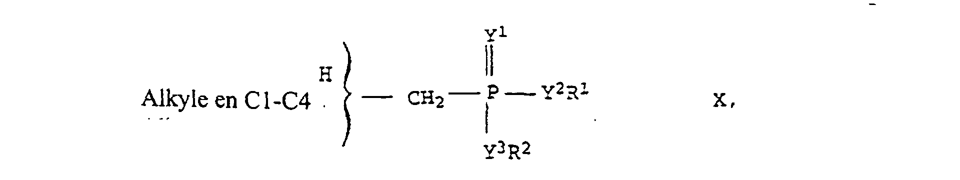 dans laquelle Y¹, Y², Y³, R¹ et R² ont les significations indiquées dans la revendication 1, en présence d'une base forte, avec le chlorotriméthylsilane et des aldéhydes aromatiques de formule VIa 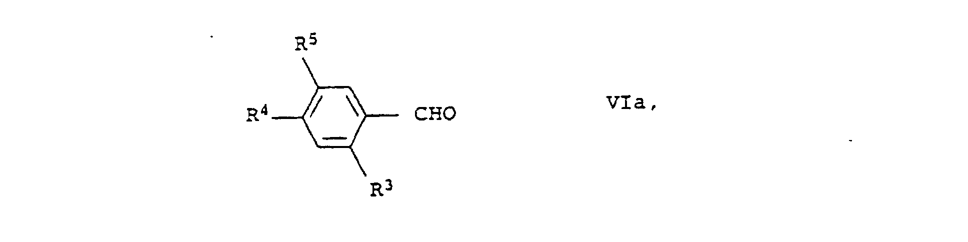 dans laquelle R³, R⁴ et R⁵ ont les significations indiquées dans la revendication 1.

16. Procédé pour la préparation des dérivés d'acides phosphoniques aromatiques substitués de formule I selon revendication 1 dans laquelle Eth représente -CH=C(Cl)-, **caractérisé en ce que** l'on fait réagir des aldéhydes de formule Via 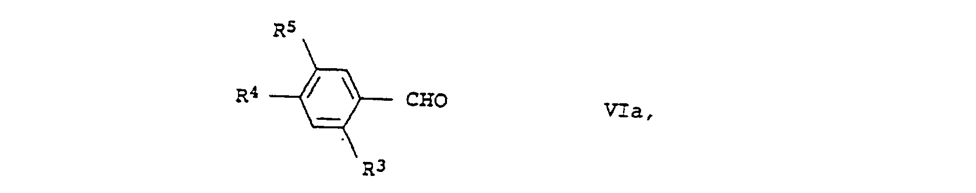 dans laquelle R³, R⁴ et R⁵ ont les significations indiquées dans la revendication 1, en présence d'un dérivé d'alkyllithium XXVII
Alkyle en C1-C4 -Li XXVII
avec des dérivés d'acides trichlorométhanephosphoniques XXVI 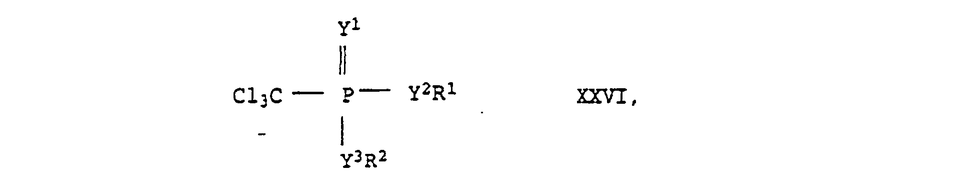 pour lesquels Y¹, Y², Y³, R¹ et R² ont les significations indiquées dans la revendication 1.

17. Procédé pour la préparation des dérivés d'acides phosphoniques aromatiques substitués de formule I selon la revendication 1 dans laquelle Eth représente un groupe éthane-1,2-d le, **caractérisé par le fait que** l'on hydrogène un composé de formule I dans laquelle Eth représente une chaîne éthane-1,2-diyle ou éthène-1,2-diyle, et qui peut porter des substituants chloro, bromo ou iodo, en présence d'un catalyseur.

18. Procédé pour la préparation des dérivés d'acides phosphoniques substitués de formule I selon revendication 1 dans laquelle Y¹, Y² et Y³ représentent l'oxygène et R¹ et R² l'hydrogène, **caractérisé par le fait que** l'on soumet des composés de formule I dans laquelle Y¹, Y² et Y³ représentent chacun l'oxygène et R¹ et R² chacun un groupe alkyle en C1-C6,
soit à hydrolyse à l'aide d'un hydracide halogéné, soit d'abord à réaction avec un halogénure de tri-(alkyle en C1-C4)silyle puis à hydrolyse par l'eau.

19. Procédé pour la. préparation de dérivés d'acides phosphoniques aromatiques substitués de formule I selon la revendication 1 dans laquelle Y¹ représente l'oxygène, **caractérisé par le fait que** l'on chlore des composés de formule I dans laquelle Y¹, Y² et Y³ représentent l'oxygène et R¹ et R² l'hydrogène puis on fait réagir les produits obtenus XXIVa avec des réactifs nucléophiles HY²R¹ et/ou HY³R².

20. Procédé pour la préparation de dérivés d'acides phosphoniques aromatiques substitués de formule I selon la revendication 1 dans laquelle R⁵ représente Φ⁷ et Y⁷ l'oxygène, **caractérisé par le fait que** l'on fait réagir des phénylhydrazines de formule XXVIII ou leurs sels formés par addition avec des acides 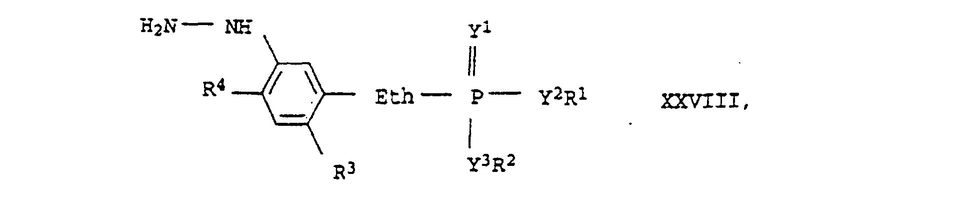 pour lesquels Eth, Y¹, Y², Y³ et R¹ à R⁴ ont les significations indiquées dans la revendication 1, en présence d'une base, avec des amidines de formule XXIXa ou leurs sels formés par addition avec des acides 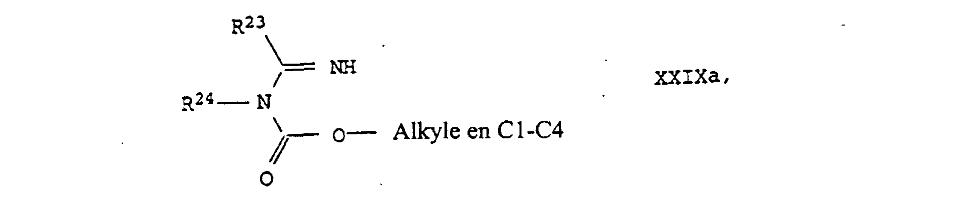 pour lesquels Y⁷ représente l'oxygène et R²³ et R²⁴ ont les significations indiquées dans la revendication 1, après quoi on soumet le produit de réaction à cyclisation sous l'action d'un acide.

21. Phénylhydrazines de formule XXVIII 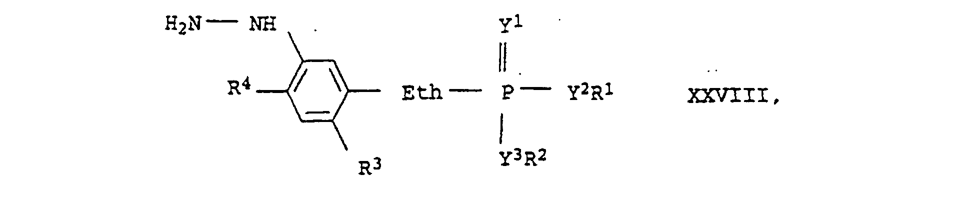 dans laquelle Eth, Y¹, Y², Y³ et R¹ à R⁴ ont les significations indiquées dans la revendication 1.

22. Procédé pour la préparation des phénylhydrazines de formule XXVIII 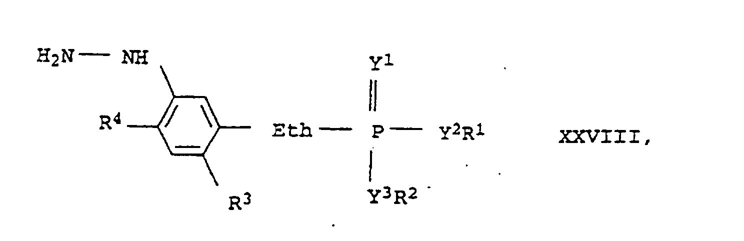 dans laquelle Eth, Y¹, Y², Y³ et R¹ à R⁴ ont les significations indiquées dans la revendication 1, **caractérisé par le fait que** l'on diazote des anilines de formule XXXI 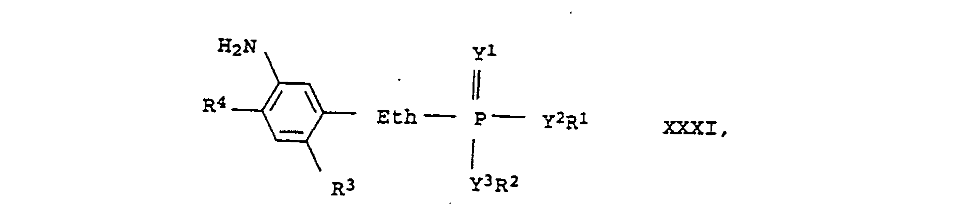 et on réduit les cations diazonium ainsi obtenus.

23. Anilines de formule XXXI 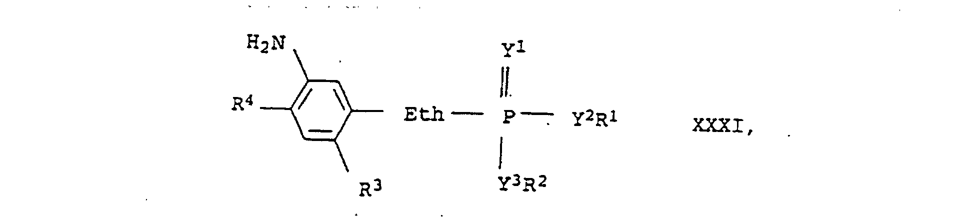 dans laquelle Eth, Y¹, Y², Y³ et R¹ à R⁴ ont les significations indiquées dans la revendication 1.

24. Procédé pour la préparation des anilines de formule XXXI 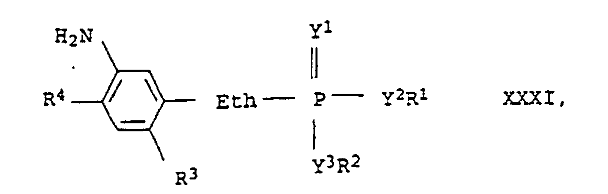 dans laquelle Eth, Y¹, Y², Y³ et R¹ à R⁴ ont les significations indiquées dans la revendication 1, **caractérisé par le fait que** l'on réduit les dérivés nitrés correspondants de formule XXXII

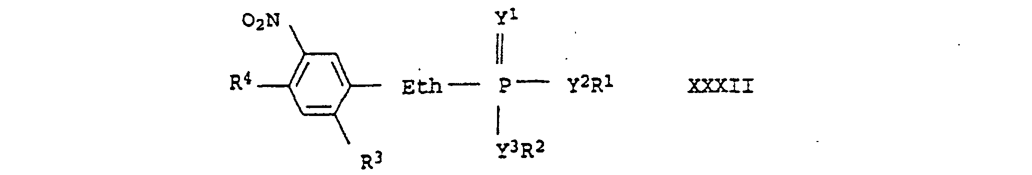

25. Dérivés nitrés de formule XXXII 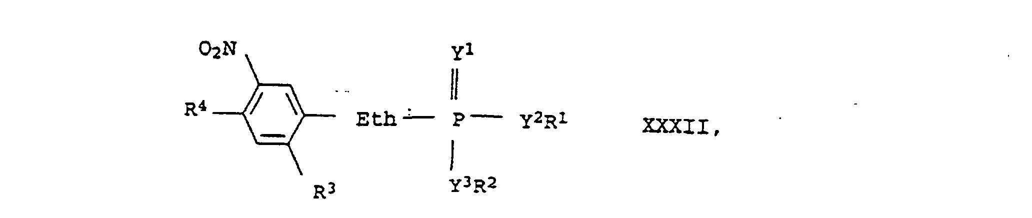 dans laquelle Eth, Y¹, Y², Y³ et R¹ à R⁴ ont les significations indiquées dans la revendication 1.

26. Procédé pour la préparation des dérivés nitrés de formule XXXII 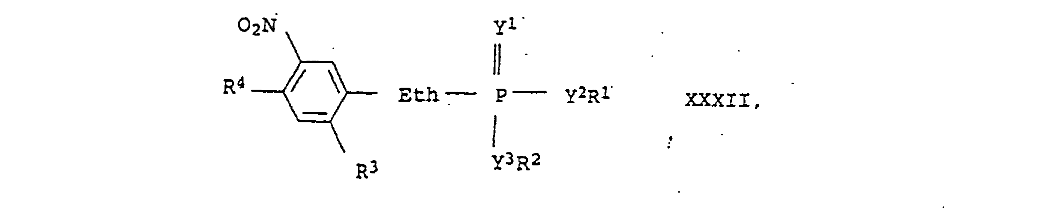 dans laquelle Eth, Y¹, Y², Y³ et R¹ à R⁴ ont les significations indiquées dans la revendication 1, **caractérisé par le fait que** l'on nitre les dérivés d'acides phosphoniques aromatiques correspondants de formule XXXIII

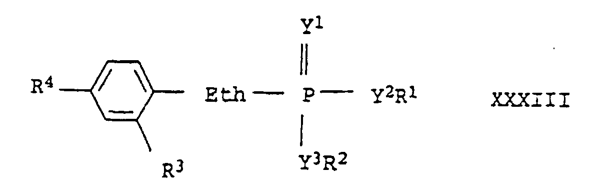

27. Dérivés d'acides phosphoniques aromatisques de formule XXXIIIa 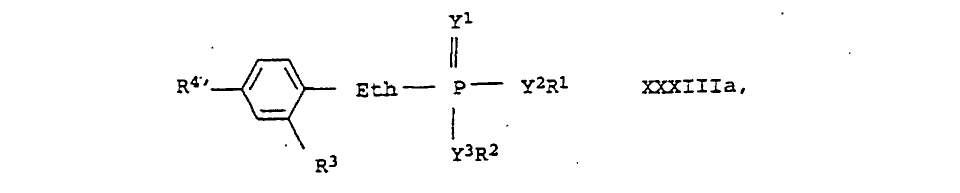 dans laquelle Eth, Y¹, Y², Y³ et R¹ à R³ ont les significations indiquées dans la revendication 1, et R^{4'} représente un halogène.

28. Procédé pour la préparation des dérivés d'acides phosphoniques aromatiques de formule XXXIII 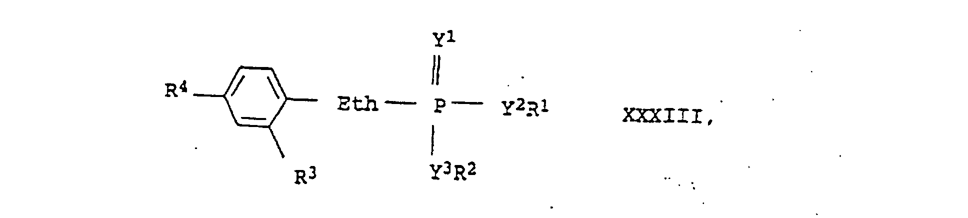 dans laquelle Eth représente -CH=C(C1)- et Y¹, Y², Y³ et R¹ à R⁴ ont les significations indiquées dans la revendication 1, **caractérisé par le fait que** l'on fait réagir des aldéhydes de formule XXXIV 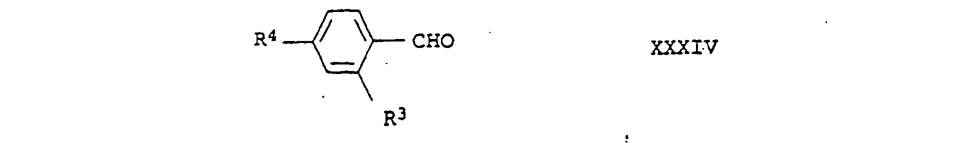 en présence d'un alkyllithium XXVII
(alkyle en C1-C4)-Li XXVII
avec des dérivés d'acides trichlorométhanephosphoniques XXVI

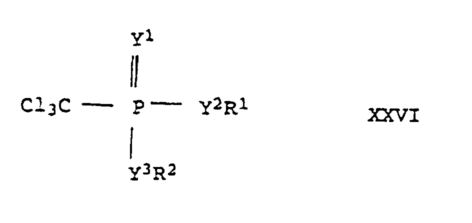

29. Procédé pour la préparation de dérivés d'acides phosphoniques aromatiques substitués de formule I selon la revendication 1 dans laquelle R⁵ représente Φ²⁰, **caractérisé en ce que** l'on fait réagir des dérivés de la thiourée répondant à la formule XXXV 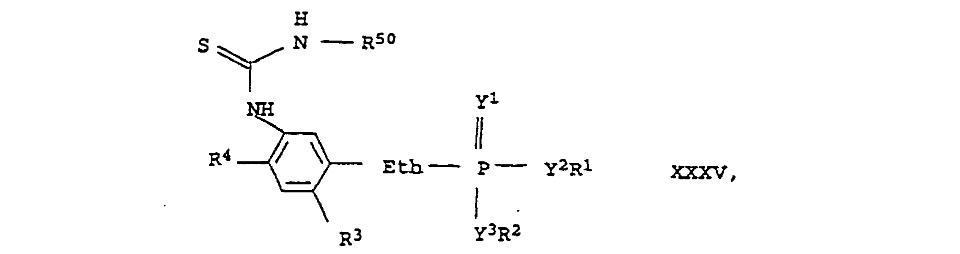 dans laquelle Eth, Y¹, Y², Y³, R¹ à R⁴ et R⁵⁰ ont les significations indiquées dans la revendication 1, en présence d'une base, avec des cétones de formule XXXVI 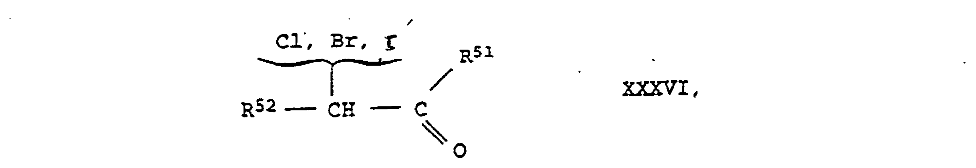 dans laquelle R⁵¹ et R⁵² ont les significations indiquées dans la revendication 1.

30. Dérivés de la thiourée répondant à la formule XXXV 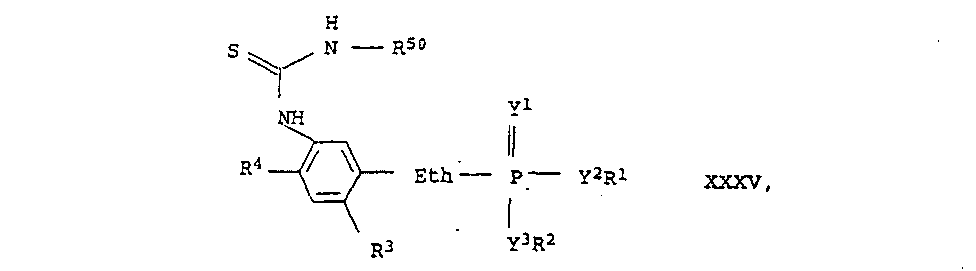 dans laquelle Eth, Y¹, Y², Y³, R¹ à R⁴ et R⁵⁰ ont les significations indiquées dans la revendication 1.

31. Procédé pour la préparation de dérivés de la thiourée répondant à la formule XXXV 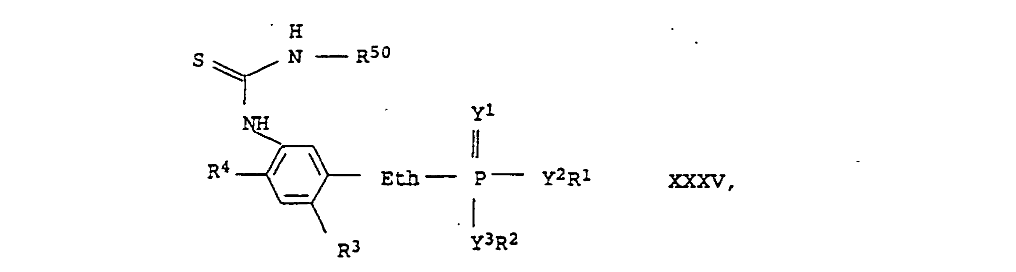 dans laquelle Eth, Y¹, Y², Y³, R¹ à R⁴ et R⁵⁰ ont les significations indiquées dans la revendication 1, **caractérisé par le fait que** l'on fait réagir des anilines de formule XXXI 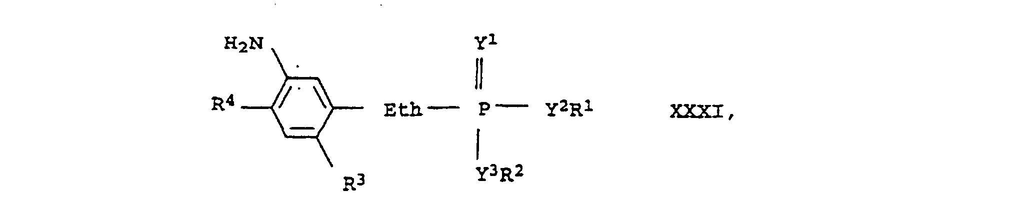 avec des isothiocyanates de formule XXXVIII
SCN-R⁵⁰ XXXVIII

32. Procédé pour la préparation des dérivés d'acides phosphoniques aromatiques substitués de formule I selon la revendication 1 dans laquelle R⁵ représente Φ²¹ et Z³ et Z⁴ chacun l'azote, **caractérisé par le fait que** l'on fait réagir des dérivés du thiosemicarbazide de formule XXXIX 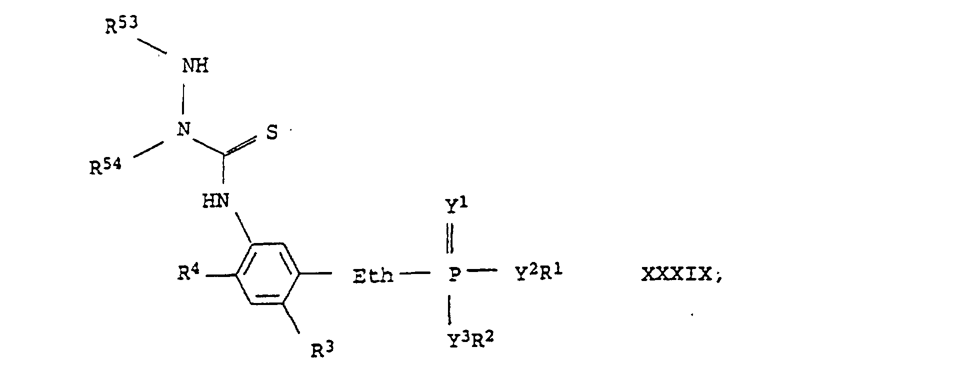 dans laquelle Eth, Y¹, Y², Y³, R¹ à R⁴, R⁵³ et R⁵⁴ ont les significations indiquées dans la revendication 1, en présence d'une base, avec le phosgène, le diphosgène ou le triphosgène.

33. Dérivés du thiosemicarbazide de formule XXXIX 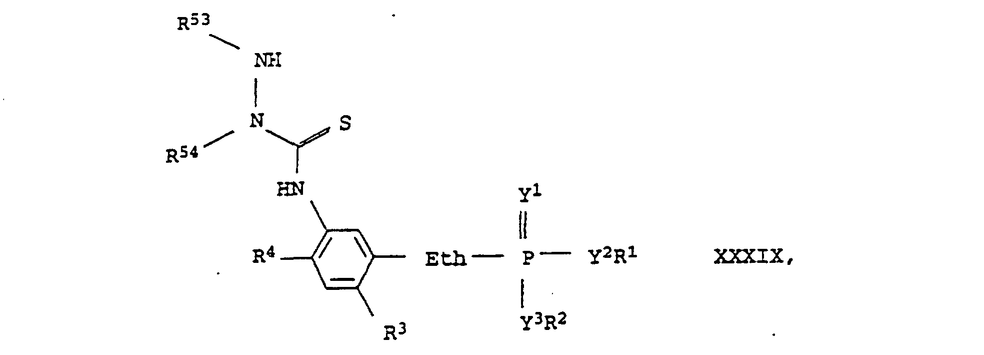 dans laquelle Eth, Y¹, Y²,Y³, R¹ à R⁴, R⁵³ et R⁵⁴ ont les significations indiquées dans la revendication 1.

34. Procédé pour la préparation des dérivés du thiosemicarbazide de formule XXXIX 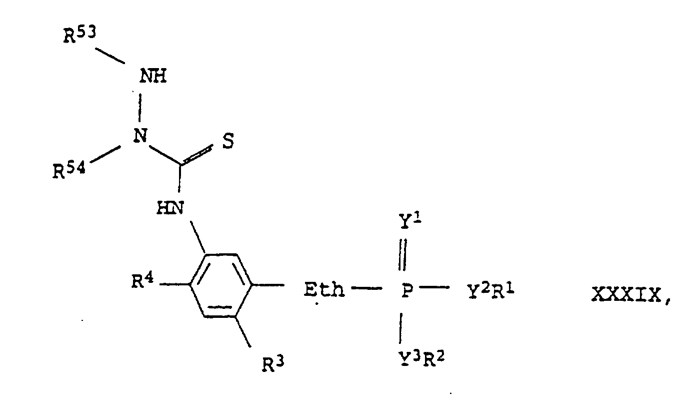 dans laquelle Eth, Y¹, Y², Y³, R¹ à R⁴, R⁵³ et R⁵⁴ ont les significations indiquées dans la revendication 1, **caractérisé par le fait que** l'on fait réagir des isothiocyanates correspondants de formule XL 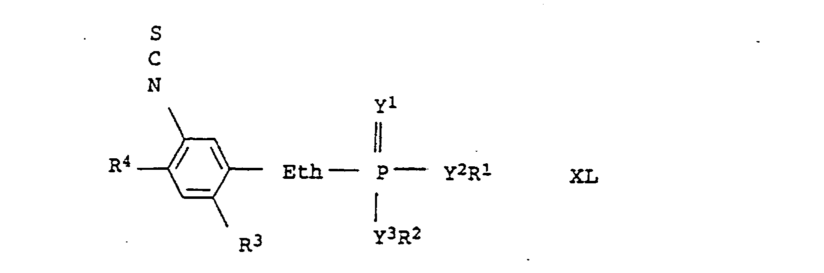 avec des hydrazines de formule XLI
R⁵³-NH-NH-R⁵⁴ XLI

35. Isothiocyanates de formule XL 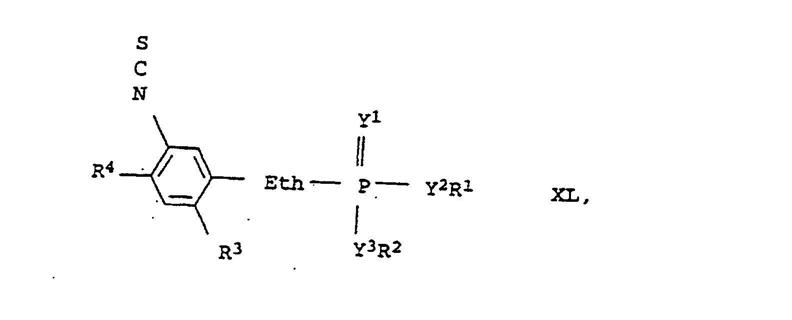 dans laquelle Eth, Y¹, Y², Y³ et R¹ à R⁴ ont les significations indiquées dans la revendication 1.

36. Procédé pour la préparation des isothiocyanates de formule XL 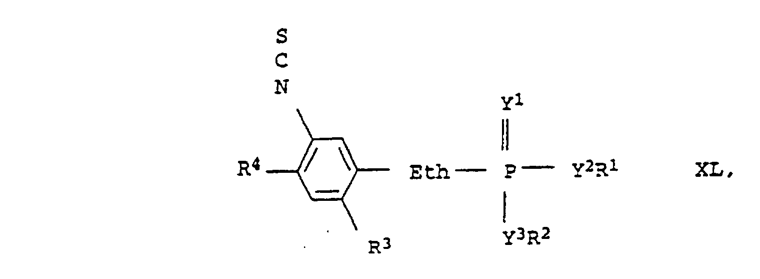 dans laquelle Eth, Y¹, Y², Y³ et R¹ à R⁴ ont les significations indiquées dans la revendication 1, **caractérisé par le fait que** l'on fait réagir les anilines correspondantes de formule XXXI 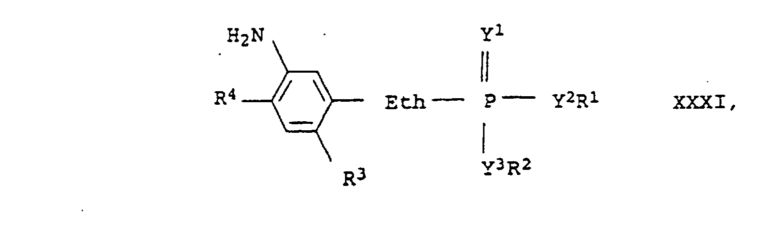 en présence d'une base, avec le thiophosgène.

37. Procédé pour la préparation des dérivés d'acides phosphoniques aromatiques substitués de formule I selon revendication 1 dans laquelle R⁵ représente Φ²², **caractérisé par le fait que** l'on fait réagir des isothiocyanates de formule XL 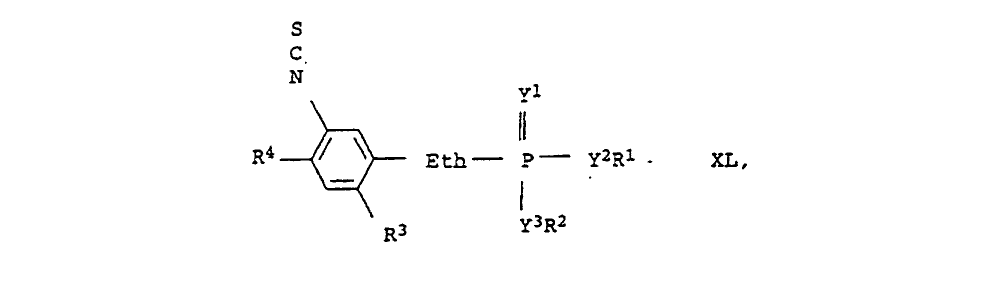 dans laquelle Eth, Y¹, Y², Y³ et R¹ à R⁴ ont les significations indiquées dans la revendication 1, avec des amidines de formule XLII ou XLIII 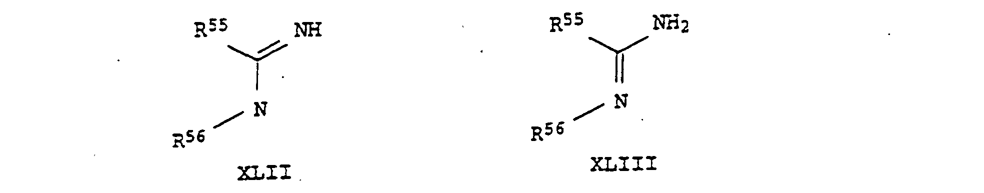 dans lesquelles R⁵⁵ et R⁵⁶ ont les significations indiquées dans la revendication 1, ou avec leurs sels formés par addition avec des acides en présence d'une base, et on oxyde les produits de réaction.
